(19) Europäisches Patentamt
European Patent Office
Office européen des brevets

(11) **EP 3 712 725 A1**

(12) **EUROPÄISCHE PATENTANMELDUNG**

(43) Veröffentlichungstag:
23.09.2020 Patentblatt 2020/39

(21) Anmeldenummer: 20173556.0

(22) Anmeldetag: **14.05.2016**

(51) Int Cl.:
*G05B 19/404* (2006.01)          *G05B 19/18* (2006.01)
*B23F 19/10* (2006.01)           *B24B 53/07* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2015 DE 102015008972**

(62) Dokumentnummer(n) der früheren Anmeldung(en) nach Art. 76 EPÜ:
**16169742.0 / 3 139 228**

(71) Anmelder: **Liebherr-Verzahntechnik GmbH
87437 Kempten (DE)**

(72) Erfinder: **Würfel, Robert
87499 Wildpoldsried (DE)**

(74) Vertreter: **Behr, Wolfgang
Lorenz Seidler Gossel
Rechtsanwälte Patentanwälte
Partnerschaft mbB
Widenmayerstraße 23
80538 München (DE)**

Bemerkungen:
Diese Anmeldung ist am 7.05.2020 als Teilanmeldung zu der unter INID-Code 62 erwähnten Anmeldung eingereicht worden.

(54) **VERFAHREN ZUR HERSTELLUNG EINES ODER MEHRERER WERKSTÜCKE**

(57) Die vorliegende Erfindung betrifft ein Verfahren zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschritte das Werkzeug jeweils durch einen Abrichter abgerichtet wird, bevor weitere Bearbeitungsschritte an demselben oder weiteren Werkstücken durchgeführt werden, wobei bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert wird.

EP 3 712 725 A1

**Beschreibung**

Die vorliegende Erfindung betrifft ein Verfahren zur Herstellung eines oder mehrerer Werkstücke mit einer gewünschten Verzahnungsgeometrie mittels eines geeignet abgerichteten Werkzeuges. Dabei wird nach der Durchführung eines oder mehrerer Bearbeitungsschritte das Werkzeug jeweils durch einen Abrichter abgerichtet, bevor weitere Bearbeitungsschritte an demselben oder weiteren Werkstücken durchgeführt werden. Insbesondere betrifft die vorliegende Erfindung dabei ein Verfahren zur Herstellung eines oder mehrerer Werkstücke durch Verzahnschleifen, insbesondere Wälzschleifen.

Das Abrichten eines Werkzeuges dient zunächst dazu, dem Werkzeug eine für die Bearbeitung eines Werkstückes notwendige Oberflächengeometrie zu verleihen.

Aus der DE102012015846A1 ist ein Verfahren bekannt, bei welchem durch Zusatzbewegungen beim Abrichten auf dem Werkzeug eine Modifikation der Oberflächengeometrie erzeugt wird, welche auf der Zahnradflanke im Wälzbild zumindest lokal in einer ersten Richtung einen konstanten Wert aufweist und in einer zweiten

Richtung, welche senkrecht zur ersten Richtung verläuft, durch eine Funktion f(x) gegeben ist. Aus der EP1995010A1 und der WO 2010/060596A1 ist ein Verfahren bekannt, durch Änderung des Achsabstands während des Abrichtens eine Schnecke über ihre Breite ballig abzurichten. Aus der DE19624842A1 und der DE 19706867A1 ist ein Verfahren bekannt, bei dem durch eine stetige Änderung der Position des Abrichters zum Werkzeug beim Abrichten eine Schnecke erzeugt wird, deren Profilwinkel sich über ihre Breite verändert. Aus der DE 102005030846A1 und der DE 102006061759A1 sind ebenfalls Verfahren bekannt, bei welchen eine Schnecke durch eine entsprechende Abrichtkinematik entweder über ihre gesamte Breite mit einem konstant modifizierten Profilwinkel hergestellt wird, oder der Profilwinkel über die Schneckenbreite modifiziert wird. Ein zweiflankiges Abrichten zum verschränkungsfreien Wälzschleifen ist aus *Kapp, Effizient und produktiv mit technologischer Flexibilität, JOSE LOPEZ*, bekannt.

Weiterhin ist zu berücksichtigen, dass die für das Bearbeiten von Werkstücken im Rahmen eines Verzahnprozesses eingesetzten Werkzeuge aufgrund ihrer hohen Beanspruchung beim Verzahnbearbeiten einem stetigen Verschleiß unterliegen. Daher müssen die Werkzeuge in regelmäßigen Abständen neu abgerichtet werden, um weiterhin Werkstücke mit der gewünschten Verzahnungsgeometrie herstellen zu können. Beim Abrichten wird dabei die aktive Oberfläche des Werkzeuges mit einem Abrichter bearbeitet, um dieser wieder die gewünschte Form zu geben.

Die zum Abrichten eingesetzten Abrichter werden dabei üblicherweise für eine spezifische Makrogeometrie des Werkzeuges und insbesondere für einen spezifischen Durchmesser des Werkzeuges ausgelegt. Durch die sich wiederholenden Abrichtprozesse verringert sich jedoch der Durchmesser des Werkzeuges. Der Abrichter passt hierdurch nach einer gewissen Anzahl von Abrichtvorgängen nicht mehr zu dem Werkzeug, sodass sich ungewollte Abweichungen in der Verzahnungsgeometrie des Werkzeuges ergeben. Bei größeren Schneckendurchmessern und geringen Durchmesserdifferenzen zwischen Neuwerkzeug und dem Durchmesser zum Nutzungsende hin sind Abweichungen bei aktuellen Toleranzvorgaben bisher häufig vernachlässigbar. Bei kleinen Werkzeugdurchmessern oder großen Moduln oder hoher Gangzahl hingegen müssen die Abweichungen berücksichtigt werden. Gemäß dem Stand der Technik mussten daher entweder mehrere Abrichter für die unterschiedlichen Durchmesser des Werkzeuges eingesetzt werden, oder das Werkzeug konnte nicht über seinen kompletten Durchmesserbereich genutzt werden.

Aufgabe der vorliegenden Erfindung ist es, ein effizienteres Verfahren zur Herstellung eines oder mehrerer Werkstücke mit einer gewünschten Verzahnungsgeometrie zur Verfügung zu stellen.

Diese Aufgabe wird erfindungsgemäß durch die Verfahren gemäß einem der unabhängigen Ansprüche 1, 3 und 7 gelöst. Vorteilhafte Ausgestaltungen der vorliegenden Erfindung sind Gegenstand der Unteransprüche.

Die vorliegende Erfindung umfasst in einem ersten Aspekt ein Verfahren zur Herstellung eines oder mehrerer Werkstücke mit einer gewünschten Verzahnungsgeometrie mittels eines geeignet abgerichteten Werkzeuges, bei welchem nach der Durchführung eines oder mehrerer Bearbeitungsschritte das Werkzeug jeweils durch einen Abrichter abgerichtet wird, bevor weitere Bearbeitungsschritte an demselben oder weiteren Werkstücken durchgeführt werden. Erfindungsgemäß wird dabei bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert. Erfindungsgemäß wird der Abrichter damit nicht einfach nur näher an das Werkzeug zugestellt, um dem durch die vorangegangenen Abrichtvorgänge kleiner gewordenen Werkzeugdurchmesser Rechnung zu tragen. Vielmehr erfolgt zusätzlich zu dieser Verringerung des Achsabstands eine Verstellung der Bewegungsachsen der Abrichtmaschine.

Bevorzugt erfolgt die zusätzliche Verstellung der Bewegungsachsen der Abrichtmaschine dabei so, dass Modifikationen der Verzahnungsgeometrie, welche sich durch den kleiner gewordenen Werkzeugdurchmesser ergeben, zumindest teilweise ausgeglichen werden. Die vorliegende Erfindung berücksichtigt damit, dass der Abrichter durch den kleineren Werkzeugdurchmesser eigentlich nicht mehr genau zum Werkzeug passt, und gleicht die sich hierdurch ergebenden Modifikationen durch eine entsprechende Einstellung der Bewegungsachsen zumindest teilweise und bevorzugt komplett aus.

Alternativ oder zusätzlich kann die zusätzliche Verstellung der Bewegungsachsen der Abrichtmaschine gegenüber einem Abrichten ohne eine solche zusätzliche Verstellung eine Veränderung der sich beim Abrichten ergebenden Profilballigkeit bewirken. Der Erfinder der vorliegenden Erfindung hat dabei erkannt, dass durch die Verstellung der Bewegungsachsen der Abrichtmaschine Einfluss auf die sich beim Abrichten ergebende Profilballigkeit genommen werden kann. Da auch der kleiner werdende Werkzeugdurchmesser zu einer ungewollten Veränderung der Profilballigkeit führt, kann diese durch eine entsprechende Einstellung der Bewegungsachsen der Verzahnmaschine zumindest teilweise ausgeglichen werden.

Weiterhin alternativ oder zusätzlich kann die zusätzliche Verstellung so gewählt werden, dass eine Abweichung der sich auf dem Werkstück ergebenden Verzahnungsgeometrie von einer gewünschten Verzahnungsgeometrie reduziert und/oder minimiert wird. Insbesondere können so durch die Verstellung der Bewegungsachsen beim Abrichten ungewollte Modifikationen auf dem mit dem Werkzeug bearbeiteten Werkstück verringert werden.

Weiterhin alternativ oder zusätzlich kann die zusätzliche Verstellung eine Abweichung der durch den Abrichter auf dem Werkzeug erzeugten Verzahnungsgeometrie von einer Sollgeometrie reduzieren oder minimieren. Insbesondere kann die Einstellung der Bewegungsachsen dabei so berechnet werden, dass eine Sollgeometrie des Werkzeuges möglichst gut erreicht wird.

Das erfindungsgemäße Verfahren gemäß dem ersten Aspekt kann dabei insbesondere dazu eingesetzt werden, um bei jedem Abrichtvorgang die gleiche Profilform auf dem Werkzeug zu erzeugen. Insbesondere kann dabei trotz des geringer werdenden Durchmessers des Werkzeuges durch die erfindungsgemäß unterschiedliche Einstellung der Bewegungsachsen beim Abrichten dennoch die gleiche Profilform auf dem Werkzeug erzeugt werden. Bevorzugt führt dies im Rahmen des Bearbeitungsverfahrens dazu, dass unerwünschte Modifikationen der sich auf dem Werkstück ergebenden Verzahnungsgeometrie verringert und bevorzugt minimiert werden.

In einer alternativen Variante kann das Verfahren gemäß dem ersten Aspekt jedoch auch dazu genutzt werden, um bei den aufeinanderfolgenden Abrichtvorgängen gezielt unterschiedliche Profilformen des Werkzeuges zu erzeugen. Bevorzugt führen diese unterschiedlichen Profilformen jedoch in Kombination mit einem entsprechend angepassten Bearbeitungsverfahren dazu, dass unerwünschte Modifikationen der sich auf dem Werkstück ergebenden Verzahnungsgeometrie verringert und bevorzugt minimiert werden.

Gemäß einem zweiten Aspekt umfasst die vorliegende Erfindung ein Verfahren zur Herstellung eines oder mehrerer Werkstücke mit einer gewünschten Verzahnungsgeometrie mittels eines geeignet abgerichteten Werkzeuges, bei welchem nach der Durchführung eines oder mehrerer Bearbeitungsschritte das Werkzeug jeweils abgerichtet wird, bevor weitere Bearbeitungsschritte an demselben oder weiteren Werkstücken durchgeführt werden. Erfindungsgemäß wird dabei bei einem späteren Abrichtvorgang der Profilwinkel des Werkzeuges gegenüber einem früheren Abrichtvorgang geändert, wobei das oder die Werkstücke nach dem späteren Abrichtvorgang mit einem anderen Profilwinkel der Verzahnung des Werkzeuges verzahnbearbeitet wird oder werden als nach einem früheren Abrichtvorgang. Dabei wird der Profilwinkel in einer ersten Variante des zweiten Aspektes jeweils so gewählt, dass eine Abweichung der sich auf dem Werkstück ergebenden Verzahnungsgeometrie zu einer gewünschten Verzahnungsgeometrie reduziert oder minimiert wird. In einer zweiten Variante kann durch die Änderung des Profilwinkels eine Streckung und / oder Stauchung einer durch einen modifizierten Abrichter auf dem Werkzeug erzeugten Modifikation reduziert oder minimiert werden. Bevorzugt werden dabei die erste und die zweite Variante kombiniert.

Der Erfinder der vorliegenden Erfindung hat dabei erkannt, dass durch eine entsprechende Veränderung der Einstellungen der Bewegungsachsen beim Abrichten Einfluss auf die auf dem Werkzeug erzeugte Verzahnungsgeometrie und insbesondere die dort erzeugte Profilballigkeit genommen werden kann. Weist der Abrichter jedoch selbst eine Modifikation auf, führt die Veränderung in der Relativposition zwischen Abrichter und Werkzeug zu einer ungewollten Streckung und / oder Stauchung dieser Modifikation bei der Übertragung auf das Werkzeug. Durch die erfindungsgemäße Veränderung des Profilwinkels des Werkzeuges lässt sich diese Stauchung und / oder Streckung jedoch zumindest teilweise ausgleichen.

Dabei mach sich die vorliegende Erfindung zu Nutze, dass die gleiche Verzahnungsgeometrie eines Werkstückes mit Werkzeugen mit einem unterschiedlichen Profilwinkel erzeugt werden können. Der Profilwinkel hat jedoch einen Einfluss auf die Abbildung einer Modifikation des Abrichters auf das Werkzeug und auf die Abbildung einer Modifikation des Werkzeuges auf das Werkstück. Durch die geeignete Wahl des Profilwinkels kann daher die Stauchung und / oder Streckung reduziert und bevorzugt minimiert werden. Hierdurch können ungewollte Modifikationen der beim Bearbeiten des Werkstückes entstehenden Verzahnungsgeometrie verringert werden.

Ein solches Vorgehen gemäß dem zweiten Aspekt ist dabei insbesondere bei der Herstellung von symmetrischen Verzahnungen des Werkstückes möglich.

Die vorliegende Erfindung gemäß dem zweiten Aspekt ist jedoch auch bei der Herstellung von asymmetrischen Verzahnungen des Werkstückes möglich. Hier muss zwar die Berechnung des Profilwinkels, welcher die relative Profilstreckung reduziert bzw. minimiert, auf linker und rechter Flanke separat durchgeführt werden. Bei einem zylindrischen Werkzeug ist daher gegebenenfalls keine komplette Aufhebung der Streckung und / oder Stauchung möglich. Die Profilwinkel können jedoch so gewählt werden, dass sich auf linker und auf rechter Flanke insgesamt möglichst geringe Abweichungen ergeben.

Die vorliegende Erfindung umfasst daher weiterhin ein erfindungsgemäßes Verfahren, wie es oben beschrieben wurde, zur Herstellung einer asymmetrischen Verzahnung des Werkstückes, wobei der Profilwinkel des Werkzeuges auf rechter und linker Flanke so gewählt wird, dass eine Abweichung der sich auf dem Werkstück auf linker und rechter Flanke ergebenden Verzahnungsgeometrie zu einer gewünschten Verzahnungsgeometrie insgesamt reduziert und/oder minimiert wird und / oder eine Streckung und / oder Stauchung einer durch einen modifizierten Abrichter auf dem Werkzeug erzeugten Modifikation auf linker und rechter Flanke insgesamt reduziert oder minimiert wird.

Bei einem Verfahren gemäß dem ersten oder zweiten Aspekt der vorliegenden Erfindung kann zunächst ein Werkzeug mit einer zylindrischen Grundform eingesetzt werden, insbesondere eine Schleifschnecke mit einer zylindrischen Grundform.

Alternativ kann jedoch auch ein Werkzeug mit einer konischen Grundform eingesetzt werden. Insbesondere kann dabei eine Schleifschnecke mit einer konischen Grundform eingesetzt werden.

Bevorzugt wird dabei der Konuswinkel so gewählt, dass die sich auf dem Werkstück ergebende Verzahnungsgeometrie möglichst geringe Abweichungen zu einer gewünschten Verzahnungsgeometrie aufweist. Der Erfinder der vorliegenden Erfindung hat dabei erkannt, dass durch den Einsatz eines Werkzeuges mit einer konischen Grundform mit dem Konuswinkel ein weiterer Freiheitsgrad zur Verfügung stellt, welcher zur Beeinflussung der Verzahnungsgeometrie und insbesondere zur Vermeidung ungewünschter Modifikationen oder zur Herstellung gewünschter Modifikationen eingesetzt werden kann.

Bevorzugt wird dabei bei dem Verfahren gemäß dem zweiten Aspekt ein Werkzeug mit einer konischen Grundform eingesetzt, wobei der Konuswinkel so gewählt wird, dass durch die Änderung des Profilwinkels des Werkzeugs eine Stauchung und / oder Streckung einer durch einen modifizierten Abrichter auf dem Werkzeug erzeugten Modifikation reduziert oder minimiert wird.

Besondere Vorteile hat der Einsatz eines konischen Werkzeuges dabei beim Herstellen einer asymmetrischen Verzahnung des Werkstückes. Insbesondere können dabei die Profilwinkel des Werkzeuges und der Konuswinkel so gewählt werden, dass auf rechter und linker Flanke die Streckung und / oder Stauchung der Modifikation reduziert und / oder minimiert wird.

Beim Einsatz eines Werkzeuges mit einer konischen Grundform kann dabei bevorzugt vorgesehen sein, dass der Konuswinkel bei einem späteren Abrichtvorgang gegenüber einem früheren Abrichtvorgang geändert wird.

Die vorliegende Erfindung kommt insbesondere dann zum Einsatz, wenn ein Werkzeug mit dem gleichen Abrichter mehrmals nacheinander abgerichtet wird, um nach jedem Abrichtvorgang im Rahmen des Herstellverfahrens jeweils die gleiche Verzahnungsgeometrie eines mit dem Werkzeug bearbeiteten Werkstückes zu erzeugen.

In einem ersten Anwendungsfall kann dabei nach einem oder mehreren Bearbeitungsschritten, welche an einem einzigen Werkstück durchgeführt werden, bereits ein Abrichten notwendig werden, bevor einer oder mehrere weitere Bearbeitungsschritte an demselben Werkstück durchgeführt werden. Beispielsweise kann dabei nach einem oder mehreren Schleifhüben, welche an einem Werkstück durchgeführt werden, ein Abrichten notwendig werden, bevor weitere Schleifhübe an diesem Werkstück durchgeführt werden. Ein solches Vorgehen kann insbesondere bei Großverzahnungen mit großem Modul und / oder in Bezug auf den Modul kleinem Werkzeugdurchmesser notwendig sein.

In einem weiteren Anwendungsfall kommt dagegen die vorliegende Erfindung bei einem Verfahren zur Herstellung einer Mehrzahl und insbesondere einer Vielzahl von Werkstücken zum Einsatz, wobei nach der Herstellung eines oder mehrerer Werkstücke das Werkzeug jeweils abgerichtet wird, bevor weitere Werkstücke bearbeitet werden. Ein solches Vorgehen ist insbesondere bei der Serienproduktion üblich, bei welcher eine Vielzahl von identischen Werkstücken hergestellt werden soll.

Werden erfindungsgemäß eine Mehrzahl oder eine Vielzahl von Werkstücken bearbeitet, so werden bevorzugt Abweichungen der sich durch den Bearbeitungsvorgang ergebenden Oberflächengeometrie der jeweiligen Werkstücke von einer für alle Werkstücke gleichen Sollgeometrie reduziert und bevorzugt minimiert werden.

Die vorliegende Erfindung umfasst in einem dritten Aspekt ein Verfahren zur Herstellung eines Werkstückes mit einer gewünschten Verzahnungsgeometrie mittels eines durch einen modifizierten Abrichter geeignet abgerichteten Werkzeuges, mit den Schritten:

- Vorgabe einer gewünschten Verzahnungsgeometrie des Werkstückes, und
- Bestimmung eines geeigneten Profilwinkels des Werkzeuges und einer geeigneten relativen Position zwischen Abrichter und Werkzeug beim Abrichten zur Bereitstellung der gewünschten Verzahnungsgeometrie des Werkstückes zumindest innerhalb einer zulässigen Toleranz beim Bearbeiten durch das Werkzeug.

Wie bereits oben dargestellt hat der Erfinder der vorliegenden Erfindung erkannt, dass der Profilwinkel einen Einfluss auf den Abrichtvorgang hat, eine gewünschte Verzahnungsgeometrie eines Werkstückes aber mit unterschiedlichen Profilwinkeln des Werkzeuges in gleicher Weise erreicht werden kann. Erfindungsgemäß kann so durch eine geeignete Wahl des Profilwinkels und einer geeigneten Relativposition zwischen Abrichter und Werkzeug beim Abrichten das Werkzeug mit einer Verzahnungsgeometrie ausgestaltet werden, welche die gewünschte Verzahnungsgeometrie des Werkstückes beim Bearbeiten durch das Werkzeug zumindest innerhalb einer zulässigen Toleranz erzeugt.

Insbesondere kann dabei bei der Bestimmung des Profilwinkels und der Relativposition zwischen Abrichter und Werkzeug eine Stauchung und / oder Streckung der Modifikation des Abrichters bei der Übertragung auf das Werkzeug berücksichtigt werden.

Bevorzugt werden der Profilwinkel und die relative Position zwischen Abrichter und Werkzeug beim Abrichten dabei so bestimmt, dass sich beim Abrichten eine gewünschte Stauchung und / oder Streckung der Modifikation des Abrichters auf dem Werkzeug ergibt. Das Verfahren gemäß der vorliegenden Erfindung kann damit beispielsweise dann eingesetzt werden, wenn das auf dem Abrichter vorhandene Profil gestaucht oder gestreckt auf dem Werkzeug aufgebracht werden soll, um die gewünschte Verzahnungsgeometrie des Werkstückes zu erreichen.

Bevorzugt wird der Profilwinkel jedoch so bestimmt, dass eine sich durch die relative Position zwischen Abrichter und Werkzeug beim Abrichten ergebende Stauchung und / oder Streckung der Modifikation des Abrichters auf dem Werkzeug durch den Profilwinkel zumindest teilweise ausgeglichen wird.

Die oben näher beschriebenen drei Aspekte eines Verfahrens zur Herstellung eines Werkstückes können dabei jeder für sich eingesetzt werden. Die einzelnen Aspekte können jedoch auch miteinander kombiniert werden.

Insbesondere können die gemäß dem zweiten und dritten Aspekt im Hinblick auf eine Stauchung und / oder Streckung einer Modifikation des Abrichters beim Abrichten des Werkzeuges erläuterten Aspekte mit den im Hinblick auf den ersten Aspekt erläuterten Aspekten im Hinblick auf die Bereitstellung der gewünschten Modifikationen des Werkstückes und / oder des Werkzeuges kombiniert werden.

Neben dem oben genannten Verfahren zum Herstellen eines oder mehrerer Werkstücke umfasst die vorliegende Erfindung weiterhin ein Verfahren zum modifizierten Abrichten eines Werkzeuges, welches zur Verzahnbearbeitung eines Werkstückes einsetzbar ist, auf einer Abrichtmaschine, wobei zum Abrichten des Werkzeuges ein modifizierter Abrichter eingesetzt wird. Erfindungsgemäß werden dabei die Bewegungsachsen der Abrichtmaschine beim Abrichten des Werkzeuges so eingestellt und / oder die Makrogeometrie des Werkzeuges und / oder des Abrichters so gewählt, dass die Modifikation des Abrichters um einen vorgegebenen Betrag gestaucht oder gestreckt auf dem Werkzeug und / oder gestaucht oder gestreckt auf dem Werkstück aufgebracht wird. Auch hier wird erfindungsgemäß ausgenutzt, dass durch die geeignete Wahl der Relativposition zwischen Abrichter und Werkzeug und / oder der Makrogeometrie des Werkzeuges oder Abrichters die Streckung bzw. Stauchung, mit welcher eine Modifikation des Abrichters auf dem Werkzeug aufgebracht wird, beeinflusst werden kann. Im Hinblick auf die Makrogeometrie des Werkzeuges kann dabei insbesondere die Gangzahl und / oder der Durchmesser und / oder der Profilwinkel und / oder der Konuswinkel des Werkzeuges entsprechend eingestellt bzw. gewählt werden. Im Hinblick auf die Makrogemetrie des Abrichters kann insbesondere der Durchmesser des Abrichters geeignet gewählt werden.

Das erfindungsgemäße Verfahren zum modifizierten Abrichten eines Werkzeuges kann insbesondere bei einem erfindungsgemäßen Verfahren zum Herstellen eines oder mehrerer Werkstücke, wie sie oben beschrieben wurden, eingesetzt werden.

Bei sämtlichen der oben dargestellten Verfahren gemäß der vorliegenden Erfindung kann die gewünschte Modifikation des Werkzeuges bevorzugt an mindestens zwei und weiter bevorzugt an mindestens drei Wälzwinkeln vorgegebenen und durch das Einstellen der Bewegungsachsen der Abrichtmaschine erzeugt werden. Alternativ oder zusätzlich kann die relative Position zwischen Abrichter und Werkzeug beim Abrichten so bestimmt werden, dass eine gewünschte Profilballigkeit auf dem Werkzeug erzeugt wird. Der Erfinder der vorliegenden Erfindung hat dabei erkannt, dass durch die geeignete Einstellung der Relativposition bzw. der Bewegungsachsen der Abrichtmaschine beim Abrichten die Profilballigkeit des Werkzeuges beeinflusst bzw. die Modifikation an zwei, drei oder vier Wälzwinkeln innerhalb gewisser Grenzen eingestellt werden kann.

Alternativ oder zusätzlich kann eine Zuordnung eines bestimmten Radius des Abrichters zu einem bestimmten Radius des Werkzeuges vorgegeben und durch eine entsprechende Einstellung der Bewegungsachsen der Abrichtmaschine erzielt werden.

Die vorliegende Erfindung umfasst weiterhin eine Vorrichtung und / oder ein Softwareprogramm gemäß einem ersten Aspekt zur Bestimmung der zum mehrmaligen Abrichten eines Werkzeuges mit dem gleichen Abrichter verwendeten Einstellungen der Bewegungsachsen einer Abrichtmaschine.

Die Vorrichtung und / oder das Softwareprogramm können gemäß einer ersten Variante zur Durchführung eines Verfahrens, wie es oben näher dargestellt wurde, einsetzbar sein. Insbesondere können die Vorrichtung und / oder das Softwareprogramm geeignete Einstellungen der Bewegungsachsen der Abrichtmaschine bestimmen, um ein erfindungsgemäßes Verfahren, wie es oben dargestellt wurde, durchzuführen.

Gemäß einer zweiten, ggf. mit der ersten Variante kombinierten Variante weist die Vorrichtung oder das Softwareprogramm eine Eingabefunktion zur Eingabe eines ersten Werkzeugdurchmessers auf, sowie eine Bestimmungsfunktion zur Bestimmung der zum Abrichten des Werkzeuges beim ersten Werkzeugdurchmesser einzusetzenden Einstellung der Bewegungsachsen der Abrichtmaschine. Weiterhin vorteilhafterweise ist eine Eingabefunktion zur Eingabe eines zweiten Werkzeugdurchmessers vorgesehen, auf welchen der Abrichter ausgelegt ist. Alternativ oder zusätzlich kann eine Eingabefunktion zur Eingabe einer gewünschten Verzahnungsgeometrie des Werkstückes oder des Werkzeuges vorgesehen sein. Insbesondere kann die Bestimmungsfunktion dabei so ausgestaltet sein, dass sie die im Rahmen der oben näher dargestellten Verfahren einzusetzenden Einstellungen der Bewegungsachsen bestimmt.

Die vorliegende Erfindung umfasst in einem zweiten, unabhängigen Aspekt weiterhin eine Vorrichtung und / oder ein Softwareprogramm zur Bestimmung der zur Herstellung eines Werkstückes mit einer gewünschten Verzahnungsgeometrie mittels eines durch einen modifizierten Abrichter abgerichteten Werkzeuges einzusetzenden Einstellung der Bewegungsachsen der Abrichtmaschine oder Geometrie des Werkzeuges, mit einer Eingabefunktion zur Eingabe einer gewünschten Verzahnungsgeometrie des Werkstückes und / oder zur Eingabe einer gewünschten Streckung und / oder Stauchung der Modifikation des Abrichters auf dem Werkzeug oder Werkstück.

In einer ersten Variante umfasst die Vorrichtung bzw. das Softwareprogramm gemäß dem zweiten Aspekt eine Bestimmungsfunktion zur Bestimmung eines geeigneten Profilwinkels des Werkzeuges und einer geeigneten relativen Position zwischen Abrichter und Werkzeug beim Abrichten zur Bereitstellung der gewünschten Verzahnungsgeometrie des Werkstückes beim Bearbeiten durch das Werkzeug, und / oder zur Bereitstellung der gewünschten Streckung und / oder Stauchung der Modifikation des Abrichters auf dem Werkzeug oder Werkstück.

In einer zweiten Variante umfasst die Vorrichtung bzw. das Softwareprogramm eine Bestimmungsfunktion zur Bestimmung der Einstellung der Bewegungsachsen der Abrichtmaschine beim Abrichten des Werkzeuges und / oder der Makrogeometrie des Werkzeuges und / oder des Abrichters. Im Hinblick auf die Makrogeometrie kann dabei insbesondere einer oder mehrere der folgenden Werte bestimmt werden: Gangzahl und / oder Durchmesser und / oder Profilwinkel und / oder Konuswinkel des Werkzeuges; Durchmesser des Abrichters.

In einer dritten Variante kann die Vorrichtung und / oder das Softwareprogramm eine Bestimmungsfunktion zur Bestimmung der Einstellung der Bewegungsachsen der Abrichtmaschine beim Abrichten des Werkzeuges und / oder der Makrogeometrie des Werkzeuges bei einem Verfahren umfassen, wie es oben näher dargestellt wurde.

Bevorzugt sind dabei zwei oder alle drei der eben beschriebenen Varianten im Rahmen einer erfindungsgemäßen Vorrichtung und / oder eines erfindungsgemäßen Softwareprogramms miteinander kombiniert.

Die vorliegende Erfindung stellt erfindungsgemäß sowohl die Vorrichtung, als auch das Softwareprogramm als solche und unabhängig voneinander unter Schutz. In einer möglichen Ausführungsform der vorliegenden Erfindung kann das Softwareprogramm auf der erfindungsgemäßen Vorrichtung abgearbeitet werden. Das Softwareprogramm kann beispielsweise auf einem Datenträger oder in einem Speicher abgespeichert sein. Bei der Vorrichtung kann es sich insbesondere um einen Computer und/oder eine Maschinensteuerung handeln. Auf diesem bzw. dieser kann bevorzugt ein erfindungsgemäßes Softwareprogramm ablaufen.

Die vorliegende Erfindung umfasst weiterhin eine Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter unabhängig voneinander einstellbar sind.

In einer ersten Variante weist die Abrichtmaschine eine Steuerung auf, welche eine Vorrichtung und / oder ein Softwareprogramm umfasst, wie sie oben näher dargestellt wurden.

In einer zweiten Variante kann die Steuerung eine Funktion zur Durchführung der Abrichtschritte im Rahmen eines der erfindungsgemäßen Verfahren, wie sie oben näher dargestellt wurden, aufweisen. Insbesondere kann dabei eine Funktion zur mehrmaligen Durchführung eines Abrichtvorgangs eines Werkzeuges mit geänderten Einstellungen der Bewegungsachsen der Abrichtmaschine vorgesehen sein, wobei die Steuerung bevorzugt so programmiert ist, dass sie bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert. Dabei kann die Steuerung dabei eine Funktion zur Bestimmung und / oder Berechnung der Ansteuerung der Bewegungsachsen aufweisen.

Bevorzugt sind dabei beide Varianten einer erfindungsgemäßen Abrichtmaschine miteinander kombiniert.

Bei der Abrichtmaschine kann es sich um eine Maschine handeln, welche ausschließlich zum Abrichten von Werkzeugen eingesetzt wird und keine zusätzliche Funktionalität zum Bearbeiten von Werkstücken mit solchen Werkzeugen aufweist. Bevorzugt handelt es sich jedoch bei der Abrichtmaschine um eine Kombi-Maschine, welche sowohl eine Bearbeitung von Werkstücken, als auch das Abrichten erlaubt.

Die vorliegende Erfindung umfasst weiterhin eine Verzahnmaschine mit einer Abrichtmaschine, wie sie soeben dargestellt wurde. Insbesondere kann es sich dabei um eine Kombimaschine handeln, auf welcher sowohl eine Verzahnbearbeitung eines Werkstückes durch ein Werkzeug, als auch das Abrichten des Werkzeuges durch einen Abrichter durchgeführt werden kann. Alternativ oder zusätzlich kann die erfindungsgemäße Verzahnmaschine auch eine Vorrichtung und / oder ein Softwareprogramm umfassen, wie sie oben dargestellt wurden. Gegebenenfalls können dabei die Bearbeitungsmaschine und die Abrichtmaschine einzelne oder mehrere Aufnahmen oder Bewegungsachsen teilen.

Die Verzahnmaschine weist bevorzugt eine Werkstückaufnahme und eine gegebenenfalls zusätzlich zu der Werkzeugaufnahme der Abrichtmaschine vorgesehene Werkzeugaufnahme auf, sowie eine Verzahnbearbeitungssteuerung zur Ansteuerung von Werkstückaufnahme und Werkzeugaufnahme zur Durchführung einer Verzahnbearbeitung. Insbesondere ist die Verzahnbearbeitungssteuerung dabei so programmiert, dass sie ein erfindungsgemäßes Verfahren durchführt, insbesondere automatisiert durchführt. Bevorzugt sind dabei die Verzahnbearbeitungssteuerung und die Steuerung, welche die Abrichtprozesse ansteuert, so ausgestaltet, dass ein erfindungsgemäßes Verfahren automatisiert durchgeführt wird.

Weiterhin werden die erfindungsgemäßen Verfahren bevorzugt unter Verwendung einer erfindungsgemäßen Vorrichtung und/oder eines erfindungsgemäßen Softwareprogramms und/oder einer erfindungsgemäßen Abrichtmaschine und/oder einer erfindungsgemäßen Verzahnmaschine durchgeführt.

Bei der erfindungsgemäßen Verzahnbearbeitung handelt es sich bevorzugt um ein Wälzbearbeitungsverfahren, insbesondere um ein Wälzschleifverfahren. Besonders bevorzugt kommt dabei ein Axialwälzverfahren oder ein Diagonalwälzverfahren zum Einsatz.

Bei dem Werkzeug, welches erfindungsgemäß abgerichtet bzw. eingesetzt wird, handelt es sich bevorzugt um eine Schleifschnecke. Als Abrichter wird erfindungsgemäß bevorzugt eine Profil- oder Formrolle eingesetzt.

Bevorzugt sind das erfindungsgemäße Verfahren und die erfindungsgemäßen Vorrichtungen bzw. Werkzeuge so ausgestaltet, dass erfindungsgemäß eine evolventische Verzahnung auf dem Werkstück erzeugt wird.

Erfindungsgemäß kann die Relativposition des Abrichters zum Werkzeug beim Abrichten mit Linienkontakt gezielt so eingestellt werden, dass sich die Berührlinie zwischen Abrichter und Werkzeug auf dem Abrichter verschiebt, um hierdurch das entlang der Berührlinie aktive, auf das Werkzeug übertragene Profil zu beeinflussen. Bevorzugt wird hierdurch die gewünschte Modifikation auf dem Werkzeug erzeugt. Insbesondere kann dabei die Balligkeit entlang der Berührlinie und damit die Profilballigkeit eingestellt bzw. verändert werden.

Die vorliegende Erfindung wird nun anhand von Ausführungsbeispielen und Zeichnungen näher beschrieben.

Kurzbeschreibung der Figuren:

Die Figuren zeigen beispielhaft nur w-z-Diagramme zylindrischer Verzahnungen. Die *w-z*-Diagramme konischer Verzahnungen sind im Allgemeinen nicht rechteckig, meist trapezförmig, da sich der Auswertebereich des Wälzwegs über die Verzahnbreite ändert.

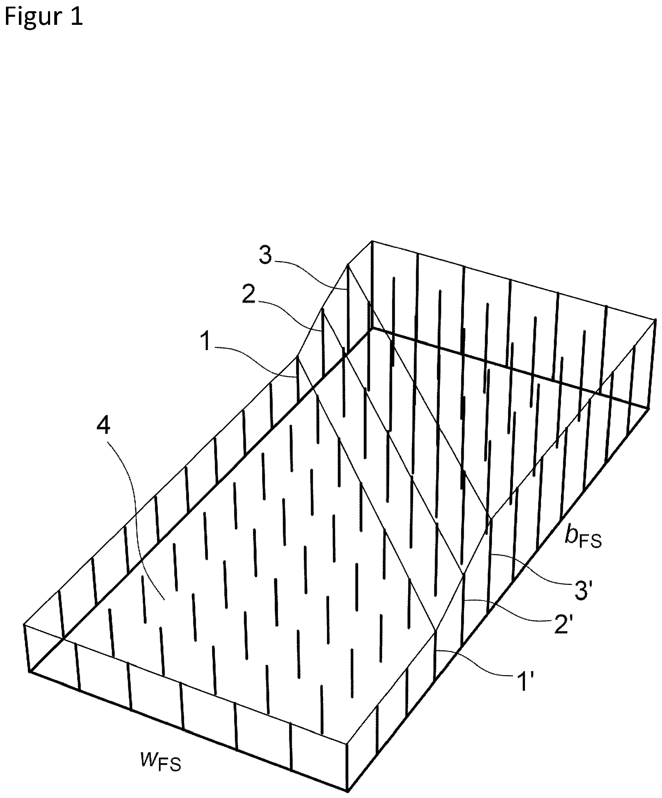

Figur 1     zeigt schematisch einen Abschnitt der Flanke eines Schneckengangs mit Vektoren in Normalenrichtung für eine nicht über die ganze Breite abgerichtete Schnecke. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke der nicht modifizierten Schnecke, auf die die Vektoren gestellt werden. Die Vektoren 1 und 1' wurden bereits von der Berührline überstrichen und sind somit vollständig gekürzt. Die Vektoren 2 und 2' wurden bereits mindestens einmal gekürzt, jedoch noch nicht von der Berührlinie überstrichen. Die Vektoren 3 und 3' wurden noch nicht gekürzt und haben somit noch die Länge dem gewählten Aufmaß entsprechend.

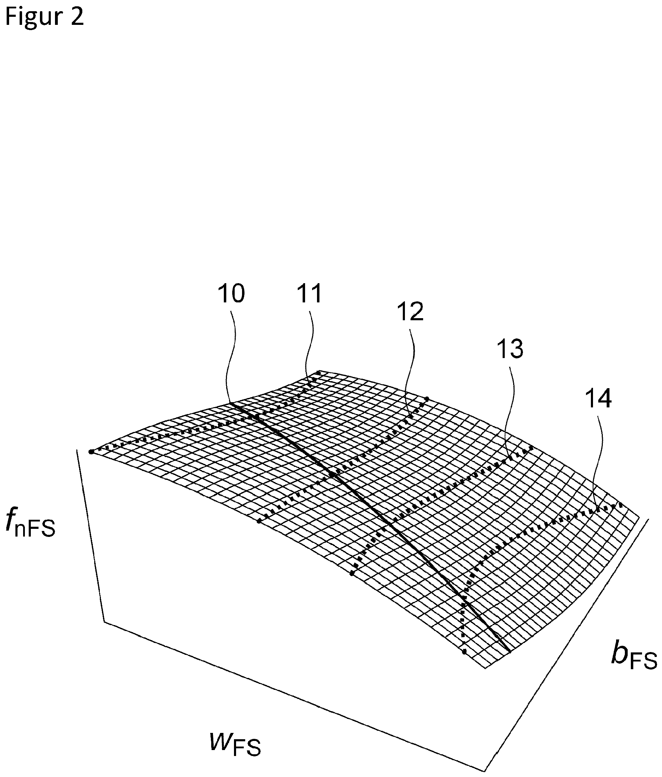

Figur 2     zeigt eine topologische Modifikation $f_{nFS}(w_{FS}, b_{FS})$ einer Schnecke, mit der Berührline 10 zwischen Abrichter und Schnecke und mit den vier frei vorgebaren Linien $w_{FSi}(b_{FS})$ 11, 12, 13 und 14, entlang derer die Sollmodifikation beim Abrichten exakt erreicht werden soll.

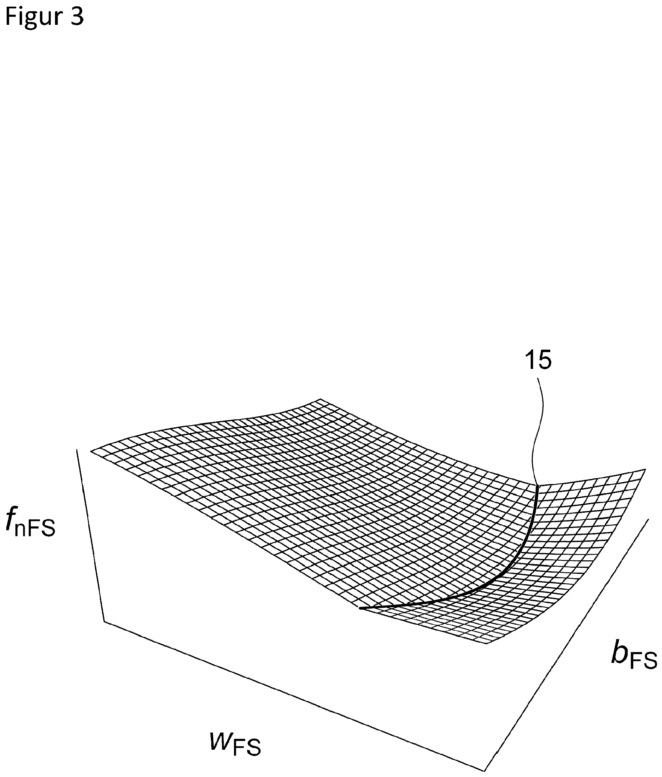

Figur 3     zeigt eine topologische Modifikation $f_{nFS}(w_{FS}, b_{FS})$ einer Schnecke, die mit einem Abrichter abgerichtet wurde, der zum Abrichten von Schnecken ausgelegt wurde, welche beim Wälzschleifen eine lineare Fußrücknahme an der Verzahnung erzeugen. Solche Abrichter weisen auf einen bestimmten Radius einen Knick auf, welcher den Übergang von Hauptprofil zur Fußrücknahme markiert. In der Figur wurde dieser Radius auf dem Abrichter über die Schneckenbreite verschiedenen Radien auf der Schnecke zugeordnet, sodass dieser Knick 15 auf der Schnecke in einem Bogen verläuft.

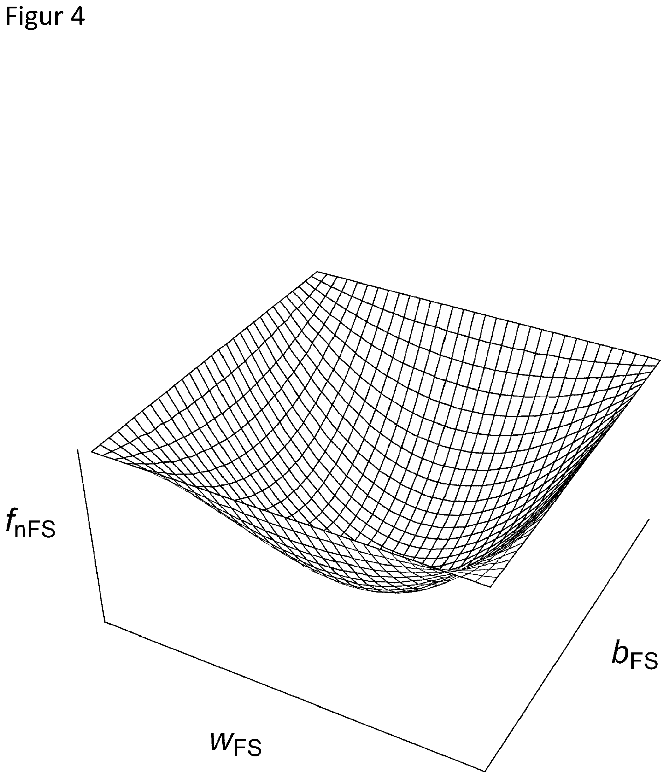

Figur 4     zeigt am Beispiel einer evolventischen Schnecke beispielhaft eine topologische Modifikation, welche mit der Erfindung beim Abrichten sehr genau angenähert werden kann. Die Modifikation ist definiert als Produkt einer Breiten- und einer Profilballigkeit.

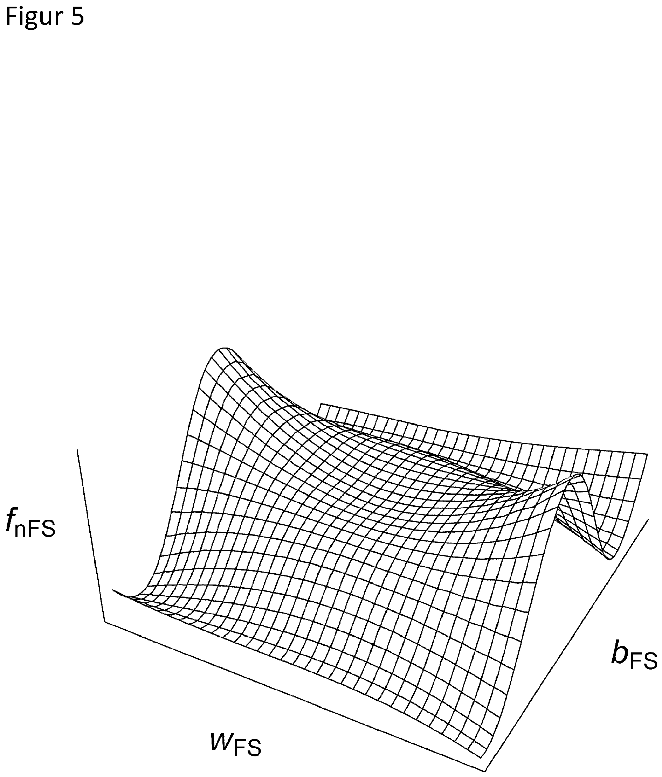

Figur 5     zeigt am Beispiel einer evolventischen Schnecke beispielhaft eine topologische Modifikation, welche mit der Erfindung abgerichtet werden kann. Die Modifikation ist definiert als sinusförmige Welle mit von $w_{FS}$ und $b_{FS}$ abhängiger Amplitude, wobei die Amplitude zu den Rändern hin zunimmt.

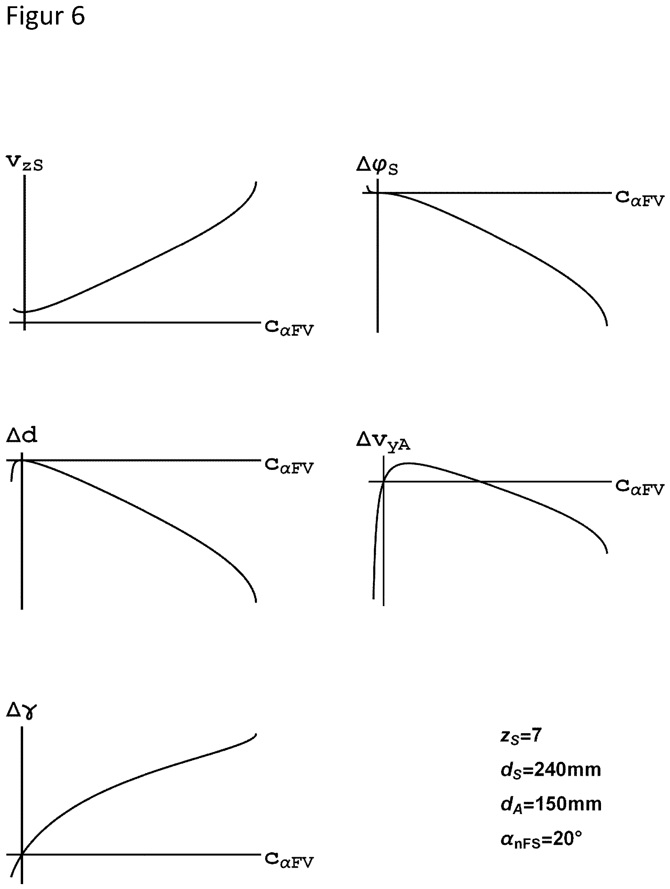

Figur 6     zeigt am Beispiel einer evolventischen Schnecke und einer damit geschliffenen evolventischen Verzahnung, welche Achskorrekturen $\Delta K$ und welche axiale Position der Schnecke $v_{zS}$ in Abhängigkeit der auf der Verzahnung zu erzeugenden Profilballigkeit $c_{\alpha V}$ einzustellen sind. Die Diagramme zeigen nahezu den ganzen Bereich der mit der gewählten Schnecke und dem gewählten Abrichter auf dieser Verzahnung erzeugbaren Profilballigkeiten.

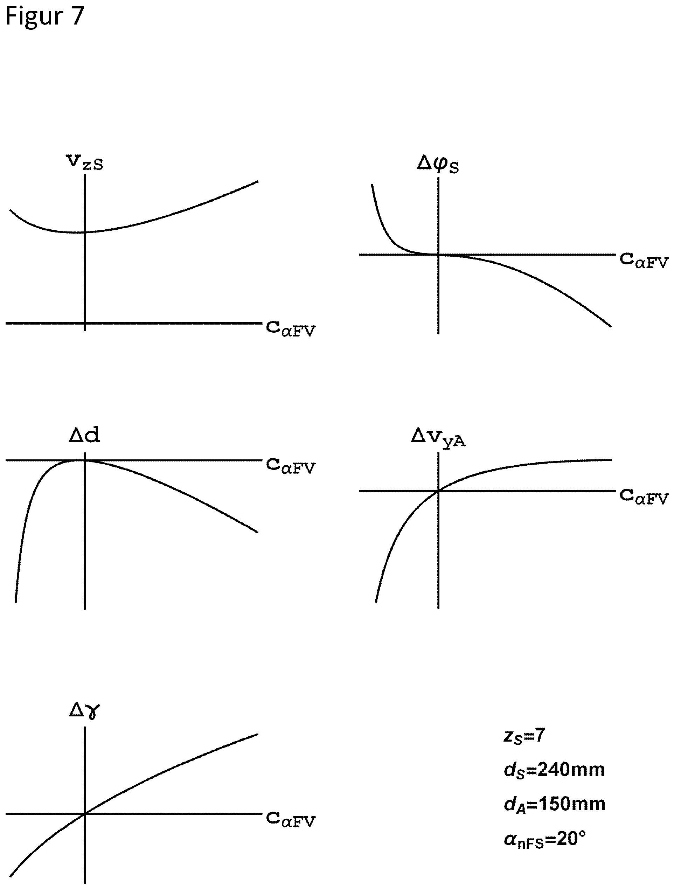

Figur 7     zeigt die gleichen Diagramme wie Figur 6, jedoch auf einen kleineren Bereich der Profilballigkeit $c_{\alpha FV}$

reduziert, um die Verläufe für kleine Profilballigkeiten besser darzustellen.

| | |
|---|---|
| Figur 8 | zeigt Diagramme wie in Figur 7 mit dem selben Bereich der Profilballigkeit $c_{\alpha FV}$, jedoch für verschiedene Schneckendurchmesser $d_S$ |
| Figur 9 | zeigt Diagramme wie in Figur 7 mit dem selben Bereich der Profilballigkeit $c_{\alpha FV}$, jedoch für einen anderen Schneckendurchmesser $d_S$ und verschiedene Gangzahlen $z_S$. |
| Figur 10 | zeigt Diagramme wie in Figur 7 mit dem selben Bereich der Profilballigkeit $c_{\alpha FV}$, jedoch für einen anderen Schneckendurchmesser $d_S$ und verschiedene Durchmesser des Abrichters $d_A$. |
| Figur 11 | zeigt Diagramme wie in Figur 7 mit dem selben Bereich der Profilballigkeit $c_{\alpha FV}$ jedoch für einen anderen Schneckendurchmesser $d_S$ und verschiedene Profilwinkel der Schnecke $\alpha_{nFS}$. |
| Figur 12 | a) zeigt die Profilmodifikation 40 auf einer nicht modifizierten Schnecke, welche mit nicht korrigierter Kinematik mit einem Abrichter abgerichtet wurde, der für ein gerades Profil ohne Profilkorrektur ausgelegt wurde. Die Punkte zeigen die tatsächlich gefertigte Profilmodifikation $f_{nS}$, welche über dem ganzen Profil 0 ist. Jeder dieser Punkte entspricht einem Radius auf dem Abrichter. Die Figur zeigt so, welcher Radius auf dem Abrichter welchen Wälzweg auf der Schnecke abrichtet. Der Abrichter wurde so ausgelegt, dass beim Abrichten mit nicht korrigierter Kinematik, der Punkt 42 am Kopfformkreis $w_{NaFS}$ und der Punkt 41 am Fußformkreis $w_{NfFS}$ liegt. |
| | b) zeigt eine Profilballigkeit (Sollmodifikation) 40' auf einer Schnecke, welche mit dem Abrichter aus a), jedoch mit einer Abrichtkinematik gemäß der 3-Punkt-Methode abgerichtet wurde. Auch hier zeigen die Punkte die tatsächlich gefertigte Profilmodifikation $f_{nFS}$. Die Figur zeigt, dass bei Verwendung der 3-Punkt-Methode und fixieren des Punkts 42' am Kopfformkreis, der zu Punkt 41' passende Radius auf dem Abrichter nicht mehr den Fußformkreis abrichtet, sondern $w_{PS}$. Des Weiteren zeigt die Figur die geringe Abweichung der Punkte von der Sollmodifikation. |
| Figur 13 | zeigt die Abhängigkeit der relativen Profilstreckung $P_{FV}$ von der mit der 3-Punkt-Methode erzeugten Balligkeit auf der Verzahnung $c_{\alpha FV}$ für<br><br>a) verschiedene Gangzahlen der Schnecke $z_S$,<br>b) verschiedene Durchmesser der Schnecke $d_S$,<br>c) verschiedene Durchmesser des Abrichters $d_A$ und<br>d) verschiedene Profilwinkel der Schnecke $\alpha_{nFS}$. |
| Figur 14a | zeigt zwei benachbarte Schneckengänge einer mehrgängigen Schnecke und einen Abrichter, mit einer relativen Lage, wie sie dem einflankigen Abrichten nach dem Stand der Technik entspricht. Die linke Flanke 24 des ersten Schneckengangs wird mit der linken Flanke 22 des Abrichters abgerichtet. Die äußere Mantelfläche 20 des Abrichters richtet den Zahngrund 23 zwischen den beiden Gängen zu einem großen Teil ab. Die rechte Flanke 25 des zweiten Schneckengangs und die rechte Flanke 21 des Abrichters berühren und durchdringen sich nicht. |
| Figur 14b | zeigt einen vergrößerten Ausschnitt aus Figur 14a. |
| Figur 15 Figur | zeigt dieselbe Situation wie Figur 14a, jedoch aus einem anderen Blickwinkel. zeigt dieselben zwei benachbarten Schneckengänge und denselben Abrichter |
| 16a | aus Figur 14a. Die relative Lage entspricht der der 3-Punkt-Methode zur Erzeugung einer Profilballigkeit auf der Schnecke. Die linke Flanke 24' des ersten Schneckengangs wird mit der linken Flanke 22' des Abrichters abgerichtet. Die äußere Mantelfläche 20' des Abrichters durchdringt den Zahngrund 23' zwischen den beiden Gängen. Die rechte Flanke 21' des Abrichters durchdringt die rechte Flanke. |
| Figur 16b | zeigt einen vergrößerten Ausschnitt aus Figur 16a. |
| Figur 17 | zeigt dieselbe Situation wie Figur 16a, jedoch aus einem anderen Blickwinkel. Aus diesem Blickwinkel ist das Eindringen der äußeren Mantelfläche 20' in die Schnecke unterhalb des Zahngrunds 23' zu erkennen. |
| Figur 18a | zeigt beispielhaft eine zweigängige Schnecke, wie diese gemäß dem Stand der Technik eingesetzt wird. |
| Figur 18b | zeigt eine Schnecke, die analog zu der aus Figur 18a ausgelegt wurde, in der jedoch ein Gang ausgespart wurde. |
| Figur 19 | zeigt am Beispiel evolventischer Schnecken mit kleinen Durchmessern, welche mit der 3-Punkt-Methode mit einem Abrichter, welcher für den Durchmesser der Schnecke $d_{S0}$ und den Profilwinkel der Schnecke $\alpha_{nFS0}$ ausgelegt wurde, für verschiedene Gangzahlen $z_S$<br><br>a) den Verlauf der relativen Profilstreckung auf der Verzahnung $P_{FV}$ abhängig vom aktuellen Schneckendurchmesser $d_S$, |

b) den Verlauf der relativen Profilstreckung auf der Verzahnung $P_{FV}$ abhängig vom Profilwinkel der Schnecke $\alpha_{nFS}$ für einen Schneckendurchmesser, welcher unterhalb $d_{S0}$ liegt,

c) den Verlauf des Profilwinkels der Schnecke $\alpha_{nFS}$, für den die relative Profilstreckung 0 ist.

| | |
|---|---|
| Figur 20a | zeigt eine Profilmodifikation $f_{nFS}$, welche durch mehrere Hübe unter Verwendung eines Abrichters mit einem kleinen aktiven Bereich auf der Schnecke aufgebracht wurde. Die Profilmodifikation hat einen Bereich 30, welcher eine Kopfrücknahme auf der Verzahnung erzeugt, einen Bereich 32, welcher eine Fußrücknahme auf der Verzahnung erzeugt und ein Hauptprofil 31. Alle diese Bereiche haben eine Winkelkorrektur und eine Balligkeit. 34, 35, 36, 37, 38, 39 kennzeichnen die Bereiche, welche während der einzelnen Hübe abgerichtet wurden. |
| Figur 20b | zeigt dieselbe Profilmodifikation $f_{nFS}$ wie Figur 20a, welche hier durch mehrere Hübe unter Verwendung eines Abrichters mit mehreren aktiven Bereichen auf der Schnecke aufgebracht wurde. Die Profilmodifikation hat einen Bereich 30', welcher eine Kopfrücknahme auf der Verzahnung erzeugt, einen Bereich 32', welcher eine Fußrücknahme auf der Verzahnung erzeugt und ein Hauptprofil 31'. Alle diese Bereiche haben eine Winkelkorrektur und eine Balligkeit. 34', 35', 36',39' kennzeichnen die Bereiche, welche während der einzelnen Hübe abgerichtet wurden. |
| Figur 21 | zeigt beispielhaft 3 mögliche Abrichtervarianten, welche beim Einsatz des hier beschriebenen Verfahrens eingesetzt werden können. Die Figur zeigt die Abrichter beim einflankigen Abrichten. Ein zweiflankiges Abrichten ist mit diesen bei Anwendung des hier beschriebenen Verfahrens ebenso möglich. Die Abrichter können optional als Kombiabrichter, welche neben der Flanke auch den Kopf der Schnecke abrichten können, ausgeführt sein. |
| Figur 22 | zeigt beispielhaft eine Verzahnmaschine auf der die Erfindung angewendet werden kann. |
| Figur 23 | zeigt ein $w$-$z$-Diagramm einer Modifikation, bestehend aus gemäß Gleichung (25) modifizierten Bereichen 141 und 141', sowie aus nicht modifizierten Bereichen 142, 142' und 142". Die Geraden 140 und 140' verlaufen in der durch $\rho_{F2}$ gegebenen Richtung. Die Geraden 143 und 143' entsprechen dem Verlauf des Kontaktpunkts. |
| Figur 24 | zeigt ein $w$-$z$-Diagramm einer Modifikation, bestehend aus gemäß Gleichung (25) modifizierten Bereichen 151 und 151', sowie aus nicht modifizierten Bereichen 152, 152' und 152". Die Bereiche 151 und 151' haben Modifikationen mit unterschiedlichen Richtungen $\rho_{F2}$. Die Geraden 150 und 150' verlaufen in der durch die jeweiligen $\rho_{F2}$ gegebene Richtung. Die Geraden 153 und 153' entsprechen dem Verlauf des Kontaktpunkts. |
| Figur 25 | Figur 25a zeigt am Beispiel einer rechten Flanke eines rechtsschrägen zylindrischen Werkstücks vier Kurven 160-163, welche jeweils den Verlauf der Punkte im $w$-$z$-Diagramm auf dem Werkstück beschreiben, welche auf eine Gerade auf der Schnecke abgebildet werden. Die vier Kurven entsprechen vier verschiedenen Werten $X_{F1}$ und somit vier verschiedenen Geraden auf der Schnecke. Die Kurven sind gegeneinander entlang der parallelen Geraden 165 bzw. 166 verschoben. Figur 25b zeigt, passend zu Figur 25a, die Funktion $F_{ZV1}(z_{V2})$, welche die Abhängigkeit von $z_{V1}$ von $z_{V2}$ beschreibt. |
| Figur 26 | zeigt ein $w$-$z$-Diagramm einer rechten Flanke eines linksschrägen zylindrischen Werkstücks, auf welches eine Modifikation mittels variablen Diagonalverhältnisses aufgebracht wurde. Linie 170 markiert den Verlauf der Punkte, welche auf die durch $X_{F1}$ = 0 definierte Gerade auf der Schnecke abgebildet werden. Line 171 markiert den Verlauf der Punkte, welche auf die durch $X_{F1}$ = 0.5 $mm$ definierten Gerade auf der Schnecke abgebildet werden. Line 172 markiert den Verlauf der Punkte, welche auf die durch $X_{F1}$ = 1.0 $mm$ definierten Gerade auf der Schnecke abgebildet werden. Die Modifikationen entlang der jeweiligen Verläufe sind in Figur 27c dargestellt. |
| Figur 27 | Figur 27a zeigt, in einem Schema wie in Figur 25, die Verläufe 170-172 der Punkte auf dem Werkstück, welche in dem Beispiel aus Figur 26 auf die durch $X_{F1}$ = 0, $X_{F1}$ = 0.5 $mm$ bzw. $X_{F1}$ = 1.0 $mm$ definierten Geraden auf der Schnecke abgebildet werden. Die Geraden 175 bzw. 176 definieren die Richtung, entlang der die Verläufe für verschiedene $X_{F1}$ gegeneinander verschoben werden. Figur 27b zeigt die im Beispiel in Figur 26 verwendete Funktion $F_{ZV1}(z_{V2})$, welche die Abhängigkeit von $z_{V1}$ von $z_{V2}$ beschreibt. Figur 27c zeigt die Modifikationen entlang der 3 Verläufe aus dem Beispiel in Figur 26. |
| Figur 28 | zeigt die im Beispiel in Figur 26 verwendeten Funktionen $F_{Ft10}(X_{F1})$, $F_{Ft11}(X_{F1})$ und $F_{Ft12}(X_{F1})$, welche die Modifikation auf der Schnecke gemäß Gleichung (25) definieren. |
| Figur 29 | zeigt in einem $w$-$z$-Diagramm die additive Überlagerung einer Profil- und einer Flankenlinienballigkeit und einer linearen dreiecksförmigen Endrücknahme ohne Übergangsbereich, wie diese mit dem hier beschriebenen Verfahren gefertigt werden kann. Line 120 markiert einen Kontaktpfad. Line 121 markiert eine Gerade auf dem Werkstück, welche auf eine Gerade auf der Schnecke abgebildet wird. Im |

Bereich 128 sind nur die beiden Balligkeiten überlagert, im Bereich 127 zusätzlich die dreiecksförmige Endrücknahme.

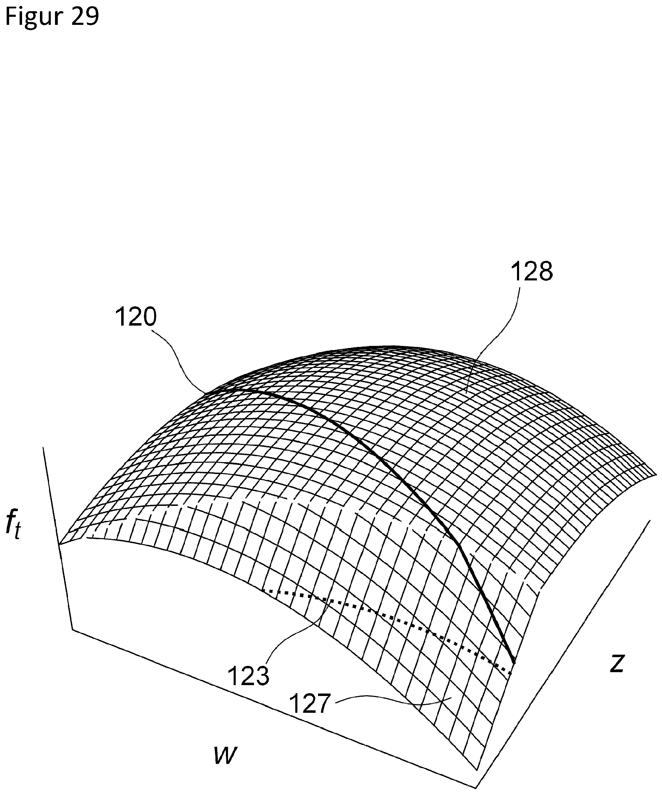

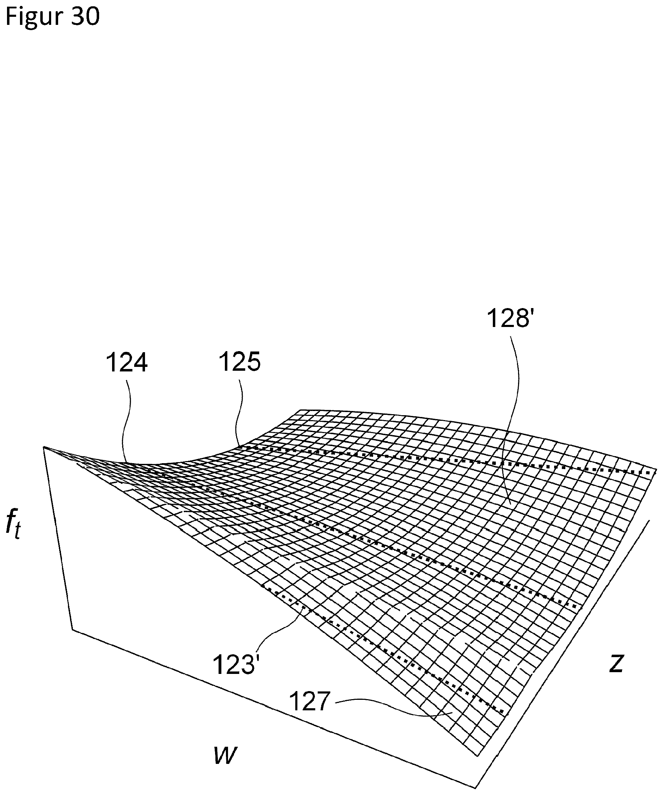

Figur 30   zeigt in einem *w-z*-Diagramm den Anteil der Modifikation aus Figur 29, der über die Modifikation auf der Schnecke durch das Diagonalschleifen auf das Werkstück übertragen wird. Bereich 28' markiert den Bereich, der zur Erzeugung der Balligkeiten beiträgt, 127 den Bereich, welcher zusätzlich zur Erzeugung der dreiecksförmigen Endrücknahme beiträgt. 123', 124 und 125 markieren Geraden in *w* und *z*, welche auf Geraden in w und z auf der Schnecke abgebildet werden. Die Modifikationen entlang der jeweiligen Geraden sind linear in *w*.

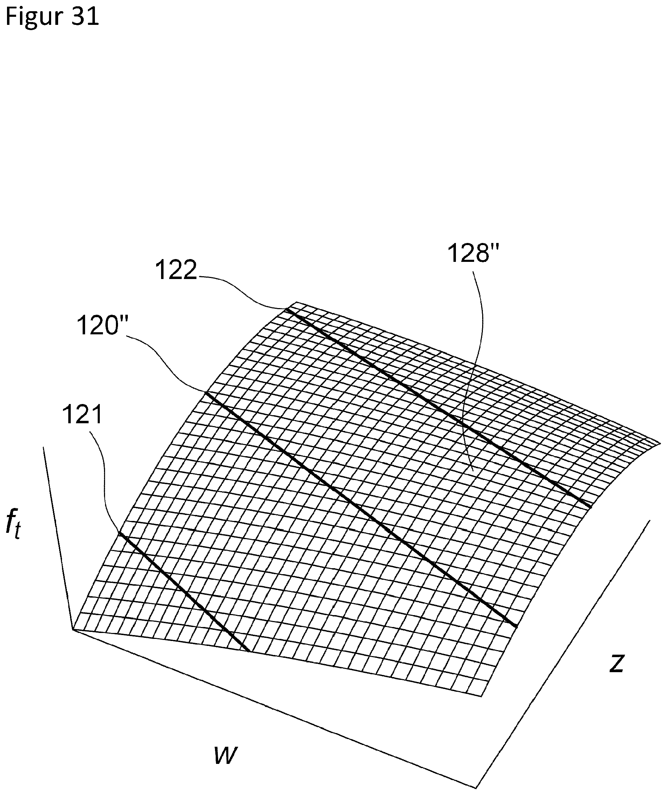

Figur 31   zeigt in einem *w-z*-Diagramm den Anteil ($F_{KFt}$) der Modifikation aus Figur 29 der über die Schleifkinematik erzeugt wird. Der Bereich 128", welcher der einzige Bereich ist, trägt nur zur Erzeugung der Balligkeiten bei. Die Linien 120", 121 und 122 markieren den Kontakpfad für verschiedene Vorschubpositionen. Entlang dieser Linien ist die Modifikation jeweils konstant.

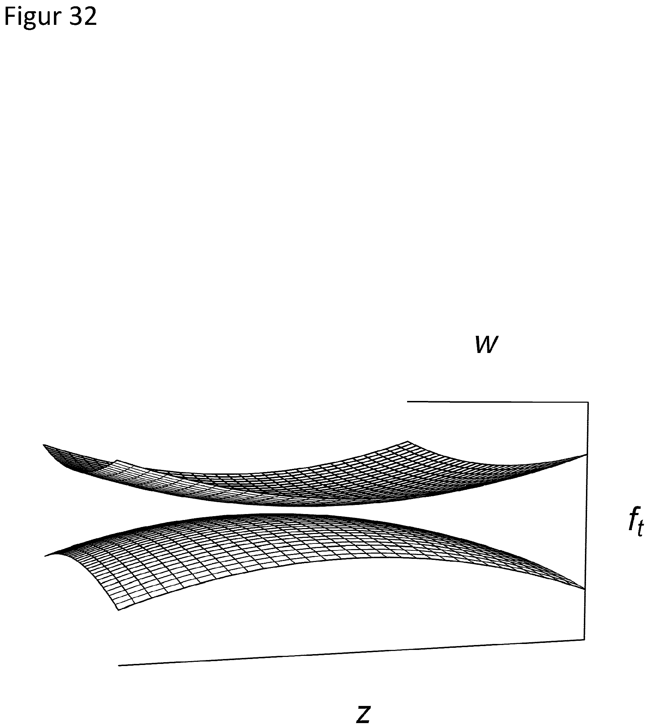

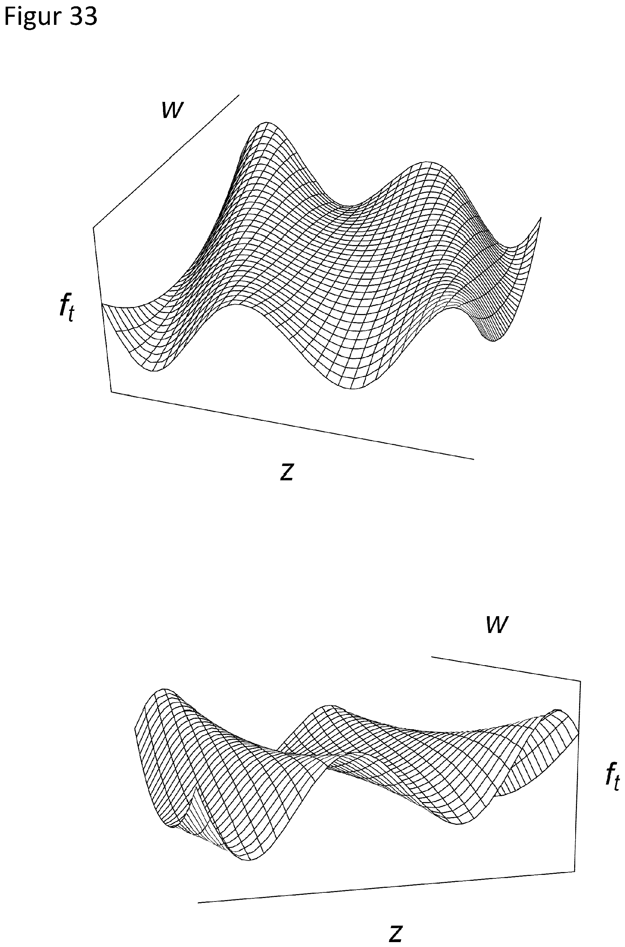

Figur 32   zeigt in einem *w-z*-Diagramm die obere und untere einhüllende Fläche der Welligkeit aus Figur 33.

Figur 33   zeigt in zwei *w-z*-Diagramm aus verschiedenen Blickrichtungen eine Welligkeit, deren Amplitude zum Rand der Flanke hin zunimmt.

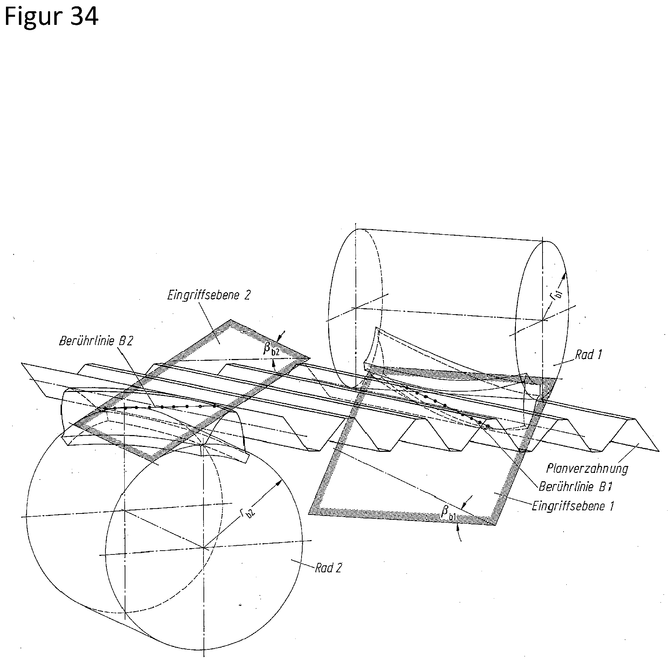

Figur 34   zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983)

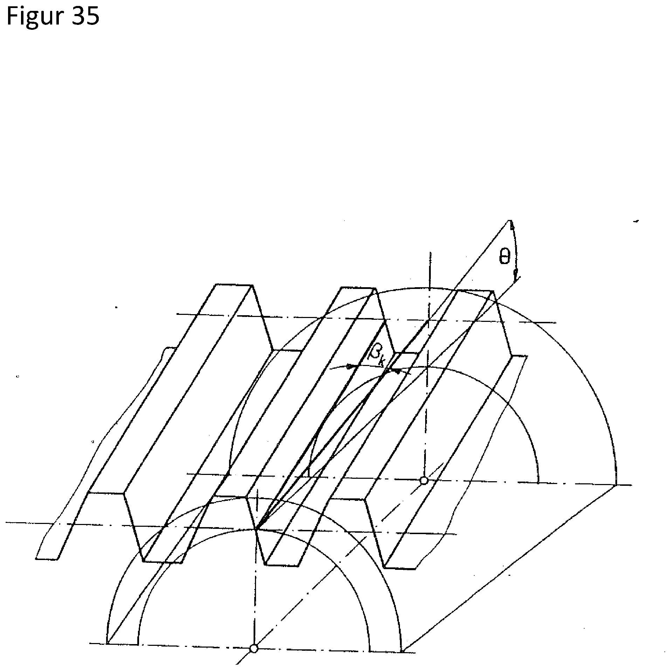

Figur 35   zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig)

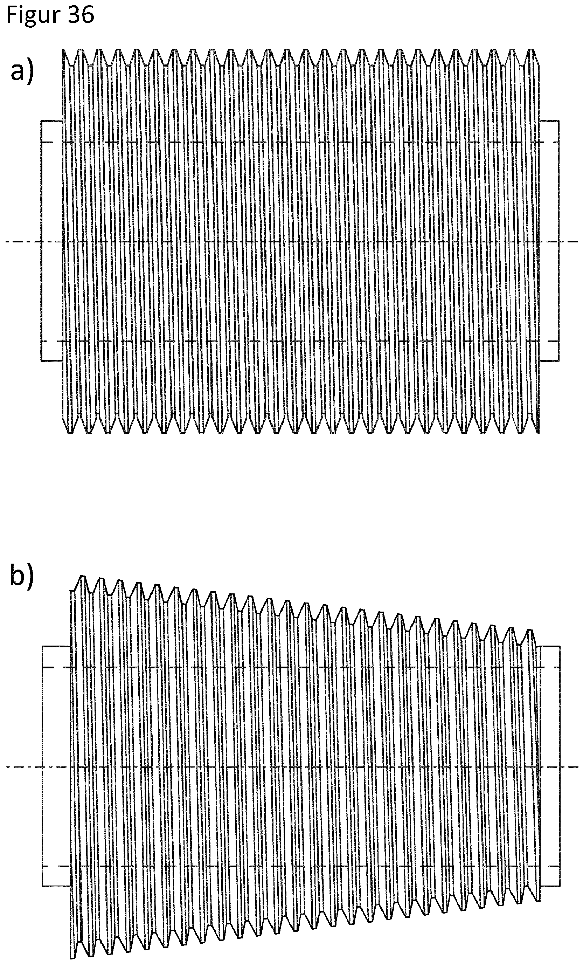

Figur 36a   zeigt beispielhaft eine zylindrische Schnecke.

Figur 36b   zeigt beispielhaft eine konische Schnecke.

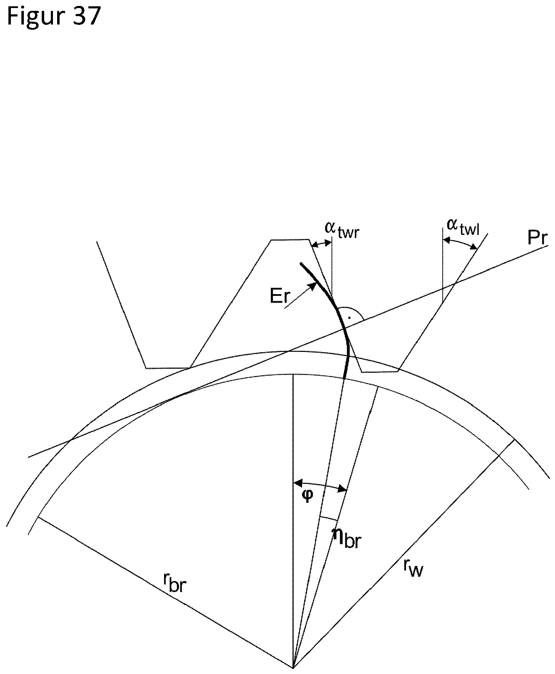

Figur 37   zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht.

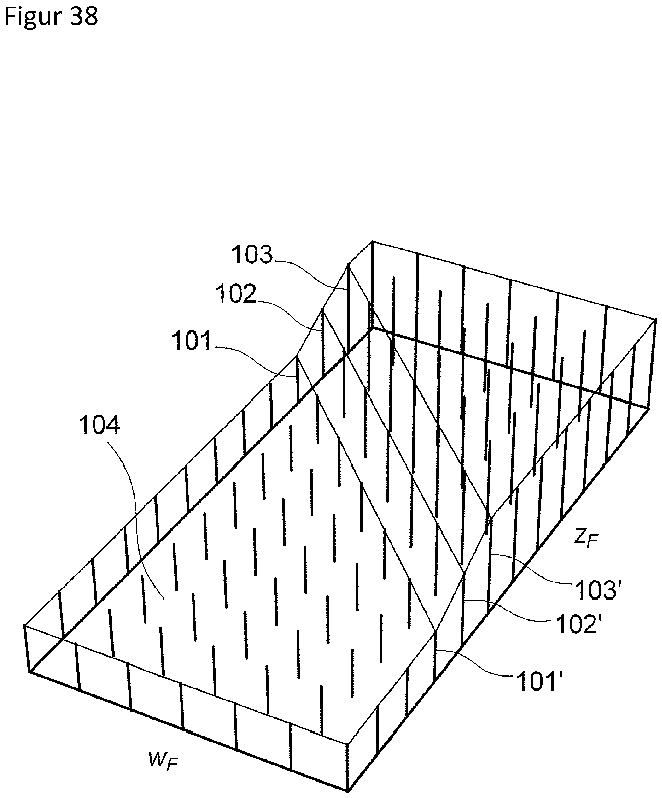

Figur 38   zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 104 entspricht der im Allgemeinen gekrümmten Flanke des nicht modifizierten Werkstücks, auf die die Vektoren gestellt werden. Die Vektoren 101 und 101' wurden bereits vom Kontaktpfad überstrichen und sind somit vollständig gekürzt. Die Vektoren 102 und 102' wurden bereits mindestens einmal gekürzt, jedoch noch nicht vom Kontaktpfad überstrichen. Die Vektoren 103 und 103' wurden noch nicht gekürzt und haben somit noch die Länge dem gewählten Aufmaß entsprechend.

**1. Beschreibung Abrichten der Schnecke**

Der erste Teil der Erfindung betrifft ein Verfahren zum Abrichten von Werkzeugen zur Verzahnbearbeitung, und wird im Folgenden anhand von Schnecken zum Wälzschleifen näher beschrieben Die Schnecken können symmetrisch oder asymmetrisch sein und sie können zylindrisch oder konisch sein. Sie können alle Profile aufweisen, die zum Wälzschleifen wälzbarer Verzahnungen geeignet sind, insbesondere können die Schnecken evolventische Profile haben.

Zum Abrichten von Schnecken sind im Wesentlichen zwei Verfahren bekannt. Zum einen das Abrichten mit einer Profilrolle, die das Abrichten des ganzen Profils, von Kopf bis Fuß in einem Hub erlaubt. Dieses Verfahren führt, insbesondere dann, wenn es zweiflankig eingesetzt wird, zu kurzen Abrichtzeiten. Ein Nachteil dieses Verfahrens ist jedoch, dass bei einem gegebenen Abrichter die Profilform nur noch eingeschränkt während des Abrichtprozesses beeinflusst werden kann. So können gemäß dem Stand der Technik nur die Profilwinkel über die Abrichtkinematik beeinflusst werden. Insbesondere ist eine Beeinflussung der Profilballigkeit (Höhenballigkeit) über die Abrichtkinematik bisher nicht möglich.

Eine weitere Methode zum Abrichten ist das Zeilenabrichten. Im Gegensatz zum Abrichten mit einer Profilrolle wird hier pro Hub nur ein kleiner Teil des Profils abgerichtet, was eine Vielzahl von Hüben erfordert, um das Profil von Kopf bis Fuß abzurichten, wodurch dieses Verfahren sehr unwirtschaftlich wird. Es bietet jedoch die Möglichkeit, über die Kinematik beim Abrichten die Profilform in gewissen Grenzen frei vorzugeben. Wird ein Abrichter mit einem kreis- oder ellipsenförmigen Profil verwendet, kann das Profil sehr flexibel gestaltet werden, aufgrund der kleinen Kontaktfläche sind jedoch sehr viele Hübe nötig und das Profil weist eine hohe Rauhigkeit auf. Werden Abrichter mit kurzer, gerader Profilform genutzt, so lässt sich die Zahl der Hübe zwar reduzieren, Profilmodifikationen wie beispielsweise Profilballigkeiten lassen sich jedoch nur grob annähern, wodurch Formabweichungen entstehen.

Um die Zusammenhänge mathematisch zu formulieren werden folgende Definitionen gemacht: Größen zur Beschreibung eines Abrichters werden mit dem Index $A$, Größen zur Beschreibung einer Schnecke mit dem Index $S$ und Größen zur Beschreibung einer Verzahnung mit dem Index $V$ versehen. In den Bespielen, in denen evolventische Schnecken und Verzahnungen betrachtet werden, werden die aus der DIN3960 bekannten Größen Grundkreisradius $r_b$, Grundmodul $m_b$, Grundschrägungswinkel $\beta_b$ verwendet. Da die hier beschriebenen Zusammenhänge allgemein für asymmetrische Verzahnungen gelten, werden Größen, die auf linker und rechter Flanke unterschiedlich sein können, mit dem Index $F$ versehen. Profilballigkeiten können sowohl negativ als auch positiv sein.

Für Transformationen werden folgende Bezeichnungen verwendet:

- $R_x(\varphi)$ Rotation um den Winkel $\varphi$ um die $x$-Achse. Analog für $y$ und $z$
- $T_x(v)$ Translation um die Strecke $v$ in $x$-Richtung. Analog für $y$ und $z$
- $H(A_1,...,A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse der Schnecke bzw. des Abrichters fällt in den jeweiligen Ruhesystemen immer mit der $z$-Achse zusammen.

Weiterhin wichtig für die Formulierung der Zusammenhänge ist es, die kinematische Kette, welche die Relativstellungen zwischen Schnecke und Abrichter beschreibt, zu definieren.

Die relative Lage zwischen Schnecke und Abrichter wird durch die folgende kinematische Kette $K_R$ beschrieben:

$$K_R = R_z(-\varphi_S) \cdot T_z(-v_{zS}) \cdot R_x(-\gamma) \cdot T_x(-d) \cdot T_y(v_{yA}) \cdot R_z(\varphi_A) \qquad (1)$$

- $\varphi_S$: Drehwinkel Schnecke
- $\varphi_A$: Drehwinkel Abrichter
- $v_{yA}$: $y$-Position des Abrichters
- $v_{zS}$ : Axiale Position der Schnecke
- $d$: Achsabstand
- $\gamma$: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation

$$H(B_1,...,B_{N_S}) \text{ mit } N_s \geq 1 \qquad (2)$$

ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten $B_1,...,B_{N_s}$ existieren, mit

$$H(B_1,...,B_{N_\square}) = K_R \qquad (3)$$

Die Berechnung der Koordinaten $B_1,...,B_{N_S}$ kann mittels einer Koordinatentransformation durchgeführt werden.

Typische Bewegungsapparate, die alle geforderten Relativstellungen ermöglichen, sind beispielsweise durch folgende kinematischen Ketten beschrieben:

$$H_{Bsp1} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_y(\varphi_{C5}) \cdot R_z(\varphi_{B3}) \qquad (4)$$

$$H_{Bsp2} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_z(\varphi_{B3}) \qquad (5)$$

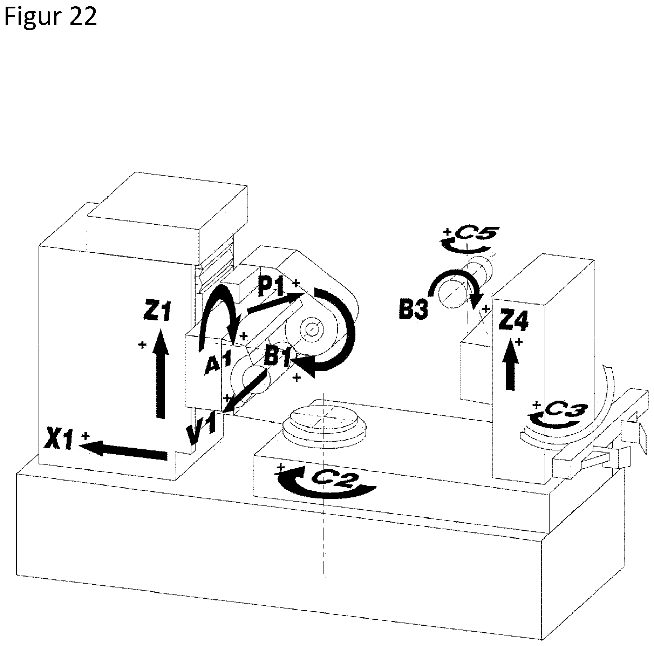

Eine Verzahnmaschine, welche einen Bewegungsapparat wie in diesen beiden Beispielen aufweist, ist in Figur 22 gezeigt. Der Index B1, V1, A1, X1, Z1, C5, B3 in Formeln (4) und (5) bezieht sich jeweils auf die dort dargestellten Maschinenachsen.

Figur 22 zeigt eine perspektivische Ansicht einer Verzahnmaschine mit einer Abrichtmaschine, welche zur Durchführung der erfindungsgemäßen Verfahren einsetzbar ist.

Die Verzahnmaschine weist einen links dargestellten Bearbeitungskopf mit einer Werkzeugaufnahme, eine mittig dargestellte Werkstückaufnahme und eine rechts schematisch dargestellte Abrichteraufnahme auf. Zur Durchführung einer Verzahnbearbeitung kann ein in der Werkstückaufnahme eingespanntes Werkstück durch ein in der Werkzeugaufnahme eingespanntes Werkzeug bearbeitet werden. Zur Durchführung eines Abrichtverfahrens kann das in der Werkzeugaufnahme eingespannte Werkzeug durch einen in der Abrichteraufnahme eingespannten Abrichter bearbeitet werden. Dies hat den Vorteil, dass das Werkzeug zum Abrichten in der Werkzeugaufnahme verbleiben kann. Weiterhin können die Bewegungsachsen des Bearbeitungskopfes zur Einstellung der Relativposition von Werkzeug und Abrichter beim Abrichter eingesetzt werden.

Die Verzahnmaschine weist dabei die Bewegungsachsen A1, B1, V1, X1, Z1 zum Bewegen der Werkzeugaufnahme, C2 zum Bewegen der Werkstückaufnahme und B3, C5 zum Bewegen des Abrichters auf.

Im Einzelnen ermöglicht B1 eine Rotation des Werkzeugs um seine Drehachse, X1 eine translatorische Bewegung des Werkzeugs senkrecht zur Drehachse des Werkzeugs bzw. Werkstücks, Z1 eine translatorische Bewegung des Werkzeugs in vertikaler Richtung bzw. parallel zur Drehachse des Werkstücks, A1 eine Schwenkbewegung des Werkzeugs, V1 eine Tangentialbewegung bzw. Shiftbewegung des Werkzeugs in Richtung seiner Drehachse, C2 eine Drehbewegung des Werkstücks, B3 eine Rotationsbewegung des Abrichtwerkzeugs um seine Drehachse, sowie C5 eine Schwenkbewegung des Abrichtwerkzeugs zur Änderung des Eingriffswinkels $\alpha$ am Werkzeug.

Es können jedoch auch andere Verzahn- und/oder Abrichtmaschinen zur Durchführung der erfindungsgemäßen Verfahren eingesetzt werden.

Die Idee der Erfindung liegt darin, während des Abrichtprozesses die 5 Freiheitsgrade $\varphi_S$, $v_{zS}$, $\gamma$, $d$ und $v_{yA}$ aus Gleichung (28) zu betrachten, um die Profilform der Schnecke zu beeinflussen. Aufgrund der Rotationssymmetrie des Abrichters, spielt der Freiheitsgrad $\varphi_A$ bei der hier vorgenommenen Betrachtung keine Rolle.

Bei den bisher bekannten Verfahren werden nur bis zu 4 der vorhandenen Freiheitsgrade während des Abrichtens genutzt. So ist aus der EP1995010A1 ein Verfahren bekannt, bei dem durch Änderung des Achsabstands $d$ eine Schnecke über ihre Breite ballig abgerichtet wird (Flankenlinienballigkeit). Aus der DE 19706867A1 ist ein Verfahren bekannt, bei dem mit einer kinematischen Kette ähnlich dem Beispiel aus Gleichung (4) mit $\varphi_{A1} = 0$ durch stetige Änderung von $\varphi_{C5}$, $v_{V1}$ und $v_{X1}$ eine Schnecke mit über die Breite verändertem Profilwinkel hergestellt werden kann. Gleiches wird in DE102006061759A1 mit einer kinematischen Kette wie in Gleichung (5) mit $\varphi_{B1}$, $v_{V1}$, $\varphi_{A1}$, $v_{X1}$ und $v_{Z1}$ beschrieben. Auch wenn hier 5 Achsen bewegt bzw. korrigiert werden, so sind es nur die 3 Freiheitsgrade $\varphi_{C5}$, $v_{V1}$ und $v_{X1}$ aus Gleichung (4), die variiert werden. Die Positionen der 5 bewegten Achsen folgen bei gegebenen $\varphi_{C5}$, $v_{V1}$ und $v_{X1}$ aus einer Koordinatentransformation. Aufgrund der Ähnlichkeit zu dem Verfahren aus der DE19706867A1, lässt sich mit der DE102006061759A1 ebenfalls nur der Profilwinkel über die Schneckenbreite modifizieren.

In der DE102005030846A1 wird bereits, analog zur DE102006061759A1, aufgezeigt, wie mit den Achsen $\varphi_{B1}$, $v_{V1}$, $\varphi_{A1}$, $v_{X1}$ und $v_{Z1}$ aus Gleichung (5) der Profilwinkel einer Schnecke über die ganze Breite konstant modifiziert werden kann. Auch hier werden wieder nur 3 Freiheitsgrade variiert und die Positionen der bewegten Achsen ergeben sich aus einer Koordinatentransformation.

Beim Abrichten einer Schnecke wird typischerweise deren axiale Position $v_{zS}$ über die Steigungshöhe an den Drehwinkel der Schnecke $\varphi_S$ gekoppelt. Dadurch überstreicht die Berührlinie zwischen Schnecke und Abrichter den abzurichtenden Teil der Schnecke. Wird eine Schnecke über ihre Breite nicht modifiziert abgerichtet, werden die übrigen Koordinaten $d$, $v_{yA}$ und $\gamma$ auf feste Werte eingestellt und während des Abrichtens nicht verfahren. Typischerweise werden diese Koordinaten auf jene Werte eingestellt, die bei der Auslegung des Abrichters angenommen wurden. Wählt man Werte für diese Koordinaten, welche nicht denen der Abrichterauslegung entsprechen, so ist es möglich, die Schnecke modifiziert abzurichten. Die erzielbaren Formen der Modifikationen hängen von der Anzahl der genutzten Freiheitsgrade ab. Modifikationen auf den Flanken des Schneckengangs, definiert in Normalenrichtung auf der Flanke, werden hier mit

$$f_{nFS}(w_{FS}, b_{FS}) \tag{6}$$

bezeichnet, wobei $b_{FS}$ die Position in Breitenlinienrichtung ist. $w_{FS}$ ist bei evolventischen Profilen der Wälzweg (auch als Wälzlänge bezeichnet), bei nicht evolventischen Profilen ein Parameter zur Parametrisierung des Profils. Im Folgenden wird jedoch auch für nicht evolventische Verzahnungen der Begriff Wälzweg verwendet.

Da die axiale Position $v_{ZS}$ der Schnecke nur dafür verantwortlich ist, die Berührlinie über die Schneckenbreite zu verschieben, kann diese Koordinate für eine Beeinflussung der Modifikation entlang der Berührlinie nicht genutzt werden. Somit stehen zur Erzeugung von Modifikationen die folgenden 4 Freiheitsgrade zur Verfügung: $\varphi_S$, $\gamma$, $d$ und $v_{yA}$.

Betrachtet werden hier jedoch nur die Korrekturen dieser Freiheitsgrade gegenüber den Werten beim Abrichten von nicht über die Kinematik modifizierten Schnecken. Diese Korrekturen werden wie folgt bezeichnet:

$$\Delta\varphi_S, \Delta\gamma, \Delta d, \Delta v_{yA} \qquad\qquad\qquad\qquad\qquad\qquad (7)$$

und in der Größe $\Delta K := (\Delta\varphi_S, \Delta\gamma, \Delta d, \Delta v_{yA})$ zusammengefasst.

Ist der Einfluss dieser 4 Koordinatenkorrekturen auf die erzeugte Profilmodifikation der Schnecke unterschiedlich, das heißt, führt eine Änderung einer dieser Koordinaten zu jeweils unterschiedlichen Profilmodifikationen, so kann dies genutzt werden, um 4 Punkte der Modifikation in gewissen Grenzen frei vorzugeben. Entscheidend für die Anwendbarkeit des hier vorgeschlagenen Verfahrens ist, in welchem Bereich die Modifikationen vorgegeben werden können und welche Forme diese Modifikation über das gesamte Profil hat. Dies wird im weiteren Verlauf detailliert diskutiert.

Wird eine Verzahnung mit einer Profilmodifikation, das heißt einer Modifikation, die nur vom Wälzweg $w_{FV}$ und nicht von $b_{FV}$ abhängt, wälzgeschliffen, so muss dazu eine entsprechende Profilmodifikation in die Schnecke eingebracht werden. Dazu wird jedem Radius innerhalb des zu schleifenden Bereichs auf der Verzahnung $r_V$ ein Radius auf der Schnecke $r_S$ zugeordnet. Diese Zuordnung muss für jeden Schneckendurchmesser prinzipiell neu durchgeführt werden. Um eine, auf diese Weise modifizierte Schnecke, mit einer solchen Modifikation mit Hilfe einer Profilrolle abrichten zu können, muss jedem Radius auf der Schnecke $r_S$ ein Radius auf dem Abrichter $r_A$ zugeordnet werden und an diesen zugeordneten Radien eine entsprechende Modifikation auf dem Abrichter eingebracht werden. Wird mit einer nicht korrigierten Kinematik abgerichtet, so kann der Abrichter, abhängig von der Abrichter- und Schneckengeometrie, über einen großen Bereich von Schneckendurchmessern genutzt werden und die so hergestellten Schnecken erzeugen die richtige Profilmodifikation auf der geschliffenen Verzahnung. Wird beim Abrichten jedoch die oben erwähnte Abrichtkinematik genutzt, um die Modifikation auf der Schnecke an 4 Punkten in gewissen Grenzen frei vorzugeben, so führt dies im Allgemeinen dazu, dass die richtige Zuordnung zwischen Radien auf der Schnecke und Radien auf dem Abrichter nicht mehr gewährleistet ist. Tritt dies ein, führt dies zu einer Verschiebung der Profilmodifikation auf der Schnecke zu einem kleineren oder größeren Radius hin. Diese falsche Platzierung der Profilmodifikation auf der Schnecke führt dann zu einer falschen Platzierung der Profilmodifikation auf der Verzahnung. Dient die in den Abrichter eingebrachte Modifikation beispielsweise rein zur Erzeugung einer Profilballigkeit, so fällt diese falsche Zuordnung nicht weiter ins Gewicht, solange sie nicht zu stark ausfällt und kann durch eine korrigierte Abrichtkinematik kompensiert werden. Fällt die falsche Zuordnung jedoch so stark aus, dass der Außenradius des Abrichters nicht mehr den kleinsten abzurichtenden Radius auf der Schnecke erreicht oder der Abrichter so weit in die Schnecke eintaucht, dass es zu einem Kontakt mit der Gegenflanke kommt, so ist in diesen Fällen die falsche Zuordnung auch schädlich.

Enthält die Profilmodifikation hingegen markante Punkte, wie beispielsweise einen Knick am Beginn einer Kopfrücknahme, so würde die falsche Zuordnung zu einer falschen Positionierung dieses Knickes auf der Verzahnung führen.

Um dieses Problem zu lösen, kann die Abrichtkinematik so gewählt werden, dass der Abrichter an einem vorgegebenen Radius die Schnecke an einem vorgegebenen Radius berührt. Wählt man in dem gerade aufgeführten Beispiel der Kopfrücknahme am Abrichter den Radius, an dem der Knick platziert ist und an der Schnecke den Radius, der den Radius auf der Verzahnung fertigt, an dem der Knick dort platziert sein soll, so kann dieses Problem umgangen werden. Dies führt jedoch dazu, dass man die Profilmodifikation auf dem Profil nur noch an 3 anstatt an 4 Stellen vorgeben kann. Diese Vorgabe an nur 3 Stellen ist jedoch ausreichend, um beispielsweise Profilballigkeiten auf einer evolventischen Schnecke aufzubringen, welche dann wiederum zu Profilballigkeiten auf einer geschliffenen evolventischen Verzahnung führen.

Um die folgenden Berechnungen durchführen zu können, ist es notwendig, bestimmen zu können, welches Profil, insbesondere welche Profilmodifikation bei einem gegebenen Abrichter und gegebenen Achskorrekturen $\Delta K$ auf den Flanken der Schnecke erzeugt wird. Hier wird zunächst der Fall betrachtet, bei dem Achskorrekturen während des Abrichtprozesses fest eingestellt werden und nur $v_{zS}$ und $\varphi_S$ gemäß der Steigungshöhe der Schnecke gekoppelt gefahren werden. Die Modifikation, definiert als Abweichung in Normalenrichtung zur Zahnflanke, abhängig von den Achskorrekturen, wir hier mit $f_{nFS}(w_{FS}; \Delta K)$ bezeichnet. Die Berechnung von $f_{nFS}(w_{FS}; \Delta K)$ kann beispielsweise mit Hilfe einer Abrichtsimulation durchgeführt werden. Eingaben in solche Abrichtsimulationen sind neben der Abrichtergeometrie und der Abrichtkinematik in der Regel auch die Geometrie der Schnecke vor dem Abrichten. Die Schnecke vor dem Abrichten wird bei der folgenden Betrachtung so gewählt, dass sie gegenüber der Schnecke nach dem Abrichten überall auf dem Gang ein positives Aufmaß besitzt. Bei solchen Abrichtsimulationen wird typischerweise der Abrichtprozess in endlich viele Zeitschritte unterteilt und dann für jeden Zeitpunkt ermittelt, wo durch den Abrichter Material an der Schnecke abgetragen wird.

Ein möglicher Algorithmus, der in der Lage ist, alle später nötigen Informationen zu liefern, wird hier detailliert vorgestellt. Hierzu wird zunächst eine, in der Regel nicht modifizierte Schnecke betrachtet. Auf einzelnen Punkten mit den Koordinaten $(w_{FS}, b_{FS})$ auf den Gänge dieser Schnecke werden Vektoren in Normalenrichtung mit einer zuvor festgelegten Länge platziert. Die Länge der Vektoren entspricht dem Aufmaß der Schnecke vor dem Abrichten, bezogen auf die nicht modifizierte Schnecke. Das Aufmaß wird typischerweise so groß gewählt, dass jeder Vektor während der nachfolgend beschriebenen Simulation mindestens einmal gekürzt wird. Die Anzahl der Punkte auf den Gängen bestimmt die Genauigkeit des Ergebnisses. Bevorzugt werden diese Punkte äquidistant gewählt. Die relative Lage der Schnecke zum Abrichter wird zu jedem Zeitpunkt vorgegeben, beispielsweise durch die Koordinaten der nicht korrigierten Kinematik $\varphi_S, \gamma, d, v_{yA}$ und deren Korrekturen $\Delta K$. Zu jedem der diskreten Zeitpunkte wird der Schnitt aller Vektoren mit dem Abrichter berechnet. Schneidet ein Vektor den Abrichter nicht, bleibt dieser unverändert. Schneidet er jedoch den Abrichter, so wird der Schnittpunkt berechnet und der Vektor soweit gekürzt, dass er gerade an dem Schnittpunkt endet. Weiterhin wird der Abstand des Schnittpunkts von der Abrichterachse, das heißt, der Radius auf dem Abrichter $r_A$ des Schnittpunkts berechnet und als zusätzliche Information zum gerade gekürzten Vektor abgespeichert. Da die Korrekturen der Koordinaten hier während des Abrichtens nicht verändert werden, haben, nachdem die Simulation über die ganze Breite der Schnecke durchgeführt wurde, alle Vektoren auf einem gegebenen Radius der Schnecke $r_S$ bzw. einem gegebenen Wälzweg $w_{FS}$ annährend dieselbe Länge. Diese Länge entspricht der von den Korrekturen $\Delta K$ abhängigen Modifikation $f_{nFS}$ der Schnecke.

Die geringfügen Unterschiede in den Längen rühren daher, dass der hier beschriebene Algorithmus aufgrund der Diskretisierung der Zeit Vorschubmarkierungen verursacht. Diese Vorschubmarkierungen und somit auch die Unterschiede in den Längen der Vektoren auf einem gegebenen Radius der Schnecke können durch eine feinere Diskretisierung der Zeit, gleichbedeutend mit einer Verkürzung der Zeitschritte reduziert werden. Wird die Simulation nicht über die gesamte Breite der Schnecke durchgeführt, sondern bei einer gegebenen axialen Shiftposition $v_{zS}$ der Schnecke abgebrochen, so haben, für einen gegebenen Radius auf der Schnecke nur die Vektoren annähernd dieselbe Länge, die von der Berührlinie des Abrichters mit der Schnecke bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden. Diese Tatsache kann genutzt werden, um die Berührline für den gegebenen Abrichter und die gegebene relative Lage der Schnecke zum Abrichter, beschrieben durch $\Delta K$, sehr genau zu bestimmen. Dazu werden alle Vektoren auf einen gegebenen Radius auf der Schnecke $r_{FS}$ bzw. Wälzweg $w_{FS}$ betrachtet und bestimmt, an welcher Breitenlinienposition der Übergang von Vektoren mit annährend gleicher Länge zu solchen mit davon abweichender Länger ist. Die Berührline kann so durch eine Funktion $b_{BRFS}$ bzw. $b_{BwFS}$, abhängig von den Korrekturen $\Delta K$ und $v_{zS}$ beschrieben werden.

$$b_{FS} = b_{BRFS}(r_{FS}; v_{zS}, \Delta K) \quad \text{bzw.} \quad b_{FS} = b_{BwFS}(w_{FS}; v_{zS}, \Delta K) \tag{8}$$

Für evolventische Schnecken kann die Berührlinie mit sehr guter Näherung durch eine Gerade in den Koordinaten ($w_{FS}$, $b_{FS}$) beschriebe werden

$$w_{FS} \sin \rho_{FS}(\Delta K) + b_{FS} \cos \rho_{FS}(\Delta K) = X_{FS}(v_{zS}, \Delta K) \tag{9}$$

wobei $\rho_{FS}(\Delta K)$ die Richtung und $X_{FS}(v_{zS}, \Delta K)$ die Lage der Geraden beschreibt. Die Abhängigkeit der Richtung $\rho_{FS}(\Delta K)$ von den Korrekturen $\Delta K$ ist nur gering, sodass in immer noch guter Näherung die Richtung als nur durch die Schnecken und Abrichtergeometrie gegeben angenommen werden kann.

Sind so die Vektoren bestimmt, entlang derer die Berührline verläuft, können die zu diesen zuvor gespeicherten Radien auf dem Abrichter $r_{FA}$ ausgelesen werden und so zu jedem Radius auf der Schnecke $r_{FS}$ ermittelt werden, von welchem Radius auf dem Abrichter $r_{FA}$ dieser abgerichtet wurde. Diese Zuordnung ist abhängig von den Korrekturen $\Delta K$.

$$r_{FA} = r_{FA}(r_{FS}; \Delta K) \tag{10}$$

Die Genauigkeit, mit der die Berührline und die Zuordnung der Radien auf diese Weise bestimmt werden können, hängt sowohl vom gewählten Abstand der Punkte als auch von der Länge der diskreten Zeitschritte ab. Beide können theoretisch beliebig klein gewählt werden, in der Praxis sind sie jedoch durch den verfügbaren Arbeitsspeicher und die maximal akzeptable Rechenzeit begrenzt. Mit den heute erhältlichen PCs mit mehreren Gigabyte Arbeitsspeicher und sehr schnellen Mehrkernprozessoren ist diese Berechnung in der Praxis mit hinreichender Genauigkeit möglich.

Eine Alternative zur gerade vorgestellten Abrichtsimulationen zur Berechnung von $f_{nSF}$, $b_{BRFS}$ bzw. $b_{BwFS}$ und $r_{FA}$ ist eine analytische Berechnung. Diese mathematisch komplexere Methode bietet den Vorteil, dass die Berechnung im Allgemeinen schneller durchgeführt werden kann.

Die der Erfindung zugrunde liegenden mathematischen Zusammenhänge werden im Folgenden an einigen Anwendungsfällen genauer beschrieben.

**4-Punkt-Methode**

Zunächst wird der Fall einer über die ganze Schneckenbreite konstanten Profilmodifikation betrachtet, welche an 4 Wälzwegen $w_{FSi}$ exakt erreicht werden soll (4-Punkt-Methode). Die Werte der Profilmodifikation $f_{FSi}$ an den 4 Wälzwegen $w_{FSi}$ sind Funktionen der Koordinatenkorrekturen $\Delta K$.

$$f_{FSi} = f_{nFS}(w_{Fi}; \Delta K) \ , \ i = 1, \dots, 4 \tag{11}$$

Daraus lässt sich die Funktion $F_4$

$$F_{F4}(\Delta K) = \begin{pmatrix} f_{nFS}(w_{F1}; \Delta K) - f_{FS1} \\ f_{nFS}(w_{F2}; \Delta K) - f_{FS2} \\ f_{nFS}(w_{F3}; \Delta K) - f_{FS3} \\ f_{nFS}(w_{F4}; \Delta K) - f_{FS4} \end{pmatrix} \tag{12}$$

konstruieren. Für gewisse Profilmodifikation ($f_{FS1}, f_{FS2}, f_{FS3}, f_{FS4}$) lassen sich die Nullstellen von $F_{FS4}$ berechnen, welche den Korrekturen $\Delta K$ entsprechen, die eingestellt werden müssen, um die gewünschte Profilmodifikation auf der Schnecke an den Wälzwinkeln ($w_{FS1}, w_{FS2}, w_{FS3}, w_{FS4}$) zu erzeugen. Hat die Funktion $F_{FS4}$ keine Nullstelle, so kann die Profilmodifikation nicht exakt erzeugt werden.

Bei dieser Berechnung wird die Profilmodifikation an nur 4 Wälzwegen betrachtet. Die Profilmodifikation entlang des ganzen Profils, also für alle Wälzwege, kann mit $f_{nFS}(w_{FS}; \Delta K)$ aus den berechneten Korrekturen $\Delta K$ bestimmt werden.

Die Nullstellenberechnung kann mit den aus der numerischen Mathematik bekannten Verfahren, beispielsweise dem mehrdimensionalen Newtonverfahren durchgeführt werden. Die hierzu nötigen partiellen Ableitungen von $F_{FS4}$ können numerisch berechnet werden. Dazu ist es nötig, die Funktion $F_{FS4}$ und somit auch die Funktion $f_{nFS}(w_{FS}; \Delta K)$ mit hoher Genauigkeit berechnen zu können, was, wie oben beschrieben, mit dem hier vorgestellten Algorithmus möglich ist. Ebenso kann mit einem solchen numerischen Verfahren geprüft werden, ob $F_{FS4}$ überhaupt eine Nullstelle hat. Beim Newtonverfahren beispielsweise zeigt sich dies an der sich einstellenden Konvergenz. Diese Überlegungen zur numerischen Berechnung der Nullstellen gelten ebenfalls für die weiteren vorgestellten Varianten.

Dies ermöglicht es, für eine gegebene Schnecke und einen gegebenen Abrichter die Menge aller erzeugbaren Profilmodifikation zu berechnen. In der Praxis besonders relevant ist jedoch auch die Umkehrrechnung, das heißt, eine Berechnung, mit der bestimmt werden kann, mit welchen Schnecken- und Abrichtergeometrien die gewünschten Modifikationen erzeugt werden können.

Die hier beschriebenen Achskorrekturen verursachen im Allgemeinen eine Verschiebung und Deformation der Berührlinie zwischen Abrichter und Schnecke, welche durch Gleichung (8) beschrieben werden. Gleichung (8) erlaubt es jedoch, die Lage der Berührlinie zu einem Zeitpunkt dahingehend vorzugeben, dass ein auf der Schnecke vorgegebener Punkt ($w_{FS0}$, $b_{FS0}$) auf der Berührlinie liegt. Dies führt zur folgenden Relation

$$b_{FS0} = b_{BwFS}(w_{FS0}; v_{zS}, \Delta K) \tag{13}$$

welche zusammen mit der Funktion $F_{FS4}$ aus Gleichung (12) zur Definition der Funktion $\hat{F}_{F4}$

$$\hat{F}_{F4}(\Delta K, v_{zS}) := \begin{pmatrix} f_{nFS}(w_{FS1}; \Delta K) - f_{FS1} \\ f_{nFS}(w_{FS2}; \Delta K) - f_{FS2} \\ f_{nFS}(w_{FS3}; \Delta K) - f_{FS3} \\ f_{nFS}(w_{FS4}; \Delta K) - f_{FS4} \\ b_{BwFS}(w_{FS0}; v_{zS}, \Delta K) - b_{FS0} \end{pmatrix} \tag{14}$$

genutzt werden kann. Die Nullstellen dieser Funktion liefern neben den Achkorrekturen $\Delta K$ auch eine axiale Position der Schnecke $v_{zS}$, sodass die gewünschte Modifikation erzeugt wird und die Berührlinie durch den Punkte ($w_{FS0}$, $b_{FS0}$) geht. Dies erlaubt es, gezielt nur bestimmte Bereiche auf der Schnecke abzurichten und es ermöglicht, den beim Abrichten nötigen Überlauf so gering wie möglich zu halten.

Das gerade diskutierte Beispiel kann dahingehend erweitert werden, dass die Modifikation auf der Schnecke nicht über die ganze Breite gleich ist. Solche Modifikationen werden als topologische Modifikationen bezeichnet. Dazu erhalten die Modifikationen $f_{FSi}$ eine Abhängigkeit von der Position in Breitenlinienrichtung $b_{FS}$.

$$f_{FSi} = f_{FSi}(b_{FS}) \quad, \quad i = 1,...,4 \tag{15}$$

Ebenso können die Wälzwinkel $w_{FSi}$, an denen die Modifikationen vorgegeben werden, von der Position in Breitenlinienrichtung abhängig sein.

$$w_{FSi} = w_{FSi}(b_{FS}) \quad, \quad i = 1,...,4 \tag{16}$$

Diese Erweiterung ist insbesondere dann von Interesse, wenn die abgerichtete Schnecke für das Wälzschleifen im Diagonalwälzverfahren eingesetzt werden soll. Bei dieser Sonderform des Wälzschleifens ist es möglich, gezielt topologische Modifikationen auf der Verzahnung aufzubringen. Die ebenfalls topologische Modifikation $f_{nFS}(w_{FS}, b_{FS})$ auf der Schnecke hat in diesem Fall eine Abhängigkeit von $w_{FS}$ und $b_{FS}$. Die $w_{FSi}(b_{FS})$ definieren, auf welchen Wälzwegen, abhängig von der Position in Breitenlinienrichtung, an welchen Punkten auf der Schnecke die Sollmodifikation beim Abrichten exakt erreicht werden soll (siehe Figur 2). Ist beispielsweise die Toleranz der Modifikation auf der Schnecke nicht für alle $w_{FS}$ und $b_{FS}$ gleich, so kann die freie Wahl der $w_{FSi}(b_{FS})$ dafür genutzt werden, an den enger tolerierten Bereichen die Modifikation exakt zu erreichen. Die $F_{FSi}(b_{FS})$ sind gegeben durch:

$$f_i(b_{FS}) = f_{nFS}(w_{FS_i}(b_{FS}), b_{FS}) \quad, \quad i = 1,...,4 \tag{17}$$

Analog zu Gleichung (14) lässt sich damit eine Funktion definieren, deren Nullstellen, für vorgegebenes $b_{FS0}$ die einstellenden Korrekturen $\Delta K$ und die einzustellende axiale Position $v_{zS}$ liefern. Es ist jedoch zu beachten, dass bei dieser Berechnung die Berührline die 4 Linien $w_{FSi}(b_{FS})$ schneiden muss, woraus sich die Positionen ergeben, an denen die Sollmodifikation $f_{nFS}(w_{FS}, b_{FS})$ auszuwerten ist. Diese Zusatzbedingungen führen dazu, dass die hier zu betrachtende Funktion 9 statt bisher 5 Dimensionen hat.

### 3-Punkt-Methode

Wie eingangs erwähnt, hat die 4-Punkt-Methode, den Nachteil, dass sie keine Kontrolle über das Platzieren der in den Abrichter eingebrachten Modifikation auf der Schnecke ermöglicht. Um dieses Problem zu lösen, werden bei der folgenden Methode (3-Punkt-Methode) lediglich 3 Modifikationen $f_{FSi}$ an 3 zunächst wieder konstsnten Wälzwinkeln $w_{FSi}$ betrachtet. Als zusätzliche Bedingung wird dafür aufgenommen, dass der Radius $r_{FA}$ auf dem Abrichter den Radius $r_{FS}$ auf der Schnecke fertigen soll. Daraus lässt sich analog zu $F_{F4}$ die Funktion $F_{F3}$ mit

$$F_{F3}(\Delta K) := \begin{pmatrix} f_{nFS}(w_{FS1}; \Delta K) - f_{FS1} \\ f_{nFS}(w_{FS2}; \square K) - f_{FS2} \\ f_{nFS}(w_{FS3}; \Delta K) - f_{FS3} \\ r_{FA}(r_{FS}; \Delta K) - r_{FA} \end{pmatrix} \tag{18}$$

konstruieren. Für gewisse Tupel $(f_{FS1}, f_{FS2}, f_{FS3}, r_{FS}, r_{FA})$ lassen sich die Nullstellen von $F_{F3}$ berechnen, welche den Korrekturen $\Delta K$ entsprechen, die eingestellt werden müssen, um die gewünschten Modifikationen $(f_{FS1}, f_{FS2}, f_{FS3})$ zu erzeugen und den gewünschten Radius auf dem Abrichter auf den gewünschten Radius auf der Schnecke abzubilden. Diese Methode lässt sich ebenfalls um die Option der Vorgabe eines Punkts $(w_{FS0}, b_{FS0})$, der auf der aktuellen Berührlinie liegen soll, erweitert werden. Die Funktion $F_{F3}$ muss dazu analog zu Gleichung (14) zur Funktion $\hat{F}_{F3}$ erweitert werden. Zur Beurteilung der Anwendbarkeit des Verfahrens ist es auch bei der 3-Punkt-Methode wichtig, ermitteln zu können, welche Modifikationen bei gegebener Schnecken- und Abrichtergeometrie erreicht werden können, bzw. auch die Umkehrung, das heißt, aus einer gewünschten Modifikation Schnecken- und Abrichtergeometrien zu berechnen, welche die gewünschten Modifikationen erlauben. Hierzu wird beispielhaft eine evolventische Schnecke betrachtet, bei der $f_{FS1}$ = 0 und $f_{FS3}$ = 0 und $w_{FS2}$ = $(w_{FS1} + w_{FS3})/2$ ist. $f_{FS2}/cos\beta_{bFV}$ wird hier mit $c_{\alpha FS}$ bezeichnet, da diese Wahl der Modifikationen $F_{FSi}$ und der Wälzwinkel $w_{FSi}$ zu einer Profilballigkeit zwischen den Wälzwinken $w_{FS1}$ und $w_{FS3}$ mit dem Wert $f_{FS2}/cos\beta_{bFV}$ führt. Dieser Spezialfall wurde hier gewählt, da die Profilballigkeit im Wesentlichen bestimmt, ob die gewünschte Modifikation mit einer gegebenen Schnecken- und Abrichtergeometrie erreicht werden kann. Modifikationen mit freigewählten Werten für $f_{FS1}$, $f_{FS2}$ und $f_{FS3}$ erhält man durch eine Überlagerung einer der hier betrachteten Modifikationen mit $f_{FS1}$ = 0 und $f_{FS3}$ = 0, einer Zahndickenänderung des Schneckengangs und einer Profilwinkelkorrektur.

Zahndicke und Profilwinkel lassen sich beim Abrichten jedoch im Wesentlichen unabhängig von Schnecken- und Abrichtergeometrie korrigieren, es ist lediglich zu beachten, dass der Abrichter beim Abrichten einer Flanke die andere Flanke derselben Lücke nicht verschneidet. In der Praxis relevant ist jedoch nicht die Profilballigkeit auf der Schnecke, sondern die beim Wälzschleifen auf dem Werkstück erzeugte Profilballigkeit. Diese, hier mit $c_{\alpha FV}$ bezeichnete Profilballigkeit, errechnet sich durch

$$c_{\alpha FV} = -c_{\alpha FS} \cdot \frac{\cos \beta_{bFS}}{\cos \beta_{bFV}} \qquad (19)$$

Hierbei werden die Auswertebereiche für die Profilballigkeiten so gewählt, dass der Beginn des Auswertebereichs auf der Schnecke das Ende des Auswertebereichs auf der Verzahnung fertig und das Ende des Auswertebereichs auf der Schnecke den Beginn des Auswertebereichs auf der Verzahnung. Es ist aus dem Stand der Technik bekannt, dass zu einer gegebenen zu schleifenden Verzahnung Schnecken mit verschiedensten Geometrien eingesetzt werden können. Bei evolventischen Verzahnungen und Schnecken ist das wesentliche Kriterium zum Entscheiden, ob eine Schnecke eingesetzt werden kann, ob die beiden Evolventenverzahnungen (Schnecke und Verzahnung) miteinander kämmen. Dies ist gleichbedeutend mit:

$$m_{bFV} \cdot \cos \beta_{bFV} = m_{bFS} \cdot \cos \beta_{bFS} \qquad (20)$$

An einer Beispielverzahnung werden im Folgenden typische Verläufe der Achskorrekturen $\Delta K$, abhängig von der auf der Verzahnung zu erzielenden Profilballigkeit $c_{\alpha FV}$ diskutiert. Neben den Achskorrekturen wird auch die axiale Position $v_{zS}$ mit betrachtet. Hierbei werden Abrichter betrachtet, die so ausgelegt sind, dass sie Schnecken ohne Profilballigkeit abrichten und diese Schnecken dann auch keine Profilballigkeiten auf der Verzahnung erzeugen.

Die Verläufe der Achskorrekturen weisen über den ganzen Bereich der auf der Verzahnung erzielbaren Profilballigkeit komplexe Formen auf, welche nicht durch einfache Funktionen beschrieben werden können (siehe Figur 6). Insbesondere ist es nicht möglich, zuverlässig von den Verläufen bei betragsmäßig kleinen Profilballigkeiten auf den gesamten Verlauf zu schließen. Es ist somit in jedem Fall empfehlenswert, die Berechnung für die gewünschte Profilballigkeit durchzuführen. Am rechten Rand der dargestellten Verläufe zeigen sich bei den Achskorrekturen $\Delta K$ und der axialen Position der Schnecke $v_{zS}$ steile Anstiege. Am linken Rand zeigt sich dieser steile Anstieg insbesondere bei $\Delta d$, $\Delta \varphi_S$ und $\Delta v_{yA}$. Diese Ränder markieren die maximale und minimale erzeugbare Profilballigkeit. Jenseits der linken und rechten Ränder hat die Funktion $\hat{F}_{F3}$ keine Nullstellen mehr.

Die Verläufe werden stark durch die geometrischen Kenngrößen der verwendeten Schnecke und des Abrichters beeinflusst. So zeigt Figur 8, dass bei größer werdendem Durchmesser der Schnecke $d_S$, die Korrekturen $\Delta K$ und die axiale Position $v_{zS}$ größer, insbesondere $\Delta \varphi_S$, $\Delta d$ und $\Delta \gamma$ deutlich größer werden. Figur 9 zeigt, dass bei abnehmender Gangzahl der Schnecke $z_S$, die Korrekturen $\Delta K$ und die axiale Position $v_{zS}$ größer, insbesondere $\Delta \varphi_S$, $\Delta d$ und $\Delta \gamma$ deutlich größer werden. Figur 10 zeigt, dass bei größer werdendem Durchmesser des Abrichters $d_A$, die Korrekturen $\Delta K$ größer werden. Figur 11 zeigt, dass bei kleiner werdendem Normalprofilwinkel der Schnecke $\alpha_{nFS}$ die Korrekturen $\Delta K$ und die axiale Position $v_{zS}$ größer werden. Diese starken Abhängigkeiten zeigen auf, dass für die erfolgreiche Anwendung der hier beschriebenen Erfindung die Wahl geeigneter Schnecken- und Abrichtergeometrien von großer Bedeutung ist, da es im Allgemeinen von Vorteil ist, die Verfahrwege der Maschinenachsen möglichst klein zu halten.

Gemäß dem Stand der Technik ist es üblich, Abrichter so auszulegen, dass diese eine Profilballigkeit auf der Schnecke und diese Schnecken dann wiederum eine Profilballigkeit auf der Verzahnung erzeugen. Werden solche Abrichter verwendet, so addieren sich die durch den Abrichter erzeugten Profilballigkeiten zu den mit dem hier vorgestellten Verfahren erzeugten hinzu.

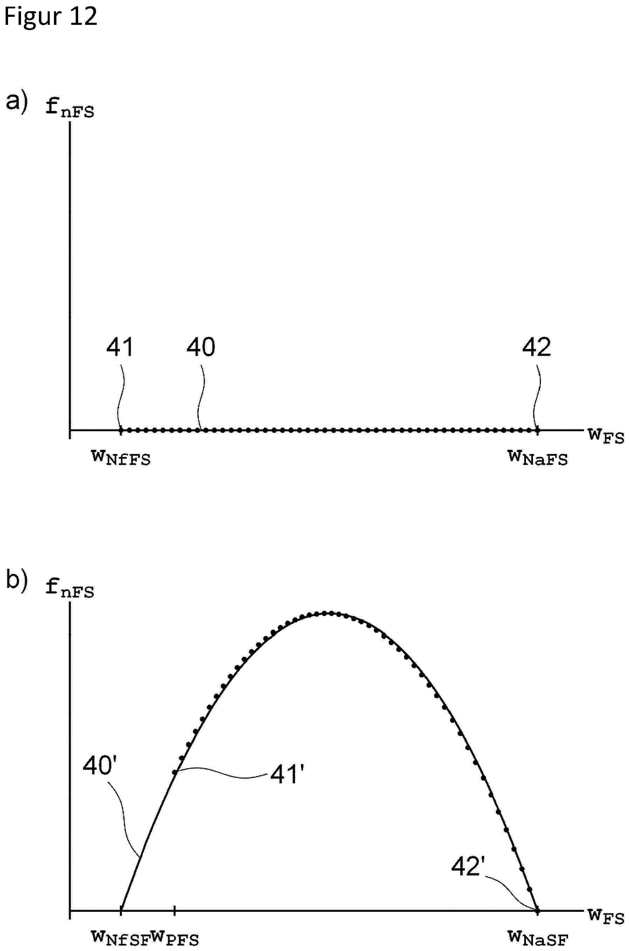

Zur Berechnung der Achskorrekturen wurden in diesem Beispiel nur 3 Punkte auf dem Profil betrachtet. Das gesamte Profil über dem ganzen Prüfbereich lässt sich mit $f_{nFS}(w_{FS}; \Delta K)$ bestimmen. Für das gerade betrachtete Beispiel zeigt sich, dass die Form der Modifikation sehr gut der einer Parabel entspricht (siehe Figur 12b), welche die typische Form einer Profilballigkeit ist. Auch kreisförmige Profilballigkeiten lassen sich mir sehr guter Genauigkeit auf diese Weise fertigen, da die Abweichung zwischen parabelförmigen und kreisförmigen Profilballigkeiten extrem gering ist.

Bei Anwendung der 3-Punkt-Methode zeigt sich, dass die Zuordnung von Radien auf dem Abrichter auf Radien auf der Schnecke nicht mehr über das ganze Profil gewährleistet werden kann. Wird ein Punkt festgehalten, so verschiebt sich die Zuordnung für alle anderen Punkte (siehe Figur 12b). Um diesen Effekt quantitativ zu erfassen, wird der Begriff der relativen Profilstreckung

$$P_{FS} := \frac{w_{PFS} - w_{NfFS}}{w_{NfFS} - w_{NaFS}} \qquad (21)$$

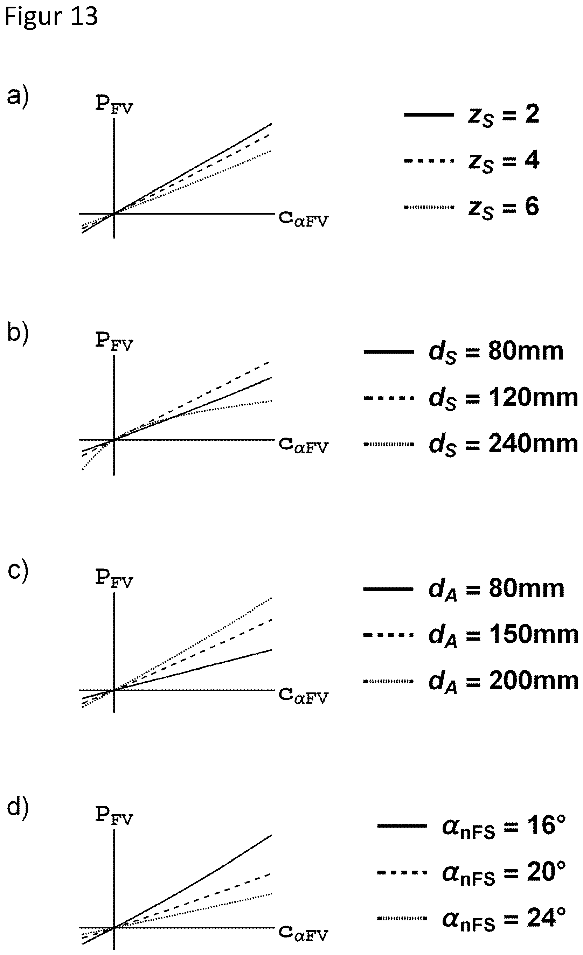

eingeführt. Hier entspricht $w_{NfFS}$ dem Radius auf der Schnecke, der beim Wälzschleifen der Verzahnung den Kopfkreis $w_{NaFV}$ fertigt und $w_{NaFS}$ entspricht dem Radius auf der Schnecke, der den Fußkreis $w_{NfFV}$ fertigt. Auf der mit einer solchen Schnecke geschliffenen Verzahnung ergibt sich dieselbe relative Profilstreckung $P_{FV}$. Da jedoch beim Wälzschleifen typischerweise jeder Punkt am Fußnutzkreis auf der Verzahnung von einem Punkt am Kopfnutzkreis der Schnecke gefertigt wird und umgekehrt, wird beim hier betrachteten Beispiel, auf der Verzahnung am Fußformkreis die richtige Profilmodifikation erzeugt, am Kopfnutzkreis wird jedoch eine falsche Profilmodifikation zugeordnet. Die Profilballigkeit auf der Verzahnung berechnet sich nach Gleichung (19). Figur 13 zeigt am Beispiel der 3-Punkt-Methode, wie die beim Wälzschleifen auf der Verzahnung entstehende relative Profilstreckung von der auf der Verzahnung erzeugen Profilballigkeit $c_{\alpha FV}$ abhängt. Des Weiteren zeigen die vier Figuren den Einfluss der Gangzahl der Schnecke $z_S$, des Durchmessers der Schnecke $d_S$, des Durchmessers des Abrichters $d_A$ und des Profilwinkels der Schnecke $\alpha_{nFS}$ auf die Abhängigkeit der relativen Profilstreckung $P_{FS}$ von der Profilballigkeit auf der Verzahnung $c_{\alpha FV}$.

Der Effekt der relativen Profilstreckung beeinflusst den auf dem Abrichter zur Verfügung stehenden aktiven Bereich.

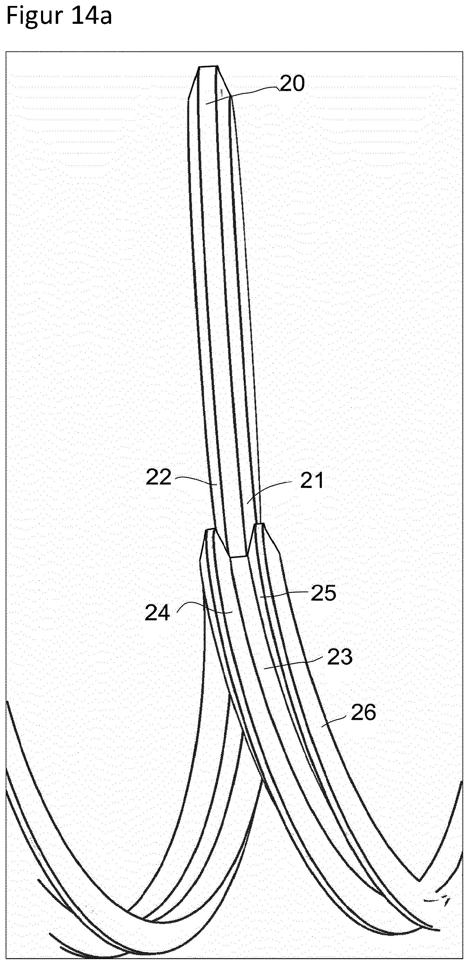

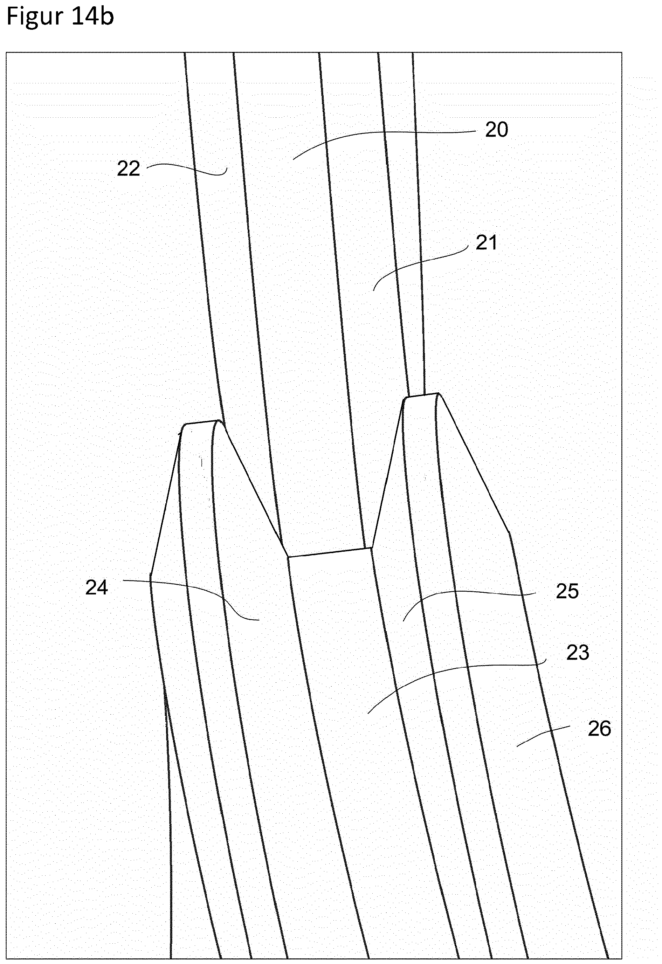

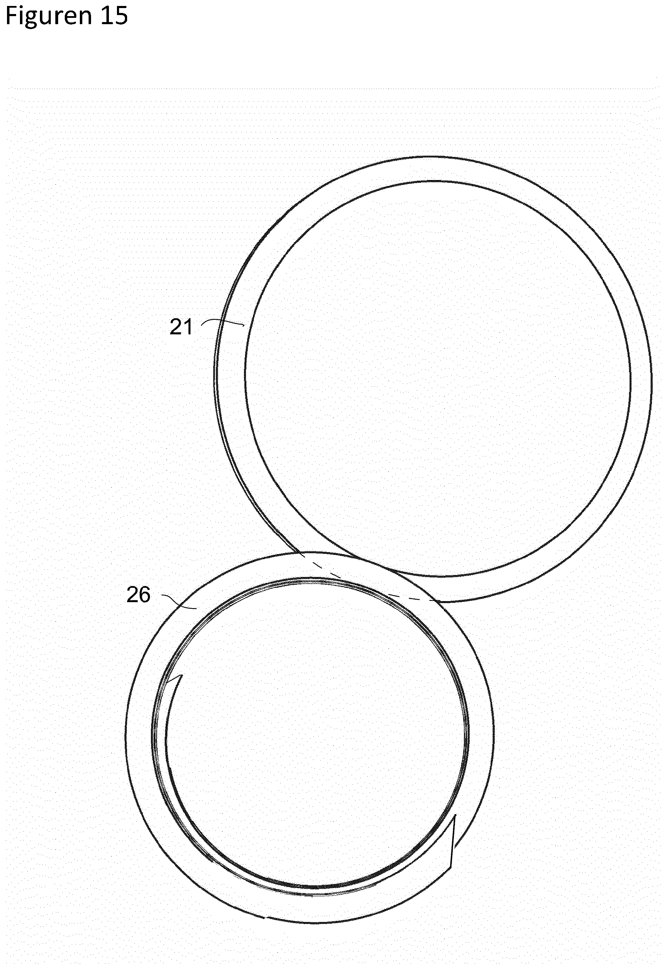

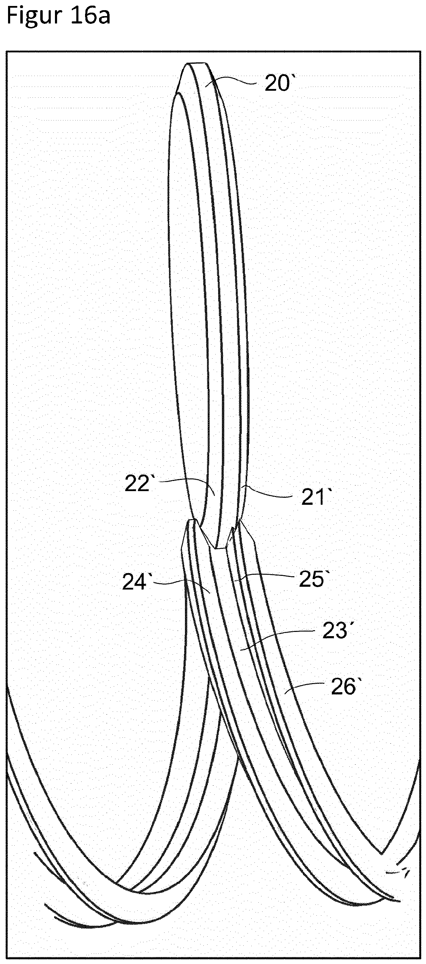

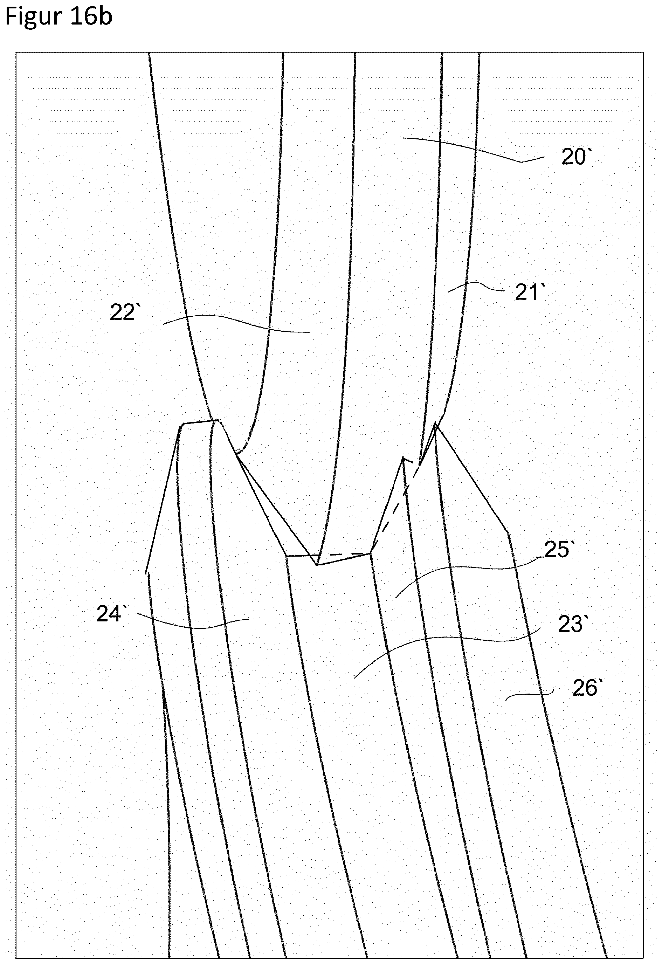

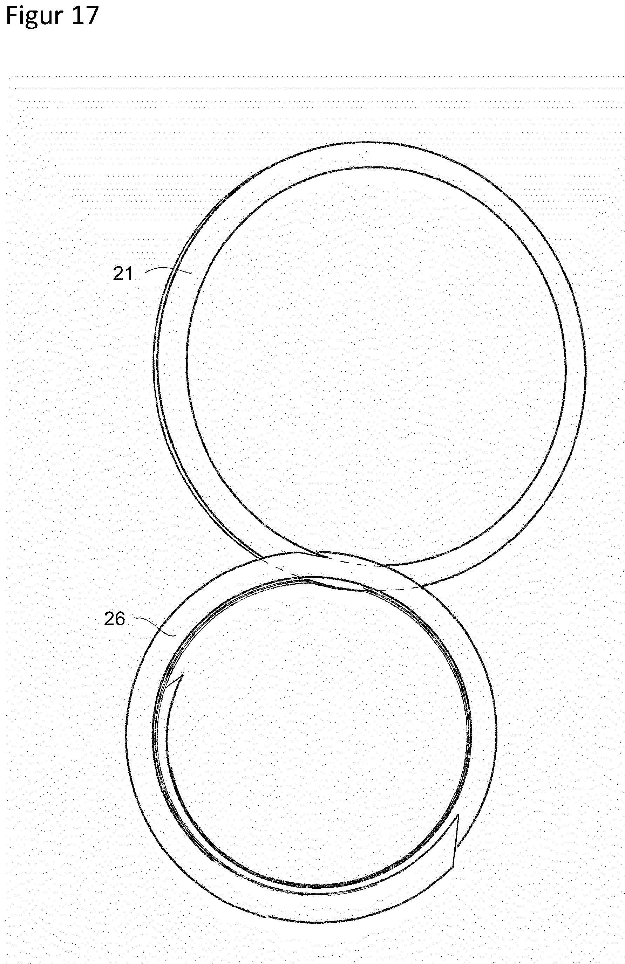

Eine Limitierung der maximal mit einem gegebenen Abrichter mit der 3-Punkt-Methode herstellbaren Profilballigkeit ergibt sich direkt aus der dafür einzustellenden relativen Lage zwischen Schnecke und Abrichter. Die Figuren 14a, 14b und 15 zeigen in 3D-Ansichten aus verschiedenen Perspektiven und Abständen die relative Lage für eine nicht korrigierte Abrichtkinematik, am Beispiel einer evolventischen Schnecke. Hier finden keine Berührung und keine Durchdringung zwischen der rechten Flanke 21 des Abrichters und der rechten Flanke 25 des Schneckengangs statt. Ein einflankiges Abrichten ist so problemlos möglich. Des Weiteren wird der Grund 23 des Schneckengangs wie gewünscht von der äußeren Mantelfläche 20 des Abrichters abgerichtet. Anders gestaltet sich jedoch die Situation beim Abrichten mit der 3-Punkt-Methode. Die Figuren 16a, 16b und 17 zeigen für dieselbe Schnecke und denselben Abrichter in 3D-Ansichten aus verschiedenen Perspektiven und Abständen die relative Lage für eine Abrichtkinematik gemäß der 3-Punkt-Methode. Es zeigt, dass die rechte Flanke 21' des Abrichters und die äußere Mantelfläche 20' die rechte Flanke 25' des einen Schneckengangs durchdringen. Gib es eine solche Durchdringung, kann das Verfahren nicht angewendet werden, da es zu einem ungewollten Abtrag auf der rechten Flanke 25' kommt. Um dies zu vermeiden, kann der Abrichter schmaler gestaltet werden. Dadurch verschmälert sich auch die äußere Mantelfläche 20' und die rechte Flanke 21' rückt dichter an die linke Flanke 22'. Die Verschmälerung kann theoretisch soweit durchgeführt werden, bis die äußere Mantelfläche 20' Breite 0 hat. In der Praxis kann jedoch eine Mindestbreite fertigungsbedingt nicht unterschritten werden. Ob eine solche ungewollte Durchdringung stattfindet, kann durch Berechnung von $f_{nFS}(w_{FS}; \Delta K)$ für die rechte Flanke 25' mit den für die linke Flanke 24' gemäß der 3-Punkt-Methode berechneten Korrekturen $\Delta K$ bestimmt werden. Liegt die so berechnete Profilmodifikation auf der rechten Flanke 25' an mindestens einem Wälzweg $w_{FS}$ unterhalb des aktuellen Aufmaßes, so kommt es zu einer im Allgemeinen ungewollten Durchdringung. Insbesondere wenn die berechnete Profilmodifikation unterhalb der Sollmodifikation liegt, ist eine solche Durchdringung zu vermeiden. Ein weiterer problematischer Effekt ergibt sich aus der Änderung des Achsabstands $\Delta d$ durch die 3-Punkt-Methode. Diese häufig negative Änderung führt, wie in Figur 17 zu sehen, zu einem Eindringen der äußeren Mantelfläche 20' in die Schnecke unterhalb des Grunds 23'. Ein solches Eindringen ist im gewissen Maße jedoch unkritisch, da der Grund während des Wälzschleifprozesses im Allgemeinen keinen Kontakt mit der Verzahnung hat. Ein zu tiefes Eindringen kann jedoch zu einem Unterhöhlen des Schneckengangs führen. Dieses Unterhöhlen kann zu einem Materialabtrag an Stellen auf der Schnecke führen, an denen zu einem späteren Abrichtzyklus, das heißt, wenn die Schnecke für einen kleineren Durchmesser $d_{Sk}$ abgerichtet wird, der Schneckengang platziert werden soll. Ist dieses Material jedoch nicht mehr vorhanden, ist dieser Schneckengang nicht mehr vollständig ausgebildet und kann nicht genutzt werden. Um zu prüfen, ob es einen solchen ungewünschten Abtrag gibt, kann $f_{nFS}(w_{FS}; \Delta K)$ für kleinere Durchmesser der Schnecke $d_{Sk}$ mit den Korrekturen $\Delta K$ für den aktuellen Schneckendurchmesser für eine oder beide Flanken berechnet werden. Liegt die so berechnete Profilmodifikation auf mindestens einer Flanke an mindestens einem Wälzweg $w_{FS}$ unterhalb der Sollmodifikation, so kommt es zu einem ungewollten Abtrag.

Ebenso wie die 4-Punkt-Methode kann auch die 3-Punkt-Methode dahingehend erweitert werden, dass die Modifikation über die Schneckenbreite nicht gleich ist. Die Vorgehensweise ist hierbei analog und die Gleichungen (15), (16) und (17) gelten dann für 3 Punkte.

Darüber hinaus kann auch die Zuordnung der Radien auf dem Abrichter zu den Radien auf der Schnecke über die Breite der Schnecke variabel gestaltet werden. Dazu ist die vierte Komponente aus $F_{F3}$ in Gleichung (18) durch

$$r_{FA}(r_{FS}(b_{FS}); \Delta K) - r_{FA}(b_{FS}) \qquad (22)$$

zu ersetzten. $r_{FA}(b_{FS})$ und $r_{FS}(b_{FS})$ beschreiben hierbei die Zuordnung von Radien auf dem Abrichter zu Radien auf der Schnecke, abhängig von der Schneckenbreitenposition. Figur 3 zeigt die Modifikation einer Schnecke, welche mit variabler Zuordnung der Radien abgerichtet wurde.

Die Zuordnung der Radien als Zusatzbedingung zu den Modifikationen an 3 verschiedenen Wälzwegen aufzunehmen ist jedoch nur eine Variante der Erfindung. Es können prinzipiell beliebige Zusatzbedingungen betrachtet werden, von denen einige im Folgenden beispielhaft diskutiert werden.

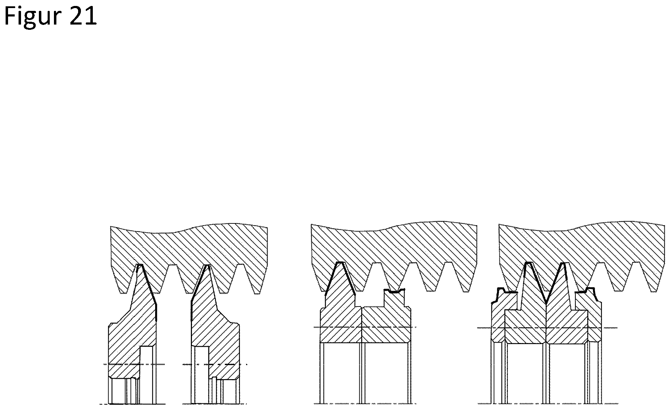

Ein Abrichter, beispielsweise für evolventische Schnecken, kann nicht nur genutzt werden, um die Flanken einer Schnecke abzurichten sondern auch um gleichzeitig den Kopf der Schnecke abzurichten. Dadurch kann zum einen die Abrichtzeit verkürzt werden, weil das zusätzliche Abrichten an einer Fliese entfällt, es ist aber auch möglich, dem Schneckenkopf einen bestimmte Form zu geben, um beim Wälzschleifen den Fuß der Verzahnung mit zu bearbeiten. Ein solches Abrichten des Kopfs kann am selben Schneckengang und an etwa derselben Breitenposition durchgeführt werden, es kann jedoch auch an einem anderen Gang bzw. am selben Gang an einer anderen Breitenposition durchgeführt werden (siehe Figur 21). Ein für ein gleichzeitiges Abrichten des Kopfs und der Flanke ausgelegter Abrichter wird in der Regel so ausgelegt, dass er für eine bestimmte Abrichtkinematik den Kopf der Schnecke auf der richtigen Höhe abrichtet. Wird die Abrichtkinematik jedoch korrigiert, kann dies zu einer falschen Positionierung des Kopfabrichters zum Schneckenkopf führen und der Schneckenkopf wird auf einer falschen Höhe abgerichtet bzw. erhält eine falsche Form. Um dieses Problem zu lösen, kann als Zusatzbedingung gefordert werden, dass der Kopfabrichter den Schneckenkopf auf einer vorgegebenen Höhe abrichtet. Diese Variante erlaubt es somit, das Profil zu modifizieren und gleichzeitig den Kopf auf der richtigen Höhe abzurichten. Es ist dabei auch möglich, die Höhe des Schneckenkopfs über die Schneckenbreite zu variieren, dazu ist die Zusatzbedingung von $b_{FS}$ abhängig zu formulieren. Soll jedoch nicht nur die Höhe des Schneckenkopfes kontrolliert werden, sondern sollen zwei Punkte vorgegeben werden, so ist dies ebenso möglich. Dazu können zwei Zusatzbedingungen formuliert werden, wobei dann nur noch zwei Wälzwege auf der Flanke vorgegeben werden können. Alternativ kann eine Variation der 4-Punkt-Methode genutzt werden, wobei zwei Wälzwege auf der Flanke und zwei auf dem Kopf gewählt sind.

Eine weitere Alternative ergibt sich, wenn nicht 5 Freiheitsgrade genutzt werden können, beispielsweise weil diese auf der Maschine nicht zur Verfügung stehen oder, wenn topologisch abgerichtet werden soll, nicht 5 Freiheitsgrade als aktive Freiheitsgrade zur Verfügung stehen und somit nicht während der Bearbeitung verändert werden können. Das Fehlen eines Freiheitsgrads kann als Zwangsbedingung formuliert werden und liefert so die gewünschte Zusatzbedingung. Möglich ist auch, dass bis zu zwei Freiheitgrade fehlen.

Je nach Anzahl der Zusatzbedingungen muss die Anzahl der Wälzwinkel, an denen die Modifikationen erreicht werden sollen, reduziert werden, sodass die Summe aus Anzahl der Wälzwinkel und Zusatzbedingungen immer 4 ergibt. Von besonderem Interesse sind jedoch die Varianten, bei denen die Anzahl der Wälzwinkel mindestens 2 beträgt.

Nachdem die mathematischen Zusammenhänge ausführlich beschrieben wurden, werden im Folgenden die sich daraus ergebenden Anwendungen aufgeführt.

Wie eingangs beschrieben, ist kein Verfahren bekannt, mit dem die Profilform beim Abrichten einer Schnecke zum Wälzschleifen von Verzahnungen durch den Abrichtprozess beeinflusst werden kann, abgesehen von Profilwinkelmodifikationen bei evolventischen Schnecken. Eine flexiblere Vorgabe solcher Profilmodifikationen kann in der Praxis jedoch große Vorteile bringen. So wird beispielsweise die Möglichkeit eröffnet, einen Abrichter, der speziell für Schnecken für eine bestimmte Verzahnung mit bestimmten Profilmodifikationen ausgelegt wurde, auch zum Abrichten von Schnecken für eine andere Verzahnung und/oder andere Profilmodifikationen zu nutzen. Eine solche Anwendung ist insbesondere in der Kleinserien- und Lohnfertigung von großem Interesse, da durch die Wiederverwendbarkeit teurer Abrichter Kosten gesenkt werden können und Beschaffungszeiten entfallen. Ein weiterer Anwendungsfall ist die Korrektur von Herstellungsfehlern in Abrichtern. Auch wenn diese inzwischen sehr präzise gefertigt werden können, kommt es immer noch zu Abweichungen von der Sollgeometrie. Werden solche Fehler in den Abrichtern beim Wälzschleifen festgestellt, so müssen gemäß dem Stand der Technik die Abrichter vom Verzahner zum Hersteller zum Nachläppen zurück geschickt werden, wodurch teure Wartezeiten entstehen. Mit dem hier vorgestellten Verfahren können solche Abweichen über die Abrichtkinematik korrigiert werden, ohne dass eine Rücksendung des Abrichters nötig ist. Durch eine solche Korrekturmöglichkeit wird es auch möglich, die Fertigungstoleranzen von Profilmodifikationen insbesondere auch in einer Serienfertigung zu reduzieren. Eine solche Korrektur kann beispielsweise durch händische Eingabe in die Steuerung einer Verzahnmaschine vorgenommen werden oder durch Messen der geschliffenen Profilmodifikation in der Maschine und aus diesem Messergebnis automatisch vorgenommen werden. Im Fall einer evolventischen Verzahnung ist insbesondere die Korrektur einer Profilballigkeit von großem Interesse.

Wird das hier beschriebene Verfahren zur Erzeugung variabler Profilmodifikationen über die Schnecken genutzt, eröffnet es neue Möglichkeiten beim topologischen Wälzschleifen mittels Diagonalwälzverfahren. Beim Diagonalwälzverfahren wird während des Wälzschleifprozesses die Schleifschnecke nicht nur axial zur Verzahnung sondern auch axial zu ihrer eigenen Drehachse verschoben. Dadurch kommen unterschiedliche Bereiche der Schleifschnecke, welche typischerweise unterschiedliche Modifikationen aufweisen, in Kontakt, wodurch über die Breite unterschiedliche Modifikationen auf der geschliffenen Verzahnung aufgebracht werden können. Die benötigte topologische Modifikation auf der Schnecke ergibt sich aus der zu erzeugenden topologischen Modifikation auf der Verzahnung und einer Zuordnung von Punkten auf der Verzahnung zu Punkten auf der Schnecke während des Wälzschleifprozesses. Je größer das Spektrum an möglichen topologischen Modifikationen auf der Schnecke ist, desto größer ist somit auch das Spektrum an möglichen topologischen Modifikationen auf der Verzahnung. Bisher war es nur möglich, die Zahndicke und den Profilwinkel über die Schneckenbreite beim Abrichten zu verändern. Insbesondere für evolventische Schnecken ist es mit dem hier beschriebenen Verfahren nun möglich, zusätzlich auch die Profilballigkeit über die Schneckenbreite variabel zu gestalten. Die mit der 3-Punkt-Methode auf einer evolventischen Schnecke erzeugbare Profilmodifikation, kann, wie in Figur 12b zu sehen, in sehr guter Näherung durch eine Parabel, das heißt ein Polynom zweiten Grades in $w_{FS}$ beschrieben werden. In ebenfalls sehr guter Näherung gilt Gleichung (9), welche die Berührline beschreibt entlang welcher sich die Profilmodifikation beeinflussen lässt. Kombiniert man diese beiden sehr guten Näherungen, so kann die mit der 3-Punkt-Methode erzeugbare variable topologische Modifikation $f_{nFStop3}$ auf der Schnecke durch

$$f_{nFStop3}(w_{FS}, b_{FS}) = C_{0FS}(X_{FS}) + C_{1FS}(X_{FS}) \cdot w_{FS} + C_{2FS}(X_{FS}) \cdot w_{FS}^2 \qquad (23)$$

beschrieben werden, wobei $C_{0FS}(X_{FS})$, $C_{1FS}(X_{FS})$ und $C_{2FS}(X_{FS})$ stetige Funktionen sind und $X_{FS} = w_{FS} \sin \rho_{FS} + b_{FS} \cos \rho_{FS}$. Zusätzlich zu dieser Modifikation kann noch eine in den Abrichter gelegte Profilmodifikation additiv überlagert werden. Diese Modifikation $f_{nFSA}$ kann von der Lage der Berührline $X_{FS}$ abhängig auf dem Profil platziert werden und vereinfacht durch

$$f_{nFSA}(w_{FS}, b_{FS}) = A(w_{FS} - \Delta w_{0FS}(X_{FS})) \qquad (24)$$

wobei $A(w)$ die Profilmodifikation auf der Schnecke beschreibt, die der Abrichter bei nicht korrigierter Kinematik erzeugen würde und $\Delta w_{0FS}(X_{FS})$ die Verschiebung dieser Profilmodifikation durch eine veränderte Zuordnung der Radien auf dem Abrichter zu Radien auf der Schnecke, abhängig von der Lage der Berührline. Eine exakte Berechnung erfordert zusätzlich noch eine Berücksichtigung der relativen Profilstreckung für alle Wälzwege, abhängig von den Korrekturen $\Delta K$, um die tatsächliche Zuordnung von Radien auf dem Abrichter auf Radien auf der Schnecke zu berücksichtigen. Dies gilt analog für die 4-Punkt-Methode, wobei mit dieser die Profilmodifikation in sehr guter Näherung durch ein Polynom dritten Grades beschrieben werden kann.

**Zweiflankiges Abrichten**

Das in dieser Erfindung beschriebene Verfahren kann auf das zweiflankige Abrichten übertragen werden. Dazu können beispielsweise die 3 bzw. 4 Wälzwinkel aus der 3- bzw. 4-Punkt-Methode beliebig auf den beiden Flanken verteilt werden. Die Zuordnung der Radien auf dem Abrichter zu Radien auf der Schecke bei der 3-Punkt-Methode kann auf einer der beiden Flanken realisiert werden. Die im zweiflankigen Abrichten erzeugbaren Modifikationen sind gegenüber den einflankig erzeugbaren aufgrund der reduzierten Anzahl betrachteter Punkte pro Flanke eingeschränkt, das zweiflankige Abrichten erlaubt jedoch kürzere Abrichtzeiten. Im Fall einer evolventischen Schnecke lassen sich mit der 4-Punkt-Variante beispielsweise auf diese Weise in gewissen Grenzen Aufmaß und Profilwinkel auf beiden Flanken vorgeben. Die 3-Punkt-Variante erlaubt nur die Vorgabe 3 dieser 4 Werte, der vierte ergibt sich automatisch, kann jedoch über die Geometrie der Schnecke beeinflusst werden. Das zweiflankige Abrichten kann sowohl zur Erzeugung reiner Profilmodifikationen als auch topologischer Modifikationen auf der Schnecke genutzt werden.

Die Anwendung dieser Erfindung muss nicht immer über die ganze Schneckenbreite erfolgen. So können auch nur Teile der Schnecke mit dem der Erfindung zugrunde liegenden Verfahren abgerichtet werden. Es ist auch möglich, mehrere identisch oder unterschiedlich modifizierte Bereiche auf der Schnecke aufzubringen. Solche Bereiche können zum Schruppen und/oder Schlichten genutzt werden. Häufig ist es so, dass zwei benachbarte modifizierte Bereiche nicht direkt aneinander platziert werden können. Dieser dadurch entstehende Abstand zwischen modifizierten Bereichen kann optional als Schruppbereich genutzt werden. So lässt sich eine in mehrere zum Teil modifizierte Bereiche unterteilte Schnecke nahezu vollständig nutzen.

**Ausgleichsrechnung**

Wird beim Wälzschleifen einer topologischen Modifikation mittels Diagonalwälzschleifens über die Zuordnung von Punkten auf der Verzahnung zu Punkten auf der Schnecke die benötigte topologische Modifikation ermittelt, so hat diese nicht immer eine Form gemäß Gleichung (23) kombiniert mit einer variabel platzierten Modifikation aus dem Abrichter. Es ist jedoch in bestimmten Fällen möglich, die auf der Schnecke benötigte Modifikation durch eine mit dem hier beschriebenen Verfahren herstellbaren Modifikation hinreichend genau anzunähern. Eine solche Annäherung kann beispielsweise mittels einer Ausgleichsrechnung durchgeführt werden. Bei einer solchen Ausgleichrechnung gehen im Gegensatz zur 3-Punkt-Methode nicht nur 3 Punkte auf dem Profil in die Berechnung der Achskorrekturen $\Delta K$ ein, sondern mindestens 4, sodass man ein überbestimmtes Gleichungssystem erhält. Dieses Gleichungssystem wird dann mittels Optimierens einer Abstandsfunktion gelöst. In einer solchen Abstandsfunktion können die verschiedenen betrachteten Punkte optional unterschiedlich gewichtet werden, bzw. es können verschiedene Abstandsfunktion genutzt werden. Eine solche unterschiedliche Wahl der Abstandsfunktion bzw. der Gewichtung kann dann von Vorteil sein, wenn die Toleranzen der berücksichtigten Punkte nicht alle gleich sind. So können beispielsweise enger tolerierte Punkte stärker gewichtet werden. Eine typische Variante der Ausgleichsrechnung, welche alle Punkte gleich gewichtet, ist die Methode der kleinsten Quadrate, welche als Abstandsfunktion die 2-Norm verwendet. Die Bedingung für die Zuordnung von Radien auf dem Abrichter zu Radien auf der Schnecke kann bei einer Ausgleichsrechnung weiterhin bestehen bleiben, so dass man ein Optimierungsproblem mit Nebenbedingung erhält. Es ist jedoch auch möglich diese Bedingung mit in die Abstandsfunktion aufzunehmen, da eine solche Zuordnung im Allgemeinen ebenfalls toleriert ist. Es ist ebenfalls möglich, mehrere solcher Zuordnungen für verschiedene Radien auf der Schnecke und des Abrichters mit in die Abstandsfunktion aufzunehmen, falls nicht nur eine solche Zuordnung eingehalten werden soll. Dies ist insbesondere dann von Interesse, wenn zweiflankig abgerichtet wird. Eine solche Ausgleichsrechnung ist analog als Erweiterung der anderen hier beschriebenen Methoden möglich, insbesondere der 4-Punkt-Methode oder der Variante mit ein oder zwei beliebigen Zusatzbedingen. Generell können auch immer die Zusatzbedingungen Bestandteil der Abstandsfunktion sein oder als strikt einzuhaltende Nebenbedingung fungieren.

Die Anwendung einer Ausgleichsrechnung ist nicht nur für den allgemeinen Fall der topologischen Modifikation möglich, sondern ebenso für den Spezialfall der reinen Profilmodifikation.

**Konische Schnecken**

Das hier beschriebene Verfahren ist nicht nur auf zylindrische Schnecken beschränkt, sondern kann direkt auf konische Schnecken übertragen werden. Mit konischen Schnecken sind hier Schnecken mit unterschiedlichen Steigungshöhen auf linker und rechter Flanke gemeint. Eine solche konische Schnecke ist in Figur 36b dargestellt. Im Falle evolventischer Schnecken werden diese als Beveloids bezeichnet. Beim Abrichten konischer Schnecken ist eine über die Schneckenbreite variable Zuordnung von Radien auf dem Abrichter auf Radien auf der Schnecke von besonderer Bedeutung, da auf Grund der Konizität, an jeder Breitenlinienposition die Schnecke über einen anderen Durchmesserbereich abgerichtet wird. Somit befinden sich beispielsweise die Punkte auf der Schnecke, welche den Beginn einer Kopfrücknahme der Verzahnung schleifen, an jeder Breitenposition auf einen anderen Radius.

**Schnecken mit kleinen Durchmessern und/oder großen Gangzahlen**

Wie eingangs erwähnt wurde, können in den meisten Fällen Abrichter, die für einen bestimmten Schneckendurchmesser ausgelegt wurden, für einen großen Bereich an Schneckendurchmessern genutzt werden und erzeugen beim Abrichten die gewünschte Profilmodifikation auf der Schnecke, welche dann die richtige Profilmodifikation auf der Verzahnung erzeugt. Dies funktioniert jedoch nicht mehr, wenn das Verhältnis Schneckendurchmesser zu Modul der zu schleifenden Verzahnung, zu klein wird und/oder die Gangzahl groß ist. Schnecken mit kleinen Durchmessern kommen beispielsweise dann zum Einsatz, wenn ein Wälzschleifen mit einer größeren Schnecke aufgrund einer Störkontur nicht mehr möglich ist. Ein weiterer Anwendungsfall ist das Schleifen großmoduliger Verzahnungen. Da die einsetzbaren Schneckendurchmesser nach oben begrenzt sind, verringert sich das Verhältnis von Schneckendurchmesser zum Modul bei steigendem Modul. Mit der Möglichkeit moderner Verzahnmaschinen hohe Tischdrehzahlen zu realisieren, ist es auch möglich, Schnecken mit größeren Ganzahlen einzusetzen.

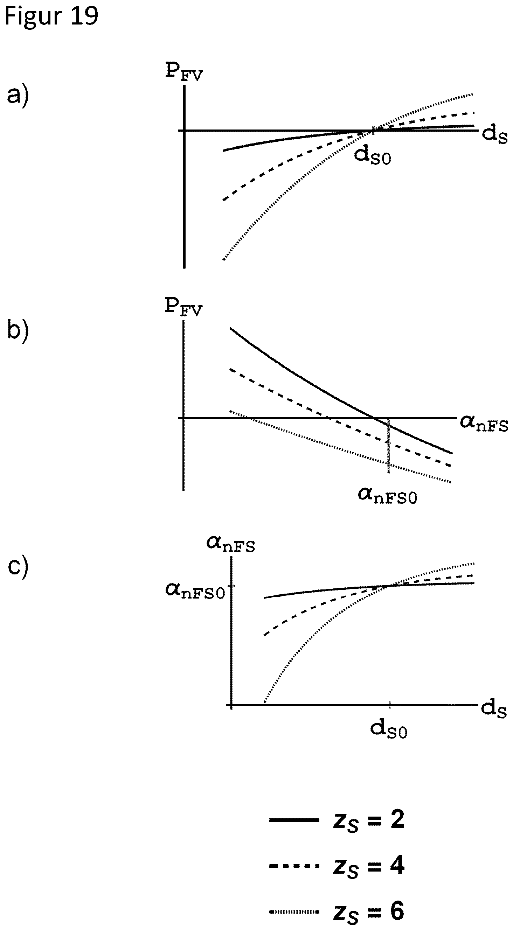

Werden solche Schnecken eingesetzt, erzeugt ein Abrichter, der für die Schnecke im Neuzustand ausgelegt wurde, für kleinere Radien einen ungewünschten Profilfehler, im Falle evolventischer Schnecken eine unerwünschte Profilballigkeit, wenn nach einem Verfahren gemäß dem Stand der Technik abgerichtet wird. Liegt dieser Profilfehler bzw. diese Profilballigkeit unterhalb eines Schneckendurchmessers außerhalb der Toleranz, so kann die Schnecke mit dem gegebenen Abrichter nicht weiter abgerichtet werden, wodurch die maximal nutzbare Belagdicke eingeschränkt ist. Dieses Problem kann bisher nur durch Verwendung verschiedener Abrichter für verschiedene Durchmesserbereiche gelöst werden. Mit dem hier beschriebenen Verfahren ist es jedoch möglich, mit nur einem Abrichter die Profilform über einen großen Durchmesserbereich konstant zu halten. Dazu wird der Abrichter als ein nicht zur Schnecke passender Abrichter betrachtet und die Abrichtkinematik so bestimmt, dass die gewünschte Profilform auf der Schnecke erzeugt wird. Vorzugsweise kommt hier bei evolventischen Schnecken die 3-Punkt-Methode zum Einsatz, sodass ein Radius auf dem Abrichter einem Radius auf der Schnecke zugeordnet werden kann. Dieses Verfahren führt jedoch zu einer im Allgemeinen unerwünschten relativen Profilstreckung auf der Verzahnung (siehe Figur 19a). Eine solche relative Profilstreckung ist unkritisch, wenn die im Abrichter eingebrachte Profilmodifikation an maximal einem Durchmesser auf der Verzahnung exakt zugeordnet werden muss. Das ist beispielsweise dann der Fall, wenn nur eine Rücknahme auf dem Profil eingebracht werden soll. Verfügt die Profilmodifikation jedoch über mindestens zwei solcher Durchmesser, beispielsweise eine Kopf- und eine Fußrücknahme, so würden diese beiden Punkte aufgrund der relativen Profilstreckung mit kleiner werdendem Schneckendurchmesser immer dichter zusammen rücken. Liegt für einen Schneckendurchmesser der Abstand dieser beiden Punkte außerhalb der Toleranz, so kann die Schnecke nicht weiter abgerichtet und genutzt werden. Eine Lösung dieses Problems bietet die Möglichkeit, eine Verzahnung mit Schnecken verschiedener Profilwinkel $\alpha_{nFS}$ zu schleifen. Wird ein Abrichter für eine Schnecke mit Durchmesser $d_{S0}$ und einem Profilwinkel $\alpha_{nFS0}$ ausgelegt, so kann mit diesem eine Schnecke mit kleinerem Durchmesser und anderem Profilwinkel mit der 3-Punkt-Methode so abgerichtet werden, dass die Profilballigkeit auf der Verzahnung der Sollvorgabe entspricht. Wie die dabei für einen festen Schneckendurchmesser entstehende relative Profilstreckung vom gewählten Profilwinkel abweicht, zeigt Figur 19b. Für alle 3 gezeigten Gangzahlen gibt es einen Nulldurchgang dieser Verläufe, das heiß, der Profilwinkel kann so gewählt werden, dass die relative Profilstreckung 0 ist. Figur 19c zeigt den auf diese Weise für verschiedene Schneckenradien ermittelten Profilwinkel. Die Kombination der 3-Punkt-Methode mit der Wahl geeigneter Profilwinkel erlaubt es so, bei kleinen Schneckendurchmessern und/oder großen Gangzahlen, die Profilform auf der Verzahnung über einen sehr großen Bereich des Schneckendurchmessers nahezu konstant zu halten.

Bei asymmetrischen Verzahnungen kann der Profilfehler bzw. die Profilballigkeit analog korrigiert werden. Soll bei evolventischen Schnecken die relative Profilstreckung ebenfalls korrigiert werden, so ist eine Korrektur über den Profilwinkel der Schnecke beim Schleifen mit zylindrischen Schnecken nur eingeschränkt möglich. Die Berechnung des Profilwinkels, welcher die relative Profilstreckung verschwinden lässt, muss auf linker und rechter Flanke separat durchgeführt werden und führt im Allgemeinen zu einer Schnecke, die nicht mehr zum Wälzschleifen der Verzahnung geeignet ist , da Gleichung (20) nicht mehr für beide Seiten erfüllt ist. Es kann jedoch eine zylindrische Schnecke genutzt werden, deren Profilwinkel auf rechter und linker Flanke so gewählt sind, dass die Verzahnung geschliffen werden kann und die relative Profilstreckung auf linker und rechter Flanke minimiert ist. Alternativ ist die Verwendung einer konischen (Beveloid) Schnecke möglich. Der Konuswinkel dieser Schnecke kann dann so gewählt werden, dass mit der Schnecke die Verzahnung geschliffen werden kann und die relative Profilstreckung auf beiden Flanken 0 ist.

## Mehrhubabrichten

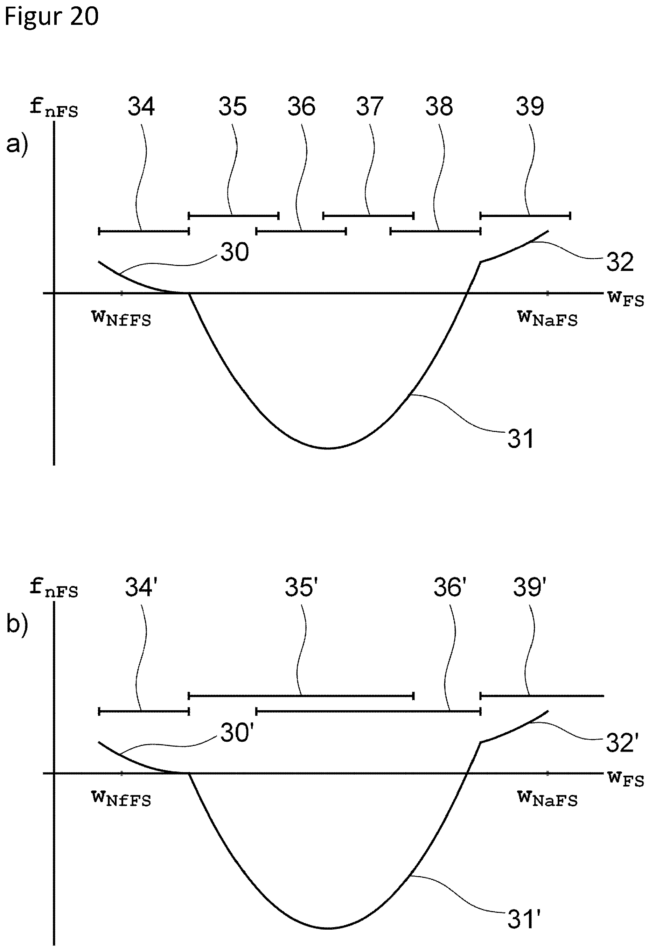

Um möglichst wirtschaftlich abrichten zu können, ist es von Vorteil, Abrichter zu verwenden, die während des Abrichtens Kontakt vom Schneckenkopf bis zum Schneckenfuß haben. Auch wenn es die Erfindung ermöglicht, die Profilform mit solchen Abrichtern zu beeinflussen, so gibt es Profilmodifikationen, die mit einem universell einsetzbaren Abrichter nicht möglich sind. In der Lohn- und Kleinserienproduktion ist jedoch hohe Flexibilität gefragt. Werden daher Abrichter mit kleineren aktiven Bereichen eingesetzt, so können mit diesen pro Hub nur Teile des Profils abgerichtet werden und in jedem dieser Bereiche kann, das hier beschriebenes Verfahren angewendet werden, insbesondere kann die Modifikation an 3 bzw. 4 Wälzwegen vorgegeben werden. Dies erlaubt eine sehr flexible Gestaltung der Profilmodifikation, erfordert jedoch deutlich weniger Hübe im Vergleich zu einem aus dem Stand der Technik bekannten Zeilenabrichten mit Punktkontakt. Vorzugsweise kann hier die 3-Punkt-Methode eingesetzt werden, um in jedem Hub den aktiven Bereich des Abrichters dem im aktuellen Hub abzurichtenden Bereich zuzuordnen. Figur 20a zeigt beispielhaft eine Profilmodifikation $f_{nFS}$, welche sich aus den 3 Bereichen 30, 31, 32 zusammensetzt. In jedem dieser Bereiche können Profilwinkelabweichung und Profilballigkeit separat vorgegeben werden. Die Bereiche 30 und 32 werden jeweils in einem Hub abgerichtet, das Hauptprofil 31 in 4 Hüben. Die Größe des aktiven Bereiches auf dem Abrichter ist hier so gewählt, dass der Bereich 34 unterhalb des Fußnutzkreises $w_{NffS}$ der Schecke beginnt. Ein solches Unterschreiten des Fußnutzkreises ist in gewissen Grenzen unkritisch, da dieser Bereich der Schnecke im Allgemeinen beim Wälzschleifen keinen Kontakt mit der Verzahnung hat. Ein entsprechend große Wahl des Abrichters bringt jedoch den Vorteil, dass für das Hauptprofil weniger Hübe benötigt werden, im Vergleich zu einem aktiven Bereich, mit dem der Fußnutzkreis nicht unterschritten würde. Um die Zahl der Hübe noch weiter zu reduzieren ohne dabei an Flexibilität zu verlieren, ist die Möglichkeit einen Abrichter mit mehreren vorzugsweise verschieden großen aktiven Bereichen zu nutzen. Es können dann mit verschiedenen aktiven Bereichen auf dem Abrichter verschiedene Bereiche auf der Schnecke abgerichtet werden. Wählt man beim gerade betrachteten Beispiel einen großen aktiven Bereich des Abrichters für das Hauptprofil, so lässt sich für dieses die Anzahl der Hübe von 4 auf 2 reduzieren (siehe Figur 20b). Ein solcher Abrichter und ein Verfahren, welches eine solche Zuordnung beschreibt sind bereits aus der DE19624842C2 bekannt. Mit dem dort beschrieben Verfahren ist es jedoch nur möglich, in den einzelnen Bereichen den Profilwinkel über die Abrichtkinematik vorzugeben, einen Vorgabe komplexere Modifikationen, welche an 3 bzw. 4 Punkten erreicht werden sollen, ist jedoch nicht möglich. Insbesondere ist auch keine Vorgabe der Profilballigkeit in den einzelnen Bereichen möglich. Die erzielbaren Profilballigkeiten ergeben sich nur aus der in den Abrichter gelegten Modifikation.

Das Abrichten in mehreren Hüben kann nicht nur zum Erzeugen reiner Profilmodifikationen genutzt werden, sondern kann direkt auf das Abrichten topologisch korrigierter Schnecken übertragen werden, analog zum Abrichten in einem Hub. Dabei ist es möglich, die Bereiche, welche während eines Hubs abgerichtet werden, über die Breite der Schnecke zu verschieben. So können beispielsweise die Positionen der Übergänge zwischen den Bereichen 30 und 31 bzw. 31 und 32 in Figur 20a über die Schneckenbreite frei vorgegeben werden. Eine so modifizierte Schnecke kann dann beispielsweise genutzt werden, um mittels Diagonalwälzschleifens auf der Verzahnung einen über die Verzahnbreite variablen Beginn der Kopf- und Fußrücknahmen zu realisieren.

Ein bei mehreren Hüben verwendeter Abrichter kann auch bereits Modifikationen enthalten, die dann gezielt auf der Schnecke platziert werden. So kann ein Abrichter beispielsweise einen Bereich aufweisen, der zum Erzeugen der Kopfrücknahme, eines Teils des Hauptprofils und des Knicks zwischen beiden genutzt wird und einen zweiten Bereich aufweisen, der zum Erzeugen der Fußrücknahme, eines Teils des Hauptprofils und des Knicks zwischen beiden genutzt wird. Wird dann der obere Teil des Profils in einem Hub mit dem ersten Bereich und der untere Teil mit dem zweiten Bereich abgerichtet, so können die Verläufe des Beginns der Kopf- bzw. Fußrücknahme über die Breite der Schnecke unabhängig voneinander vorgegeben werden und am Übergang zwischen dem oberen und unteren Teil des Profils kann ein tangentialer Übergang realisiert werden. Eine so abgerichtete Schnecke kann im Diagonalwälzverfahren genutzt werden, um den Beginn der Kopf- und Fußrücknahme auf der Verzahnung abhängig von der Breitenposition frei vorzugeben.

Beim Mehrhubabrichten ist es prinzipiell auch möglich, dass mehr als nur ein Abrichter zum Einsatz kommt und so einzelne Hübe mit unterschiedlichen Abrichtern durchgeführt werden. Diese können unterschiedliche Modifikationen und/oder Geometrien haben und erlauben so ein noch flexibleres Abrichten.

**Betrachtung maximal erreichbarer Profilmodifikation insbesondere Profilballigkeit und Auswahl geeigneter Abrichter und Schnecken**

Wie bereits weiter oben erwähnt, sind die mit der Erfindung rein über die Abrichtkinematik herstellbaren Modifikationen durch verschiedene Randbedingungen limitiert. Diese sind:

- die rein mathematische Limitierung, welche sich über die Existenz von Nullstellen der im mathematischen Teil konstruierten Funktionen bestimmen lässt.
- die Kollision des Abrichter mit der Gegenflanke
- das Unterhöhlen der Schneckengänge
- die relative Profilstreckung

Alle diese limitierenden Faktoren hängen vor allem von

- der Gangzahl der Schnecke $z_S$,
- dem Durchmesser der Schnecke $d_S$,
- dem Durchmesser des Abrichters $d_A$,
- und bei evolventischen Profilen vom Profilwinkel der Schnecke $\alpha_{nFS}$

ab. Die Kollision mit der Gegenflanke und die Unterhöhlung hängen zusätzlich noch von der Breite der äußeren Mantelfläche des Abrichters und der Dicke des Schneckengangs ab. Die sich für eine zu schleifende Verzahnung aus diesen geometrischen Größen ergebenden Beträge der maximal möglichen Modifikationen können sich über mehrere Größenordnungen erstrecken. So kann für eine evolventische Verzahnung die maximal mit der Erfindung erzeugbare Profilballigkeit, abhängig von den geometrischen Größen, unterhalb $0.01\,\mu m$ oder auch oberhalb von $100\,\mu m$ liegen. Dieses Beispiel zeigt auf, wie wichtig ein Verständnis dieser Zusammenhänge und die Auswahl geeigneter Geometrien für die Anwendbarkeit dieses Verfahrens ist. Typische Schnecken und Abrichter die heute zum Einsatz kommen, erlauben oft nur kleine oder gar nur sehr kleine Profilballigkeiten.

Teil dieser Erfindung ist auch eine Berechnungseinheit/Software, welche für eine gegebene modifizierte Verzahnung zu einem gegebenen Satz an geometrischen Größen die Herstellbarkeit mit dem erfindungsgemäßen Verfahren vorzugsweise unter Berücksichtigung der in den Abrichter eingebrachten Modifikation prüft. Soll beispielsweise bei einer evolventischen Verzahnung eine Profilballigkeit von $20\,\mu m$ erzeugt werden, es steht jedoch nur ein Abrichter mit einer Modifikation zur Erzeugung von $15\,\mu m$ zur Verfügung, so ist zu prüfen, ob für die gegebene Geometrie beispielsweise mit der 3-Punkt-Methode eine Profilballigkeit von $5\,\mu m$ erzeugt werden kann. Eine solche Berechnungseinheit/Software kann zusätzlich auch eine Funktion enthalten, um für einen Satz an geometrischen Größen inklusive Abrichtermodifikation zu einer Verzahnung alle mit der Erfindung erzeugbaren Modifikationen zu berechnen. Beispielsweise kann im Falle eines evolventischen Profils die maximale und minimale erzeugbare Profilballigkeit bestimmen. Enthält der Abrichter eine Modifikation, welche als Profilmodifikation auf der Verzahnung abgebildet werden soll und diese Modifikation soll von einer gemäß der Erfindung erzeugten Modifikation überlagert zu werden, so ist optional zusätzlich zu prüfen, ob durch die entstehende relative Profilstreckung die Modifikation noch, im Rahmen der Toleranz, richtig auf der Verzahnung abgebildet wird.

Umgekehrt kann eine Berechnungseinheit/Software auch eine Funktionalität enthalten, um zu einer modifizierten Verzahnung und einem unvollständigen Satz an geometrischen Größen inklusive Abrichtermodifikation, Vorschlagswerte für die übrigen geometrischen Größen zu berechnen. Ist beispielsweise der Abrichter samt Modifikation gegeben sowie die Gangzahl der Schnecke, so können Durchmesser der Schnecke und/oder Profilwinkel der Schnecke so bestimmt werden, dass die geforderte Modifikation mit dem erfindungsgemäßen Verfahren erzeugt werden kann. Verfügt eine solche Berechnungseinheit/Software über eine Datenbank mit verfügbaren Abrichtern und/oder Schneckendurchmessern, so kann die Software alle zur Erzeugung einer bestimmten Modifikation geeigneten Kombinationen ermitteln. Eine solche Datenbank kann zusätzlich oder anstatt der Schneckendurchmesser auch Daten über bereits vorprofilierte verfügbare Schnecken enthalten. Solche Daten würden beispielsweise Gangzahl und/oder Durchmesser und/oder Konizität und/oder Profilwinkel und/oder Steigungshöhe enthalten. Eine solche Funktionalität ist insbesondere für Lohnverzahner von großem Interesse, da auf diese Weise Schnecken und Abrichter für verschiedene Verzahnungen genutzt werden können.

Solche Berechnungen können nicht nur für reine Profilmodifikationen durchgeführt werden, sondern auch für topologische Modifikationen auf der Schnecke. Dazu wird die Berechnung beispielsweise für diskrete Breitenpositionen durchgeführt. Eine solche Berechnung liefert beispielsweise mögliche Funktionswerte für die Funktionen $C_{0FS}(X_{FS})$, $C_{1FS}(X_{FS})$ und $C_{2FS}(X_{FS})$ aus Gleichung (23), und beschreibt so die Menge der erzeugbaren topologischen Modifikationen, insbesondere die minimal und maximal erzeugbare Profilballigkeit entlang der Berührlinie. Sind diese minimal und maximal benötigten Profilballigkeiten für eine topologische Modifikation bekannt, so können wiederum geeignete geometrische Größen bestimmt werden. Insbesondere für solche topologischen Modifikationen ist eine solche Funktionalität nicht nur in der Lohn- und Kleinserienfertigung von großer Bedeutung, sondern auch bei der Prozessauslegung für Serienproduktionen. Bei der Umkehr der Berechnung zu Bestimmung geeigneter geometrischer Größen und Abrichter wird bevorzugt die kritischste Breitenposition berücksichtigt.

**Verwendung von Schnecken mit ausgesparten bzw. inaktiven Gängen**

Die Betrachtung der maximal erzeugbaren Profilmodifikation insbesondere Profilballigkeiten beim einflankigen Abrichten zeigt, dass diese tendenziell größer werden, wenn

- die Gangzahl der Schnecke größer wird
- der Durchmesser der Schnecke kleiner wird
- der Durchmesser des Abrichters kleiner wird
- die Breite der äußeren Mantelfläche des Abrichters kleiner wird
- die Dicke des Schneckengangs kleiner wird
- der Profilwinkel bei evolventischen Schnecken größer wird

wobei die Limitierungen hauptsächlich die Kollision mit der Gegenflanke und das Unterhöhlen sind. Diese Einschränkungen der geometrischen Größen können sich negativ auf den Prozess auswirken. So führen beispielsweise zunehmende Gangzahlen und sinkende Schneckendurchmesser bei gleichbleibender Schnittgeschwindigkeit zu höheren Tischdrehzahlen. Auch wenn moderne Verzahnmaschinen immer höhere Tischdrehzahlen erlauben, so können die nötigen Tischdrehzahlen, die technisch möglichen leicht überschreiten. Zudem können mit Schnecken mit größeren Durchmessern aufgrund der längeren Berührlinie auf der Schnecke beim Wälzschleifen und den dadurch mehr in Eingriff gebrachten Schleifkörner teilweise bessere Rauhheitswerte erreicht werden. Kleinere Durchmesser des Abrichters können dahingehend nachteilig sein, dass sie eine kleinere aktive Fläche aufweisen und somit die Standzeit reduziert wird. Eine Möglichkeit, diese in bestimmten Fällen eintretenden Limitierungen zu umgehen, besteht darin, in der Schnecke einzelne Gänge auszusparen, um auf diese Weise mehr Platz in der Lücke zu schaffen und Kollisionen und Unterhöhlungen zu vermeiden. Soll beispielsweise mit einer zweigängigen Schnecke geschliffen werden, so kann einer der beiden Gänge beim Abrichten zumindest teilweise entfernt werden, wodurch dieser beim Schleifprozess inaktiv wird. Der Fußkreisradius kann gegenüber der ursprünglichen Schnecke optional verkleinert werden. Wie der Schleifprozess mit dieser Schnecke durchzuführen ist, hängt von der Zähnezahl der Verzahnung ab. Hat diese eine ungerade Zähnezahl, so kann der Prozess mit der ursprünglichen Anzahl an Schleifhüben, jedoch mit halbem Vorschub durchgeführt werden, sodass die technologischen Kenngrößen im Wesentlichen unverändert bleiben. Ist die Zähnezahl gerade, so werden alle Hübe doppelt mit dem ursprünglichen Vorschub durchgeführt, wobei vor der Wiederholung jeden Hubs, die Verzahnung um eine Teilung gedreht wird. Dieses Prinzip lässt sich direkt auf höhere Gangzahlen erweitern, wobei es von Vorteil ist, die Gangzahlen so zu wählen, dass die Bearbeitung in einem Hub durchgeführt werden kann, um periodisch auftretende Teilungssprünge zu vermeiden. Es ist dabei auch möglich, mehr als nur die beiden benachbarten Gänge eines verbleibenden Zahns zu entfernen und/oder die Zahl der entfernten Gänge zwischen zwei verbliebenen Gängen nicht immer gleich zu wählen.

**Berücksichtigung von Abweichungen in den Achsen**

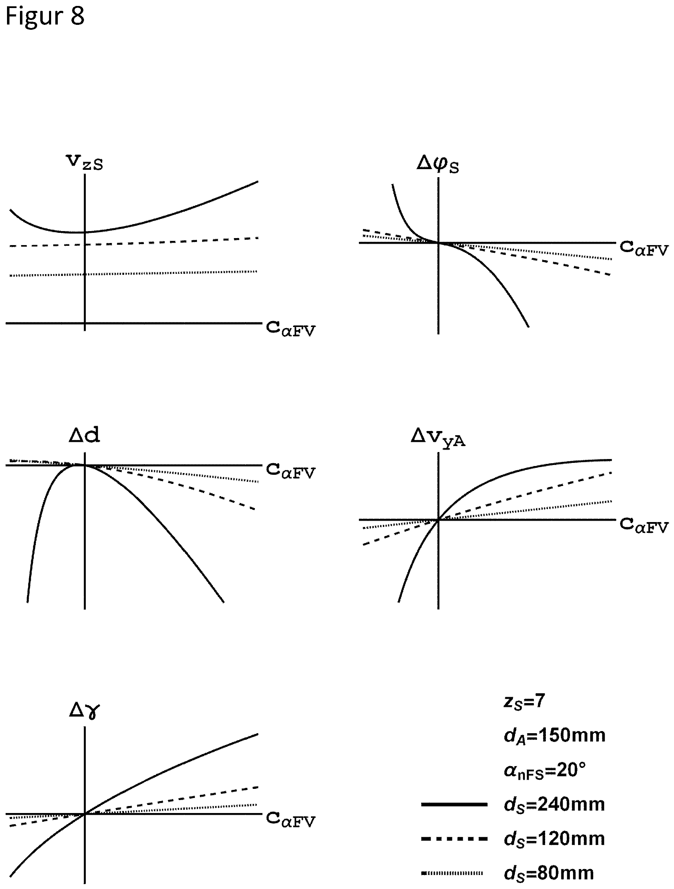

Bei der Prüfung der Herstellbarkeit einer gegeben Profilmodifikation für einen Satz an geometrischen Größen bzw. bei der Bestimmung eines Satzes geometrischer Größen aus einer gegebenen Profilmodifikation kann es vorteilhaft sein, neben den bisher diskutierten Limitierungen auch die für das Abrichten nötigen Achskorrekturen $\Delta K$ zu betrachten. Die Figuren 8, 9, 10 und 11 zeigen den zum Teil sehr starken Einfluss vier der geometrischen Größen auf die Achskorrekturen. Zu große Korrekturen können sich jedoch nachteilig auswirken. Werden Achsen zu weit verfahren, kann es beispielsweise zu Kollisionen zwischen Schnecke und/oder Abrichter mit Maschinenteilen kommen. Ein weiteres Problem sind die durch die großen Verfahrwege zunehmenden Abweichungen in der Positionierung des Abrichters relativ zur Schnecke. Ja nach gewählten geometrischen Größen, liegen die Beträge der Achskorrekturen um Größenordnungen über den Beträgen der zu erzeugenden Profilmodifikationen und in diesen Fällen deutlich über Achskorrekturen, welche typischerweise bei Verfahren gemäß dem Stand der Technik benötigt werden. Der Einfluss solcher Abweichungen auf die erzeugte Modifikation kann mit der Funktion $f_{nFS}(w_{FS}; \Delta K)$ berechnet werden, wobei $\Delta K$ mit einer Abweichung versehen wird. Sind die, in erste Linie mechanisch bedingten Abweichungen der Achsen, abhängig von den Achskorrekturen bekannt, so lassen sich der Einfluss auf die zu erzeugende Profilmodifikation und der Fehler in der Profilmodifikation berechnen. Die geometrischen Größen können dann so bestimmt werden, dass der Fehler in der Profilmodifikation unterhalb einer gegebenen Toleranz liegt. Diese Betrachtung kann direkt auf die Erzeugung topologischer Modifikationen übertragen werden, wobei hier vorzugsweise die Berechnung für verschiedene Positionen der Berührline durchzuführen ist.

Die gerade betrachteten Abweichungen ergeben sich sowohl aus den Abweichungen der physikalischen Achsen als auch aus anderen mechanischen Abweichungen wie beispielsweise Schiefstehen des Ständers. Verfügt die Maschine über einen Bewegungsapparat, sodass die Berechnung der Koordinaten $B_1, ..., B_{N_s}$ nach Gleichung (3) zu einer nicht eindeutigen Lösung führt, so gibt es mehrere Sätze an Koordinaten $B_1, ..., B_{N_s}$, welche zur selben Relativstellung zwischen Schnecke und Abrichter führen. Ein Beispiel einer Maschine, welche über einen solchen Bewegungsapparat verfügt, ist in Figur 22 dargestellt. Ihr Bewegungsapparat kann durch Gleichung (4) beschrieben werden. Eine nicht eindeutige Lösung für die Koordinaten $B_1, ..., B_{N_s}$ bedeutet in der Regel, dass verschiedene Achsstellungen zur selben Relativstellung führen. Im Allgemeinen führen diese verschiedenen Lösungen zu unterschiedlichen Abweichungen in der Positionierung des Abrichters relativ zur Schnecke und somit zu unterschiedlichen Abweichungen in den Achskorrekturen $\Delta K$. Verzugsweise wird bei der Anwendung der Erfindung die Lösung ausgewählt, welche zum kleinsten, durch die Abweichungen verursachten Fehler im Profil führt. Optional können zusätzlich noch mögliche Kollisionen zwischen Schnecke und/oder Abrichter und/oder Maschinenteilen mit anderen Maschinenteilen bei der Auswahl einer geeigneten Lösung berücksichtigt werden. Diese Betrachtung kann direkt auf die Erzeugung topologischer Modifikationen übertragen werden, wobei hier bei der Auswahl der Lösung zusätzlich noch kinematische Gesichtspunkte berücksichtig werden können. So können beispielsweise technologisch ungünstige Richtungsumkehrungen einer oder mehrerer Achsen durch geeignete Wahl der Lösung in bestimmten Fällen vermieden werden. Lassen sich die Richtungsumkehrungen und/oder das Einstellen von Achswerten mit großen Abweichungen über die abzurichtenden Breite der Schnecke nicht umgehen, so können sich jedoch in bestimmten Fällen die Positionen der Berührlinie, an denen besonders unsichere Achswerte angefahren werden, beeinflussen. Sind die Toleranzen einer topologischen Modifikation nicht überall gleich, so können die ungünstigen Achswerte mit großen Abweichungen bevorzugt dann eingestellt werden, wenn die Berührlinie Bereiche großer Toleranz überstreicht.

**Berechnung von Abweichungen der Achsen aus Fehlern in der Modifikation**

Sind die Abweichungen der Achsen nicht bekannt, können diese aus dem durch sie verursachten Fehler im Profil rückgerechnet werden. Dazu wird die der Erfindung zugrunde liegende Berechnung genutzt, um aus der tatsächlich erzeugten Profilmodifikation die Achskorrekturen $\Delta K$ zu berechnen. Diese werden mit den in der Maschine beim Abrichten eingestellten Achskorrekturen verglichen und aus der Differenz ergibt sich die Abweichung der Achswerte. Wird eine topologische Modifikation abgerichtet, so kann diese Berechnung für verschiedene Positionen der Berührline durchgeführt werden. Auf diese Weise erhält man die Abweichungen für verschiedene Achswerte. Sind die Abweichungen bekannt, können die Achswerte bei weiteren Abrichtvorgängen entsprechend korrigiert und so die Profilfehler minimiert werden.

Die hierfür notwendige Kenntnis über tatsächlich erzeugten Profilmodifikationen auf der Schnecke sind im Allgemeinen nicht direkt bekannt und auch nicht direkt messbar. Sie bilden sich jedoch in der geschliffenen Verzahnung ab, welche vermessen werden kann und aus deren Profilmodifikation die Profilmodifikation auf der Schnecke berechnet werden kann. Dies funktioniert beim Diagonalwälzschleifen mit einer topologisch modifizierten Schnecke analog, wobei hier die Kenntnis über die Zuordnung von Punkten auf der Verzahnung zu Punkten auf der Schnecke von Nöten ist. Eine solche Zuordnung ist in dem Fall jedoch im Allgemeinen bekannt, da diese bereits zur Bestimmung der topologischen Modifikation der Schnecke benötigt wird.

**Gezielte Nutzung der Profilstreckung**

Der Effekt der Profilstreckung kann auch gezielt genutzt werden. Soll beispielsweise eine Schnecke mit einem modifizierten Abrichter abgerichtet werden, die in den Abrichter eingebrachte Modifikation jedoch eine gestreckte oder gestauchte Profilmodifikation auf der Schnecke erzeugen würde, so kann das erfindungsgemäße Verfahren eingesetzt werden, um die relative Profilstreckung so einzustellen, dass die auf der Schnecke erzeugte Profilmodifikation richtig gestreckt ist. Wird eine relative Profilstreckung erzeugt, so entsteht beispielsweise bei evolventischen Profilen gleichzeitig eine Profilballigkeit. Wie groß diese bei gegebener relativer Profilstreckung ist, hängt vor allem von den geometrischen Größen der Schnecke und des Abrichters ab (siehe Figur 13). Diese Profilballigkeit kann in bestimmten Fällen so klein sein, dass sich in wesentlichen nur eine Streckung, jedoch keine Überlagerung mit einer Profilballigkeit ergibt. Um dies zu erreichen, kann die Schneckengeometrie entsprechend gewählt werden. Es ist jedoch auch möglich, die Schneckengeometrie so zu wählen, dass nicht nur die Profilstreckung, sondern auch die durch die Abrichtkinematik erzeugte Profilmodifikation, insbesondere die Profilballigkeit im Falle von Evolventenverzahnungen, entsprechend einer Vorgabe erreicht wird. Dies kann auch auf das Abrichten topologisch modifizierter Schnecken übertragen werden, wodurch es möglich wird, mit einer geeigneten Schnecken- und Abrichtergeometrie, gezielt die Profilstreckung über die Schneckenbreite zu variieren und gleichzeitig nur eine vernachlässigbar kleine Profilballigkeit zu erzeugen. Es ist auch möglich, gezielt die Profilstreckung und die Profilballigkeit über die Schneckenbreite zu variieren, wobei beide aneinander gekoppelt sind. Mit einer exakt abgestimmten Schnecken- und Abrichtergeometrie (insbesondere Gangzahl, Profilwinkel, beide Durchmesser) kann diese Kopplung wie benötigt eingestellt werden. Die in erster Näherung lineare Kopplung ist in Figur 13 dargestellt. Die Profilstreckung und beispielsweise die Profilmodifikation wirken sich dabei für jede Breitenposition entlang der aktuellen Berührlinie aus. Insbesondere bei asymmetrischen Verzahnungen und/oder wenn die Kopplung für linke und rechte Flanke verschieden sein soll, kann eine konische Schnecke verwendet werden und zusätzlich eine Variation des Konuswinkels zum getrennten Einstellen der Kopplung auf linker und rechten Flanke genutzt werden. Mit kleiner werdendem Schneckendurchmesser verändert sich jedoch diese Kopplung, was sich durch eine entsprechend abgestimmte Anpassung des Profilwinkels wieder korrigieren lässt.

**2. Beschreibung Diagonalwälzschleifen**

Der zweite Teil der Erfindung beschreibt ein Verfahren zur Erzeugung einer bestimmten Klasse an topologischen Oberflächenmodifikationen auf Zahnflanken sowohl zylindrischer als auch konischer (Beveloids) Evolventenverzahnungen. Die Verzahnungen können sowohl symmetrisch als auch asymmetrisch sein, d.h. die Profilwinkel der linken und rechten Flanken können, müssen aber nicht unterschiedlich sein. Das Verfahren kann unter anderem bei folgenden Fertigungsverfahren angewandt werden:

- Wälzfräsen

- Schälwälzfräsen

- Schaben

- Wälzschleifen

- Honen

Wird das Verfahren beim Wälzschleifen angewandt, können sowohl abrichtbare als auch nicht abrichtbare Werkzeuge eingesetzt werden. Das Abrichten kann mit einer Profilrolle ein- oder zweiflankig erfolgen, aber ebenso ein- oder zweiflankig im Zeilenabrichten.

Der Bearbeitungsprozess erfolgt mit einem über die Werkzeuglänge modifizierten Werkzeug, welches während des Prozesses in axialer Richtung verschoben wird (Diagonalwälzverfahren).

Größen, die für linke und rechte Flanken unterschiedlich sind bzw. sein können, werden mit dem Index $F$ versehen. $F$ kann $l$ (links) oder $r$ (rechts) sein. Gleichungen, in den der Index $F$ vorkommt, gelten immer für linke und rechte Flanken. Die hier betrachteten Evolventenverzahnungen werden abhängig von den Grundkreisradien ($r_{br}$, $r_{bl}$) und den Grundschrägungswinkeln ($\beta_{br}$, $\beta_{bl}$) in folgende vier Typen unterteilt.

1. Zylindrisch symmetrisch: $r_b := r_{br} = r_{bl}$ und $\beta_b := \beta_{br} = \beta_{bl}$

2. Zylindrisch asymmetrisch: $r_{br} \neq r_{bl}$ und $\dfrac{\tan \beta_{br}}{r_{br}} = \dfrac{\tan \beta_{bl}}{r_{bl}}$

3. Konisch symmetrisch: $\beta_{br} \neq \beta_{bl}$ und $r_{br} \cos\beta_{br} = r_{bl} \cos\beta_{bl}$

4. Konisch asymmetrisch: $\beta_{br} \neq \beta_{bl}$ und $r_{br} \cos\beta_{br} \neq r_{bl} \cos\beta_{bl}$ und $\dfrac{\tan\beta_{br}}{r_{br}} \neq \dfrac{\tan\beta_{bl}}{r_{bl}}$

Im Folgenden wird die Klasse der topologischen Oberflächenmodifikationen definiert, welche mit dem hier zunächst beschriebenen Verfahren erzeugt werden können. Dazu wird die übliche Beschreibung topologischer Oberflächenmodifikationen betrachtet. Diese werden beschrieben über eine Funktion $f_{Ft}(w_F, z_F)$, wobei $w_F$ der Wälzweg und $z_F$ die Position in Breitenlinienrichtung ist. Eine topologische Oberflächenmodifikation gehört zur hier betrachten Klasse an Oberflächenmodifikationen, wenn Funktionen $F_{FtC}$, $F_{FtL}$ und $F_{FtQ}$ existieren, mit

$$ f_{Ft}(w_F, z_F) = F_{FtC}(X_F) + F_{FtL}(X_F) \cdot w_F + F_{FtQ}(X_F) \cdot w_F^2 \;, \tag{25} $$

mit

$$ X_F = w_F \sin\rho_F + z_F \cos\rho_F \;, \tag{26} $$

und $f_{Ft}(w_F, z_F)$ die Oberflächenmodifikation exakt oder zumindest näherungsweise beschreibt. Jedes $X_F$ definiert eindeutig eine Gerade auf der Flanke in den Koordinaten $w_F$ und $z_F$.

Anschaulich gesprochen bedeutet die Definition der Oberflächenmodifikation, dass diese entlang jeder durch ein $X_F$ gegeben Gerade die Form einer Parabel (Polynom zweiten Grades) hat oder durch diese angenähert werden kann. Die Form der Parabel und somit die Koeffizienten des Polynoms können für jede solche Gerade verschieden sein. Die Koeffizienten werden, abhängig von $X_F$ durch die Funktionen $F_{FtC}$, $F_{FtL}$ und $F_{FtQ}$ gegeben. Mit eingeschlossen sind hierbei auch die Fälle, in denen einzelne oder alle Koeffizienten für gewisse $X_F$ gleich Null, insbesondere auch die Fälle, in denen die Parabel für bestimmte $X_F$ zu einer linearen oder konstanten Funktion entartet. Auch mit eingeschlossen ist der spezielle Fall, in dem $F_{FtQ} = 0$ für alle $X_F$. In diesem Fall ist die Oberflächenmodifikation entlang der durch $X_F$ definierten Geraden durch eine lineare Funktion gegeben, wobei auch hier die Funktion für gewisse $X_F$ zu einer konstanten Funktion entarten kann.

Für den Spezialfall $\rho_F = 0$, ist die Oberflächenmodifikation eine reine Flankenlinienmodifikation, d.h. die Oberflächenmodifikation ist in jedem gegebenen Stirnschnitt über das gesamte Profil konstant. Für den Spezialfall $\rho_F = \pm\frac{\pi}{2}$, ist die Oberflächenmodifikation eine reine Profillinienmodifikation.

Bisher ist kein Verfahren bekannt, mit dem mit einem der hier betrachteten Fertigungsverfahren die hier betrachteten Oberflächenmodifikation abweichnungsfrei oder mit ausreichender Näherung hergestellt werden können, mit Ausnahme einiger Sonderfälle. Mit abweichungsfrei herstellbaren Oberflächenmodifikationen sind hier Oberflächenmodifikationen gemeint, die sich, abgesehen von Vorschubmarkierungen und ggf. Hüllschnitten theoretisch ohne Abweichung von der Sollmodifikation herstellen lassen.

Im Folgenden wird näher auf die der Erfindung zu Grunde liegende Idee eingegangen. Diese wird am Beispiel des Wälzschleifens beschrieben, sie ist jedoch auf Grund der Ähnlichkeit der hier betrachteten Fertigungsverfahren für all diese gleichermaßen anwendbar. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken $E_F$, sowohl des Werkstücks als auch des Werkzeugs, werden typischerweise über den Wälzweg ($w_F$) und die Position in Breitenlinienrichtung ($z_F$) parametrisiert.

$$E_F(w_F, z_F)$$

$$= \begin{pmatrix} r_{bF} \cdot \sin\left(s_F \cdot \left(\frac{w_F}{r_{bF}} + \eta_{bF}\right) - \frac{z_F \cdot \tan(\beta_{bF})}{r_{bF}}\right) - s_F \cdot w_F \cdot \cos\left(s_F \cdot \left(\frac{w_F}{r_{bF}} + \eta_{bF}\right) - \frac{z_F \cdot \tan(\beta_{bF})}{r_{bF}}\right) \\ r_{bF} \cdot \cos\left(s_F \cdot \left(\frac{w_F}{r_{bF}} + \eta_{bF}\right) - \frac{z_F \cdot \tan(\beta_{bF})}{r_{bF}}\right) + s_F \cdot w_F \cdot \sin\left(s_F \cdot \left(\frac{w_F}{r_{bF}} + \eta_{bF}\right) - \frac{z_F \cdot \tan(\beta_{bF})}{r_{bF}}\right) \\ z_F \end{pmatrix}$$

$$(27)$$

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Diese Parametrisierung erlaubt es einfache Beziehungen für den Verlauf des Kontaktpunkts auf Werkzeug und Werkstück zu berechnen. Dieser Verlauf wird sowohl auf dem Werkstück als auch auf dem Werkzeug durch den Axialvorschub des Werkstücks und der Shiftbewegung des Werkzeugs kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lassen sich das Verhältnis zwischen Axialvorschub des Werkstücks und Shiftbewegung des Werkzeugs, im Folgenden Diagonalverhältnis genannt, und die Oberflächenmodifikation auf dem Werkstück so abstimmen, dass auf dem Werkstück die gewünschte Modifikation erzeugt wird.

Um die Zusammenhänge mathematisch zu formulieren werden folgende Definitionen gemacht:
Für Transformationen werden folgende Bezeichnungen verwendet:

- $R_x(\varphi)$ Rotation um den Winkel $\varphi$ um die x-Achse. Analog für y und z
- $T_x(v)$ Translation um die Strecke v in x-Richtung. Analog für y und z
- $H(A_1,...,A_N)$ allgemeine Transformation beschreibbar durch eine homogene Matrix mit insgesamt N Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der z-Achse zusammen. Die Verzahnungsmitte liegt bei z = 0.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen. Im Folgenden werden Größen, welche sich auf das Werkzeug beziehen mit Index 1 versehen und solche, die sich auf das Werkstück beziehen mit Index 2.

**Kinematische Kette für zylindrisches Werkzeug und Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \qquad (28)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- $d$: Achsabstand (Werkzeug/Werkstück)
- $\gamma$: Achskreuzwinkel (Werkzeug/Werkstück)

**Kinematische Kette für konisches Werkzeug und zylindrisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \qquad (29)$$

- $\varphi_1$: Drehwinkel Werkzeug.
- $\varphi_2$: Drehwinkel Werkstück.
- $z_{V1}$: Vorschub des Werkzeug (auch Shiftposition genannt).
- $z_{V2}$: Axialvorschub des Werkstücks.
- $d$: Maß für Achsabstand (Werkzeug/Werkstück)
- $\gamma$: Achskreuzwinkel (Werkzeug/Werkstück)
- $\vartheta_1$: Konuswinkel Werkzeug
- $r_{w1}$: Wälzkreisradius des Werkzeugs

**Kinematische Kette für zylindrisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \qquad (30)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- $d$: Maß für Achsabstand (Werkzeug/Werkstück)
- $\gamma$: Achskreuzwinkel (Werkzeug/Werkstück)
- $\vartheta_2$: Konuswinkel Werkstück
- $r_{w2}$: Wälzkreisradius des Werkstücks

**Kinematische Kette für konisches Werkzeug und konisches Werkstück**

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2) \cdot$$
$$T_y(-r_{w2}) \cdot R_z(\varphi_2) \qquad (31)$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- $d$: Maß für Achsabstand (Werkzeug/Werkstück)
- $\gamma$: Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, ..., A_{N_s}) \text{ mit } N_s \geq 1 \qquad (32)$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1,...,A_{N_s}$ existieren, mit

$$H(A_1, ..., A_{N_s}) = K_R \qquad (33)$$

Die Berechnung der Koordinaten $A_1,...,A_{N_s}$ kann mittels einer Koordinatentransformation durchgeführt werden.
Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \qquad (34)$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2}) \qquad (35)$$

Figur 22 zeigt schematisch eine Verzahnmaschine mit einem durch $H_{Bsp1}$ beschriebenen Bewegungsapparat.
Während des Bearbeitungsprozesses wird die $z_{V2}$-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel $\vartheta_2$ gegenüber der Achse der Verzahnung verkippt.
Wird im Diagonalwälzverfahren bearbeitet, wird zusätzlich die $z_{V1}$-Koordinate verfahren, welche den Vorschub des Werkzeugs realisiert. Bei zylindrischen Werkzeugen ist dies der Axiavorschub, bei konischen Rädern ist dieser Vorschub nicht axial, sondern um den Konuswinkel $\vartheta_1$ gegenüber der Achse des Werkzeugs verkippt.
Im weiteren Verlauf wird jedoch auch für zylindrische Werkzeuge bzw. Werkstücke für $z_{V1}$ bzw. $z_{V2}$ der Begriff Vorschub verwendet.
Wird mit einem konstanten Diagonalverhältnis geschliffen, so ist $z_{V1}$ eine Funktion von $z_{V2}$ und es gilt folgender Zusammenhang:

$$z_{V1}(z_{V2}) = K_{ZV1} \cdot z_{V2} + z_{V01} \qquad (36)$$

$K_{ZV1}$ ist hierbei das Diagonalverhältnis und $z_{V01}$ ein fixer Offset, der es ermöglicht, die hier beschriebenen Modifikationen auf unterschiedlichen Stellen auf dem Werkzeug zu platzieren bzw. den Bereich auf der Schnecke auszuwählen, der genutzt werden soll. Ist $K_{ZV1} \neq 0$ wird vom Diagonalwälzverfahren gesprochen.
Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{V1}$ und $z_{V2}$ betrachtet wird. Die Drehzahlen und Vorschübe können während der Bearbeitung verändert werden, solange die geforderten Kopplungen eingehalten werden.
Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg ($w$) und der Position in Breitenlinienrichtung (z) in Abhängigkeit der Vorschubpositionen $z_{V1}$ und $z_{V2}$.
Vorbereitend hierfür werden zunächst die hierfür benötigten Modifikationen auf den Schnecken sowie deren Erzeugung mittels Abrichten diskutiert.
Die Werkzeuge, zylindrische und konische Schnecken, symmetrisch oder asymmetrisch, welche hier betrachtet werden, haben ebenfalls zumindest näherungsweise eine Modifikation gemäß Gleichung (25). Diese Art der Modifikation ist insbesondere bei abrichtbaren Schleifschnecken sehr vorteilhaft, da sich diese beim Abrichten mit einer Abrichtscheibe auf der Schnecke erzeugen lässt. Ein Verfahren zum Abrichten einer Schnecke mit einer solchen Oberflächenmodifikation wird ersten Teil dieser Anmeldung beschrieben.
Beim Abrichten mit einer Abrichtscheibe besteht ein Linienkontakt zwischen Abrichtscheibe und den Flanken der Schnecke. Beschreibt man diese Berührlinie als Relation zwischen $w_{F1}$ und $z_{F1}$ für beide Flanken, so erhält man in sehr guter Näherung eine Gerade, gegeben durch:

$$w_{F1} \sin \rho_{F1} + z_{F1} \cos \rho_{F1} = X_{F1} \; . \tag{37}$$

$\rho_{F1}$ definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

Eine Modifikation $f_{nF1}$ an einem Punkt auf der Schnecke, definiert in Normalenrichtung auf der Schneckengangoberfläche führt zu einer Modifikation $f_{nF2} = - f_{nF1}$ auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt ($f_{Ft}$) definiert, nicht in Normalenrichtung ($f_{Fn}$). Zwischen diesen beiden Definitionen der Modifikationen kann jedoch leicht umgerechnet werden:

$$f_{Fn} = f_{Ft} \cdot \cos \beta_{bF} \tag{38}$$

**Zylindrisches Werkzeug und zylindrisches Werkstück**

Im Folgenden wird für den Fall eines zylindrischen Werkzeugs und eines zylindrischen Werkstücks aufgezeigt, wie mit Hilfe einer Schnecke, welche eine Modifikation gemäß Gleichung (25) hat, im Diagonalwälzschleifen eine Modifikation gemäß derselben Gleichung, jedoch mit in gewissen Grenzen frei vorgebbarem Winkel $\rho_{F2}$ erzeugt werden kann. Dazu wird zunächst der Verlauf des Kontaktpunkts (Kontaktpfad) zwischen Werkstück und Schnecke, abhängig von den Axialvorschüben $z_{V1}$ und $z_{V2}$ beschrieben. Dieser Verlauf hängt von den Grundkreisradien und Grundschrägungswinkeln des Werkstücks und der Schnecke sowie vom Achsabstand $d$ und dem Achskreuzwinkel $\gamma$ ab. Die Relative Lage von Werkstück zu Schnecke wird bei dieser Betrachtung durch Gleichung (28) beschrieben. Mathematisch beschrieben werden kann dieser Verlauf als Relation (R6) zwischen Position in Breitenlinienrichtung ($z_F$) und Wälzweg ($w_F$) für Schnecke (Index 1) und Werkstück (Index 2) wie folgt:

$$z_{F1} = C_{Fw1} \cdot w_{F1} - z_{V1} + C_{Fc1} \tag{39}$$

$$z_{F2} = C_{Fw2} \cdot w_{F2} - z_{V2} + C_{Fc2} \tag{40}$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{41}$$

$$C_{Fc1} = C_{Fc1}(\beta_{bF1}, \beta_{bF2}, r_{bF1}, d, \gamma) \tag{42}$$

$$C_{Fw2} = C_{Fw2}(\beta_{bF2}) \tag{43}$$

$$C_{Fc2} = C_{Fc2}(\beta_{bF1}, \beta_{bF2}, r_{bF2}, d, \gamma) \tag{44}$$

Diese Relation zeigt auf, dass es einen linearen Zusammenhang zwischen $z_F$, $w_F$ und $z_V$ sowohl für Schnecke aus auch für Werkstück gibt.

Betrachtet man im Herstellprozesses alle Punkte auf dem Werkstück mit einem festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Schnecke und Werkstück ist gegeben durch:

$$\hat{C}_{Fw1} \cdot w_{F1} + \hat{C}_{Fw2} \cdot w_{F2} + \hat{C}_{Fc} = 0 \tag{45}$$

Die hier eingeführten Koeffizienten $\hat{C}_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{46}$$

$$\hat{C}_{Fw2} = \hat{C}_{Fw2}(\beta_{bF2}) \tag{47}$$

$$\hat{C}_{Fc} = \hat{C}_{Fc}(\beta_{bF1}, r_{bF1}, \beta_{bF2}, r_{bF2}, d, \gamma) \tag{48}$$

Die gerade vorgestellten Relationen folgen direkt aus einer analytischen Berechnung der Berührpunkte zweier Evolventenverzahnungen, welche gemäß der kinematischen Kette aus Gleichung (28) zueinander orientiert sind.

Die Grundidee der Erfindung liegt nun darin, die obigen Beziehungen, zusammen mit dem konstanten Diagonalverhältnis aus Gleichung (36) zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (25) aufweisen kann und auf dem Werkstück eine Modifikation gemäß derselben Gleichung mit gegebener Funktion $F_{F1}$ und gegebenem Winkel $\rho_{F1}$ erzeugt werden soll. Ziel ist es, die Punkte auf der Schnecke die auf einer durch $X_{F1}$ und $\rho_{F1}$ gegebenen Gerade liegen, auf eine durch $X_{F2}$ und $\rho_{F2}$ gegebene Gerade auf dem Werkstück abzubilden. Dazu werden die Gleichungen (39) und (40) nach $z_{V1}$ bzw. $z_{V2}$ aufgelöst und in Gleichung (36) eingesetzt, anschließend Gleichung (7) für Schnecke und Werkstück genutzt um $z_{F1}$ und $z_{F2}$ zu eliminieren und mit Gleichung (45) $w_{F1}$ ersetzt. Dies führt zu einer Relation der Form:

$$\bar{C}_{Fc} + \bar{C}_{Fw2} \cdot w_{F2} = 0 \;, \tag{49}$$

welche für alle $w_{F2}$ gelten muss. $\overline{C}_{Fw2}$ hat unter anderem eine Abhängigkeit von $K_{Z_{V1}}$. $\overline{C}_{Fc}$ hingegen hat zusätzlich eine Abhängigkeit von $X_{F1}$ und $X_{F2}$. Mit Hilfe eines Koeffizientenvergleichs lassen sich so aus dieser Relation $K_{Z_{V1}}$ sowohl für linke als auch für rechte Flanke berechnen, sowie $X_{F2}$ als Funktion von $X_{F1}$, ebenfalls für linke und rechte Flanke . $K_{Z_{V1}}$, wie in Gleichung (36) definiert, bestimmt das Diagonalverhältnis, mit dem der Bearbeitungsprozess durchgeführt werden muss, damit die Abbildung der Punkte auf der Schnecke auf die Punkte auf dem Werkstück entlang der durch $\rho_{F2}$ definierten Richtung erfolgt.

Für $\rho_{l2} = \rho_{r2}$ führt diese Berechnung bei einer symmetrischen Verzahnung zu gleichen Diagonalverhältnissen $K_{Z_{V1}}$ für linke und rechte Flanke. Somit ist ein zweiflankiges, abweichungsfreies Wälzschleifen möglich.

Ist jedoch $\rho_{l2} \neq \rho_{r2}$ und/oder die Verzahnung asymmetrisch, so führt die Berechnung im Allgemeinen zu unterschiedlichen Diagonalverhältnissen $K_{Z_{V1}}$ für linke und rechte Flanke. Ein zweiflankiges, abweichungsfreies Wälzschleifen ist somit in dem Fall mit einem zylindrischen Werkzeug im Allgemeinen nicht mehr möglich.

Ein einflankiges abweichungsfreies Wälzschleifen ist jedoch möglich, wobei für die Bearbeitung der linken und rechten Flanken unterschiedliche Diagonalverhältnisse $K_{Z_{V1}}$ einzustellen sind. Gibt es ein Diagonalverhältnis $K_{Z_{V1}}$ sodass beim Wälzschleifen mit diesem die erzeugte Modifikation auf linker und rechter Flanke noch innerhalb der jeweiligen Toleranz liegt, so ist auch weiterhin ein zweiflankiges, jedoch nicht mehr abweichungsfreies Wälzschleifen möglich. Das hierfür zu wählende Diagonalverhältnis liegt in der Regel zwischen den für linke und rechte Flanke ermittelten Diagonalverhältnissen. Die Richtung $\rho_{F2}$ der auf dem Werkstück erzeugten Modifikation weicht auf mindestens einer der beiden Flanken von der Sollvorgabe ab. Ist diese Sollvorgabe jedoch toleriert, so ist es in bestimmten Fällen möglich, das Diagonalverhältnis so zu wählen, dass beide Richtung $\rho_{F2}$ innerhalb der Toleranz liegen.

Ein Verfahren, mit dem auch Modifikationen mit unterschiedlichen Richtungen $\rho_{F1}$ auf linker und rechter Flanke und/oder asymmetrische Verzahnungen zweiflankig und abweichungsfrei wälzgeschliffen werden können, wird im Folgenden vorgestellt. Dafür wird das zylindrische Werkzeug durch ein konisches ersetzt.

**Konisches Werkzeug und zylindrisches Werkstück**

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (29) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. d.h. es wird eine Schnecke mit einer Modifikation gemäß Gleichung (25) im Diagonalwälzverfahren verwendet, um auf dem Werkstück eine Modifikation ebenfalls gemäß Gleichung (25) zu erzeugen. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V_1}1} \cdot z_{V1} + C_{Fc1} \tag{50}$$

$$z_{F2} = C_{Fw2} \cdot w_{F2} + C_{Fz_{V_1}2} \cdot z_{V1} - z_{V2} + C_{Fc2} \tag{51}$$

Die hier eingeführten Koeffizienten $C_{Fw1}$, $C_{Fc1}$, $C_{Fw2}$, $C_{Fzv11}$, $C_{Fzv12}$ und $C_{Fc2}$ haben folgende Abhängigkeiten:

$$C_{Fw1} = C_{Fw1}(\beta_{bF1}) \tag{52}$$

$$C_{Fc1} = C_{Fc1}(\beta_{bF1}, \beta_{bF2}, r_{bF1}, d, \gamma, \vartheta_1) \tag{53}$$

$$C_{Fw2} = C_{Fw2}(\beta_{bF2}) \tag{54}$$

$$C_{Fc2} = C_{Fc2}(\beta_{bF1}, \beta_{bF2}, r_{bF2}, d, \gamma, \vartheta_1) \tag{55}$$

$$C_{Fz_{V_1}1} = C_{Fz_{V_1}1}(\beta_{bF1}, \beta_{bF2}, r_{bF1}, d, \gamma, \vartheta_1) \tag{56}$$

$$C_{Fz_{V_1}2} = C_{Fz_{V_1}2}(\beta_{bF1}, \beta_{bF2}, r_{bF2}, d, \gamma, \vartheta_1) \tag{57}$$

Gleichung (45) wird ersetzt durch:

$$\hat{C}_{Fw1} \cdot w_{F1} + \hat{C}_{Fw2} \cdot w_{F2} + \hat{C}_{Fz_{V_1}} \cdot z_{V1} + \hat{C}_{Fc} = 0 \tag{58}$$

Die hier eingeführten Koeffizienten $\hat{C}_{Fw1}$, $\hat{C}_{Fw2}$, $\hat{C}_{Fzv1}$ und $\hat{C}_{Fc}$ haben folgende Abhängigkeiten:

$$\hat{C}_{Fw1} = \hat{C}_{Fw1}(\beta_{bF1}) \tag{59}$$

$$\hat{C}_{Fw2} = \hat{C}_{Fw2}(\beta_{bF2}) \tag{60}$$

$$\hat{C}_{Fz_{V_1}} = \hat{C}_{Fz_{V_1}}(\beta_{bF1}, r_{bF1}, \beta_{bF2}, r_{bF2}, \gamma, \vartheta_1) \tag{61}$$

$$\hat{C}_{Fc} = \hat{C}_{Fc}(\beta_{bF1}, r_{bF1}, \beta_{bF2}, r_{bF2}, d, \gamma, \vartheta_1) \tag{62}$$

Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (25) an, führt dies zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_1$ ab. Ein Koeffizientenvergleich ermöglicht auch hier wieder die Berechnung von $K_{Z_{V_1}}$ sowie die Berechnung von $X_{F2}$ als Funktion von $X_{F1}$, jeweils für linke und rechte Flanke, jedoch hat $K_{Z_{V_1}}$ jetzt zusätzlich eine Abhängigkeit von $\vartheta_1$. Zu beachten ist hier, dass eine Änderung von $\vartheta_1$ im Allgemeinen eine Änderung der Grundkreisradien und Grundschrägungswinkel der Schnecke erfordert, damit Schnecke und Werkstück weiterhin miteinander kämmen und so ein Schraubwälzgetriebe bilden können. Das heißt, die Schnecke muss mit einer, um $\vartheta_1$ gekippten Zahnstange generiert werden können und Schnecke und Werkstück müssen miteinander kämmen. Werden $\vartheta_1$ und somit auch die Grundkreisradien und Grundschrägungswinkel verändert, beeinflusst diese Änderung $K_{Z_{V1}}$ auf linker und rechter Flanke unterschiedlich. Diese unterschiedliche Beeinflussung erlaubt es, ein $\vartheta_1$ zu bestimmen, sodass $K_{Z_{V1}}$ für linke und rechte Flanke gleich sind. Neben dem Konuswinkel $\vartheta_1$ beeinflussen bei konischen Schnecken auch die Profilwinkel der die Schnecke generierenden Zahnstange und der Achskreuzwinkel $\gamma$ den Wert $K_{Z_{V1}}$. Somit können zusätzlich zum Konuswinkel diese Größen variiert werden, um gleiches $K_{Z_{V1}}$ für linke und rechte Flanke zu erhalten. Diese Änderung der Profilwinkel führt ebenfalls zu einer Änderung der Grundkreisradien und Grundschrägungswinkel der Schnecke. Dies Variationsmöglichkeiten erlauben ein zweiflankiges, abweichungsfreies Wälzschleifen, auch für Verzahnungen und gewünschten Modifikationen, bei denen ein zweiflankiges, abweichungsfreies Wälzschleifen mit einer zylindrischen Schnecke nicht möglich wäre. Auch bei konischen Schnecken ist es möglich, einflankig zu schleifen und/oder eine Schnecke und ein Diagonalverhältnis zu wählen, welche die Modifikation nicht abweichungsfrei erzeugen, das heißt, bei denen $\rho_{F2}$ auf mindestens einer Flanke von der Sollvorgabe abweicht. Eine solche Wahl von Schnecke und Diagonalverhältnis kann beispielsweise nötig sein, wenn beide auf Grund anderer Vorgaben nicht frei wählbar sind.

## Zylindrisches Werkzeug und konisches Werkstück

Das hier beschriebene Verfahren lässt sich direkt auf das Wälzschleifen konischer Werkstücke im Diagonalwälzverfahren übertragen. Zunächst wird hier der Fall einer zylindrischen Schnecke betrachtet, welche eine Modifikation gemäß Gleichung (25) aufweist. Schnecke und Werkstück bilden wieder ein Schraubwälzgetriebe, dessen Kinematik durch Gleichung (30) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} - z_{V1} + C_{Fz_{V_2}1} \cdot z_{V2} + C_{Fc1} \tag{63}$$

$$z_{F2} = C_{Fw2} \cdot w_{F2} + C_{Fz_{V_2}2} \cdot z_{V2} + C_{Fc2} \tag{64}$$

Die hier eingeführten Koeffizienten $C_{Fw1}$, $C_{Fc1}$, $C_{Fw2}$, $C_{Fz_{V22}}$, $C_{Fz_{V21}}$, und $C_{Fc2}$ haben folgende Abhängigkeiten:

$$C_{Fw1} = C_{Fw1}(\beta_{bF1}) \tag{65}$$

$$C_{Fc1} = C_{Fc1}(\beta_{bF1}, \beta_{bF2}, r_{bF1}, d, \gamma, \vartheta_2) \tag{66}$$

$$C_{Fw2} = C_{Fw2}(\beta_{bF2}) \tag{67}$$

$$C_{Fc2} = C_{Fc2}(\beta_{bF1}, \beta_{bF2}, r_{bF2}, d, \gamma, \vartheta_2) \tag{68}$$

$$C_{Fz_{V_2}2} = C_{Fz_{V_2}2}(\beta_{bF1}, \beta_{bF2}, r_{bF2}, d, \gamma, \vartheta_2) \tag{69}$$

$$C_{Fz_{V_2}1} = C_{Fz_{V_2}1}(\beta_{bF1}, \beta_{bF2}, r_{bF1}, d, \gamma, \vartheta_2) \tag{70}$$

Gleichung (45) wird ersetzt durch:

$$\hat{C}_{Fw1} \cdot w_{F1} + \hat{C}_{Fw2} \cdot w_{F2} + \hat{C}_{Fz_{V_2}} \cdot z_{V2} + \hat{C}_{Fc} = 0 \tag{71}$$

Die hier eingeführten Koeffizienten $\hat{C}_{Fw1}$, $\hat{C}_{Fw2}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \qquad (72)$$

$$\hat{C}_{Fw2} = \hat{C}_{Fw2}(\beta_{bF2}) \qquad (73)$$

$$\hat{C}_{Fz_{V_2}} = \hat{C}_{Fz_{V_2}}(\beta_{bF1}, r_{bF1}, \beta_{bF2}, r_{bF2}, \gamma, \vartheta_2) \qquad (74)$$

$$\hat{C}_{Fc} = \hat{C}_{Fc}(\beta_{bF1}, r_{bF1}, \beta_{bF2}, r_{bF2}, d, \gamma, \vartheta_2) \qquad (75)$$

Der bekannte Rechenansatz führt auch hier wieder zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_2$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_2$. Bei Vorgabe der gleichen durch $\rho_{F2}$ gegebenen Richtung der Modifikation auf linker und rechter Flanke führt die Berechnung von $K_{Z_{V1}}$ im Allgemeinen zu unterschiedlichen Werten für linke und rechte Flanke. Dies ist auch bei symmetrischen Werkstücken im Allgemeinen der Fall. Anders ausgedrückt bedeutet dies, dass beim zweiflankigen Schleifen die Richtung $\rho_{F2}$ der Modifikation auf linker und rechter Flanke im Allgemeinen unterschiedlich ist. Gibt es ein Diagonalverhältnis $K_{Z_{V1}}$, sodass $\rho_{\square 2}$ auf beiden Seiten erreicht werden kann, bzw. innerhalb der Toleranz liegt, so ist ein zweiflankiges Schleifen mit einem zylindrischen Werkzeug möglich. Andernfalls ist mit einem zylindrischen Werkzeug nur ein einflankiges Schleifen möglich. Wie bei zylindrischen Werkstücken kann durch Nutzung eines konischen Werkzeugs bei unabhängiger Vorgabe der Winkel $\rho_{F2}$ auf linker und rechter Flanke ein abweichungsfreies, zweiflankiges Schleifen ermöglicht werden.

**Konisches Werkzeug und konisches Werkstück**

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (31) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V_1}1} \cdot z_{V1} + C_{Fz_{V_2}1} \cdot z_{V2} + C_{Fc1} \qquad (76)$$

$$z_{F2} = C_{Fw2} \cdot w_{F2} + C_{Fz_{V_1}2} \cdot z_{V1} + C_{Fz_{V_2}2} \cdot z_{V2} + C_{Fc2} \qquad (77)$$

Die hier eingeführten Koeffizienten $C_{Fw1}$, $C_{Fc1}$, $C_{Fw2}$, $C_{Fz_{V2}2}$, $C_{Fz_{V2}1}$, $C_{Fz_{V1}2}$, $C_{Fz_{V1}1}$ und $C_{Fc2}$ haben folgende Abhängigkeiten:

$$C_{Fw1} = C_{Fw1}(\beta_{bF1}) \qquad (78)$$

$$C_{Fc1} = C_{Fc1}(\beta_{bF1}, \beta_{bF2}, r_{bF1}, d, \gamma, \vartheta_1, \vartheta_2) \qquad (79)$$

$$C_{Fw2} = C_{Fw2}(\beta_{bF2}) \qquad (80)$$

$$C_{Fc2} = C_{Fc2}(\beta_{bF1}, \beta_{bF2}, r_{bF2}, d, \gamma, \vartheta_1, \vartheta_2) \qquad (81)$$

$$C_{Fz_{V_2}2} = C_{Fz_{V_2}2}(\beta_{bF1}, \beta_{bF2}, r_{bF2}, d, \gamma, \vartheta_1, \vartheta_2) \qquad (82)$$

$$C_{Fz_{V_2}1} = C_{Fz_{V_2}1}(\beta_{bF1}, \beta_{bF2}, r_{bF1}, d, \gamma, \vartheta_1, \vartheta_2) \tag{83}$$

$$C_{Fz_{V_1}2} = C_{Fz_{V_1}2}(\beta_{bF1}, \beta_{bF2}, r_{bF2}, d, \gamma, \vartheta_1, \vartheta_2) \tag{84}$$

$$C_{Fz_{V_1}1} = C_{Fz_{V_1}1}(\beta_{bF1}, \beta_{bF2}, r_{bF1}, d, \gamma, \vartheta_1, \vartheta_2) \tag{85}$$

Gleichung (45) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fz_{V2}} \cdot z_{V2} + \hat{C}_{Fc} = 0 \tag{86}$$

Die hier eingeführten Koeffizienten $\hat{C}_{Fw1}$, $\hat{C}_{Fw2}$, $\hat{C}_{Fz_{V1}}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{87}$$

$$\hat{C}_{Fw2} = \hat{C}_{Fw2}(\beta_{bF2}) \tag{88}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1, \vartheta_2) \tag{89}$$

$$\hat{C}_{Fz_{V2}} = \hat{C}_{Fz_{V2}}(\beta_{bF1}, r_{bF1}, \beta_{bF2}, r_{bF2}, \gamma, \vartheta_1, \vartheta_2) \tag{90}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{91}$$

Der bekannte Rechenansatz führt auch hier wieder zu einer Relation analog zu Gleichung (49), jedoch mit anderen Koeffizienten $\overline{C}_{Fw2}$ und $\overline{C}_{Fc}$. Diese Koeffizienten hängen jetzt zusätzlich von $\vartheta_1$ und $\vartheta_2$ ab. Ein Koeffizienten-vergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$ und $\vartheta_2$. Analog zum Schleifen eines zylindrischen Werkstücks mit einer konischen Schnecke, beeinflussen Änderung von $\vartheta_1$, der Profilwinkel der Zahnstange der Schnecke und der Achskreuzwinkel und somit auch der Grundkreisradien und Grundschrägungswinkel das Diagonalverhältnis $K_{Z_{V1}}$ auf linker und rechter Flanke unterschiedlich. Dies ermöglicht es, für gegebene Richtungen $\rho_{F2}$ der Sollmodifikation ein $\vartheta_1$, Profilwinkel der Zahnstange der Schnecke und einen Achskreuzwinkel zu bestimmen, sodass $K_{Z_{V1}}$ für linke und rechte Flanke gleich ist und somit ein zweiflankiges abweichungsfreies Schleifen möglich wird.

Bei allen hier beschriebenen Kombinationen ist die auf der Schnecke nötige Modifikation $F_{t1}(X_{F1})$ gegeben durch:

$$F_{Ft1}(X_{F1}) = -\frac{\cos\beta_{bF2}}{\cos\beta_{bF1}} \cdot F_{Ft2}(X_{F2}(X_{F1})) \tag{92}$$

$\square_{Ft2}(X_{F2})$ beschreibt die Modifikation auf dem Werkstück gemäß Gleichung (25).

**Berechnungsansatz zur Berechnung der Kontaktpfade auf Werkzeug und Werkstück**

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

Figur 37 zeigt beispielhaft die Berührung einer rechten evolventischen Flanke mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 35). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über w und z aus der Parametrisierung in Gleichung (27), so erhält man einen linearen Zusammenhang (R1) zwischen w, z und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. Die für die Berechnung der Drehwinkelkorrektur nötige Steigunsghöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen w, z, $z_V$ und $\varphi$.

Werden zwei Verzahnungen in einem Schraubwälzgetriebe gepaart, so müssen deren beiden Zahnstangen zu jeder Zeit deckungsgleich sein, wie in Figur 34 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos \beta_{bF1} = m_{bF2} \cdot \cos \beta_{bF2} \qquad (93)$$

Alternativ zum gerade beschriebenen Ansatz ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Ein dazu geeigneter Algorithmus wird im Folgenden beschrieben.

Hierzu wird zunächst eine, in der Regel nicht modifiziertes Werkstück betrachtet. Auf einzelnen Punkten mit den Koordinaten $(w_{F2}, z_{F2})$ auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annähernd dieselbe Länge.

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shiftposition $z_{V2}$ des Werkstücks abgebrochen, so haben, für einen gegebenen Radius auf der Schnecke nur die Vektoren annähernd dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 38). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_V$ betrachtet und bestimmt, an welcher Breitenlinienposition der Übergang von Vektoren mit annähernd gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind Werkstück und Schnecke beide zylindrisch, lassen sich aus den so berechneten Punkten auf dem Kontaktpfad die Koeffizienten aus Gleichung (39) bzw. (40), beispielsweise mittels einer Ausgleichsrechnung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (45), beispielsweise mittels einer Ausgleichsrechnung bestimmen.

Ist die Schnecke konisch und das Werkstück zylindrisch, so muss der Kontaktpfad für mindestens zwei verschiedene Vorschübe $z_{V1}$ bestimmt werden, um zusätzlich die Koeffizienten vor $z_{V1}$ in den Gleichungen (50), (51) und (58) zu bestimmen. Analog müssen mindestens zwei verschiedene Vorschübe $z_{V2}$ betrachtet werden, wenn Werkstück konisch und Schnecke zylindrisch sind. Sind Werkstück und Schnecke konisch, so müssen die Kontakpfade für mindestens zwei Vorschübe $z_{V1}$ und mindestens zwei Vorschübe $z_{V2}$ betrachtet werden, um alle Koeffizienten aus den Gleichungen (76), (77) und (86) zu bestimmen.

## Wahl der Makrogeometrie der Schnecke und des Abrichters

Das hier berechnete Diagonalverhältnis hängt unter anderem auch von der Makrogeometrie der Schnecke, insbesondere der Gangzahl, dem Grundschrägungswinkel, den Grundkreisradien, dem Außendurchmesser (im Falle eines konischen Werkzeugs an einer definierten D-Position) und ggf. dem Konuswinkel ab. Diese Größen können daher genutzt werden, um bei gegebenen Richtungen $\rho_F$ das einzustellende Diagonalverhältnis zu beeinflussen. Dies ermöglicht es somit auch, den Arbeitsbereich zu verlängern oder zu verkürzen, was für die Werkzeugaufteilung von Vorteil sein kann. Auch kann eine Beeinflussung des Diagonalverhältnisses aus technologischen Gründen sinnvoll sein.

Weiterhin sind bei der Wahl der Makrogeometrie der Schnecke, im Falle der Nutzung abrichtbarer Werkzeuge, die Aspekte aus dem ersten Teil dieser Anmeldung zu berücksichtigen. So ist die Makrogeometrie so zu wählen, dass die erforderliche Oberflächenmodifikation auf der Schnecke über den Abrichtprozess erzeugt werden kann. Hierbei ist insbesondere sicherzustellen, dass entlang jeder Berührgeraden auf der Schnecke mit dem Abrichter, welche den aktiven Bereich der Schnecke berührt, die geforderte Balligkeit erreicht werden kann. Wird ein zweiflankiges Abrichten eingesetzt, so ist zu berücksichtigen, ob die erforderlichen topologischen Modifikationen auf der Schnecke auf linker und rechter Flanke beispielsweise mit dem Verfahren aus dem ersten Teil dieser Anmeldung erzeugt werden können. Besonders relevant ist dabei der Fall, bei dem nur konstante und lineare Anteile der Modifikation ($F_{FtC}$ und $F_{FtL}$) entlang der Berührlinie zwischen Abrichter und Schnecke benötigt werden. Solche Modifikationen lassen sich mit der 4-Punkt Methode in gewissen Grenzen fertigen. Inwieweit die linearen Anteile $F_{FtL}$ dabei auf linker und rechter Flanke dabei frei gewählt werden können, hängt stark von der Makrogeometrie der Schnecke ab, insbesondere von Durchmesser, Gangzahl, Konuswinkel und Profilwinkel und zusätzlich vom Durchmesser des Abrichters. Die 4-Punkt-Methode erlaubt es zu bestimmen, ob die gewünschte topologische Modifikation für bestimmte Makrogeometrien erzeugt werden können und erlaubt so, geeignete Makrogeometrien zu bestimmen.

**Nicht konstantes Diagonalverhältnis**

Das hier bisher beschriebene Verfahren erfordert, dass der Bearbeitungsprozess mit einem konstanten vorgegebenen Diagonalverhältnis durchzuführen ist. Das Diagonalverhältnis und die Breite des Werkstücks inklusive Überlauf bestimmen den für die Bearbeitung nötigen Vorschub des Werkstücks. Zusammen mit der Ausdehnung des Kontaktpfads auf dem Werkzeug bestimmt der Vorschub die Länge des an der Bearbeitung beteiligten Teils des Werkzeugs, auch als Arbeitsbereich bezeichnet. Die Länge des Arbeitsbereiches bestimmt zum einen die Mindestlänge des Werkzeug bzw. bei kurzen Arbeitsbereichen und langen Werkzeugen die Anzahl der modifizierten Bereiche, die auf der Schnecke platziert werden können. In beiden Fällen kann es von Vorteil sein, die Länge des Arbeitsbereichs zu verlängern oder zu verkürzen. Eine Möglichkeit die Länge des Arbeitsbereichs zu verändern besteht darin, die Geometrie des Werkzeugs zu ändern, insbesondere die Grundkreisradien und Grundschrägungswinkel. Der Einfluss dieser Variante auf die Länge des Arbeitsbereichs ist im Allgemeinen jedoch recht gering. Eine weitere Möglichkeit die Länge des Arbeitsbereichs zu verändern besteht darin, das Diagonalverhältnis während der Bearbeitung zu verändern. Geschieht dies, während der Verlauf des Kontaktpunkts einen modifizierten Bereich überstreicht, so führt dies zu Abweichungen der Modifikation. Ist die Abweichung dann noch innerhalb der Toleranz, ist hier eine Änderung des Diagonalverhältnisses sinnvoll einsetzbar.

Ist die Modifikation so geartet, dass der Verlauf des Kontaktpunkts Bereiche überstreicht, die nicht modifiziert sind, so sind die zu diesem Zeitpunkt im Eingriff befindlichen Teile der Schnecke auch nicht modifiziert. Dies erlaubt es, während dieser Bereich überstrichen wird, das Diagonalverhältnis frei zu wählen. Um beispielsweise die Länge des Arbeitsbereichs zu minimieren, kann das Diagonalverhältnis auf 0 gesetzt werden. Eine Reduktion des Diagonalverhältnisses führt jedoch zu einer stärkeren Beanspruchung des Werkzeugs, was eine technologische Betrachtung nötig macht. Ist der Abtrag besonders groß, während der nicht modifizierte Bereich gefertigt wird, so kann es auch sinnvoll sein, das Diagonalverhältnis in diesen Bereichen zu erhöhen.

Typische Beispiele für Modifikationen, die aus einem nicht modifizierten Bereich bestehen, sind Endrücknahmen oder auch dreieckförmige Endrücknahme.

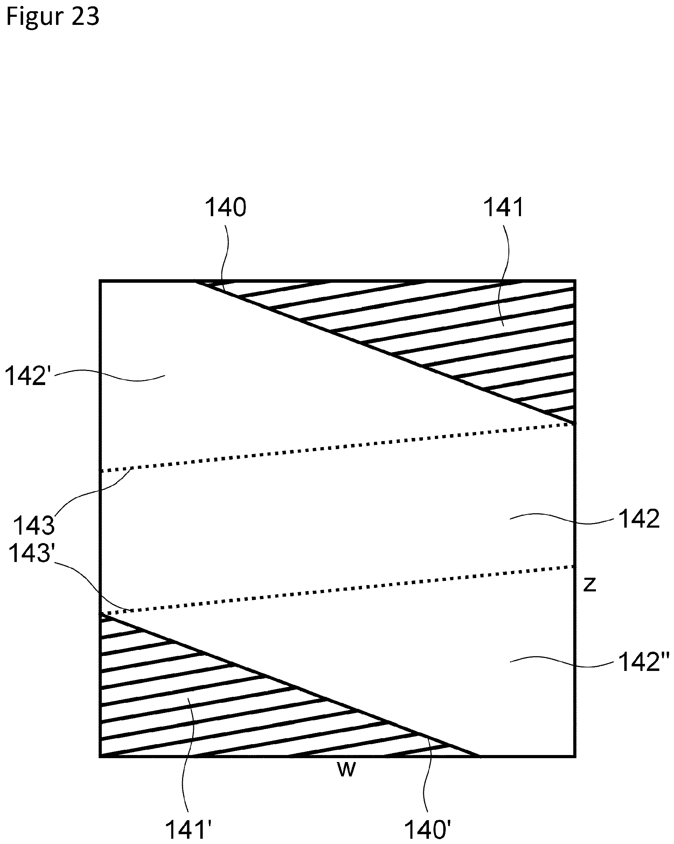

Figur 23 zeigt am Beispiel zweier Dreiecksförmigen Endrücknahme eine Aufteilung in modifizierte (141 und 141') und nicht modifizierte (142, 142', 142") Bereiche. Während der Verlauf des Kotaktpunkts (143 bzw. 143') den Bereich 142 überstreicht, kommen nur nicht modifizierte Bereiche der Schnecke in Eingriff. In diesem Bereiche kann das Diagonalverhältnis frei gewählt werden. Wird ein Bereich oberhalb 143 oder unterhalb 143' überstrichen, verläuft der Kontaktpunt zumindest teilweise über einen modifizierten Bereich. Hier muss das berechnete Diagonalverhältnis eingehalten werden, um abweichungsfrei zu fertigen. Es ist jedoch auch möglich, das Diagonalverhältnis nicht einzuhalten und Abweichungen in Kauf zu nehmen. Wird zweiflankig geschliffen, so müssen bei dieser Betrachtung beide Flanken berücksichtig werden. Soll eine abweichungsfreie Modifikation erzeugt werden, kann das Diagonalverhältnis nur dann frei gewählt werden, während der Kontaktpfad auf beiden Flanken einen nicht modifizierten Bereich überstreicht.

Möglich sind auch Modifikationen, die sich aus nicht modifizierten Bereichen und aus Bereichen mit in unterschiedlichen Richtungen verlaufenden Modifikationen zusammensetzten. Ist die Modifikation so geartet, dass der Verlauf des Kontaktpunkts zwischen den modifizierten Bereichen, Bereiche überstreicht, die nicht modifiziert sind, so kann in diesen Bereichen das Diagonalverhältnis wieder beliebig gewählt werden. Werden modifizierte Bereiche überstrichen, so muss das Diagonalverhältnis entsprechend der Richtung der gerade überstrichenen Modifikation eingestellt werden. Die nicht modifizierten Bereiche können genutzt werden, um das Diagonalverhältnis von einem modifizierten Bereich zum nächsten anzupassen.

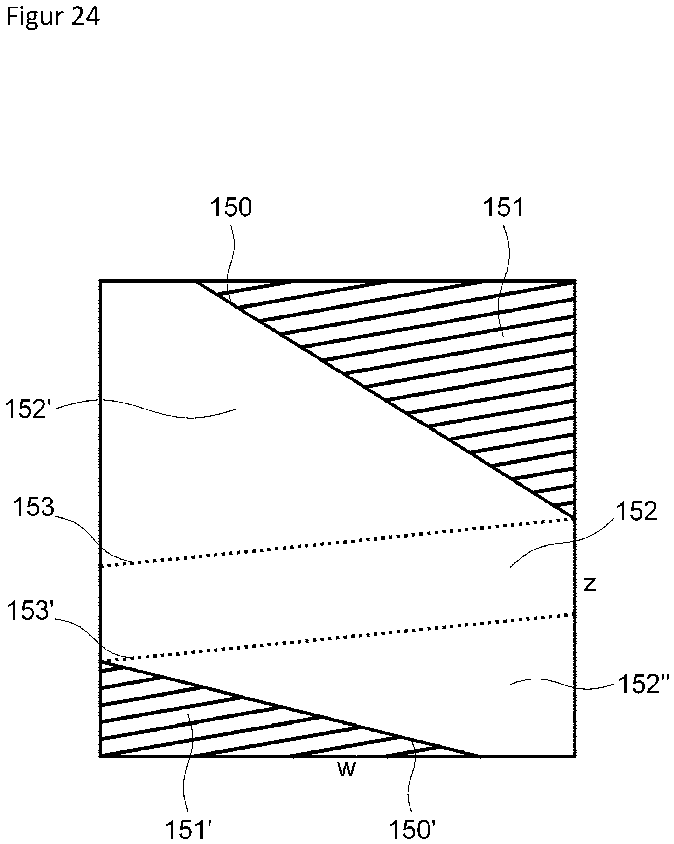

Figur 24 zeigt am Beispiel zweier Dreiecksförmigen Endrücknahme, welche in unterschiedliche Richtungen verlaufen, eine Aufteilung in modifizierte (151 und 151') und nicht modifizierte (152, 152', 152") Bereiche. Die Richtungen $\rho_{F2}$ (150 bzw. 150') der Modifikationen gemäß Gleichung (25) sind bei den modifizierten Bereichen unterschiedlich. Somit sind für die Bearbeitung der beiden Bereiche unterschiedliche Diagonalverhältnisse einzustellen. Während der Verlauf des Kotaktpunkts (153 bzw. 153') den Bereich 152 überstreicht, kann das Diagonalverhältnis frei gewählt werden. Um die Modifikation abweichnungsfrei herstellen zu können, müssen die Geraden 153 und 153' auf gleicher Höhe liegen oder 153 über 153'. Liegt jedoch 153' über 153 so verläuft der Kontaktpunkt sowohl über den Bereich 151 als auch über den Bereich 151', für welche unterschiedliche Diagonalverhältnisse einzustellen sind. Dies führt zu einer Abweichung auf mindestens einem der beiden Bereiche. Wird zweiflankig geschliffen, ist auch hier eine Betrachtung beider Flanken nötig. Soll abweichungsfrei geschliffen werden, so ist darauf zu achten, dass die auf beiden Seiten gleichzeitig geschliffenen Bereiche dasselbe Diagonalverhältnis erfordern. Ist dies nicht der Fall, so wird die Modifikation mit Abweichungen erzeugt.

Es ist jedoch auch möglich, das Diagonalverhältnis gezielt zu verändern, während der Kontaktpfad auf dem Werkstück modifizierte Bereiche überstreicht. Um dies mathematisch zu beschreiben, wird Gleichung (36) durch eine, im Allgemeinen nicht lineare Variante ersetzt:

$$z_{V1}(z_{V2}) = F_{Z_{V1}}(z_{V2}) \qquad (94)$$

Hierbei ist $F_{Z_{V1}}$ eine beliebige stetige Funktion, welche eine Relation zwischen $z_{V1}$ und $z_{V2}$ beschreibt. Das Diagonalverhältnis ist durch die Ableitung von $F_{Z_{V1}}(z_{V2})$ nach $z_{V2}$ gegeben und somit im Allgemeinen nicht konstant. Ist $F_{Z_{V1}}$ nicht linear, so werden Geraden auf der Schnecke im $w$-$z$-Diagramm nicht mehr auf Geraden auf dem Werkstück im $w$-$z$-Diagramm abgebildet. Die Kurve, welche den Verlauf der Punkte im $w$-$z$-Diagramm auf dem Werkstück beschreibt, welche auf eine durch $X_{F1}$ definierte Gerade auf der Schnecke abgebildet werden, kann durch eine Funktion $z_{F2}(w_{F2},X_{F1})$ beschrieben werden. Für den allgemeinsten Fall eines konischen Werkstücks und einer konischen Schnecke, erhält man eine Relation (R20) zwischen $F_{Z_{V1}}(z_{V2})$, $z_{F2}(w_{F2},X_{F1})$, $w_{F2}$ und $X_{F1}$, indem man das Gleichungssystem aus Gleichung (76) und (77) nach $z_{V1}$ und $z_{V2}$ auflöst, die beiden Vorschübe in Gleichung (94) einsetzt und anschließend $z_{F1}$ und $w_{F1}$ mit Hilfe der Gleichungen (37) und (86) ersetzt. Mit dieser Relation lässt sich für eine gegebene Funktion $F_{Z_{V1}}$ für jedes $X_{F1}$ der durch $z_{F2}(w_{F2},X_{F1})$ beschriebene Verlauf der Punkte auf der Werkstückflanke, welche auf die durch $X_{F1}$ definierte Gerade auf der Schnecke abgebildet werden, bestimmen. Umgekehrt kann auch aus einem für ein $X_{F1}$ gegebenem Verlauf $z_{F2}(w_{F2},X_{F1})$ die Funktion $F_{Z_{V1}}(z_{V2})$ bestimmt werden. Des Weiteren kann aus der Relation (R20) eine Funktion $F_{X_{F1}}(w_{F2},z_{F2})$ bestimmt werden, mit der für gegebene $z_{F2}$ und $w_{F2}$ $X_{F1}$ und somit die Gerade auf der Schnecke auf die der Punkt auf der Verzahnung abgebildet wird, bestimmt werden. Für die Fälle in denen Werkstück und/oder Schnecke zylindrisch sind, kann analog verfahren werden.

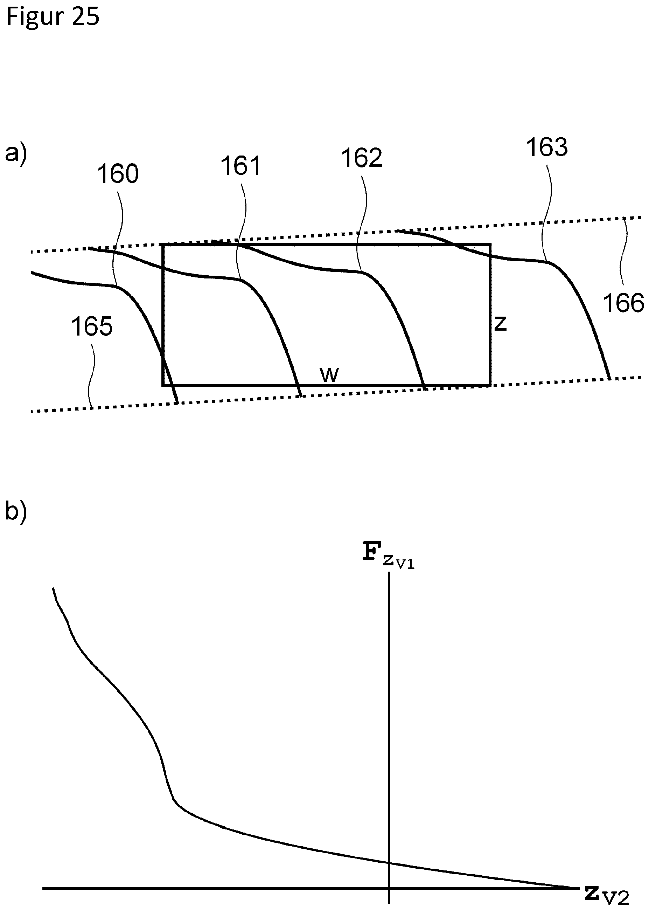

Wird für ein $X_{F1}$ nur der Teil des Verlaufs betrachtet, welcher auf der Flanke, d.h. innerhalb des $w$-$z$-Diagramms liegt, so definiert dies im Allgemeinen die Funktion $F_{Z_{V1}}(z_{V2})$ nicht für alle Werte von $z_{V2}$, da für andere Vorschubpositionen des Werkstücks, Teile des dann aktuellen Verlaufs die Flanke überstreichen, welche für $X_{F1}$ noch außerhalb des Diagramms lagen. Figur 25a zeigt dies beispielhaft für ein zylindrisches Werkstück. Dies kann genutzt werden, um $F_{Z_{V1}}(z_{V2})$ abschnittsweise aus den Verläufen für verschiedene $X_{F1}$ zusammenzusetzten, bzw. den Definitionsbereich zu erweitern. Alternativ ist es auch möglich, $F_{Z_{V1}}(z_{V2})$ aus einem Verlauf für ein $X_{F1}$, welcher über die Grenzen des $w$-$z$-Diagramm hinaus fortgesetzt wurde zu bestimmen. Diese Verlauf wird vorteilhafterweise soweit fortgesetzt, dass jeder Teil des $w$-$z$-Diagramme von dem Verlauf überstrichen wird.

Figur 25a zeigt wie ein solcher Verlauf gewählt werden kann. In diesem Beispiel kann die Funktion $F_{Z_{V1}}(z_{V2})$ dann aus einem der vier Verläufe 160-163 bestimmt werden.

Insbesondere wenn $F_{Z_{V1}}(z_{V2})$ aus der Fortsetzung eines Verlaufs für ein $X_{F1}$ bestimmt werden soll, so ist es von besonderer Bedeutung zu wissen, wie sich der Verlauf von einem $X_{F1}$ zu einem anderen $X_{F1}$ verändert. Für den allgemeinen Fall berechnet sich dies durch die Schritte:

- Berechnen von $F_{Z_{V1}}(z_{V2})$ aus dem Verlauf für ein $X_{F1}$
- Berechnen des Verlauf für ein anderes $X_{F1}$ aus dem zuvor bestimmten $F_{Z_{V1}}(z_{V2})$

Ist die Verzahnung zylindrisch, so ergibt diese Berechnung, dass sich ein Verlauf $X_{F1}$ aus dem Verlauf durch für ein anderes $X_{F1}$ durch Verschieben entlang einer ausgezeichneten Richtung ergibt. In Figur 25 ist diese Richtung durch die beiden parallelen Geraden 165 und 166 dargestellt. Ist die Schnecke zylindrisch, so ist die Richtung dieser Geraden unabhängig von der Geometrie der Schnecke und hängt somit nur von der Geometrie des Werkstücks ab. Um die Richtung dieser Geraden zu beeinflussen und somit die erzeugten Modifikationen noch variabler zu gestalten, können konische Schnecken eingesetzt. Über die Geometrie der konischen Schnecke ($r_{bF1}$ bzw. $\beta_{bF1}$) und Achskreuzwinkel und Achsabstand, insbesondere des Konuswinkels kann diese Richtung beeinflusst werden.

Ist die Verzahnung konisch, kann die Änderung des Verlaufs von einem $X_{F1}$ zu einem anderen, sowohl für konische als auch für zylindrische Schnecken über die Geometrie der Schnecke ($r_{bF1}$ bzw. $\beta_{bF1}$, $\vartheta_1$) und Achskreuzwinkel beeinflusst werden. Der Zusammenhang lässt sich in dem Fall jedoch nicht mehr leicht anschaulich beschreiben und muss durch die oben beschriebenen Schritte ermittelt werden.

Wird einflankig Wälzgeschliffen, so kann $F_{Z_{V1}}(z_{V2})$ und somit der Verlauf für jede Flanke separat vorgegeben werden.

Wird zweiflankig Wälzgeschliffen, so beeinflusst ein $F_{Z_{V1}}(z_{V2})$ die Verläufe auf beiden Flanken. Wird der Verlauf auf einer Flanke 1 vorgegeben, so kann der sich daraus ergebende Verlauf auf der anderen Flanke 2 bestimmt werden durch die Schritte:

- Berechnen von $F_{Z_{V1}}(z_{V2})$ aus dem Verlauf von Flanke 1
- Berechnen des Verlaufs von Flanke 2 aus $F_{Z_{V1}}(z_{V2})$

Ist der Verlauf auf einer Flanke 1 vorgeben, so wird der sich daraus ergebende Verlauf auf Flanke 2 beeinflusst durch die Geometrie der Schnecke ($r_{bF1}$ bzw. $\beta_{bF1}$, $\vartheta_1$) und Achskreuzwinkel und Achsabstand. Diese Beeinflussung kann genutzt werden, um $F_{Z_{V1}}(z_{V2})$, die Geometrie der Schnecke und Achskreuzwinkel und Achsabstand so abzustimmen, dass die Verläufe auf beiden Flanken möglichst gut den Soll-Verläufen entsprechen.

Hat die Schnecke eine Modifikation gemäß Gleichung (25), so ist der Wert der Modifikation auf dem Werkstück entlang eines Verlaufs $z_{F2}(w_{F2},X_{F1})$ zumindest näherungsweise gleich :

$$-\frac{\cos\beta_{bF1}}{\cos\beta_{bF2}} \cdot \left(F_{Ft1C}(X_{F1}) + F_{Ft1L}(X_{F1}) \cdot w_{F1} + F_{Ft1Q}(X_{F1}) \cdot w_{F1}^2\right) \qquad (95)$$

Eine zumindest näherungsweise Parametrisierung der Modifikation $f_{Ft2}(w_{F2},z_{F2})$ auf dem Werkstück über $w_{F2}$ und $z_{F2}$ erhält man dann durch die Beziehung

$$X_{F1} = F_{X_{F1}}(w_{F2}, z_{F2}) \qquad (96)$$

und der Relation (R7) aus der sich mit Hilfe des Verlauf des Kontaktpunkts zwischen Werkstück und Schnecke $w_{F1}$ durch $w_{F2}$ ausdrücken.

Ist die Modifikation auf der Verzahnung bekannt, so können für alle Verläufe die Funktionswerte der Funktionen $F_{Ft1C}$, $F_{Ft1L}$ und $F_{Ft1Q}$ bestimmt werden. Hierzu können in einer einfachen Variante die Funktionswerte unter Berücksichtigung der Modifikation an drei Wälzwinkeln entlang des Verlaufs bestimmt werden, in einer erweiterten Variante kann dies mittels einer Ausgleichsrechnung geschehen.

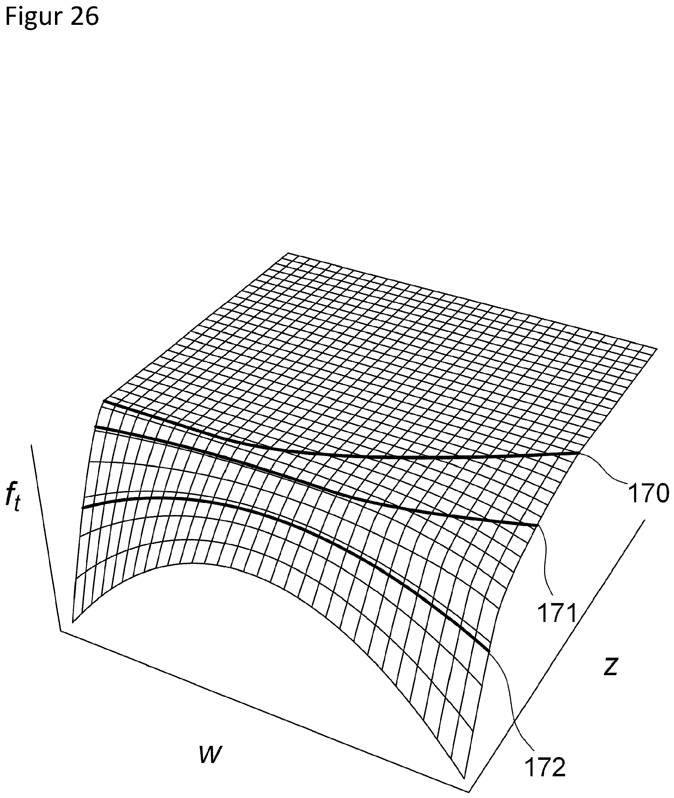

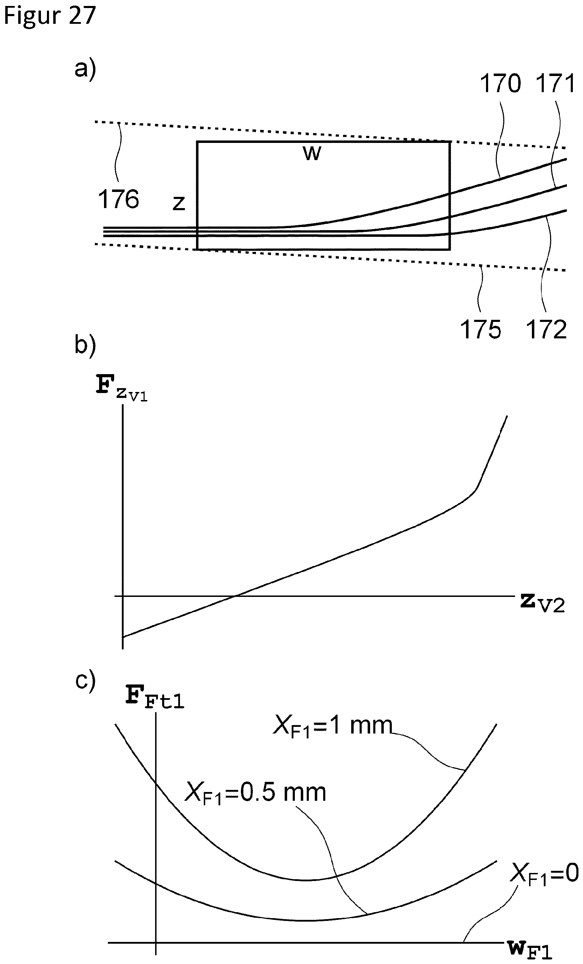

Ein konkretes Beispiel ist in Figur 26 gezeigt und wird im Folgenden diskutiert. Die Modifikation ist so gewählt, dass sie die Kombination aus einer Dreiecksförmigen Endrücknahme und einer Endrücknahme in Flankenlinienrichtung annähert, wobei die Endrücknahme, je dichter man an die Stirnfläche kommt, am Kopf und Fuß der Verzahnung stärker ausgeprägt ist, als in der Mitte des Profils. Der Übergang zwischen dem Beginn der beiden Rücknahmen ist hier beispielhaft tangential gewählt, wodurch der Verlauf 170 durch eine differenzierbare Kurve gegeben ist. Der Wert der Modifikation entlang 170 ist hier gleich 0 gewählt. Die Modifikation entlang 170 und 171, abhängig vom Wälzwinkel der Verzahnung, kann mit Hilfe von Gleichung (95) aus Figur 27c abgelesen werden. Da die Abstände zwischen den Verläufen 170 bis 172 im Bereich der Endrücknahme in Flankenlinienrichtung kleiner sind, als die Abstände zwischen den Verläufen 170 bis 172 im Bereich der Dreiecksförmigen Endrücknahme, ist die Steigung der Modifikation im Bereich der Endrücknahme in Flankenlinienrichtung größer, als im Bereich der Dreiecksförmigen Endrücknahme. Das Verhältnis dieser beiden Steigungen wird maßgeblich durch die Richtung der Verschiebung der Verläufe (175 bzw. 176) beeinflusst. Diese Richtung kann durch die Verwendung konischer Schnecken und durch Wahl einer geeigneten Geometrie der Schnecke angepasst werden. Somit kann auch das Verhältnis zwischen den Steigungen wie gewünscht eingestellt werden.

**Überlagerung mit anderen Modifikationen**

Den mit dem hier beschriebenen Verfahren herstellbaren Modifikationen lassen sich ungestört Modifikationen additiv überlagern, die aus dem Stand der Technik bekannt sind. Zum einen sind das reine Profilmodifikationen. Solche Modifikationen $f_{PFt}$, welche für linke und rechte Flanke separat vorgegeben werden können, hängen bei zylindrischen Verzahnungen nur vom Wälzweg und nicht von der $z$-Position ab. Mathematisch beschrieben werden können sie durch folgende Gleichung:

$$f_{PFt} = f_{PFt}(w_F) \qquad (97)$$

Reine Profilmodifikationen lassen sich durch ein in Profillinienrichtung modifiziertes Werkzeug realisieren. Solche Modifikationen in Profillinienrichtung lassen sich ungestört mit den Modifikationen aus Gleichung (25) additiv überlagern. Beim Wälzschleifen mit abrichtbaren Schnecken wird diese Modifikation in der Regel in den Abrichter gelegt. Der Abrichtprozess kann dann unverändert durchgeführt werden und die Profilmodifikationen bilden sich, wie gewünscht auf der Schnecke und später beim Schleifen auf dem Werkstück ab. Bei konischen Werkstücken jedoch hängen Profilmodifikationen von der $z$-Position. In einem $w$-$z$-Diagramm liegen dabei Punkte mit selben Wert der Modifikation auf einer Geraden mit Steigung $m_F$. Diese Steigung lässt sich sowohl bei Verwendung zylindrischer als auch konischer Schnecken aus der hier dargestellten Abbildung von Punkte auf der Schnecke zu Punkten auf dem Werkstück bestimmen. Für konische Verzahnungen kann $f_{PFt}$ geschrieben werden als:

$$f_{PFt} = f_{PFt}(w_F + m_F\, z_F) \tag{98}$$

Eine weitere, aus dem Stand der Technik DE10208531 bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die durch $\rho_{KF}$ gegebene Richtung des Kontaktpfads kann bei diesem Verfahren jedoch nicht beeinflusst werden, da diese nur vom Grundschrägungswinkel des Werkstücks abhängig ist. Mathematisch lässt sich diese Modifikation $f_{KFt}$ wie folgt beschreiben:

$$f_{KFt}(w_F, z_F) = F_{KFt}(w_F \sin \rho_{KF} + z_F \cos \rho_{KF}) \tag{99}$$

Hierbei können die Funktionen $F_{KFt}$ beliebige stetige Funktionen sein. Aus den Funktionen $F_{KFt}$ für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei dem dieser Anmeldung zugrunde liegenden Erfindung keine Korrektur der Schleifkinematik nötig ist, abgesehen vom Diagonalshiften, kann eine Korrektur der Schleifkinematik und somit eine Modifikation gemäß Gleichung (99) störungsfrei additiv überlagert werden.

Zusammengefasst lassen sich die herstellbaren Modifikationen $f_{GFt}$ wie folgt beschreiben:

$$f_{GFt}(w_F, z_F) = F_{FtC}(X_F) + F_{FtL}(X_F) \cdot w_F + F_{FtQ}(X_F) \cdot w_\square^2 + f_{PFt}(w_F + m_F\, z_F)\ +$$
$$F_{KFt}(w_F \sin \rho_{KF} + z_F \cos \rho_{KF}) \tag{100}$$

Mit $X_F = w_F \sin \rho_F + z_F \cos \rho_F$ und wobei $F_{FtC}$, $F_{FtL}$, $F_{FtQ}$, $f_{PFt}$ und $F_{KFt}$ für beide Flanken freivorgebbare stetige Funktionen sind und die Winkel $\rho_F$ für beide Flanke freivorgebbare Richtungen definieren. Möglich sind insbesondere auch die Spezialfälle, bei denen mindestens eine der Funktionen $F_{FtC}$, $F_{FtL}$, $F_{FtQ}$, $f_{PFt}$ und $F_{KFt}$ konstant, insbesondere 0 ist. Im Spezialfall zylindrischer Werkstücke ist $m_F = 0$.

Ist eine Modifikation $f_F$ gegeben, kann diese im Allgemeinen näherungsweise, in Einzelfällen auch exakt beispielsweise mit Hilfe einer Ausgleichsrechnung in die drei Terme aus Gleichung (100) zerlegt werden. Dazu werden die Funktionen $F_{FtC}$, $F_{FtL}$, $F_{FtQ}$, $f_{PFt}$ und $F_{KFt}$ und die Richtungen $\rho_F$ so bestimmt, dass die Abweichungen zwischen $f_{GFT}$ und $f_F$ optimal, insbesondere minimal ist. Diese Abweichung kann beispielsweise an diskreten Punkten $(w_{Fi}, z_{Fi})$ oder kontinuierlich über das ganze $w$-$z$-Diagramm berechnet werden. Die kontinuierliche Berechnung der Abweichung kann beispielsweise mit Hilfe eines Integrals einer Abstandsfunktion über alle Werte von $w$ und $z$ durchgeführt werden. Möglich ist es auch, die Abweichungen abhängig von der Position der Punkte in einem $w$-$z$-Diagramm gewichtet zu berechnet. Dies ist insbesondere dann von Vorteil, wenn die einzuhaltende Toleranz nicht überall gleich ist. Um diesen Vorgaben Rechnung zu tragen, ist es als Erweiterung auch möglich, die für die Ausgleichsrechnung verwende Abstandsfunktion nicht für alle Werte von $w_F$ und $z_F$ gleich zu wählen. Eine typische Variante der Ausgleichsrechnung ist die Methode der kleinsten Quadrate, welche als Abstandsfunktion die 2-Norm verwendet.

Die gewünschte Modifikation kann beispielsweise durch eine stetige Funktion $f_F$, durch eine Punktewolke $(w_{Fj}, z_{Fj}, f_j)$ oder eine Kombination aus beidem gegeben sein. Die Funktionen $F_{FtC}$, $F_{FtL}$, $F_{FtQ}$, $f_{PFt}$ und $F_{KFt}$ können mit Hilfe der Ausgleichrechnung als stetige Funktionen berechnet werden. Alternativ ist es auch möglich, die Funktionswerte nur an diskreten Punkten $(w_{Fk}, z_{Fk})$ zu berechnen. Aus diesen diskreten Punkten lassen sich durch Interpolation stetige Funktionen berechnen.

In der Ausgleichsrechnung können optional zusätzlich auch technologische Gesichtspunkte berücksichtig werden. So kann es beispielsweise von Vorteil sein, aus technologischen Gründen die Diagonalverhältnisse und somit die

Richtungen $\rho_F$ einzuschränken. Im Allgemeinen kann die in der Ausgleichsrechnung verwendete und zu minimierende Abstandsfunktion, neben der Abweichung zwischen $f_{GFT}$ und $f_F$ auch von technologischen Größen abhängen:

Wird das Verfahren mit nicht konstantem Diagonalverhältnis angewendet, so muss Gleichung (100) dahingehend modifiziert werden, dass $F_{FtC}$, $F_{FtL}$, $F_{FtQ}$ durch eine Modifikation, welche sich aus Gleichung (95) ergibt, ersetzten werden. Soll durch eine Ausgleichsrechnung eine gegeben Modifikation durch eine so zusammengesetzte Modifikation angenähert bzw. exakt in eine solche zerlegt werden, können die Funktionen $F_{Ft1C}$, $F_{Ft1L}$, $F_{Ft1Q}$, $F_{ZV1}$, $f_{PFt}$ und $F_{KFt}$ und Makrogeometrie der Schnecke, insbesondere Konuswinkel und Profilwinkel so bestimmt werden, dass der Abstand zur Sollmodifikation minimal wird. Wird die Option des Schleifens mit einer konischen Schnecke in Betracht gezogen, so können zusätzlich die Geometrie der Schnecke, insbesondere Konuswinkel und die Profilwinkel der erzeugenden Zahnstange, sowie der Achskreuzwinkel bei der Ausgleichsrechnung mit optimiert werden. Dies ist insbesondere dann besonders hilfreich, wenn zweiflankig geschliffen werden soll. In diesem Fall ist die Funktion $F_{ZV1}$ für linke und rechte Flanke gleich. Die Funktionen $F_{Ft1C}$, $F_{Ft1L}$, $F_{Ft1Q}$, $f_{PFt}$ und $F_{KFt}$ sind für linke und rechte Flanke, sowohl beim einflankigen aus auch beim zweiflankigen Schleifen im Allgemeinen verschieden.

## Aufteilung des Werkzeugs

Die Bearbeitung der Verzahnungen erfolgt häufig in Schrupp- und Schlichtschnitten. Diese unterschiedlichen Bearbeitungsschritte können sowohl mit denselben Bereichen auf dem Werkzeug als auch mit verschiedenen Bereichen oder mit verschiedenen Werkzeugen durchgeführt werden. Die Schruppschnitte können alle oder teilweise mit dem hier beschriebenen Verfahren durchgeführt werden. Es ist jedoch auch möglich, für die Schruppschnitte andere Verfahren, insbesondere das Axialschleifen mit Diagonalverhältnis Null oder einem sehr kleinen, technologisch bedingten Diagonalverhältnis durchzuführen. Eine solche Schruppbearbeitung erlaubt es, den oder die Schruppbereiche auf der Schnecke besser auszunutzen, erzeugt jedoch nicht die gewünschte Modifikation auf der Verzahnung. Wird beim Schruppen bereits das hier beschriebene Verfahren eingesetzt, ist das Aufmaß zu Beginn der Schlichtbearbeitung gleichmäßiger verteilt und der Schlichtbereich wird gleichmäßiger belastet. Möglich ist es auch, bei der Schruppbearbeitung das hier beschriebene Verfahren zu verwenden, jedoch die Modifikation betragsmäßig kleiner zu wählen im Vergleich zur Schlichtbearbeitung, um die Schnecke an den Bereichen des Schruppbereichs, die viel Material abtragen müssen, nicht zu überlasten. Werden mehrere Schruppschnitte durchgeführt, kann der Betrag der Modifikation von Schnitt zu Schnitt erhöht werden. Möglich ist es auch, beim Schruppen die auf der Verzahnung erzeugte Modifikation nur anzunähern, insbesondere die durch $\rho_F$ gegebene Richtung, um dadurch den Arbeitsbereich zu verlängern oder zu verkürzen, um so die Schnecke aus technologischen Gesichtspunkten optimiert aufzuteilen. Schrupp- und Schlichtbereiche können, sowohl bei zylindrischen als auch bei konischen Schnecken, beliebig über die Schneckenbreite platziert werden.

## Übertragbarkeit auf andere Fertigungsverfahren

Bisher wurde das der Erfindung zugrunde liegende Verfahren am Beispiel des Wälzschleifens mit abrichtbaren Werkzeugen und Abrichten mittels einer Profilrolle beschrieben. Es können aber ebenso nicht abrichtbare Werkzeuge verwendet werden, solange diese eine Modifikation gemäß Gleichung (25) aufweisen. Je nach Herstellverfahren, mit dem diese nichtabrichtbaren Werkzeuge hergestellt werden, ist es möglich, die durch $\rho_F$ gegebene Richtung konstanter Modifikation frei oder zumindest in gewissen Grenzen frei zu wählen, womit sich wiederum das Diagonalverhältnis beim Wälzschleifen und somit auch der Arbeitsbereich beeinflussen lassen. Diese freie Wahl von $\rho_F$ ist auch beim Zeilenabrichten des Werkzeuges möglich.

Das Verfahren kann auch bei anderen Fertigungsverfahren eingesetzt werden, die ein verzahntes Werkzeug und die Kinematik eines Schraubwälzgetriebes nutzen und einen Vorschub des Werkzeugs erlauben. Diese weiteren Fertigungsverfahren sind beispielsweise Wälzfräsen, Schälwälzfräsen, Schaben und Honen. Die Werkzeuge müssen dabei ebenfalls eine Modifikation gemäß Gleichung (25) aufweisen. Je nach Fertigungsverfahren des Werkzeugs, ist auch hier eine freie Wahl von $\rho_F$ auf dem Werkzeug möglich.

## Anwendungsbeispiele

Im Folgenden werden einige einfache Anwendungsbeispiele beschrieben, an denen teilweise auch der Vorteil der hier beschriebenen Erfindung gegenüber dem Stand der Technik aufgezeigt wird und welche zugleich das Verfahren etwas veranschaulichen sollen.

Eine besondere Unterklasse an Modifikationen, welche mit dem hier beschriebenen Verfahren gefertigt werden kann und bereits heute von großer Relevanz ist, sind Modifikationen, die durch ein Polynom zweiten Grades in $w$ und $z$ gegeben sind. Solche Modifikationen $f_{P2}$ können allgemein durch

$$f_{P2}(w_F, z_F) = A_{w0z0} + A_{w1z0} \cdot w_F + A_{w0z1} \cdot z_F + A_{w1z1} \cdot w_F \cdot z_F + A_{w2z0} \cdot w_F^2 + A_{w0z2} \cdot z_F^2 \quad (101)$$

beschrieben werden, wobei die Koeffizienten $A$ in gewissen Grenzen frei wählbare reelle Zahlen sind. Zerlegt man $f_{P2}$ gemäß Gleichung (100) in $F_{FtC}$, $F_{FtL}$ und $F_{KFt}$ und wählt den Ansatz

$$F_{FtC}(X_F) = K_{F02} \cdot X_F^2 + K_{F01} \cdot X_F + K_{F00}$$

$$F_{FtL}(X_F) = K_{F11} \cdot X_F + K_{F10} \quad\quad\quad\quad\quad\quad (102)$$

$$F_{KFt}(X_{KF}) = K_{KF2} \cdot X_{KF}^2 + K_{KF1} \cdot X_{KF}$$

mit $X_{KF} = w_F \sin \rho_{KF} + z_F \cos \rho_{KF}$, so liefert ein Koeffizientenvergleich 6 Gleichungen, aus denen die im Ansatz eingeführten Koeffizienten $K$ bestimmt werden können.

Das Gleichungssystem ist immer lösbar, unabhängig von $\rho_F$ und somit auch unabhängig vom gewählten Diagonalverhältnis. Somit kann dieses bei der Herstellung einer Modifikation $f_{P2}$ in gewissen Grenzen freie gewählt werden.

Da insgesamt 7 Koeffizienten eingeführt wurden, ist das Gleichungssystem unterbestimmt und die Lösung nicht eindeutig. Diese Freiheit kann beispielsweise genutzt werden, um die Koeffizienten so zu wählen, dass sich die Schnecke möglichst gut abrichten lässt, so kann beispielsweise $K_{F10}$ jeweils für linke und rechte Flanke frei vorgegeben werden. Dies ist insbesondere dann von Interesse, wenn das Abrichten zweiflankig erfolgen soll. Anschaulich gesprochen beschreibt $K_{F10}$ im Wesentlichen wie weit der Abrichter um die C5-Achse an einer Position $X_{F1}$ geschwenkt werden muss, wenn zum Abrichten ein Bewegungsapparat wie in Figur 22 genutzt wird. $K_{l10}$ und $K_{r10}$ können nun so gewählt werden, dass für zwei Position $X_{l1}$ und Position $X_{r1}$ auf linker und rechter Flanke der Schnecke, welche zur selben Zeit abgerichtet werden, derselbe Schwenkwinkel der C5-Achse einzustellen ist. Ob der Schwenkwinkel der C5-Achse über den ganzen abzurichtenden Bereich der Schnecke gleich ist, hängt von den Koeffizienten $K_{F11}$ ab und den Makrogeometrien von Werkzeug und Werkstück, insbesondere ob diese symmetrisch oder asymmetrisch und zylindrisch oder konisch sind. Es ist jedoch auch in gewissen Grenzen möglich, eine Schnecke zweiflankig abzurichten, wenn unterschiedliche C5-Winkel erforderlich sind. Dazu können alle Freiheitsgrade beim Abrichten genutzt werden, wie dies im ersten Teil dieser Anmeldung beschrieben wird. Dazu können beispielsweise jeweils zwei der exakt zu erreichenden 4 Punkte auf linker und rechter Flanke gewählt werden. Damit steht ein Verfahren zur Verfügung, um einen sehr großen Bereich der durch Gleichung (101) definierten Modifikationen zu fertigen und dabei ein ein- oder zweiflankiges Abrichten einzusetzen.

Ein solches zweiflankiges Abrichten lässt sich noch dadurch optimieren, dass das Diagonalverhältnis so bestimmt wird, dass sich die benötigte topologische Modifikation auf der Schnecke möglichst einfach erzeugen lässt. Für das hier betrachtete Beispiel der Polynome zweiten Grades bedeutet dies, dass das Diagonalverhältnis so angepasst wird, dass die C5-Winkel, welche zum Abrichten der linken bzw. rechten Flanke erforderlich sind, sich über die Breite der Schnecke in gleichem oder zumindest ähnlichem Maße ändern. Dazu ist das Diagonalverhältnis so zu wählen, dass $K_{l11}$ und $K_{r11}$ entsprechende Werte annehmen. Dadurch geht zwar die Flexibilität der freien Wahl des Diagonalverhältnisses verloren, es kann jedoch ein noch größeres Spektrum an Modifikationen auf dem Werkstück unter Einsatz eines zweiflankigen Abrichtens erzeugt werden.

Die heute relevantesten Modifikationen, welche durch Gleichung (101) beschrieben werden können sind Balligkeiten und additive Überlagerungen mehrerer Balligkeiten. Eine Balligkeit $f_B$ kann allgemein geschrieben werden als

$$f_B(w_F, z_F) = K_{B2} \cdot (w_F \sin \rho_{BF} + z_F \cos \rho_{BF})^2 + K_{B1} \cdot (w_F \sin \rho_{BF} + z_F \cos \rho_{BF}) + K_{B0} \quad (103)$$

Für $\rho_{BF} = 0$ handelt es sich um eine Flankenlinienballigkeit, für $\rho_{BF} = \pm \frac{\pi}{2}$ um eine Profilballigkeit. In den übrigen Fällen handelt es sich um gerichtete Balligkeiten. Da diese zu einer Verschränkung führen, werden diese häufig auch als Balligkeiten mit gezielter Verschränkung bezeichnet. Balligkeiten werden oft auch als Kreisballigkeiten definiert, solche können jedoch in sehr guter Näherung durch die hier beschriebenen quadratischen Balligkeiten angenähert werden.

Verfahren, abgesehen vom Zeilenabrichten, um Profilballigkeiten über die Abricht- und/oder Schleifkinematik zu beeinflussen sind bisher nicht bekannt. Verfahren um verschränkungsfreie oder gezielt verschränkte Flankenlinienballigkeiten zu erzeugen sind aus den eingangs zitierten Druckschiften zwar bekannt. Alle diese Verfahren verursachen jedoch ungewollte Profilballigkeiten, welche mit dem hier vorgestellten Verfahren nicht entstehen. Das hier vorgestellte Verfahren geht sogar noch weiter und erlaubt eine gezielte Erzeugung einer Profilballigkeit, was bisher nur über die Geometrie des Abrichters möglich war. Es entfallen dadurch hohe Anschaffungskosten für neue Abrichter, wenn lediglich die Profilballigkeit geändert werden muss. Dies ist insbesondere in der Lohn- und Kleinserienfertigung von besonderer Relevanz. Des Weiteren ist es auch möglich, Abrichter mit fehlerhaft erzeugter Profilballigkeit einzusetzen und diese zu korrigieren. So können geschliffenen Verzahnungen gemessen und der erzeugte Profilballigkeit bestimmt und entsprechend korrigiert werden. Somit steht, neben dem im ersten Teil dieser Anmeldung vorgestelltem Verfahren, noch ein weiteres zur Verfügung, welches es erlaubt, die Profilballigkeit beim Wälzschleifen zu beeinflussen. Beide diese Verfahren haben gegenüber dem anderen Vor- und Nachteile, welche hier kurz aufgeführt werden. Das im ersten Teil vorgestellte Verfahren erlaubt es, die Profilballigkeit der Schnecke über deren ganze Länge gleich zu beeinflussen. Dadurch kann mit einer solchen Schnecke das Schleifen im Axialschleifverfahren erfolgen, solange keine topologischen Modifikationen gefordert sind. Dieses Axialschleifverfahren führt im Allgemeinen zu einer höheren Anzahl an Werkstücken, die pro Abrichtzyklus geschliffen werden können. Voraussetzung für die Anwendung ist jedoch, dass die Makrogeometrie der Schnecke eine hinreichend große Beeinflussung der Profilballigkeit erlaubt, was tendenziell den Einsatz kleiner mehrgängiger Schnecken erfordert. Das hier im zweiten Teil vorgestellte Verfahren erlaubt den Einsatz von Schnecken mit quasi beliebiger Makrogeometrie, es erfordert jedoch den Einsatz des Diagonalwälzschleifens. Wird das Werkstück ohnehin im Diagonalwälzschleifen geschliffen, um beispielsweise topologische Modifikationen zu erzeugen oder weil ein Diagonalwälzschleifen aufgrund der Breite der Verzahnung technologisch nötig ist, so bringt dieses Verfahren keinerlei Nachteile mehr mit sich.

Zur Erzeugung einer Balligkeit oder einer additiven Überlagerung mehrerer Balligkeiten kann das Diagonalverhältnis und somit der Schiftbereich und die Größe des auf der Schnecke genutzten Bereiches in gewissen Grenzen frei gewählt werden. Somit kann die Anzahl der Bereich auf einer Schnecke beispielsweise unter Beachtung technologischer Gesichtspunkte optimiert werden bzw. optimal der Schneckenlänge angepasst.

Ein weiterer Effekt, der sich aus der freien Wahl des Diagonalverhältnisses ergibt, ist die Möglichkeit der Überlagerung mit Modifikationen, welche ein fest vorgegebenes Diagonalverhältnis erfordern. Ein solches Beispiel ist in Figur 29 dargestellt. Hierbei handelt es sich um die additive Überlagerung einer Dreiecksförmigen Endrücknahme, einer Profilballigkeit und einer verschränkungsfreien Flankenlinienballigkeit, wobei die Profilballigkeit mit dem hier beschriebenen Verfahren und nicht über einen entsprechend ausgelegten Abrichter erzeugt wird. Um die dreiecksförmige Endrücknahme zu fertigen, muss das Diagonalverhältnis so gewählt werden, dass die Rücknahme in der richtigen Richtung abfällt. Diese Richtung wird durch die Line 123, welche eine Gerade in w und z ist, definiert. Entlang dieser Linie ist der Anteil der Modifikation, der rein aus der dreiecksförmigen Endrücknahme kommt, konstant. Dies gilt ebenso für alle Linien parallel zu Line 123, welche im Bereich 127 liegen, wobei entlang jeder dieser Linien der Anteil der Modifikation aus der dreiecksförmigen Endrücknahme einen anderen Wert hat. Um die gesamte Modifikation mit dem hier vorgestellten Verfahren schleifen zu können, kann diese in einen Anteil ($F_{KFt}$), welcher aus der Schleifkinematik kommt und in Figur 31 dargestellt ist und einen Anteil ($F_{FtC} + F_{FtL}$), welcher über das Diagonalschiften aus der Modifikation der Schnecke kommt und in Figur 30 dargestellt ist, zerlegt werden, wie in Gleichung (102) beschrieben.

Der hier beispielhaft aufgezeigte Weg zur Erzeugung einer Modifikation gemäß Gleichung (101) kann auch auf Polynome höheren Grades in w und z übertragen werden. Dazu können im Ansatz aus Gleichung (102) höhere Ordnungen in $X_{\square}$ bzw. $X_{KF}$ hinzugenommen werden und es kann des Weiteren die Funktion $F_{FtQ}$ analog mit aufgenommen werden. Auf diese Weise lassen sich zum Beispiel Polynome dritten Grades fertigen. Diese sind ebenfalls von besonderem Interesse, da mit ihnen sehr gut kreisförmige Balligkeiten, bestehend aus zwei tangential anschließenden Kreisbögen mit unterschiedlichen Radien, angenähert werden können. Somit steht erstmals ein Verfahren zur Verfügung, mit dem es möglich ist, solche Balligkeiten gezielt gerichtet, bzw. mit gezielter Verschränkung oder verschränkungsfrei bei in gewissen Grenzen frei wählbarem Diagonalverhältnis mit den hier betrachteten Fertigungsverfahren zu fertigen.

Ein weiteres Beispiel sind Welligkeiten mit über die Zahnflanke veränderter Amplitude. Aus DE102012015846 ist ein Verfahren bekannt, mit dem Welligkeiten mit definierter Richtung ($\rho_{F2}$), Phasenlange ($\delta$), Wellenlänge ($\lambda$) und Amplitude im Wälzschleifen gefertigt werden können. Dabei ist die Amplitude der Welligkeit entlang der ersten Richtung $G_{C2}$ konstant, kann jedoch entlang der zweiten Richtung, senkrecht zur ersten Richtung, verändert werden. Mit dem hier vorgestellten Verfahren ist es nun möglich, die Amplitude über der ganzen Flanke zu variieren. Figur 32 zeigt eine obere und einer untere Fläche, welche die Welligkeit einhüllen. Die obere Fläche definiert dabei die Amplitudenfunktion der Welligkeit in Abhängigkeit von *w* und *z*. Hier wurde beispielhaft eine Amplitudenfunktion gewählt, welche in der Mitte der Flanke einen kleineren Wert hat im Vergleich zum am Rand der Flanke und als Summe zweier Polynom zweiten Grades in *w* bzw. *z* gegeben ist. Es sind ebenso Amplitudenfunktionen möglich, die zu kleineren Amplituden am Rand der Flanke führen. Die Welligkeit mit nicht konstanter Amplitude ergibt sich durch Multiplikation der Amplitudenfunktion

mit der Welligkeit $(\sin(\frac{X_{F2}}{\lambda} + \delta)).$ Die sich daraus ergebende Modifikation hat dadurch eine Form gemäß Gleichung (25) und ist in Figur 33 gezeigt. Solche Welligkeiten können, wie auch in DE102012015846 beschrieben zur Optimierung des Anregungsverhaltens von Getrieben genutzt werden, erlauben jedoch auf Grund der Unterschiedlichen Amplitude über die Zahnflanke zusätzlich eine Optimierung für unterschiedliche Lastniveaus.

Werden die Flanken der Schneckengänge in mehreren Hüben abgerichtet, so ist es möglich, in jedem Hub unterschiedliche Bereiche der Flanken abzurichten, z.B. beim ersten Hub einen oberer Teil des Profils, beim zweiten einen unteren Teil, und dadurch in den verschiedenen Bereichen unterschiedliche Modifikationen aufzubringen. Somit wird es beispielsweise möglich, eine Welligkeit nur in einem oberen Bereich des Profils auf einem Werkstück aufzubringen, bzw. den Übergang zwischen wellig modifiziertem Bereich und nicht modifiziertem Bereich diagonal über die Flanke v

**Auflistung schützenswerter Punkte**

Im Folgenden werden noch einmal wichtige Aspekte der vorliegenden Erfindung dargestellt, welche sowohl für sich genommen, als auch in Kombination untereinander und in Kombination mit den in der bisherigen Beschreibung dargestellten Aspekten, Gegenstand der vorliegenden Anmeldung sind. Dabei können insbesondere die Aspekte, die im Hinblick auf das Abrichten der Werkzeuge dargestellt sind, zur Bereitstellung der Modifikationen auf dem Werkzeug eingesetzt werden, welches in den Aspekten zum Diagonalwälzverfahren zum Einsatz kommt:

**A. Abrichten**

**A.I. Vorgabe Wälzwinkel**

1. Verfahren zum Abrichten eines Werkzeuges, welches zur Verzahnbearbeitung eines Werkstückes einsetzbar ist, auf einer Abrichtmaschine, wobei das Abrichten mit Linienkontakt zwischen Abrichter und Werkzeug erfolgt, wobei durch die geeignete Wahl der Position des Abrichters zum Werkzeug beim Abrichten eine gezielte Modifikation der Oberflächengeometrie des Werkzeuges erzeugt wird,
dadurch gekennzeichnet,
dass die gezielte Modifikation der Oberflächengeometrie des Werkzeuges an mindestens drei Wälzwinkeln vorgebbar ist, und/oder wobei eine Balligkeit der gezielten Modifikation der Oberflächengeometrie des Werkzeuges vorgebbar ist, und/oder dass die gezielte Modifikation der Oberflächengeometrie des Werkzeuges an mindestens zwei Wälzwinkeln vorgebbar ist und zusätzlich eine Zuordnung eines bestimmten Radius des Abrichters zu einem bestimmten Radius des Werkzeuges erfolgt,
und/oder wobei eine Steigung der gezielten Modifikation der Oberflächengeometrie des Werkzeuges vorgebbar ist und zusätzlich eine Zuordnung eines bestimmten Radius des Abrichters zu einem bestimmten Radius des Werkzeuges erfolgt, und/oder dass eine Zuordnung zweier bestimmter Radien des Abrichters zu zwei bestimmten Radien des Werkzeuges erfolgt,
und/oder dass beim Abrichten der Werkzeugdrehwinkel und die Werkzeugbreitenposition verändert werden, um den Abrichter am Werkzeug entlang zu führen, und mindestens zwei weitere Freiheitsgrade der relativen Position zwischen Abrichter und Werkzeug unabhängig voneinander zur Beeinflussung der durch das Abrichten erzeugten Verzahngeometrie und/oder zur Zuordnung eines bestimmten Radius des Abrichters zu einem bestimmten Radius des Werkzeuges eingestellt werden.

2. Verfahren nach Aspekt 1, wobei die gewünschte Modifikation des Werkzeuges an vier Wälzwinkeln vorgegeben wird und/oder wobei zusätzlich zur Vorgabe der gewünschten Modifikation des Werkzeuges an drei Wälzwinkeln eine Zuordnung eines bestimmten Radius des Abrichters zu einem bestimmten Radius des Werkzeuges erfolgt, und/oder dass zusätzlich zu der Zuordnung zweier bestimmter Radien des Abrichters zu zwei bestimmten Radien des Werkzeuges eine Vorgabe der gezielten Modifikation der Oberflächengeometrie des Werkzeuges an mindestens zwei Wälzwinkeln und/oder eine Vorgabe einer Steigung der gezielten Modifikation der Oberflächengeometrie des Werkzeuges erfolgt.

3. Verfahren nach Aspekt 1 oder 2, wobei die Vorgabe der gezielten Modifikation der Oberflächengeometrie des Werkzeuges durch Vorgabe einer gewünschten Modifikation der Oberflächengeometrie eines mit dem Werkzeug zu bearbeitenden Werkstückes erfolgt, wobei bevorzugt aus der gewünschten Modifikation der Oberflächengeometrie des mit dem Werkzeug zu bearbeitenden Werkstückes die hierfür notwenige Modifikation der Oberflächengeometrie des Werkzeuges bestimmt wird.

4. Verfahren nach einem der Aspekte 1 bis 3, wobei es sich bei der gezielten Modifikation der Oberflächengeometrie des Werkzeuges oder der gewünschten Modifikation der Oberflächengeometrie des Werkstückes um eine reine Profilmodifikation handelt.

5. Verfahren zum modifizierten Abrichten eines Werkzeuges, welches zur Verzahnbearbeitung eines Werkstückes einsetzbar ist, auf einer Abrichtmaschine, mit den Schritten:

- Vorgabe einer gewünschten Profilmodifikation des Werkzeuges,
- Einstellen der Bewegungsachsen der Abrichtmaschine zur Beeinflussung der relativen Position zwischen Abrichter und Werkzeug beim Abrichten in Abhängigkeit von der gewünschten Profilmodifikation,

dadurch gekennzeichnet,
dass ein modifizierter Abrichter eingesetzt wird und sich die erzeugte Profilmodifikation des Werkzeuges aus der Profilmodifikation des Abrichters und den eingestellten Bewegungsachsen der Abrichtmaschine ergibt.

6. Verfahren nach Aspekt 5, wobei eine Ausgleichsrechnung eingesetzt wird, um eine relative Position zwischen Abrichter und Werkzeug beim Abrichten zu ermitteln, durch welche die gewünschte Profilmodifikation zumindest näherungsweise erzeugbar ist, und/oder wobei der durch die Einstellung der Bewegungsachsen der Abrichtmaschine erzeugte Anteil der Profilmodifikation des Werkzeuges an mindestens einer, und bevorzugt zwei oder drei Wälzwinkeln vorgegeben oder bestimmt wird,
und/oder wobei eine gewünschte Position der Profilmodifikation des Abrichters auf dem Werkzeug vorgegeben oder bestimmt wird,
und/oder wobei eine gewünschte Streckung oder Stauchung der Profilmodifikation des Abrichters auf dem Werkzeug vorgegeben oder bestimmt wird,
und/oder wobei ein geeigneter Profilwinkel des Werkzeuges gewählt wird.

7. Verfahren nach einem der Aspekte 1 bis 3, wobei die gezielte Modifikation der Oberflächengeometrie des Werkzeuges oder die gewünschte Modifikation der Oberflächengeometrie des Werkstückes an mindestens einem Wälzwinkel und bevorzugt an zwei oder drei Wälzwinkeln als eine Funktion der Werkzeugbreitenposition vorgebbar ist,
und/oder wobei die Einstellung der Bewegungsachsen der Abrichtmaschine in Abhängigkeit von der Werkzeugbreitenposition erfolgt, um die gezielte Modifikation zu erzeugen,
und/oder wobei die Zuordnung eines bestimmten Radius des Abrichters zu einem bestimmten Radius des Werkzeuges als eine Funktion der Werkzeugbreitenposition vorgebbar ist,
und/oder wobei die Einstellung der Bewegungsachsen der Abrichtmaschine in Abhängigkeit von der Werkzeugbreitenposition erfolgt, um die gewünschte Zuordnung zu erzeugen,
wobei bevorzugt mindestens einer der Wälzwinkel und weiter bevorzugt zwei oder drei Wälzwinkel, an welchem oder welchen die Modifikation vorgebbar ist, in Werkzeugbreitenrichtung unterschiedlich gewählt wird, und weiter bevorzugt als eine Funktion der Werkzeugbreitenposition vorgebbar ist.

8. Verfahren nach einem der vorangegangenen Aspekte, wobei das Abrichten einflankig erfolgt und die mindestens drei Wälzwinkel auf einer Flanke angeordnet sind, und/oder wobei das Abrichten zweiflankig erfolgt und die mindestens drei Wälzwinkel auf die zwei Flanken verteilt sind, und/oder wobei das Abrichten zweiflankig erfolgt und ein Werkzeug mit einer konischen Grundform eingesetzt wird, wobei bevorzugt der Konuswinkel zum Einstellen der Modifikation eingesetzt wird.

9. Verfahren nach einem der vorangegangenen Aspekte, wobei eine durch eine Modifikation des Abrichters erzeugte Modifikation mit einer durch die Einstellung der Position des Abrichters zum Werkzeug beim Abrichten erzeugten gezielten Modifikation der Oberflächengeometrie des Werkzeuges überlagert wird,
wobei bevorzugt die Position der durch eine Modifikation des Abrichters erzeugten Modifikation auf der Zahnflanke vorgebbar ist, insbesondere als eine Funktion der Position in Werkzeugbreitenrichtung vorgebbar ist und/oder durch eine Zuordnung eines bestimmten Radius des Abrichters zu einem bestimmten Radius des Werkzeuges, und/oder wobei bevorzugt eine gewünschte Streckung oder Stauchung der Modifikation des Abrichters auf dem Werkzeug vorgebbar ist, welche bevorzugt als eine Funktion der Position in Werkzeugbreitenrichtung vorgebbar ist, insbesondere durch eine Zuordnung zweier bestimmter Radien des Abrichters zu zwei bestimmten Radien des Werkzeuges, und/oder wobei ein geeigneter Profilwinkel des Werkzeuges gewählt wird,
und/oder wobei bevorzugt der modifizierte Abrichter über sein komplettes aktives Profil eine gleichbleibende Modifikation aufweist, bspw. eine gleichbleibende Balligkeit, oder wobei bevorzugt der modifizierte Abrichter in mindestens einem ersten Teilbereich seines Profils eine Modifikation aufweist, welche sich von der Profilform in mindestens einem zweiten Teilbereich unterscheidet, wobei die Modifikation im ersten Teilbereich vorteilhafterweise einen anderen Profilwinkel und/oder eine andere Balligkeit aufweist, wobei die Modifikation insbesondere eine Kante aufweisen kann, und/oder wobei der Abrichter beim Abrichten bevorzugt gleichzeitig in dem ersten und dem zweiten Teilbereich in Kontakt mit der Werkzeugoberfläche steht,
und/oder wobei ein Kombi-Abrichter zum gleichzeitigen Abrichten des Zahnkopfes und der Zahnflanke eingesetzt wird, wobei bevorzugt die Höhe des Zahnkopfes vorgegeben und durch Einstellung der Bewegungsachsen der Abrichtmaschine beim Abrichten erzeugt wird, wobei die Höhe des Zahnkopfes bevorzugt als eine Funktion der Werkzeugbreitenposition vorgebbar ist.

10. Verfahren nach einem der vorangegangenen Aspekte, wobei aus einer Mehrzahl an Einstellungen der Bewegungsachsen der Abrichtmaschine, welche die gleiche relative Position zwischen Abrichter und Werkzeug erzeugen, eine Einstellung gewählt wird, welche vorgegebene Bedingungen besser erfüllt, wobei bevorzugt die Einstellung gewählt wird, welche die gewünschte Relativposition mit höherer Genauigkeit und/oder geringeren Positionsfehlern bereitstellt und/oder wobei die Einstellung gewählt wird, welche geringere Verfahrbewegungen der Maschinenachsen erfordert, und/oder wobei die Einstellung gewählt wird, welche Kollisionen des Abrichters, des Werkzeuges und/oder von Maschinenteilen untereinander vermeidet,
und/oder wobei die durch das Werkzeug erzeugte Verzahngeometrie oder die auf dem Werkzeug durch das Abrichten erzeugte Verzahngeometrie vermessen wird und aus Abweichungen von einer Soll-Geometrie die beim Abrichten vorliegenden Abweichungen der Bewegungsachsen der Abrichtmaschine von ihren Solleinstellungen bestimmt werden.

11. Verfahren nach einem der vorangegangenen Aspekte, wobei bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation einstellbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander eingestellt werden, um die gezielte Modifikation entlang der Berührlinie zu erzeugen.

12. Verfahren nach einem der vorangegangenen Aspekte, wobei Fehler in der Oberflächengeometrie eines Abrichters durch Vorgabe entsprechender Korrekturwerte beim Einstellen der Bewegungsachsen der Abrichtmaschine zumindest teilweise korrigiert werden,
und/oder wobei ein Abrichter, welcher auf ein Werkzeug mit einer ersten Makrogeometrie und/oder ersten gewünschten Oberflächengeometrie ausgelegt wurde, zum Abrichten eines Werkzeuges mit einer zweiten Makrogeometrie und/oder zweiten gewünschten Oberflächengeometrie eingesetzt wird, wobei die sich durch die Auslegung auf das Werkzeug mit der ersten Makrogeometrie und/oder ersten gewünschten Oberflächengeometrie ergebenden Fehler durch eine entsprechende Einstellung der Bewegungsachsen der Abrichtmaschine beim Abrichten des Werkzeuges mit einer zweiten Makrogeometrie und/oder zweiten gewünschten Oberflächengeometrie zumindest teilweise ausgeglichen werden,
und/oder wobei die Einstellung der Bewegungsachsen der Abrichtmaschine beim Abrichten und/oder die Makrogeometrie des Abrichters und/oder die Modifikation des Abrichters und/oder die Makrogeometrie des Werkzeuges mittels einer Ausgleichsrechnung bestimmt wird, wobei bevorzugt die durch die Veränderung der Einstellung der Bewegungsachsen der Abrichtmaschine erzielbaren Modifikationen im Wälzbild in einer Richtung mit einen Winkel $\rho_{FS}$ zur Werkzeugbreitenrichtung an zwei, drei oder vier Wälzwinkeln variiert und entlang ihrer Richtung interpoliert und bevorzugt als lineare, quadratische und/oder kubische Funktion angenommen werden, und mit einer gewünschten Modifikation verglichen werden, wobei bevorzugt eine Abstandsfunktion zur Quantifizierung der Abweichung eingesetzt wird, wobei die Abstandsfunktion bevorzugt eine von der Position im Wälzbild abhängige Gewichtung aufweist.

13. Verfahren nach einem der vorangegangenen Aspekte, wobei ein Werkzeug eingesetzt wird, bei welchem mindestens ein Gang inaktiv und/oder ausgespart ist, und/oder bei welchem der Abrichter beim Abrichten einer ersten Flanke zumindest teilweise in die Kontur der gegenüberliegenden Flanke eingreift, und/oder wobei mindestens eine Zahnflanke so abgerichtet wird, dass sie beim Bearbeiten des Werkstückes nicht in Kontakt mit dem Werkstück kommt und daher inaktiv ist, wobei bevorzugt mindestens ein Gang so abgerichtet wird, dass er beim Bearbeiten des Werkstückes nicht in Kontakt mit dem Werkstück kommt und daher inaktiv ist,
wobei bevorzugt zwischen zwei aktiven Gängen mindestens ein inaktiver und/oder ausgesparter Gang vorgesehen ist,
und/oder wobei bevorzugt beim Bearbeiten des Werkstückes in Wälzkopplung nacheinander maximal jeder zweite Zahn in Eingriff mit dem Werkzeug kommt, und/oder wobei bevorzugt in Abhängigkeit von der Anzahl der Zähne des Werkstückes und/oder der Anzahl der Gänge in mindestens einem ersten Durchgang mindestens ein erster Teil der Zähne des Werkstückes bearbeitet wird, woraufhin das Werkstück relativ zum Werkzeug gedreht wird, um mindestens einen zweiten Teil der Zähne in mindestens einem zweiten Durchgang zu bearbeiten.

14. Verfahren nach einem der vorangegangenen Aspekte, wobei das Abrichten in zwei oder mehr Hüben jeweils mit Linienkontakt erfolgt,
wobei bevorzugt die Bewegungsachsen der Abrichtmaschine beim Abrichten in dem jeweiligen Hub zusätzlich zu der für die unterschiedliche Positionierung zwischen Abrichter und Werkzeug bei den zwei oder mehr Hüben notwendigen Veränderung unterschiedlich eingestellt werden, um die Steigung und/oder Balligkeit der Modifikation bei mindestens einem der Hübe zu beeinflussen,
und/oder wobei bevorzugt die gezielte Modifikation bei mindestens einem der Hübe so eingestellt wird, dass die durch mindestens einen ersten Hub erzeugte Oberflächengeometrie in einem gewünschten Winkel und insbesondere tangential an die durch mindestens einen zweiten Hub erzeugte Oberflächengeometrie anschließt, und/oder wobei bevorzugt für mindestens einen und bevorzugt jeden Hub eine gewünschte Modifikation des Werkzeuges an mindestens zwei und bevorzugt drei Wälzwinkeln vorgegeben wird, und/oder wobei für mindestens einen und bevorzugt jeden Hub eine Zuordnung eines bestimmten Radius des Abrichters zu einem bestimmten Radius des Werkzeuges erfolgt.

15. Verfahren nach Aspekt 14, wobei für die einzelnen Hübe unterschiedliche Bereiche des Abrichters eingesetzt werden und/oder für die einzelnen Hübe unterschiedliche Abrichter eingesetzt werden, und/oder wobei einer der Hübe zum Erzeugen einer Modifikation des Zahnfußes oder des Zahnkopfes eingesetzt wird, bspw. zum Erzeugen einer Rücknahme des Zahnkopfes oder des Zahnfußes,
und/oder wobei die Position oder die Positionen, an welcher bzw. welchen die in den jeweiligen Hüben erzeugten Modifikationen aneinander anschließen, in Abhängigkeit von der Werkzeugbreitenposition verändert wird bzw. werden.

16. Verfahren zur Herstellung eines Werkstückes mit modifizierter Verzahnungsgeometrie durch ein Wälzverfahren, insbesondere ein Diagonalwälzverfahren, mittels eines modifizierten Werkzeuges,
wobei durch ein Verfahren gemäß einem der vorangegangenen Aspekte eine gezielte Modifikation der Oberflächengeometrie des Werkzeuges erzeugt wird, und
wobei die gezielte Modifikation des Werkzeuges durch das Wälzverfahren, insbesondere das Diagonalwälzverfahren, eine entsprechende Modifikation auf der Oberfläche des Werkstückes erzeugt.

17. Vorrichtung und/oder Softwareprogramm zum Berechnen der zur Erzeugung einer gewünschten Modifikation eines Werkzeuges beim Abrichten im Linienkontakt mit einem vorgegebenen Abrichter notwendigen Relativposition zwischen Abrichter und Werkzeug oder der zu deren Bereitstellung notwenigen Einstellungen der Bewegungsachsen einer Abrichtmaschine, insbesondere zur Durchführung eines Verfahrens nach einem der vorangegangenen Aspekte,
mit
einer Eingabefunktion, durch welche die gezielte Modifikation der Oberflächengeometrie des Werkzeuges vorgebbar ist, und
eine Berechnungsfunktion, welche aus der gezielten Modifikation die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen bestimmt,
wobei die Eingabefunktion und die Berechnungsfunktion so ausgestaltet sind, dass sie zur Durchführung eines der vorangegangenen Verfahren eingesetzt werden können, und/oder
wobei die Eingabefunktion und die Berechnungsfunktion so ausgestaltet sind,
dass die gezielte Modifikation der Oberflächengeometrie des Werkzeuges an mindestens drei Wälzwinkeln vorgebbar und dort durch die berechnete Relativposition oder Einstellung der Bewegungsachsen der Abrichtmaschine erzeugbar ist, und/oder dass eine Balligkeit der Verzahnung vorgebbar und durch die berechnete Relativposition oder Einstellung der Bewegungsachsen der Abrichtmaschine erzeugbar ist,
und/oder
wobei die Eingabefunktion und die Berechnungsfunktion so ausgestaltet sind, dass die gezielte Modifikation der Oberflächengeometrie des Werkzeuges an mindestens zwei Wälzwinkeln vorgebbar und dort durch die berechnete Relativposition oder Einstellung der Bewegungsachsen der Abrichtmaschine erzeugbar ist und zusätzlich eine Zuordnung eines bestimmten Radius des Abrichters zu einem bestimmten Radius des Werkzeuges vorgebbar oder berechenbar ist und durch die berechnete Relativposition oder Einstellung der Bewegungsachsen der Abrichtmaschine erfolgt, und/oder wobei die Eingabefunktion und die Berechnungsfunktion so ausgestaltet sind, dass eine Steigung der Verzahnung vorgebbar und durch die berechnete Relativposition oder Einstellung der Bewegungsachsen der Abrichtmaschine erzeugbar ist und zusätzlich eine Zuordnung eines bestimmten Radius des Abrichters zu einem bestimmten Radius des Werkzeuges vorgebbar oder berechenbar ist und durch die berechnete Relativposition oder Einstellung der Bewegungsachsen der Abrichtmaschine erfolgt,

und/oder wobei die Eingabefunktion und die Berechnungsfunktion so ausgestaltet sind, dass eine Zuordnung zweier bestimmter Radien des Abrichters zu zwei bestimmten Radien des Werkzeuges erfolgt,

und/oder wobei die Eingabefunktion und die Berechnungsfunktion so ausgestaltet sind, dass Daten zu einem modifizierten Abrichter eingebbar sind und die Bestimmungseinheit die Einstellung der Bewegungsachsen der Abrichtmaschine so bestimmt, dass sich eine gewünschte Profilmodifikation des Werkzeuges zumindest näherungsweise aus der Profilmodifikation des Abrichters und den eingestellten Bewegungsachsen der Abrichtmaschine ergibt.

18. Abrichtmaschine oder Verzahnmaschine mit einer Abrichtmaschine, wobei die Abrichtmaschine eine Werkzeugaufnahme zur Aufnahme des abzurichtenden Werkzeuges und eine Abrichteraufnahme zur Aufnahme des hierzu eingesetzten Abrichters aufweist, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter unabhängig voneinander einstellbar sind, mit einer Steuerung,
dadurch gekennzeichnet,
dass die Steuerung die Bewegungsachsen so ansteuert, dass beim Abrichten der Werkzeugdrehwinkel und die Werkzeugbreitenposition verändert werden, um den Abrichter am Werkzeug entlang zu führen, wobei mindestens zwei weitere Freiheitsgrade der relativen Position zwischen Abrichter und Werkzeug unabhängig voneinander zur Beeinflussung der durch das Abrichten erzeugten Verzahngeometrie einstellbar und/oder ansteuerbar und/oder vorgebbar sind,
und/oder dass die Steuerung eine Eingabefunktion aufweist, durch welche die gezielte Modifikation der Oberflächengeometrie des Werkzeuges vorgebbar ist, wobei die Steuerung eine Berechnungsfunktion aufweist, welche aus der gezielten Modifikation die zu ihrer Erzeugung notwendigen Einstellungen der Bewegungsachsen beim Abrichten mit Linienkontakt zwischen Abrichter und Werkzeug bestimmt,
und wobei die Steuerung eine Steuerungsfunktion aufweist, welche die entsprechende Einstellung der Bewegungsachsen beim Abrichten mit Linienkontakt zwischen Abrichter und Werkzeug vornimmt,
wobei die Eingabefunktion, die Berechnungsfunktion und die Steuerungsfunktion so ausgestaltet sind, dass sie zur Durchführung eines der vorangegangenen Verfahren eingesetzt werden können,
und/oder wobei die Eingabefunktion, die Berechnungsfunktion und die Steuerungsfunktion so ausgestaltet sind, dass die gezielte Modifikation der Oberflächengeometrie des Werkzeuges an mindestens drei Wälzwinkeln vorgebbar und dort durch das Einstellen der Bewegungsachsen der Abrichtmaschine erzeugt wird, und/oder dass eine Balligkeit der Verzahnung vorgebbar und durch das Einstellen der Bewegungsachsen der Abrichtmaschine erzeugt wird,
und/oder
wobei die Eingabefunktion, die Berechnungsfunktion und die Steuerungsfunktion so ausgestaltet sind, dass die gezielte Modifikation der Oberflächengeometrie des Werkzeuges an mindestens zwei Wälzwinkeln vorgebbar und dort durch das Einstellen der Bewegungsachsen der Abrichtmaschine erzeugt wird und zusätzlich eine Zuordnung eines bestimmten Radius des Abrichters zu einem bestimmten Radius des Werkzeuges vorgebbar ist oder berechnet wird und durch das Einstellen der Bewegungsachsen der Abrichtmaschine erfolgt,
und/oder wobei die Eingabefunktion, die Berechnungsfunktion und die Steuerungsfunktion so ausgestaltet sind, dass eine Steigung der Verzahnung vorgebbar und durch das Einstellen der Bewegungsachsen der Abrichtmaschine erzeugt wird und zusätzlich eine Zuordnung eines bestimmten Radius des Abrichters zu einem bestimmten Radius des Werkzeuges vorgebbar ist oder berechnet wird und durch das Einstellen der Bewegungsachsen der Abrichtmaschine erfolgt,
und/oder wobei die Eingabefunktion, die Berechnungsfunktion und die Steuerungsfunktion so ausgestaltet sind, dass eine Zuordnung zweier bestimmter Radien des Abrichters zu zwei bestimmten Radien des Werkzeuges erfolgt
und/oder wobei die Eingabefunktion, die Berechnungsfunktion und die Steuerungsfunktion so ausgestaltet sind, dass Daten zu einem modifizierten Abrichter eingebbar sind und die Bestimmungseinheit die Einstellung der Bewegungsachsen der Abrichtmaschine so bestimmt, dass sich eine gewünschte Profilmodifikation des Werkzeuges zumindest näherungsweise aus der Profilmodifikation des Abrichters und den eingestellten Bewegungsachsen der Abrichtmaschine ergibt.

**A.II. Auswahl Abrichter und Werkzeug**

1. Verfahren zur Herstellung eines Werkstückes mit gewünschter Verzahnungsgeometrie mittels eines geeignet abgerichteten Werkzeuges,
mit den Schritten:

- Vorgabe einer gewünschten Verzahnungsgeometrie des Werkstückes,
- Auswahl einer Kombination aus einem Abrichter und einem Werkzeug, so dass die gewünschte Verzahnungsgeometrie des Werkstückes durch die gewählte Kombination zumindest innerhalb einer zulässigen Toleranz erzeugbar ist,
- Abrichten des Werkzeuges mit dem Abrichter in Linienkontakt zur Erzeugung einer geeigneten Verzahnungsgeometrie des Werkzeuges und
- Bearbeiten des Werkstückes mit dem abgerichteten Werkzeug zur Erzeugung der gewünschten Verzahnungsgeometrie des Werkstückes zumindest innerhalb einer zulässigen Toleranz.

2. Verfahren nach Aspekt 1, wobei die Auswahl aus einer Mehrzahl von Abrichtern und/oder einer Mehrzahl von Werkzeugen in Abhängigkeit von der gewünschten Verzahnungsgeometrie des Werkstückes erfolgt,
und/oder wobei es sich bevorzugt bei den Abrichtern und/oder Werkzeugen um ein zumindest teilweise vorgegebenes oder bereits vorhandenes Sortiment handelt, und/oder wobei die Abrichter für unterschiedliche Werkzeuge ausgelegt sind und/oder unterschiedliche Modifikationen und/oder unterschiedliche Durchmesser aufweisen,
und/oder wobei sich die Werkzeuge im Hinblick auf ihre Makrogeometrie, insbesondere im Hinblick auf Gangzahl und/oder Durchmesser und/oder Profilwinkel unterscheiden,
und/oder wobei Vorgaben zu den einsetzbaren Abrichtern und/oder Werkzeugen vorliegen und so ergänzt werden, dass die gewünschte Verzahnungsgeometrie des Werkstückes durch die gewählte Kombination zumindest innerhalb einer zulässigen Toleranz erzeugbar ist,
und/oder wobei das Werkzeug im Hinblick auf seine Makrogeometrie, insbesondere im Hinblick auf Gangzahl und/oder Durchmesser und/oder Profilwinkel ausgewählt wird.

3. Verfahren zur Bestimmung der Herstellbarkeit eines Werkstückes mit gewünschter Verzahnungsgeometrie mittels einer vorgegebenen Kombination aus einem Abrichter und einem Werkzeug,
mit den Schritten:

- Vorgabe einer gewünschten Verzahnungsgeometrie des Werkstückes,
- Bestimmung, ob mit der vorgegebenen Kombination aus Abrichter und Werkzeug das Werkzeug in Linienkontakt so abrichtbar und das Werkstück mit dem abgerichteten Werkzeug so bearbeitbar ist, dass die gewünschte Verzahnungsgeometrie zumindest innerhalb einer zulässigen Toleranz erzeugbar ist,
- Ausgabe von Informationen zur Herstellbarkeit des Werkstückes auf Grundlage der Bestimmung,

wobei bevorzugt Daten zu mehreren und weiter bevorzugt allen mit der vorgegebenen Kombination aus einem Abrichter und einem Werkzeug herstellbaren Verzahnungsgeometrien des Werkstückes berechnet werden, insbesondere Minimal- und/oder Maximalwerte zu erzielbaren Modifikationen, und weiter bevorzugt die gewünschte Verzahnungsgeometrie des Werkstückes mit den Daten verglichen wird.

4. Verfahren zur Bestimmung einer Mehrzahl von Abrichtern und/oder einer Mehrzahl von Werkzeugen zur Herstellung von Werkstücken mit gewünschten Verzahnungsgeometrien, mit den Schritten:

- Vorgabe einer Mehrzahl von gewünschten Verzahnungsgeometrien von Werkstücken und/oder eines gewünschten Bereiches von Verzahnungsgeometrien von Werkstücken,
- Bestimmung einer Mehrzahl von Abrichtern und/oder einer Mehrzahl von Werkzeugen in Abhängigkeit von der Mehrzahl von gewünschten Verzahnungsgeometrien von Werkstücken und/oder des gewünschten Bereiches von Verzahnungsgeometrien von Werkstücken in der Art, dass möglichst viele der gewünschten Verzahnungsgeometrien von Werkstücken und/oder ein möglichst großer Bereich des gewünschten Bereiches von Verzahnungsgeometrien von Werkstücken durch eine Kombination eines Abrichters und eines Werkzeuges aus der Mehrzahl von Abrichtern und/oder der Mehrzahl von Werkzeugen zumindest innerhalb einer zulässigen Toleranz erzeugbar ist.

5. Verfahren nach einem der Aspekte 1 bis 3, wobei es sich bei der gewünschten Verzahnungsgeometrie des Werkstückes um eine modifizierte Verzahnungsgeometrie handelt und/oder wobei das Werkzeug modifiziert abgerichtet wird, oder Verfahren nach Aspekt 3 oder 4, wobei die Mehrzahl von gewünschten Verzahnungsgeometrien von Werkstücken und/oder der gewünschte Bereich von Verzahnungsgeometrien von Werkstücken mindestens eine und bevorzugt mehrere modifizierte Verzahnungsgeometrien umfasst.

6. Verfahren nach einem der vorangegangenen Aspekte, wobei das Profil des Abrichters und/oder Modifikationen des Werkzeuges, welche durch eine geeignete Einstellung der Bewegungsachsen der Abrichtmaschine beim Abrichten mit dem Abrichter erzeugt werden können, bei der Auswahl und/oder Bestimmung des oder der Abrichter und/oder des oder der Werkzeuge/s und/oder der Überprüfung der Herstellbarkeit berücksichtigt werden.

7. Verfahren nach Aspekt 6, wobei eine durch eine geeignete Einstellung der Bewegungsachsen der Abrichtmaschine beim Abrichten erzeugbare Veränderung des Profilwinkels und/oder der Balligkeit des Werkzeuges berücksichtigt wird,
und/oder wobei berücksichtigt wird, dass die Modifikation des Werkzeuges an mindestens zwei und bevorzugt drei Wälzwinkeln vorgebbar und durch eine geeignete Einstellung der Bewegungsachsen der Abrichtmaschine beim Abrichten erzeugbar ist,
und/oder wobei berücksichtigt wird, dass eine Zuordnung eines bestimmten Radius des Abrichters zu einem bestimmten Radius des Werkzeuges erfolgen kann,
und/oder wobei es sich bei der gewünschten Verzahnungsgeometrie des Werkstückes um eine reine Profilmodifikation handelt und/oder wobei es sich bei der auf dem Werkzeug erzeugten Verzahnungsgeometrie um eine reine Profilmodifikation handelt
und/oder wobei es sich bei der Mehrzahl von gewünschten Verzahnungsgeometrien von Werkstücken und/oder der gewünschten Bereichen von Verzahnungsgeometrien von Werkstücken nur um Verzahnungsgeometrien handelt, welche keine Modifikationen oder reine Profilmodifikationen aufweisen, und/oder wobei bei der Auswahl der Abrichter und/oder Werkzeuge nur die auf dem Werkzeug erzeugbaren Verzahnungsgeometrien berücksichtigt werden, welche keine Modifikationen oder reine Profilmodifikationen aufweisen und/oder erzeugen,
und/oder wobei durch Abweichungen in den Bewegungsachsen der Abrichtmaschine verursachte Fehler in der auf dem Werkzeug beim Abrichten erzeugten Modifikation bei der Bestimmung und/oder Auswahl des oder der Abrichter und/oder Werkzeuge berücksichtigt werden, insbesondere in der Art, dass solche Abrichter und/oder Werkzeuge bestimmt oder ausgewählt werden, durch welche die Fehler verringert werden können.

8. Verfahren nach Aspekt 6 oder 7, wobei sich durch die Veränderung der Position des Abrichters zum Werkzeug beim Abrichten in Abhängigkeit von der Werkzeugbreitenposition erzeugbare gezielte Modifikationen der Oberflächengeometrie des Werkzeuges berücksichtigt werden,
wobei bevorzugt berücksichtigt wird, dass die gezielte Modifikationen der Oberflächengeometrie des Werkzeuges an einem Wälzwinkel als eine Funktion $C_{0FS}$ der Position in Werkzeugbreitenrichtung vorgebbar ist
und/oder wobei bevorzugt berücksichtigt wird, dass zumindest die Steigung und/oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist,
und/oder wobei bevorzugt berücksichtigt wird, dass die gezielte Modifikation der Oberflächengeometrie des Werkzeuges an mindestens zwei und bevorzugt drei Wälzwinkeln als eine Funktion der Werkzeugbreitenposition vorgebbar ist,
und/oder wobei bevorzugt berücksichtigt wird, dass eine Zuordnung eines bestimmten Radius des Abrichters zu einem bestimmten Radius des Werkzeuges möglich ist, wobei weiter bevorzugt berücksichtigt wird, dass die Zuordnung als eine Funktion der Werkzeugbreitenposition vorgebbar ist,
und/oder wobei es sich bei der gewünschten Verzahnungsgeometrie des Werkstückes um von der Werkstückbreitenposition abhängige Modifikation handelt und/oder wobei es sich bei der auf dem Werkzeug erzeugten Verzahnungsgeometrie um eine von der Werkzeugbreitenposition abhängige Modifikation handelt,
und/oder wobei die Mehrzahl von gewünschten Verzahnungsgeometrien von Werkstücken und/oder der gewünschte Bereich von Verzahnungsgeometrien von Werkstücken mindestens eine und bevorzugt mehrere Verzahnungsgeometrien umfasst, welche von der Werkstückbreitenposition abhängt oder abhängen, und/oder wobei bei der Auswahl der Abrichter und/oder Werkzeuge auch solche auf dem Werkzeug erzeugbaren Verzahnungsgeometrien berücksichtigt werden, welche von der Werkzeugbreitenposition abhängen.

9. Verfahren nach einem der vorangegangenen Aspekte, wobei bei der Auswahl und/oder Bestimmung des oder der Abrichter und/oder des oder der Werkzeuge die sich durch die Makrogeometrie des Werkzeuges und/oder des Abrichters ergebenden Einschränkungen im Hinblick auf die Modifikationen, welche durch ein bestimmtes Profil des Abrichters und/oder eine geeignete Einstellung der Bewegungsachsen der Abrichtmaschine beim Abrichten erzeugt werden können, berücksichtigt werden, wobei insbesondere die Gangzahl und/oder der Durchmesser und/oder der Profilwinkel des Werkzeuges und/oder der Durchmesser des Abrichters berücksichtigt werden, und/oder mögliche Kollisionen des Abrichters beim einflankigen Abrichten mit der Gegenflanke, und/oder ein Unterhöhlen der Werkzeugzähne, und/oder eine relative Profilstreckung und/oder -stauchung.

10. Verfahren nach einem der vorangegangenen Aspekte, wobei bei der Auswahl und/oder Bestimmung des oder der Abrichter und/oder des oder der Werkzeuge Modifikationen, welche durch eine Veränderung der Kinematik der Verzahnmaschine bei der Bearbeitung eines Werkstückes mit dem durch den Abrichter abgerichteten Werkzeug erzeugbar sind, berücksichtigt werden,
und/oder wobei berücksichtigt wird, dass bei den Abrichtern auch nur einzelne Bereiche in Kontakt mit dem Werkstück gebracht werden können und/oder die Abrichter die verschiedene Bereiche aufweisen können, die bei unterschiedlichen Hüben in den Einsatz kommen, und/oder dass auch mehrere Abrichter aus der Mehrzahl von Abrichtern in aufeinanderfolgenden Hüben unterschiedliche Bereiche des Werkzeuges abrichten können.

11. Vorrichtung und/oder Softwareprogramm zur Auswahl einer zur Herstellung einer gewünschten Verzahnungsgeometrie eines Werkstückes geeigneten Kombination aus einem Abrichter und einem Werkzeug, und/oder zur Bestimmung der Herstellbarkeit eines Werkstückes mit gewünschter Verzahnungsgeometrie mittels einer vorgegebenen Kombination aus einem Abrichter und einem Werkzeug,
mit einer Datenbankfunktion, welche für eine Mehrzahl von Kombination von Abrichtern und/oder Werkzeugen jeweils Daten zu den durch die Kombination erzielbaren Verzahnungsgeometrien umfasst,
und/oder mit einer Berechnungsfunktion, welche für mindestens eine und bevorzugt eine Mehrzahl von Kombination von Abrichtern und/oder Werkzeugen jeweils Daten zu den durch die Kombination erzielbaren Verzahnungsgeometrien berechnet, wobei die Daten bevorzugt Informationen zu den durch eine Kombination minimal und/oder maximal erreichbaren Modifikationen und/oder den durch eine Kombination erreichbaren Bereich an Modifikationen umfassen,
wobei weiterhin bevorzugt eine Eingabefunktion vorhanden ist, über welche eine gewünschte Verzahnungsgeometrie eines Werkstückes eingebbar ist, und/oder eine Bestimmungsfunktion, welche mindestens eine Kombination aus einem Abrichter und einem Werkzeug bestimmt, durch welche die gewünschte Verzahnungsgeometrie des Werkstückes zumindest innerhalb einer zulässigen Toleranz erzeugbar ist, und/oder welche überprüft, ob ein Werkstück mit einer gewünschten Verzahnungsgeometrie mittels einer vorgegebenen Kombination aus einem Abrichter und einem Werkzeug herstellbar ist, wobei die Bestimmungsfunktion bevorzugt auf die Datenbankfunktion und/oder die Berechnungsfunktion zurückgreift,
und/oder wobei weiterhin bevorzugt eine Eingabefunktion vorhanden ist, über welche Daten zu einer Kombination aus Abrichter und Werkzeug und/oder einer Mehrzahl von Abrichtern und/oder Werkzeugen eingebbar sind,
und/oder wobei weiterhin bevorzugt eine Eingabefunktion vorhanden ist, über welche Vorgaben zu einer Kombination aus Abrichter und Werkzeug und/oder einer Mehrzahl von Abrichtern und/oder Werkzeugen eingebbar sind, wobei die Bestimmungsfunktion auf Grundlage der Vorgaben eine geeignete Kombination aus Abrichter und Werkzeug bestimmt,
und/oder wobei weiterhin bevorzugt die Daten der Datenbankfunktion und/oder der Berechnungsfunktion Modifikationen des Werkzeuges, welche durch eine geeignete Einstellung der Bewegungsachsen der Abrichtmaschine beim Abrichten mit dem Abrichter erzeugt werden können, berücksichtigen,
und/oder wobei weiterhin bevorzugt eine Bestimmungsfunktion vorhanden ist, welche die bezüglich einer bestimmten Kombination von Abrichter und Werkzeug notwendigen Einstellungen der Bewegungsachsen der Abrichtmaschine beim Abrichten bestimmt, welche zur Erzeugung einer Verzahnungsgeometrie des Werkzeuges führen, durch welche die gewünschte Verzahnungsgeometrie eines Werkstückes zumindest innerhalb einer zulässigen Toleranz erzeugbar ist, und/oder eine Ausgabefunktion, welche die notwendigen Einstellungen der Bewegungsachsen der Abrichtmaschine beim Abrichten ausgibt,
und/oder wobei weiterhin bevorzugt die Datenbankfunktion und/oder Berechnungsfunktion so ausgestaltet sind, dass ein Verfahren nach einem der vorangegangenen Aspekte durchführbar ist und/oder so ausgestaltet sind, dass die im Rahmen eines der Verfahren nach einem der vorangegangenen Aspekte im Hinblick auf die Auswahl der Kombination berücksichtigten Elemente in den Daten enthalten sind.

12. Vorrichtung und/oder Softwareprogramm zur Bestimmung einer Mehrzahl von Abrichtern und/oder einer Mehrzahl von Werkzeugen zur Herstellung von Werkstücken mit gewünschten Verzahnungsgeometrien,
mit einer Datenbankfunktion, welche für eine Mehrzahl von Kombination von Abrichtern und/oder Werkzeugen jeweils Daten zu den durch die Kombination erzielbaren Verzahnungsgeometrien umfasst,
und/oder mit einer Berechnungsfunktion, welche für eine Mehrzahl von Kombination von Abrichtern und/oder Werkzeugen jeweils Daten zu den durch die Kombination erzielbaren Verzahnungsgeometrien berechnet,
wobei die Daten bevorzugt Informationen zu den durch eine Kombination minimal und/oder maximal erreichbaren Modifikationen und/oder den durch eine Kombination erreichbaren Bereich an Modifikationen umfassen,
wobei weiterhin bevorzugt eine Eingabefunktion vorhanden ist, über welche eine Mehrzahl von gewünschten Verzahnungsgeometrien von Werkstücken und/oder ein gewünschter Bereich von Verzahnungsgeometrien von Werkstücken eingebbar ist, und/oder eine Bestimmungsfunktion, welche eine Mehrzahl von Abrichtern und/oder eine Mehrzahl von Werkzeugen so bestimmt, dass möglichst viele der gewünschten Verzahnungsgeometrien von Werkstücken und/oder ein möglichst großer Bereich des gewünschten Bereiches von Verzahnungsgeometrien von Werkstücken durch eine Kombination eines Abrichters und eines Werkzeuges aus der Mehrzahl von Abrichtern und/oder der Mehrzahl von Werkzeugen zumindest innerhalb einer zulässigen Toleranz erzeugbar ist,
und/oder wobei weiterhin bevorzugt eine Eingabefunktion vorhanden ist, über welche bereits vorhandene Abrichter und/oder Werkzeuge eingebbar sind, wobei die Bestimmungsfunktion die vorhandenen Abrichter und/oder Werkzeuge ergänzt, und/oder wobei weiterhin bevorzugt eine Eingabefunktion vorhanden ist, über welche eine maximal zulässige Anzahl an Abrichtern und/oder Werkzeugen für die Bestimmungsfunktion vorgebbar ist,
und/oder wobei weiterhin bevorzugt die Datenbankfunktion und/oder Berechnungsfunktion so ausgestaltet sind, dass ein Verfahren nach einem der vorangegangenen Aspekte durchführbar ist und/oder so ausgestaltet sind, dass die im Rahmen eines der Verfahren nach einem der vorangegangenen Aspekte im Hinblick auf die Auswahl der Kombination berücksichtigten Elemente in den Daten enthalten sind.

13. Vorrichtung und/oder Softwareprogramm nach Aspekt 11 oder 12, wobei die Vorrichtung ein Display aufweist oder das Softwareprogramm ein Display so ansteuert, dass die mindestens eine durch die Bestimmungsfunktion bestimmte geeignete Kombination aus einem Abrichter und einem Werkzeug angezeigt wird, wobei bevorzugt dann, wenn mehrere geeignete Kombinationen aus einem Abrichter und einem Werkzeug bestimmt wurden, eine der Kombinationen auswählbar ist, und/oder wobei die Mehrzahl an Abrichtern und/oder Werkzeugen angezeigt werden, wobei bevorzugt eine Auswahl aus den Abrichtern und/oder Werkzeugen möglich ist, wobei ausgewählte Abrichter und/oder Werkzeuge einer Bestellfunktion zuführbar sind.

14. Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter unabhängig voneinander einstellbar sind, und mit einer Steuerung, welche eine Vorrichtung und/oder ein Softwareprogramm nach einem der Aspekte 11 bis 13 umfasst,
wobei die Steuerung bevorzugt eine Eingabefunktion aufweist, durch welche eine gewünschte Modifikation eines Werkstückes vorgebbar ist,
und/oder wobei bevorzugt die Steuerung eine Kombination aus Abrichter und Werkzeug bestimmt, durch welche die gewünschte Verzahnungsgeometrie des Werkstückes zumindest innerhalb einer zulässigen Toleranz erzeugbar ist,
wobei die Abrichtmaschine bevorzugt ein Display aufweist, auf welcher die Kombination aus Abrichter und Werkzeug angezeigt wird,
und/oder wobei weiterhin bevorzugt die Steuerung eine Berechnungsfunktion aufweist, welche aus der gewünschten Modifikation des Werkstückes die zu ihrer Erzeugung notwendigen Einstellungen der Bewegungsachsen beim Abrichten mit Linienkontakt zwischen dem Abrichter und dem Werkzeug bestimmt,
und wobei die Steuerung bevorzugt eine Steuerungsfunktion aufweist, welche die entsprechende Einstellung der Bewegungsachsen beim Abrichten mit Linienkontakt zwischen Abrichter und Werkzeug vornimmt,
wobei die Eingabefunktion, die Berechnungsfunktion und die Steuerungsfunktion so ausgestaltet sind, dass sie zur Durchführung eines der vorangegangenen Verfahren eingesetzt werden können.

15. Verzahnmaschine mit einer Abrichtmaschine nach Aspekt 14 und/oder einer Vorrichtung und/oder einem Softwareprogramm nach einem der Aspekte 11 bis 13, wobei die Verzahnmaschine bevorzugt eine Werkstückaufnahme und eine ggf. zusätzlich zu der Werkzeugaufnahme der Abrichtmaschine vorgesehene Werkzeugaufnahme aufweist, und eine Verzahnbearbeitungssteuerung zur Ansteuerung von Werkstückaufnahme und Werkzeugaufnahme zur Durchführung einer Verzahnbearbeitung, insbesondere zur Durchführung eines Verfahrens nach einem der vorangegangenen Aspekte.

## A.III. Gezielte Stauchung und Streckung

1. Verfahren zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschritte das Werkzeug jeweils durch einen Abrichter abgerichtet wird, bevor weitere Bearbeitungsschritte an dem selben oder weiteren Werkstücken durchgeführt werden,
dadurch gekennzeichnet,
dass bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert wird.

2. Verfahren nach Aspekt 1, wobei die zusätzliche Verstellung der Bewegungsachsen der Abrichtmaschine Modifikationen der Verzahnungsgeometrie, welche sich durch den kleineren Werkzeugdurchmesser ergeben, zumindest teilweise ausgleicht, und/oder wobei die zusätzliche Verstellung der Bewegungsachsen der Abrichtmaschine gegenüber einem Abrichten ohne eine solche zusätzliche Verstellung eine Veränderung der sich beim Abrichten ergebenden Profilballigkeit bewirken, und/oder wobei die zusätzliche Verstellung so gewählt wird, dass eine Abweichung der sich auf dem Werkstück ergebenden Verzahnungsgeometrie von einer gewünschten Verzahnungsgeometrie reduziert und/oder minimiert wird, und/oder wobei die zusätzliche Verstellung eine Abweichung der durch den Abrichter auf dem Werkzeug erzeugten Verzahnungsgeometrie von einer Sollgeometrie reduziert oder minimiert.

3. Verfahren zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschrittes das Werkzeug jeweils abgerichtet wird, bevor weitere Bearbeitungsschritte an dem selben oder weiteren Werkstücken durchgeführt werden,
dadurch gekennzeichnet,
dass bei einem späteren Abrichtvorgang der Profilwinkel des Werkzeuges gegenüber einem früheren Abrichtvorgang geändert wird, so dass das oder die Werkstücke nach dem späteren Abrichtvorgang mit einem anderen Profilwinkel der Verzahnung des Werkzeuges verzahnbearbeitet wird oder werden als nach einem früheren Abrichtvorgang, wobei der Profilwinkel jeweils so gewählt wird, dass eine Abweichung der sich auf dem Werkstück ergebenden Verzahnungsgeometrie zu einer gewünschten Verzahngeometie reduziert oder minimiert wird, und/oder wobei durch die Änderung des Profilwinkels eine Streckung und/oder Stauchung einer durch einen modifizierten Abrichter auf dem Werkzeug erzeugten Modifikation reduziert oder minimiert wird.

4. Verfahren nach Aspekt 3, wobei eine asymmetrische Verzahnung hergestellt wird und wobei der Profilwinkel des Werkzeugs auf rechter und linker Flanke so gewählt wird, dass eine Abweichung der sich auf dem Werkstück auf linker und rechter Flanke ergebenden Verzahnungsgeometrie zu einer gewünschten Verzahnungsgeometrie insgesamt reduziert und/oder minimiert wird und/oder eine Streckung und/oder Stauchung einer durch einen modifizierten Abrichter auf dem Werkzeug erzeugten Modifikation auf linker und rechter Flanke insgesamt reduziert oder minimiert wird.

5. Verfahren nach einem der vorangegangenen Aspekte, wobei ein Werkzeug mit einer konischen Grundform eingesetzt wird, wobei der Konuswinkel bevorzugt so gewählt wird, dass die sich auf dem Werkstück ergebende Verzahnungsgeometrie möglichst geringe Abweichungen zu einer gewünschten Verzahngeometie aufweist, und/oder wobei durch die Änderung des Profilwinkels des Werkzeugs eine Streckung und/oder Stauchung einer durch einen modifizierten Abrichter auf dem Werkzeug erzeugten Modifikation reduziert oder minimiert wird, insbesondere beim Herstellen einer asymmetrischen Verzahnung, und/oder wobei der Konuswinkel bei einem späteren Abrichtvorgang gegenüber einem früheren Abrichtvorgang geändert wird.

6. Verfahren nach einem der vorangegangenen Aspekte zur Herstellung einer Mehrzahl von Werkstücken, wobei nach der Herstellung eines oder mehrerer Werkstücke das Werkzeug jeweils abgerichtet wird, bevor weitere Werkstücke bearbeitet werden.

7. Verfahren zur Herstellung eines Werkstückes mit einer gewünschten Verzahnungsgeometrie mittels eines durch einen modifizierten Abrichter geeignet abgerichteten Werkzeuges, mit den Schritten:

- Vorgabe einer gewünschten Verzahnungsgeometrie des Werkstückes, und
- Bestimmung eines geeigneten Profilwinkels des Werkzeuges und einer geeigneten relativen Position zwischen Abrichter und Werkzeug beim Abrichten des Werkzeuges zur Bereitstellung der gewünschten Verzahnungsgeometrie des Werkstückes zumindest innerhalb einer zulässigen Toleranz beim Bearbeiten durch das Werkzeug.

8. Verfahren nach Aspekt 7, wobei der Profilwinkel und die relative Position zwischen Abrichter und Werkzeug beim Abrichten so bestimmt werden, dass sich beim Abrichten eine gewünschte Stauchung und/oder Streckung der Modifikation des Abrichters auf dem Werkzeug ergibt, wobei der Profilwinkel insbesondere so bestimmt wird, dass eine sich durch die relative Position zwischen Abrichter und Werkzeug beim Abrichten ergebende Stauchung und/oder Streckung der Modifikation des Abrichters auf dem Werkzeug durch den Profilwinkel ausgeglichen wird.

9. Verfahren zum modifizierten Abrichten eines Werkzeuges, welches zur Verzahnbearbeitung eines Werkstückes einsetzbar ist, auf einer Abrichtmaschine, wobei zum Abrichten des Werkzeuges ein modifizierter Abrichter eingesetzt wird, dadurch gekennzeichnet,
dass die Bewegungsachsen der Abrichtmaschine beim Abrichten des Werkzeuges so eingestellt und/oder die Makrogeometrie des Werkzeuges und/oder des Abrichters, insbesondere die Gangzahl und/oder der Durchmesser und/oder der Profilwinkel und/oder der Konuswinkel des Werkzeugs und/oder der Durchmesser des Abrichters, so gewählt wird, dass die Modifikation des Abrichters um einen vorgegebenen Betrag gestaucht oder gestreckt auf dem Werkzeug und/oder gestaucht oder gestreckt auf dem Werkstück aufgebracht wird.

10. Verfahren nach einem der vorangegangenen Aspekte, wobei eine gewünschte Modifikation des Werkzeuges an mindestens zwei und bevorzugt drei Wälzwinkeln vorgegeben und durch das Einstellen der Bewegungsachsen der Abrichtmaschine erzeugt wird, und/oder wobei die relative Position zwischen Abrichter und Werkzeug beim Abrichten so bestimmt wird, dass eine gewünschte Profilballigkeit auf dem Werkzeug erzeugt wird, und/oder wobei eine Zuordnung eines bestimmten Radius des Abrichters zu einem bestimmten Radius des Werkzeuges vorgegeben wird und durch eine entsprechende Einstellung der Bewegungsachsen der Abrichtmaschine erzielt wird.

11. Vorrichtung und/oder Softwareprogramm zur Bestimmung der zum mehrmaligen Abrichten eines Werkzeuges mit dem gleichen Abrichter verwendeten Einstellungen der Bewegungsachsen einer Abrichtmaschine bei einem Verfahren gemäß einem der vorangegangenen Aspekte,
wobei vorteilhafterweise eine Eingabefunktion zur Eingabe eines ersten Werkzeugdurchmessers vorgesehen ist, und eine Bestimmungsfunktion zur Bestimmung der zum Abrichten des Werkzeuges beim ersten Werkzeugdurchmesser einzusetzenden Einstellungen der Bewegungsachsen der Abrichtmaschine, wobei weiterhin vorteilhafterweise eine Eingabefunktion zur Eingabe eines zweiten Werkzeugdurchmessers, auf welchen der Abrichter ausgelegt ist, vorgesehen ist, oder eine Eingabefunktion zur Eingabe einer gewünschten Verzahnungsgeometrie des Werkstückes oder des Werkzeuges.

12. Vorrichtung und/oder Softwareprogramm zur Bestimmung der zur Herstellung eines Werkstückes mit einer gewünschten Verzahnungsgeometrie mittels eines durch einen modifizierten Abrichter abgerichteten Werkzeuges einzusetzenden Einstellungen der Bewegungsachsen der Abrichtmaschine oder Geometrie des Werkzeuges, mit einer Eingabefunktion zur Eingabe einer gewünschten Verzahnungsgeometrie des Werkstückes und/oder zur Eingabe einer gewünschten Streckung und/oder Stauchung der Modifikation des Abrichters auf dem Werkzeug oder Werkstück, und einer Bestimmungsfunktion zur Bestimmung eines geeigneten Profilwinkels des Werkzeuges und einer geeigneten relativen Position zwischen Abrichter und Werkzeug beim Abrichten zur Bereitstellung der gewünschten Verzahnungsgeometrie des Werkstückes beim Bearbeiten durch das Werkzeug und/oder zur Bereitstellung der gewünschten Streckung und/oder Stauchung der Modifikation des Abrichters auf dem Werkzeug oder Werkstück, und/oder zur
Bestimmung der Einstellung der Bewegungsachsen der Abrichtmaschine beim Abrichten des Werkzeuges und/oder der Makrogeometrie des Werkzeuges und/oder des Abrichters, insbesondere die Gangzahl und/oder der Durchmesser und/oder der Profilwinkel und/oder der Konuswinkel des Werkzeugs und/oder der Durchmesser des Abrichters, und/oder zur Bestimmung der Einstellung der Bewegungsachsen der Abrichtmaschine beim Abrichten des Werkzeuges und/oder der Makrogeometrie des Werkzeuges bei einem Verfahren gemäß einem der vorangegangenen Aspekte.

13. Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter unabhängig voneinander einstellbar sind, und mit einer Steuerung, welche eine Vorrichtung und/oder ein Softwareprogramm nach einem der Aspekte 11 oder 12 umfasst, und/oder eine Funktion zur Durchführung der Abrichtschritte in einem Verfahren nach einem der vorangegangenen Aspekte aufweist, insbesondere eine Funktion zur mehrmaligen Durchführung eines Abrichtvorgangs eines Werkzeuges mit geänderten Einstellungen der Bewegungsachsen der Abrichtmaschine, wobei die Steuerung bevorzugt so programmiert ist, dass sie bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert.

14. Verzahnmaschine mit einer Abrichtmaschine nach Aspekt 13 und/oder einer Vorrichtung und/oder einem Softwareprogramm nach einem der Aspekte 11 oder 12, wobei die Verzahnmaschine bevorzugt eine Werkstückaufnahme und eine ggf. zusätzlich zu der Werkzeugaufnahme der Abrichtmaschine vorgesehene Werkzeugaufnahme aufweist, und eine Verzahnbearbeitungssteuerung zur Ansteuerung von Werkstückaufnahme und Werkzeugaufnahme zur Durchführung einer Verzahnbearbeitung, insbesondere zur Durchführung eines Verfahrens nach einem der vorangegangenen Aspekte.

**A.IV. Topologische Modifikation**

1. Verfahren zum Abrichten eines Werkzeuges, welches zur Verzahnbearbeitung eines Werkstückes einsetzbar ist, auf einer Abrichtmaschine, wobei das Abrichten mit Linienkontakt zwischen Abrichter und Werkzeug erfolgt, wobei eine gezielte Modifikation der Oberflächengeometrie des Werkzeuges erzeugt wird, indem die Position des Abrichters zum Werkzeug beim Abrichten in Abhängigkeit von der Werkzeugbreitenposition variiert wird, dadurch gekennzeichnet,

dass die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, und/oder

dass die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens zwei Wälzwinkeln als eine Funktion der Werkzeugbreitenposition vorgebbar ist, und/oder

dass die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Zuordnung bevorzugt als eine Funktion der Werkzeugbreitenposition vorgebbar ist, und/oder

dass zumindest die Steigung der durch die Veränderung der Position des Abrichters zum Werkzeug beim Abrichten in Abhängigkeit von der Werkzeugbreitenposition erzeugten gezielten Modifikation der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, und zusätzlich eine Zuordnung eines bestimmten Radius des Abrichters zu einem bestimmten Radius des Werkzeuges erfolgt, wobei die Zuordnung bevorzugt als eine Funktion der Werkzeugbreitenposition vorgebbar ist, und/oder

dass zumindest die Balligkeit der durch die Veränderung der Position des Abrichters zum Werkzeug beim Abrichten in Abhängigkeit von der Werkzeugbreitenposition erzeugten gezielten Modifikation der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist,

und/oder dass eine Modifikation des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist,

und/oder dass eine Modifikation des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert, und/oder

dass mindestens zwei Freiheitsgrade der relativen Position des Abrichters zum Werkzeug beim Abrichten in Linienkontakt unabhängig voneinander als Funktion der Werkzeugbreitenposition vorgebbar sind und/oder angesteuert werden.

2. Verfahren nach Aspekt 1, wobei die durch die Veränderung der Position des Abrichters zum Werkzeug beim Abrichten in Abhängigkeit von der Werkzeugbreitenposition erzeugte gezielte Modifikation der Oberflächengeometrie des Werkzeuges im Wälzbild in der ersten Richtung zumindest näherungsweise als eine lineare, quadratische oder kubische Funktion beschreibbar ist, deren Koeffizienten in Werkzeugbreitenrichtung durch Funktionen $C_{0FS}$, $C_{1FS}$, $C_{2FS}$ und/oder $C_{3FS}$ und/oder durch Koeffizienten-Funktionen $F_{FtC,1}$ für den konstanten Anteil, $F_{FtL,1}$ für den linearen Anteil und/oder $F_{FtQ,1}$ für den quadratischen Anteil gegeben sind.

3. Verfahren nach einem der vorangegangenen Aspekte, wobei
die durch die Veränderung der Position des Abrichters zum Werkzeug beim Abrichten in Abhängigkeit von der Werkzeugbreitenposition erzeugte gezielte Modifikation der Oberflächengeometrie des Werkzeuges an mindestens drei oder vier Wälzwinkeln als eine Funktion der Werkzeugbreitenposition vorgebbar ist,
und/oder wobei eine Zuordnung eines bestimmten Radius des Abrichters zu einem bestimmten Radius des Werkzeuges erfolgt, wobei die Zuordnung bevorzugt als eine Funktion der Werkzeugbreitenposition vorgebbar ist,
und/oder wobei eine Zuordnung zweier bestimmter Radien des Abrichters zu zwei bestimmten Radien des Werkzeuges erfolgt, wobei die Zuordnung bevorzugt als eine Funktion der Position in Werkzeugbreitenrichtung vorgebbar ist,
und/oder wobei mindestens einer der Wälzwinkel und weiter bevorzugt zwei oder drei Wälzwinkel, an welchem oder welchen die Modifikation vorgebbar ist, in Werkzeugbreitenrichtung unterschiedlich gewählt wird oder werden, und weiter bevorzugt als eine Funktion der Werkzeugbreitenposition vorgebbar ist oder werden.

4. Verfahren nach einem der vorangegangenen Aspekte, wobei das Abrichten einflankig erfolgt und die mindestens zwei oder drei Wälzwinkel auf einer Flanke angeordnet sind, oder wobei das Abrichten zweiflankig erfolgt und die mindestens zwei oder drei Wälzwinkel auf die zwei Flanken verteilt sind und/oder wobei das Abrichten zweiflankig erfolgt und ein Werkzeug mit einer konischen Grundform eingesetzt wird, wobei bevorzugt der Konuswinkel zum Einstellen der Modifikation eingesetzt wird.

5. Verfahren zum modifizierten Abrichten eines Werkzeuges, welches zur Verzahnbearbeitung eines Werkstückes einsetzbar ist, auf einer Abrichtmaschine, wobei zum Abrichten des Werkzeuges ein modifizierter Abrichter eingesetzt wird, insbesondere Verfahren nach einem der vorangegangenen Aspekte,
dadurch gekennzeichnet,
dass die Position, in welcher die Modifikation des Abrichters beim Abrichten auf dem Werkzeug aufgebracht wird, in Abhängigkeit von der Werkzeugbreitenposition vorgebbar ist oder durch Ansteuerung der Bewegungsachsen der Abrichtmaschine beim Abrichten verändert wird.

6. Verfahren zum modifizierten Abrichten eines Werkzeuges, welches zur Verzahnbearbeitung eines Werkstückes einsetzbar ist, auf einer Abrichtmaschine, wobei das Abrichten in mindestens einem ersten und einem zweiten Hub jeweils mit Linienkontakt erfolgt, insbesondere nach einem der vorangegangenen Aspekte, dadurch gekennzeichnet, dass die Position, an welcher die in einem ersten Hub erzeugte Modifikation an die mit einem zweiten Hub erzeugte Modifikation anschließt, in Abhängigkeit von der Werkzeugbreitenposition verändert wird.

7. Verfahren nach Aspekt 6, wobei bevorzugt die Bewegungsachsen der Abrichtmaschine beim Abrichten in mindestens einem ersten und zweiten Hub zusätzlich zu der für die unterschiedliche Positionierung zwischen Abrichter und Werkzeug bei den beiden Hüben notwendigen Veränderung unterschiedlich eingestellt werden, um die Steigung und/oder Balligkeit der Modifikation bei mindestens einem der Hübe zu beeinflussen, wobei die Steigung und/oder Balligkeit bevorzugt als Funktion der Werkzeugbreitenposition vorgebbar sind,
und/oder wobei bevorzugt die gezielte Modifikation bei mindestens einem der Hübe so eingestellt wird, dass die durch den ersten Hub erzeugte Oberflächengeometrie in einem gewünschten Winkel und insbesondere tangential an die durch den zweiten Hub erzeugte Oberflächengeometrie anschließt,
und/oder wobei bevorzugt für mindestens einen und bevorzugt jeden Hub eine gewünschte Modifikation des Werkzeuges an mindestens zwei und bevorzugt drei Wälzwinkeln vorgegeben wird, wobei die Modifikation bevorzugt als Funktion der Werkzeugbreitenposition vorgebbar ist,
und/oder wobei für mindestens einen und bevorzugt jeden Hub eine Zuordnung eines bestimmten Radius des Abrichters zu einem bestimmten Radius des Werkzeuges erfolgt, wobei die Zuordnung bevorzugt als Funktion der Werkzeugbreitenposition vorgebbar ist,
und/oder wobei für den ersten und den zweiten Hub unterschiedliche Bereiche des Abrichters eingesetzt werden oder wobei für den ersten und den zweiten Hub unterschiedliche Abrichter eingesetzt werden, und/oder wobei einer der Hübe zum Erzeugen einer Modifikation des Zahnfußes oder des Zahnkopfes eingesetzt wird, bspw. zum Erzeugen einer Rücknahme des Zahnkopfes oder des Zahnfußes.

8. Verfahren nach einem der vorangegangenen Aspekte, wobei eine durch eine Modifikation des Abrichters erzeugte Modifikation mit einer durch die Veränderung der Position des Abrichters zum Werkzeug beim Abrichten erzeugten gezielten Modifikation der Oberflächengeometrie des Werkzeuges überlagert wird,
wobei bevorzugt die Position der durch eine Modifikation des Abrichters erzeugten Modifikation vorgebbar ist, insbesondere als eine Funktion der Position in Werkzeugbreitenrichtung vorgebbar ist und/oder durch eine Zuordnung eines bestimmten Radius des Abrichters zu einem bestimmten Radius des Werkzeuges, und/oder
wobei bevorzugt eine gewünschte Streckung oder Stauchung der Modifikation des Abrichters auf dem Werkzeug vorgebbar ist, welche bevorzugt als eine Funktion der Position in Werkzeugbreitenrichtung vorgebbar ist, insbesondere durch eine Zuordnung zweier bestimmter Radien des Abrichters zu zwei bestimmten Radien des Werkzeuges, und/oder wobei bevorzugt der modifizierte Abrichter über sein komplettes aktives Profil eine gleichbleibende Modifikation aufweist, bspw. eine gleichbleibende Balligkeit, oder wobei bevorzugt der modifizierte Abrichter in einem ersten Teilbereich seines Profils eine Modifikation aufweist, welche sich von der Profilform in einem zweiten Teilbereich unterscheidet, wobei die Modifikation im ersten Teilbereich vorteilhafterweise einen anderen Profilwinkel und/oder eine andere Balligkeit aufweist, wobei die Modifikation insbesondere eine Kante aufweisen kann, und/oder wobei der Abrichter beim Abrichten bevorzugt gleichzeitig in dem ersten und dem zweiten Bereich in Kontakt mit der Werkzeugoberfläche steht,
und/oder wobei ein Kombi-Abrichter zum gleichzeitigen Abrichten des Zahnkopfes und der Zahnflanke eingesetzt wird, wobei bevorzugt die Höhe des Zahnkopfes vorgegeben und durch Einstellung der Bewegungsachsen der Abrichtmaschine beim Abrichten erzeugt wird, wobei die Höhe des Zahnkopfes bevorzugt als eine Funktion der Werkzeugbreitenposition vorgebbar ist.

9. Verfahren nach einem der vorangegangenen Aspekte, wobei aus einer Mehrzahl an Einstellungen der Bewegungsachsen der Abrichtmaschine, welche die gleiche relative Position zwischen Abrichter und Werkzeug erzeugen, eine Einstellung gewählt wird, welche vorgegebene Bedingungen besser erfüllt, wobei bevorzugt die Einstellung gewählt wird, welche die gewünschte Relativposition mit höherer Genauigkeit und/oder geringeren Positionsfehlern bereitstellt und/oder wobei die Einstellung gewählt wird, welche geringere Verfahrbewegungen der Maschinenachsen erfordert, und/oder wobei die Einstellung gewählt wird, welche Kollisionen des Abrichters, des Werkzeuges und/oder von Maschinenteilen untereinander vermeidet,
und/oder wobei die durch das Werkzeug erzeugte Verzahngeometrie oder die auf dem Werkzeug durch das Abrichten erzeugte Verzahngeometrie vermessen wird und aus Abweichungen von einer Soll-Geometrie die beim Abrichten vorliegenden Abweichungen der Bewegungsachsen der Abrichtmaschine von ihren Solleinstellungen bestimmt werden.

10. Verfahren nach einem der vorangegangenen Aspekte, wobei bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation veränderbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander als Funktion der axialen Position des Werkzeuges, d.h. der Werkzeugbreitenposition, zur Beeinflussung der Modifikation entlang der Berührlinie herangezogen werden.

11. Verfahren nach einem der vorangegangenen Aspekte, wobei Fehler in der Oberflächengeometrie eines Abrichters durch Vorgabe entsprechender Korrekturwerte beim Einstellen der Bewegungsachsen der Abrichtmaschine zumindest teilweise korrigiert werden,
und/oder wobei ein Abrichter, welcher auf ein Werkzeug mit einer ersten Makrogeometrie und/oder ersten gewünschten Oberflächengeometrie ausgelegt wurde, zum Abrichten eines Werkzeuges mit einer zweiten Makrogeometrie und/oder zweiten gewünschten Oberflächengeometrie eingesetzt wird, wobei die sich durch die Auslegung auf das Werkzeug mit der ersten Makrogeometrie und/oder ersten gewünschten Oberflächengeometrie ergebenden Fehler durch eine entsprechende Einstellung der Bewegungsachsen der Abrichtmaschine beim Abrichten des Werkzeuges mit einer zweiten Makrogeometrie und/oder zweiten gewünschten Oberflächengeometrie zumindest teilweise ausgeglichen werden,

und/oder wobei die Einstellung der Bewegungsachsen der Abrichtmaschine beim Abrichten und/oder die Makrogeometrie oder Modifikation des Abrichters und/oder die Makrogeometrie des Werkzeuges mittels einer Ausgleichsrechnung bestimmt wird, wobei bevorzugt die durch die Veränderung der Einstellung der Bewegungsachsen der Abrichtmaschine erzielbaren Modifikationen im Wälzbild in einer Richtung mit einen Winkel $\rho_{FS}$ zur Werkzeugbreitenrichtung an zwei, drei oder vier Wälzwinkeln variiert und bevorzugt dazwischen interpoliert und insbesondere als lineare, quadratische und/oder kubische Funktion angenommen werden, und mit einer gewünschten Modifikation verglichen werden, wobei bevorzugt eine Abstandsfunktion zur Quantifizierung der Abweichung eingesetzt wird, wobei die Abstandsfunktion bevorzugt eine von der Position im Wälzbild abhängige Gewichtung aufweist.

12. Verfahren nach einem der vorangegangenen Aspekte, wobei ein Werkzeug eingesetzt wird, bei welchem mindestens ein Gang inaktiv und/oder ausgespart ist, und/oder bei welchem der Abrichter beim Abrichten einer ersten Flanke zumindest teilweise in die Kontur der gegenüberliegenden Flanke eingreift, und/oder wobei mindestens eine Zahnflanke so abgerichtet wird, dass sie beim Bearbeiten des Werkstückes nicht in Kontakt mit dem Werkstück kommt und daher inaktiv ist, wobei bevorzugt mindestens ein Gang so abgerichtet wird, dass er beim Bearbeiten des Werkstückes nicht in Kontakt mit dem Werkstück kommt und daher inaktiv ist,
wobei bevorzugt zwischen zwei aktiven Gängen mindestens ein inaktiver und/oder ausgesparter Gang vorgesehen ist,
und/oder wobei bevorzugt beim Bearbeiten des Werkstückes in Wälzkopplung nacheinander maximal jeder zweite Zahn in Eingriff mit dem Werkzeug kommt, und/oder wobei bevorzugt in Abhängigkeit von der Anzahl der Zähne des Werkstückes und/oder der Anzahl der Gänge in mindestens einem ersten Durchgang mindestens ein erster Teil der Zähne des Werkstückes bearbeitet wird, woraufhin das Werkstück relativ zum Werkstück gedreht wird, um mindestens einen zweiten Teil der Zähne in mindestens einem zweiten Durchgang zu bearbeiten.

13. Verfahren zur Herstellung eines Werkstückes mit modifizierter Verzahnungsgeometrie durch ein Wälzverfahren, insbesondere ein Diagonalwälzverfahren mittels eines modifizierten Werkzeuges,
wobei durch ein Verfahren gemäß einem der vorangegangenen Aspekte eine gezielte Modifikation der Oberflächengeometrie des Werkzeuges erzeugt wird, und
wobei die gezielte Modifikation des Werkzeuges durch das Wälzverfahren, insbesondere das Diagonalwälzverfahren eine entsprechende Modifikation auf der Oberfläche des Werkstückes erzeugt.

14. Vorrichtung und/oder Softwareprogramm zum Berechnen der zur Erzeugung einer gewünschten Modifikation eines Werkzeuges beim Abrichten im Linienkontakt mit einem vorgegebenen Abrichter notwendigen Relativposition zwischen Abrichter und Werkzeug oder der zu deren Bereitstellung notwenigen Einstellungen der Bewegungsachsen einer Abrichtmaschine, insbesondere zur Durchführung eines Verfahrens nach einem der vorangegangenen Aspekte,
mit
einer Eingabefunktion, durch welche die gewünschte Modifikation des Werkzeuges vorgebbar ist, und
eine Berechnungsfunktion, welche aus der gewünschten Modifikation die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen als Funktion der Werkzeugbreitenposition bestimmt,
wobei die Eingabefunktion und die Berechnungsfunktion so ausgestaltet sind, dass sie zur Durchführung eines der vorangegangenen Verfahren eingesetzt werden können, und/oder
wobei die Eingabefunktion und die Berechnungsfunktion so ausgestaltet sind,
dass die gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung und/oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, wobei die Modifikation durch den berechneten Verlauf der Relativposition oder der Einstellung der Bewegungsachsen der Abrichtmaschine erzeugbar ist,
und/oder
wobei die Eingabefunktion und die Berechnungsfunktion so ausgestaltet sind, dass die gezielte Modifikation der Oberflächengeometrie des Werkzeuges an mindestens zwei Wälzwinkeln als eine Funktion der Werkzeugbreitenposition vorgebbar ist, wobei die Modifikation durch den berechneten Verlauf der Relativposition oder der Einstellung der Bewegungsachsen der Abrichtmaschine erzeugbar ist,
und/oder
wobei die Eingabefunktion und die Berechnungsfunktion so ausgestaltet sind, dass die gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Modifikation durch den berechneten Verlauf der Relativposition oder der Einstellung der Bewegungsachsen der Abrichtmaschine erzeugbar ist, wobei die Zuordnung bevorzugt als eine Funktion der Werkzeugbreitenposition vorgebbar ist,

und/oder

wobei die Eingabefunktion und die Berechnungsfunktion so ausgestaltet sind, dass eine gezielte Modifikation der Oberflächengeometrie des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FTL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist,

und/oder

wobei die Eingabefunktion und die Berechnungsfunktion so ausgestaltet sind, dass eine gezielte Modifikation der Oberflächengeometrie des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert.

15. Vorrichtung und/oder Softwareprogramm zum Berechnen der zur Erzeugung einer gewünschten Modifikation eines Werkzeuges beim Abrichten im Linienkontakt mit einem vorgegebenen Abrichter notwendigen Relativposition zwischen Abrichter und Werkzeug oder der zu deren Bereitstellung notwendigen Einstellungen der Bewegungsachsen einer Abrichtmaschine, insbesondere zur Durchführung eines Verfahrens nach einem der vorangegangenen Aspekte, insbesondere Vorrichtung nach Aspekt 14,

mit

einer Eingabefunktion, durch welche eine vorgegebene Modifikation des Abrichters eingebbar und eine gewünschten Position der Modifikation des Abrichters auf dem Werkzeug vorgebbar sind, wobei die Vorgabe der gewünschten Position der Modifikation des Abrichters auf dem Werkzeug bevorzugt durch Zuordnung eines bestimmten Radius des Abrichters zu einem bestimmten Radius des Werkzeuges erfolgt, und

eine Berechnungsfunktion, welche aus der vorgegebenen Modifikation des Abrichters und der gewünschten Position der Modifikation des Abrichters auf dem Werkzeug die zu ihrer Erzeugung beim Abrichten mit Linienkontakt zwischen Abrichter und Werkzeug notwendige Relativposition zwischen Abrichter und Werkzeug oder die zu deren Bereitstellung notwendigen Einstellungen der Bewegungsachsen bestimmt, wobei die Eingabefunktion und die Berechnungsfunktion bevorzugt so ausgestaltet sind, dass sie zur Durchführung eines der vorangegangenen Verfahren eingesetzt werden können, und/oder

wobei die Eingabefunktion und die Berechnungsfunktion bevorzugt so ausgestaltet sind, dass über die Eingabefunktion die Position der Modifikation auf dem Werkzeug in Abhängigkeit von der Werkzeugbreitenposition vorgebbar ist und die Berechnungsfunktion die notwendige Relativposition zwischen Abrichter und Werkzeug oder die zu deren Bereitstellung notwendigen Einstellungen der Bewegungsachsen als Funktion der Werkzeugbreitenposition bestimmt.

16. Vorrichtung und/oder Softwareprogramm zum Berechnen der zur Erzeugung einer gewünschten Modifikation eines Werkzeuges beim Mehrhub-Abrichten im Linienkontakt mit einem Abrichter notwendigen Relativposition zwischen Abrichter und Werkzeug oder der zu deren Bereitstellung notwendigen Einstellungen der Bewegungsachsen einer Abrichtmaschine, insbesondere zur Durchführung eines Verfahrens nach einem der vorangegangenen Aspekte, insbesondere Vorrichtung nach Aspekt 14 oder 15,

mit einer Mehrhub-Berechnungsfunktion, welche die zum Mehrhub-Abrichten mit Linienkontakt zwischen Abrichter und Werkzeug notwendigen Einstellungen der Bewegungsachsen bestimmt,

mit einer Eingabefunktion, durch welche die Position, an welcher die in einem ersten Hub erzeugte Modifikation an die mit einem zweiten Hub erzeugte Modifikation anschließt, als eine Funktion der Werkzeugbreitenposition vorgebbar ist, und/oder mit einer Eingabefunktion und einer Bestimmungsfunktion, wobei durch die Eingabefunktion eine gewünschte Modifikation des Werkzeuges vorgebbar ist, und die Bestimmungsfunktion die zu deren Herstellung notwendigen Hübe bestimmt, wobei die Bestimmungsfunktion die Position, an welcher die in einem ersten Hub erzeugte Modifikation an die mit einem zweiten Hub erzeugte Modifikation anschließt, als eine Funktion der Werkzeugbreitenposition variiert oder bestimmt,

wobei die Mehrhub-Berechnungsfunktion aus der Position, an welcher die in einem ersten Hub erzeugte Modifikation an die mit einem zweiten Hub erzeugte Modifikation anschließt, die zu ihrer Erzeugung beim Abrichten mit Linienkontakt zwischen Abrichter und Werkzeug notwendigen Einstellungen der Bewegungsachsen bestimmt,

wobei bevorzugt die Eingabefunktion, die Berechnungsfunktion und die Steuerungsfunktion so ausgestaltet sind, dass sie zur Durchführung eines der vorangegangenen Verfahren eingesetzt werden können.

17. Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine eine Bewegungsachse aufweist, durch welche die Werkzeugbreitenposition einstellbar ist,

dadurch gekennzeichnet,

dass die Abrichtmaschine weitere Bewegungsachsen aufweist, durch welche mindestens weitere zwei und bevorzugt drei oder vier Freiheitsgrade der Relativposition zwischen Werkzeug und Abrichter unabhängig voneinander einstellbar sind, und wobei die Abrichtmaschine eine Steuerung aufweist, durch welche die Einstellung der weiteren zwei und bevorzugt drei oder vier Freiheitsgrade in Linienkontakt mit dem Abrichter unabhängig voneinander als Funktion der Werkzeugbreitenposition vorgebbar und/oder ansteuerbar ist,

und/oder

dass die Abrichtmaschine eine Steuerung mit einer Eingabefunktion aufweist, durch welche die gewünschte Modifikation des Werkzeuges als Funktion der Werkzeugbreitenposition vorgebbar ist,

wobei die Steuerung eine Berechnungsfunktion aufweist, welche aus der gewünschten Modifikation die zu ihrer Erzeugung notwendigen Einstellungen der Bewegungsachsen als Funktion der Werkzeugbreitenposition beim Abrichten mit Linienkontakt zwischen Abrichter und Werkzeug bestimmt,

und wobei die Steuerung eine Steuerungsfunktion aufweist, welche die entsprechende Einstellung der Bewegungsachsen als Funktion der Werkzeugbreitenposition beim Abrichten mit Linienkontakt zwischen Abrichter und Werkzeug vornimmt,

wobei die Eingabefunktion, die Berechnungsfunktion und die Steuerungsfunktion so ausgestaltet sind, dass sie zur Durchführung eines der vorangegangenen Verfahren eingesetzt werden können,

und/oder

wobei die Eingabefunktion, die Berechnungsfunktion und die Steuerungsfunktion so ausgestaltet sind, dass die gezielte Modifikation der Oberflächengeometrie des Werkzeuges an einem Wälzwinkel als eine Funktion $C_{0FS}$ der Position in Werkzeugbreitenrichtung vorgebbar ist und zumindest die Steigung und/oder Balligkeit der Oberflächengeometrie des Werkzeuges in einer ersten Richtung des Werkzeuges, welche einen Winkel $\rho_{FS}$ zur Werkzeugbreitenrichtung aufweist, als eine Funktion der Position in Werkzeugbreitenrichtung vorgebbar ist, wobei die Modifikation durch die von der Steuerungsfunktion vorgenommene Einstellung der Bewegungsachsen der Abrichtmaschine erzeugbar ist,

und/oder

wobei die Eingabefunktion, die Berechnungsfunktion und die Steuerungsfunktion so ausgestaltet sind, dass die gezielte Modifikation der Oberflächengeometrie des Werkzeuges an mindestens zwei Wälzwinkeln als eine Funktion der Werkzeugbreitenposition vorgebbar ist, wobei die Modifikation durch die von der Steuerungsfunktion vorgenommene Einstellung der Bewegungsachsen der Abrichtmaschine erzeugbar ist,

und/oder

wobei die Eingabefunktion, die Berechnungsfunktion und die Steuerungsfunktion so ausgestaltet sind, dass die gezielte Modifikation der Oberflächengeometrie des Werkzeuges an mindestens einem Wälzwinkel als eine Funktion der Werkzeugbreitenposition vorgebbar ist und zusätzlich eine Zuordnung eines bestimmten Radius des Abrichters zu einem bestimmten Radius des Werkzeuges erfolgt, wobei die Modifikation durch die von der Steuerungsfunktion vorgenommene Einstellung der Bewegungsachsen der Abrichtmaschine erzeugbar ist, wobei die Zuordnung bevorzugt als eine Funktion der Werkzeugbreitenposition vorgebbar ist, und/oder

wobei die Eingabefunktion und die Berechnungsfunktion so ausgestaltet sind, dass eine gezielte Modifikation der Oberflächengeometrie des Werkzeuges vorgebbar ist oder erzeugt wird, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FTL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist,

und/oder

wobei die Eingabefunktion und die Berechnungsfunktion so ausgestaltet sind, dass eine gezielte Modifikation der Oberflächengeometrie des Werkzeuges vorgebbar ist oder erzeugt wird, deren Steigung und/oder Balligkeit in Abhängigkeit von dem Werkzeugdrehwinkel und/oder der Werkzeugbreitenposition variiert, wobei zusätzlich die Zahndicke in Abhängigkeit von dem Werkzeugdrehwinkel und/oder der Werkzeugbreitenposition nicht-linear variiert.

18. Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter einstellbar sind, mit einer Steuerung, insbesondere Abrichtmaschine nach Aspekt 17, wobei die Steuerung eine Eingabefunktion aufweist, durch welche eine vorgegebene Modifikation des Abrichters eingebbar und eine gewünschte Position der Modifikation des Abrichters auf dem Werkzeug vorgebbar sind, wobei die Vorgabe der gewünschten Position der Modifikation des Abrichters auf dem Werkzeug bevorzugt durch Zuordnung eines bestimmten Radius des Abrichters zu einem bestimmten Radius des Werkzeuges erfolgt, und

wobei die Steuerung eine Berechnungsfunktion aufweist, welche aus der vorgegebenen Modifikation des Abrichters und der gewünschten Position der Modifikation des Abrichters auf dem Werkzeug die zu ihrer Erzeugung beim Abrichten mit Linienkontakt zwischen Abrichter und Werkzeug notwendigen Einstellungen der Bewegungsachsen bestimmt,

und wobei die Steuerung eine Steuerungsfunktion aufweist, welche die entsprechende Einstellung der Bewegungsachsen beim Abrichten mit Linienkontakt zwischen Abrichter und Werkzeug vornimmt,

wobei bevorzugt die Eingabefunktion, die Berechnungsfunktion und die Steuerungsfunktion so ausgestaltet sind, dass sie zur Durchführung eines der vorangegangenen Verfahren eingesetzt werden können, und/oder wobei die Eingabefunktion, die Berechnungsfunktion und die Steuerungsfunktion bevorzugt so ausgestaltet sind, dass über die Eingabefunktion die Position der Modifikation auf dem Werkzeug in Abhängigkeit von der Werkzeugbreitenposition vorgebbar ist und die Berechnungs- und Steuerungsfunktion die Einstellungen der Bewegungsachsen als eine Funktion der Werkzeugbreitenposition vornimmt.

19. Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter einstellbar sind, mit einer Steuerung, insbesondere Abrichtmaschine nach Aspekt 17 und/oder 18,

wobei die Steuerung eine Mehrhub-Abrichtfunktion aufweist, welche einen Abrichtvorgang mit mindestens einem ersten und einem zweiten Hub durchführt, in welchem der Abrichter jeweils in Linienkontakt mit dem Werkzeug ist, wobei die Steuerung weiterhin eine Eingabefunktion aufweist, durch welche die Position, an welcher die in einem ersten Hub erzeugte Modifikation an die mit einem zweiten Hub erzeugte Modifikation anschließt, als eine Funktion der Werkzeugbreitenposition vorgebbar ist, und/oder durch welche eine gewünschte Modifikation des Werkzeuges vorgebbar ist, wobei die Steuerung eine Bestimmungsfunktion zur Bestimmung der zu deren Herstellung notwendigen Hübe aufweist, welche die Position, an welcher die in einem ersten Hub erzeugte Modifikation an die mit einem zweiten Hub erzeugte Modifikation anschließt, als eine Funktion der Werkzeugbreitenposition bestimmt,

wobei die Steuerung eine Berechnungsfunktion aufweist, welche aus der Position, an welcher die in einem ersten Hub erzeugte Modifikation an die mit einem zweiten Hub erzeugte Modifikation anschließt, die zu ihrer Erzeugung beim Abrichten mit Linienkontakt zwischen Abrichter und Werkzeug notwendigen Einstellungen der Bewegungsachsen bestimmt,

und wobei die Steuerung eine Steuerungsfunktion aufweist, welche die entsprechende Einstellung der Bewegungsachsen beim Abrichten mit Linienkontakt zwischen Abrichter und Werkzeug vornimmt,

wobei bevorzugt die Eingabefunktion, die Berechnungsfunktion und die Steuerungsfunktion so ausgestaltet sind, dass sie zur Durchführung eines der vorangegangenen Verfahren eingesetzt werden können.

20. Verzahnmaschine mit einer Abrichtmaschine nach Aspekt 17, 18 und/oder 19 und/oder einer Vorrichtung und/oder einem Softwareprogramm nach Aspekt 14, 15 und/oder 16, wobei die Verzahnmaschine bevorzugt eine Werkstückaufnahme und eine ggf. zusätzlich zu der Werkzeugaufnahme der Abrichtmaschine vorgesehene Werkzeugaufnahme aufweist, und eine Verzahnbearbeitungssteuerung zur Ansteuerung von Werkstückaufnahme und Werkzeugaufnahme zur Durchführung einer Verzahnbearbeitung, insbesondere zur Durchführung eines Verfahrens nach Aspekt 13.

## B. Diagonalwälzverfahren

### B.I. Einstellung Diagonalverhältnis

1. Verfahren zur Herstellung eines verzahnten Werkstückes mit modifizierter Oberflächengeometrie durch ein Diagonalwälzverfahren mittels eines modifizierten Werkzeuges,
wobei ein Werkzeug eingesetzt wird, dessen Oberflächengeometrie eine Modifikation umfasst, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert, und
wobei die gezielte Modifikation des Werkzeuges durch das Diagonalwälzverfahren eine entsprechende Modifikation auf der Oberfläche des Werkstückes erzeugt,
wobei eine gewünschte Modifikation der Oberflächengeometrie des Werkstückes vorgegeben wird und eine zur Erzeugung dieser gewünschten Modifikation geeignete Modifikation der Oberflächengeometrie des Werkzeuges in Kombination mit einem zur Erzeugung der gewünschten Modifikation geeigneten Diagonalverhältnis des Diagonalwälzverfahrens bestimmt wird.

2. Verfahren nach Aspekt 2, wobei das Diagonalverhältnis so eingestellt wird, dass bei Diagonalwälzverfahren die erste Richtung des Werkzeuges auf eine zur Erzeugung der gewünschten Modifikation des Werkstückes geeignete erste Richtung des Werkstückes abgebildet wird, wobei das Diagonalverhältnis bevorzugt durch eine Ausgleichrechnung und/oder analytisch bestimmt wird.

3. Verfahren nach einem der Aspekte 1 oder 2, wobei die gewünschte Modifikation der Oberflächengeometrie des Werkstückes als eine Modifikation vorgebbar ist oder eine Modifikation umfasst, welche im Wälzbild zumindest lokal in einer ersten Richtung des Werkstückes durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,2}$, $F_{FtL,2}$ und/oder $F_{FTQ,2}$ gebildet werden, und/oder als eine Modifikation vorgebbar ist oder eine Modifikation umfasst, deren Steigung und/oder Balligkeit in Abhängigkeit von der Werkstückbreitenposition variiert.

4. Verfahren nach einem der Aspekte 1 bis 3, wobei die Koeffizienten-Funktionen $F_{FtC,1}$, $F_{FtL,1}$ und/oder $F_{FtQ,1}$ der Modifikation der Oberflächengeometrie des Werkzeuges zumindest innerhalb bestimmter Randbedingungen frei wählbar sind, um die gewünschte Modifikation der Oberflächengeometrie des Werkstückes zu erzeugen, und/oder wobei die Koeffizienten-Funktionen $F_{FtC,2}$, $F_{FtL,2}$ und/oder $F_{FtQ,2}$ und/oder die erste Richtung der Modifikationen der Oberflächengeometrie des Werkstückes zumindest innerhalb bestimmter Randbedingungen frei vorgebbar und/oder wählbar ist, und/oder wobei die Steigung und/oder Balligkeit der Modifikation der Oberfläche des Werkzeuges als Funktion der Werkzeugbreitenposition und/oder die Steigung und/oder Balligkeit der Modifikation der Oberfläche des Werkstückes als Funktion der Werkstückbreitenposition zumindest innerhalb bestimmter Randbedingungen frei wählbar ist, und/oder wobei das Diagonalverhältnis in Abhängigkeit der ersten Richtung der Modifikation auf dem Werkstück bestimmt wird.

5. Verfahren nach Aspekt 1, wobei die Modifikation der Oberflächengeometrie des Werkzeuges aus der gewünschten Modifikation der Oberflächengeometrie des Werkstückes mittels der Umkehrung einer Zuordnungsfunktion, welche die Abbildung der Oberfläche des Werkzeugs auf die Oberfläche des Werkstücks beim Diagonalwälzschleifen beschreibt, bestimmt wird, wobei die Zuordnungsfunktion von dem Diagonalverhältnis abhängt, wobei die Bestimmung bevorzugt unter Verwendung einer Funktion erfolgt, welche die Abbildung der Oberfläche des Werkzeugs auf die Oberfläche des Werkstücks beim Diagonalwälzschleifen analytisch beschreibt, und/oder wobei die gewünschte Modifikation der Oberflächengeometrie des Werkstückes als stetige Funktion und/oder auf einer Punktewolke vorgegeben wird, wobei die stetige Funktion bevorzugt auf einer Fläche auf der Zahnflanke vorgegeben ist und/oder die Punktewolke bevorzugt eine Fläche auf der Zahnflanke aufspannt, und/oder wobei die Modifikationen der Oberflächengeometrie des Werkzeuges als stetige Funktion und/oder auf einer Punktewolke bestimmt wird, wobei die stetige Funktion bevorzugt auf einer Fläche auf der Zahnflanke bestimmt wird und/oder die Punktewolke bevorzugt eine Fläche auf der Zahnflanke aufspannt, und/oder wobei die Modifikation der Oberflächengeometrie des Werkstückes an mindestens zwei oder drei Wälzwinkeln als Funktion der Werkzeugbreitenposition vorgebbar und/oder wählbar ist und für die dazwischenliegenden Wälzwinkel-Bereiche eine Interpolation erfolgt und/oder
wobei die Modifikation der Oberflächengeometrie des Werkzeuges im Rahmen der Bestimmung und/oder Vorgabe an mindestens zwei oder drei Wälzwinkeln als Funktion der Werkzeugbreitenposition variierbar ist und für die dazwischenliegenden Wälzwinkel-Bereiche eine Interpolation erfolgt.

6. Verfahren nach einem der vorangegangenen Aspekte, wobei die Modifikation der Oberflächengeometrie des Werkzeuges durch die Modifikation einer Relativposition zwischen Werkzeug und Abrichter beim Abrichten erzeugt wird, wobei der Abrichter beim Abrichten bevorzugt in Linienkontakt mit dem Werkzeug steht und/oder die erste Richtung der Modifikation der Oberflächengeometrie des Werkzeuges der Eingriffslinie des Abrichters beim Abrichten des Werkzeuges entspricht und/oder durch diese vorgegeben ist,

wobei bevorzugt das Werkzeug mittels einer Profil- oder Formrolle modifiziert abgerichtet wird,

wobei weiterhin bevorzugt die Profil- oder Formrolle beim Abrichten vom Fußbereich bis zum Kopfbereich mit dem Zahn des Werkzeuges in Kontakt steht, so dass die Modifikation über die gesamte Zahnhöhe in einem Hub erfolgt oder alternativ

die Profil- oder Formrolle beim Abrichten nur in Teilbereichen zwischen Fuß und Kopf mit dem Zahn des Werkzeuges in Kontakt steht, so dass die gezielte Modifikation über die gesamte Zahnhöhe in mehreren Hüben und jeweils unterschiedlicher relativen Positionierung des Abrichters erfolgt.

7. Verfahren nach einem der vorangegangenen Aspekte, wobei die Modifikation der Oberflächengeometrie des Werkzeuges dadurch erzeugt wird, dass die Position des Abrichters zum Werkzeug beim Abrichten in Abhängigkeit von dem Werkzeugdrehwinkel und/oder der Werkzeugbreitenposition variiert wird, wobei das Erzeugen der gezielten Modifikation auf dem Werkzeug erfolgt, indem bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation einstellbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander eingestellt werden, um die gezielte Modifikation entlang der Berührlinie zu erzeugen.

8. Verfahren nach einem der vorangegangenen Aspekten, wobei eine gewünschte Modifikation der Oberflächengeometrie des Werkstückes vorgegeben wird, wobei in Abhängigkeit der gewünschten Modifikation der Oberflächengeometrie des Werkstückes geeignete Koeffizienten-Funktionen $F_{FtC,1}$, $F_{FtL,1}$ und/oder $F_{FtQ,1}$ der Oberflächengeometrie des Werkzeuges und ein geeignetes Diagonalverhältnis bestimmt werden, und/oder wobei in Abhängigkeit der gewünschten Modifikation der Oberflächengeometrie des Werkstückes eine geeignete Variation der Position des Abrichters zum Werkzeug beim Abrichten in Abhängigkeit von dem Werkzeugdrehwinkel und/oder der Werkzeugbreitenposition und ein geeignetes Diagonalverhältnis bestimmt wird.

10. Verfahren nach einem der vorhergehenden Aspekte, wobei eine gewünschte Ausrichtung der Modifikation der Oberflächengeometrie des Werkstückes vorgegeben wird und das Diagonalverhältnis so eingestellt wird, dass sich die gewünschte Ausrichtung der Modifikation beim Diagonalwälzbearbeiten ergibt, und/oder wobei das Diagonalverhältnis zumindest über jeden Hub konstant ist.

11. Verfahren nach einem der vorangegangenen Aspekten, wobei im Rahmen der Bearbeitung eines Werkstückes das Diagonalverhältnis verändert wird.

12. Verfahren nach einem der vorangegangenen Aspekten, wobei das Werkzeug eine konische Grundform aufweist, wobei der Konuswinkel des Werkzeuges bevorzugt größer 1', weiter bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist.

13. Verzahnmaschine zum Bearbeiten eines Werkstückes mit einem Werkzeug im Diagonalwälzverfahren und/oder zum Abrichten eines Werkzeuges mit einem Abrichter im Linienkontakt zur Durchführung des Verfahrens nach einem der Aspekte 1 bis 12, wobei die Verzahnmaschine vorteilhafterweise Steuerung zur Durchführung des Verfahrens nach einem der Aspekte 1 bis 12 aufweist,

und/oder wobei die Verzahnmaschine vorteilhafterweise eine Eingabefunktion, über welche eine gewünschte Modifikation der Oberflächengeometrie des Werkstückes vorgebbar ist und eine Ansteuerungsfunktion, welche die zur Bereitstellung der Modifikation der Oberflächengeometrie des Werkstückes geeignete Modifikation der Oberflächengeometrie des Werkzeuges und ein geeignetes Diagonalverhältnis bestimmt, aufweist,

wobei die Ansteuerungsfunktion bevorzugt die Modifikation der Oberflächengeometrie des Werkzeuges während des Abrichtens erzeugt und/oder das Diagonalwälzverfahren zur Bearbeitung des Werkstückes mit dem Diagonalverhältnis durchführt.

14. Verzahnmaschine nach Aspekt 13, wobei die Verzahnmaschine eine Abrichtfunktion zum modifizierten Abrichten des Werkzeuges aufweist, welche die Position des Abrichters zum Werkzeug beim Abrichten in Abhängigkeit von dem Werkzeugdrehwinkel und/oder der Werkzeugbreitenposition variiert, wobei die Abrichtfunktion bevorzugt zumindest die Eingriffstiefe und den Eingriffswinkel des Abrichters in Abhängigkeit von dem Werkzeugdrehwinkel und/oder der Werkzeugbreitenposition einstellt, und/oder wobei die Abrichtfunktion bei der relativen Positionierung zwischen Abrichter und Werkzeug mindestens drei und bevorzugt vier oder fünf Freiheitsgrade zur Erzeugung der gewünschten Modifikation nutzt, wobei die Freiheitsgrade bevorzugt unabhängig voneinander zur Erzeugung der gewünschten Modifikation eingestellt werden.

15. Verzahnmaschine nach Aspekt 13 oder 14, wobei die Eingabefunktion die Vorgabe der gewünschten Modifikation der Oberflächengeometrie des Werkstückes als stetige Funktion und/oder auf einer Punktewolke erlaubt, wobei die stetige Funktion bevorzugt auf einer Fläche auf der Zahnflanke vorgebbar ist und/oder die Punktewolke bevorzugt eine Fläche auf der Zahnflanke aufspannt, und/oder wobei die die Eingabefunktion die Vorgabe der gewünschten Modifikation der Oberflächengeometrie des Werkstückes an mindestens zwei oder drei Wälzwinkeln als Funktion der Werkstückbreitenposition erlaubt und für die dazwischenliegenden Wälzwinkel-Bereiche eine Interpolation vornimmt.

16. Verzahnmaschine nach einem der Aspekte 13 bis 15, wobei die Verzahnmaschine die Modifikation der Oberflächengeometrie des Werkzeuges als stetige Funktion und/oder auf einer Punktewolke bestimmt und/oder wobei die Verzahnmaschine die Vorgabe der Modifikation der Oberflächengeometrie des Werkzeuges als stetige Funktion und/oder auf einer Punktewolke erlaubt, wobei die stetige Funktion bevorzugt auf einer Fläche auf der Zahnflanke bestimmt wird und/oder vorgebbar ist und/oder die Punktewolke bevorzugt eine Fläche auf der Zahnflanke aufspannt, und/oder wobei die Modifikation der Oberflächengeometrie des Werkzeuges im Rahmen der Bestimmung und/oder Vorgabe an mindestens zwei oder drei Wälzwinkeln als Funktion der Werkzeugbreitenposition variierbar ist und die Steuerung für die dazwischenliegenden Wälzwinkel-Bereiche eine Interpolation vornimmt.

17. Verzahnmaschine nach einem der Aspekte 13 bis 16, wobei die Verzahnmaschine die Vorgabe einer gewünschten Modifikationen der Oberflächengeometrie des Werkstückes als eine Funktion erlaubt, welche im Wälzbild zumindest lokal in einer ersten Richtung des Werkstückes durch eine lineare und/oder quadratische Funktion zumindest näherungsweise beschreibbar ist, wobei die Koeffizienten dieser linearen und/oder quadratischen Funktion in einer zweiten Richtung des Werkstückes, welche senkrecht zur ersten Richtung verläuft, durch Koeffizienten-Funktionen $F_{FtC,2}$, $F_{FtL,2}$ und/oder $F_{FtQ,2}$ gebildet werden, wobei bevorzugt die Koeffizienten-Funktion $F_{Ftl,2}$ und/oder $F_{FtlI,2}$ und/oder die erste Richtung der Modifikationen der Oberflächengeometrie des Werkstückes zumindest innerhalb bestimmter Randbedingungen frei vorgebbar und/oder wählbar ist,
und/oder wobei die Verzahnmaschine die Vorgabe einer gewünschten Modifikationen der Oberflächengeometrie des Werkstückes als eine Funktion erlaubt, welche in einer ersten Richtung eine Steigung und/oder Balligkeit aufweist, welche in Werkstückbreitenrichtung variiert,
wobei bevorzugt die Modifikation der Oberflächengeometrie des Werkstückes an mindestens zwei oder drei Wälzwinkeln als Funktion der Werkzeugbreitenposition vorgebbar ist und die Steuerung für die dazwischenliegenden Wälzwinkel-Bereiche eine Interpolation vornimmt.

18. Verzahnmaschine nach einem der Aspekte 13 bis 17, wobei die Verzahnmaschine die Vorgabe und/oder Bestimmung einer Modifikationen der Oberflächengeometrie des Werkzeuges als eine Funktion erlaubt, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, wobei bevorzugt die Koeffizienten-Funktionen $F_{FtC,1}$, $F_{FtL,1}$ und/oder $F_{FtQ,1}$ der Modifikation der Oberflächengeometrie des Werkzeuges zumindest innerhalb bestimmter Randbedingungen frei wählbar und/oder variierbar sind,
und/oder wobei Verzahnmaschine die Vorgabe und/oder Bestimmung einer Modifikationen der Oberflächengeometrie des Werkzeuges als eine Funktion erlaubt, welche in einer ersten Richtung eine Steigung und/oder Balligkeit aufweist, welche in Werkstückbreitenrichtung variiert,
wobei bevorzugt die Modifikation der Oberflächengeometrie des Werkzeuges im Rahmen der Bestimmung und/oder Vorgabe an mindestens zwei oder drei Wälzwinkeln als Funktion der Werkstückbreitenposition vorgebbar und/oder variierbar ist und die Steuerung für die dazwischenliegenden Wälzwinkel-Bereiche eine Interpolation vornimmt.

19. Computerprogramm, insbesondere zur Installation auf einer Verzahnmaschine und/oder mit einer Ausgabefunktion für Daten zur Verwendung auf einer Verzahnmaschine, mit einer Eingabefunktion zur Eingabe von Daten zu einer gewünschten Modifikation der Oberflächengeometrie des Werkstückes und mit einer Funktion zur Bestimmung der Modifikation des Werkzeuges und des Diagonalverhältnisses, wobei die Funktionen ein Verfahren nach einem der vorangegangenen Aspekte implementieren.

**B.II. Kombination mit anderen Modifikationen**

1. Verfahren zur Herstellung eines verzahnten Werkstückes mit modifizierter Oberflächengeometrie durch ein Diagonalwälzverfahren mittels eines modifizierten Werkzeuges,
wobei ein Werkzeug eingesetzt wird, dessen Oberflächengeometrie eine Modifikation umfasst, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert, und
wobei die gezielte Modifikation des Werkzeuges durch das Diagonalwälzverfahren eine entsprechende Modifikation auf der Oberfläche des Werkstückes erzeugt,
wobei die durch die gezielte Modifikation des Werkzeuges erzeugte Modifikation des Werkstücks mit einer Profilmodifikation und/oder einer durch eine Veränderung der Maschinenkinematik während des Bearbeitungsprozesses des Werkstückes hervorgerufenen Modifikation überlagert wird.

2. Verfahren nach Aspekt 1, wobei die Form und/oder Anteile und/oder Parameter der jeweiligen Modifikationen durch eine Ausgleichsrechnung und/oder analytisch bestimmt werden.

3. Verfahren zur Herstellung eines verzahnten Werkstückes mit modifizierter Oberflächengeometrie durch ein Diagonalwälzverfahren mittels eines modifizierten Werkzeuges,
wobei ein Werkzeug eingesetzt wird, dessen Oberflächengeometrie eine Modifikation umfasst, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert, und
wobei die gezielte Modifikation des Werkzeuges durch das Diagonalwälzverfahren eine entsprechende Modifikation auf der Oberfläche des Werkstückes erzeugt,
wobei die Form der Modifikation der Oberflächengeometrie des Werkzeuges und mindestens ein und bevorzugt mehrere Parameter des Bearbeitungsvorgangs des Werkstückes und/oder der Makrogeometrie des Werkzeuges so bestimmt werden, dass die gewünschte Modifikation zumindest näherungsweise herstellbar ist, wobei die Bestimmung insbesondere durch eine Ausgleichsrechnung und/oder analytisch erfolgt.

4. Verfahren nach Aspekt 3, wobei das Diagonalverhältnis und/oder der Achskreuzwinkel während des Diagonalwälzverfahrens und/oder der Konuswinkel und/oder der Profilwinkel des Werkzeuges bestimmt werden, wobei bevorzugt ein über die Werkzeugbreite konstantes Diagonalverhältnis bestimmt wird oder wobei bevorzugt das Diagonalverhältnis als eine nicht-konstante Funktion der Vorschubposition bestimmt wird.

5. Verfahren zur Herstellung eines verzahnten Werkstückes mit modifizierter Oberflächengeometrie durch ein Diagonalwälzverfahren mittels eines modifizierten Werkzeuges,
wobei zur Erzeugung der Modifikation des Werkstücks mindestens zwei unterschiedliche Modifikationen, welche durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind, überlagert werden,
wobei die gewünschte Modifikation des Werkstückes im Wälzbild als ein Polynom zweiten Grades im Wälzwinkel $w_F$ und in der Werkstückbreitenposition $z_F$ vorgebbar ist, wobei mindestens einer und bevorzugt mehrere und weiter bevorzugt alle Koeffizienten des Polynoms innerhalb bestimmter Randbedingungen frei wählbar sind,
und/oder wobei die gewünschte Modifikation des Werkstückes als Überlagerung mehrerer Balligkeiten mit innerhalb bestimmter Randbedingungen frei wählbaren Richtungen vorgebbar ist und/oder wobei eine gewünschte Profilballigkeit und eine gewünschte Flankenlinienballigkeit vorgebbar sind,

und/oder

wobei die gewünschte Modifikation des Werkstückes als eine Welligkeit mit einer Amplitude vorgebbar ist, welche quer zur Ausbreitungsrichtung der Welligkeit einen nicht-konstanten Wert aufweist, wobei bevorzugt eine Amplitudenfunktion vorgebbar ist, welche quer zur Ausbreitungsrichtung der Welligkeit und insbesondere entlang der Wellenkämme zumindest eine lineare und/oder quadratische Form aufweist, wobei bevorzugt einer oder mehrerer der Koeffizienten der Amplitudenfunktion zumindest innerhalb bestimmter Randbedingungen frei wählbar sind, und/oder wobei die Amplitude so vorgebbar ist, dass diese in jeder Richtung der Flanke variiert.

6. Verfahren nach einem der vorangegangenen Aspekte, wobei mindestens zwei der folgenden Modifikationen überlagert werden:

- eine erste Modifikation der Oberflächengeometrie des Werkstückes, welche durch eine gezielte Modifikation der Oberflächengeometrie des Werkzeuges erzeugt wird, welche wiederum dadurch erzeugt wird, dass die Position des Abrichters zum Werkzeug beim Abrichten in Abhängigkeit von dem Werkzeugdrehwinkel und/oder der Werkzeugbreitenposition variiert wird, und/oder welche dadurch erzeugt wird, dass ein Werkzeug eingesetzt wird, dessen Oberflächengeometrie eine Modifikation umfasst, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert,
- eine zweite Modifikation der Oberflächengeometrie des Werkstückes, welche durch eine Profilmodifikation des Abrichters erzeugt wird und/oder
- eine dritte Modifikation der Oberflächengeometrie des Werkstückes, welche durch ein Veränderung der Maschinenkinematik während des Bearbeitungsprozesses des Werkstückes erzeugt wird,

wobei die Form und/oder die Anteile und/oder die Parameter der jeweiligen Modifikationen durch eine Ausgleichsrechnung und/oder analytisch bestimmt werden.

7. Verfahren nach einem der vorangegangen Aspekte, wobei eine gewünschte Modifikation der Oberflächengeometrie des Werkstückes zumindest näherungsweise in mindestens zwei der folgenden Modifikationen zerlegt wird:

- eine erste Modifikation, welche im Wälzbild zumindest lokal in einer ersten Richtung des Werkstückes durch eine lineare und/oder quadratische Funktion zumindest näherungsweise beschreibbar ist, wobei die Koeffizienten dieser linearen und/oder quadratischen Funktion in einer zweiten Richtung des Werkstückes, welche senkrecht zur ersten Richtung verläuft, durch Koeffizienten-Funktionen $F_{FtC,2}$, $F_{FtL,2}$ und/oder $F_{FtQ,2}$ gebildet werden, und/oder eine Modifikation, deren Steigung und/oder Balligkeit in Abhängigkeit von der Werkstückbreitenposition variiert,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

8. Verfahren nach einem der vorangegangenen Aspekte, wobei eine gewünschte Modifikation der Oberflächengeometrie des Werkstückes vorgegeben wird und mittels einer Ausgleichsrechnung und/oder analytisch diejenigen Parameter des Bearbeitungsvorgangs und/oder der Makrogeometrie des Werkzeuges und/oder diejenige gezielte Modifikation der Oberflächengeometrie des Werkzeuges und/oder Kombination von Modifikationen ermittelt wird, welche die gewünschte Modifikation möglichst optimal annähert und/oder exakt erzeugt, wobei die gewünschte Modifikation bevorzugt als stetige Funktion und/oder Punktewolke vorgegeben wird, wobei die stetige Funktion auf einer Fläche der Zahnflanke vorgebbar ist und/oder die Punktewolke bevorzugt eine Fläche auf der Zahnflanke aufspannt, und/oder wobei die Form der Modifikation und/oder der Modifikationen bevorzugt an einer Vielzahl von Punkten und/oder als stetige Funktionen bestimmt werden.

9. Verfahren nach einem der vorangegangenen Aspekte, wobei im Rahmen der Ausgleichsrechnung eine Abstandsfunktion eingesetzt wird, welche den Unterschied zwischen der durch die Summe der jeweiligen Modifikationen gegebenen Gesamt-Modifikation und der gewünschten Modifikation quantifiziert, wobei die Abstandsfunktion bevorzugt eine Mittelwertbildung über eine Vielzahl an Punkten oder das gesamte Wälzbild vornimmt, und/oder wobei im Rahmen der Ausgleichsrechnung eine Abstandsfunktion $A(w_F, z_F)$ eingesetzt wird, welche von dem Wälzweg

$w_F$ und der Zahnbreitenposition $z_F$ abhängt und/oder wobei im Rahmen der Ausgleichsrechung eine gewichtete Abstandsfunktion eingesetzt wird, wobei bevorzugt Abweichungen in bestimmten Bereichen des Werkstückes stärker gewichtet werden als Abweichungen in anderen Bereichen,
und/oder
wobei im Rahmen der Ausgleichsrechnung diejenige gezielte Modifikation der Oberflächengeometrie des Werkstückes, welche im Wälzbild zumindest lokal in einer ersten Richtung des Werkstückes durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,2}$, $F_{FTL,2}$ und/oder $F_{FtQ,2}$ gebildet werden, und/oder diejenige Modifikation des Werkstückes, deren in eine erste Richtung gemessene Steigung und/oder Balligkeit in Abhängigkeit von der Werkstückbreitenposition variiert, bestimmt wird, welche zusammen mit mindestens einer weiteren Modifikation die gewünschte Modifikation optimal annähert und/oder exakt erzeugt, wobei aus der gewünschten Modifikation der Oberflächengeometrie des Werkstückes die hierfür notwendige Modifikation der Oberflächengeometrie des Werkzeugs und/oder die hierfür beim Abrichten notwendige Maschinenkinematik bestimmt wird
und/oder
wobei im Rahmen der Ausgleichsrechnung mindestens ein und bevorzugt mehrere Parameter des Bearbeitungsvorgangs und/oder der Makrogeometrie des Werkzeuges und/oder die Form und/oder der Anteil und/oder die Parameter mindestens einer und bevorzugt zweier oder dreier der möglichen Modifikationen variiert wird, um diejenigen Parameter und/oder diejenige Modifikation und/oder Kombination von Modifikationen zu ermitteln, welche die gewünschte Modifikation möglichst optimal annähert und/oder exakt erzeugt, wobei bevorzugt die Form der Koeffizienten-Funktionen $F_{FtC,1/2}$, $F_{FTL,1/2}$ und/oder $F_{FtQ,1/2}$ und/oder der Funktion $F_{KFt}$ und/oder der Profilmodifikation und/oder die erste Richtung variiert wird, und/oder wobei bevorzugt die Form der Koeffizienten-Funktionen $F_{FtC,1/2}$, $F_{FtL,1/2}$ und/oder $F_{FtQ,1/2}$ und / oder die erste Richtung der ersten Modifikation und/oder das Diagonalverhältnis und/oder der Achskreuzwinkel während des Diagonalwälzverfahrens und/oder des Konuswinkel und/oder des Profilwinkels des Werkzeuges variiert werden, wobei bevorzugt ein über die Werkzeugbreite konstantes Diagonalverhältnis variiert wird oder wobei bevorzugt das Diagonalverhältnis als eine nicht-konstante Funktion der Vorschubposition variiert wird.

10. Verfahren nach einem der vorangegangenen Aspekte, wobei die Modifikation der Oberflächengeometrie des Werkzeuges durch die Modifikation einer Relativposition zwischen Werkzeug und Abrichter beim Abrichten erzeugt wird, wobei der Abrichter beim Abrichten bevorzugt in Linienkontakt mit dem Werkzeug steht und/oder die erste Richtung der Modifikation der Oberflächengeometrie des Werkzeuges der Eingriffslinie des Abrichters beim Abrichten des Werkzeuges entspricht und/oder durch diese vorgegeben ist,
wobei bevorzugt das Werkzeug mittels einer Profil- oder Formrolle modifiziert abgerichtet wird,
wobei weiterhin bevorzugt die Profil- oder Formrolle beim Abrichten vom Fußbereich bis zum Kopfbereich mit dem Zahn des Werkzeuges in Kontakt steht, so dass die Modifikation über die gesamte Zahnhöhe in einem Hub erfolgt oder alternativ
die Profil- oder Formrolle beim Abrichten nur in Teilbereichen zwischen Fuß und Kopf mit dem Zahn des Werkzeuges in Kontakt steht, so dass die gezielte Modifikation über die gesamte Zahnhöhe in mehreren Hüben und jeweils unterschiedlicher relativen Positionierung des Abrichters erfolgt,
und/oder wobei die gezielte Modifikation der Oberflächengeometrie des Werkzeuges durch eine Veränderung der Maschinenkinematik während des Abrichtprozesses in Abhängigkeit von dem Werkzeugdrehwinkel und/oder der Werkzeugbreitenposition erzeugt wird, insbesondere dadurch, dass bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation einstellbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander eingestellt werden, um die gezielte Modifikation entlang der Berührlinie zu erzeugen, wobei bevorzugt zusätzlich ein modifiziertes Abrichter eingesetzt wird, um eine Profilmodifikation zu erzeugen.

11. Verfahren nach einem der vorangegangenen Aspekten, wobei während der Bearbeitung ein Axialvorschub des Werkzeuges mit einem durch das Verhältnis zwischen Axialvorschub des Werkzeuges und Axialvorschub des Werkstückes gegebenen Diagonalverhältnis erfolgt und wobei im Rahmen der Bearbeitung eines Werkstückes das Diagonalverhältnis verändert wird.

12. Verfahren nach einem der vorangegangenen Aspekte, wobei das Werkzeug eine konische Grundform aufweist, wobei der Konuswinkel des Werkzeuges größer 1', bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist.

13. Verzahnmaschine zur Durchführung eines Verfahrens zur Herstellung eines Werkstückes nach einem der Aspekte 1 bis 12, wobei die Verzahnmaschine vorteilhafterweise eine Eingabe- und/oder Berechnungsfunktion aufweist, über welche die kinematischen Veränderungen der Maschinenkinematik während des Bearbeitungsprozesses und/oder Abrichtprozesses vorgebbar und/oder bestimmbar sind, und/oder eine Ansteuerungsfunktion, welche die Maschinenkinematik während des Bearbeitungsprozesses und/oder Abrichtprozesses verändert, wobei die Eingabefunktion bevorzugt die Eingabe einer gewünschten Modifikation erlaubt und die Berechnungsfunktion die zu deren Herstellung notwendigen Modifikationen und/oder die zur Erzeugung der Modifikationen benötigten Veränderungen der Maschinenkinematik während des Bearbeitungsprozesses und/oder Abrichtprozesses bestimmt.

14. Computersystem und/oder Softwareprogramm zur Bestimmung der zur Herstellung eines Werkstückes mit einer gewünschten Modifikation notwendigen Kombination an Modifikationen,
mit einer Eingabefunktion zur Vorgabe einer gewünschten Modifikation und mit einer Zerlegungsfunktion,
wobei die Zerlegungsfunktion eine Kombination von Modifikationen ermittelt wird, welche die gewünschte Modifikation möglichst optimal annähert und/oder exakt bestimmt,
wobei die Zerlegungsfunktion eine hierfür geeignete Kombination einer durch eine gezielte Modifikation der Oberflächengeometrie des Werkzeuges erzeugbaren Modifikation des Werkstücks, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert, mit einer Profilmodifikation und/oder einer durch ein Veränderung der Maschinenkinematik während des Bearbeitungsprozesses hervorgerufenen Modifikation ermittelt,
wobei die Zerlegungsfunktion bevorzugt eine vorgegebene, gewünschte Modifikation des Werkstücks durch eine Ausgleichsrechnung und/oder analytisch zumindest näherungsweise in mindestens zwei unterschiedliche Modifikationen des Werkstücks zerlegt, welche jeweils durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind,
wobei weiterhin bevorzugt die Zerlegungsfunktion eine vorgegebene, gewünschte Modifikation zumindest näherungsweise in mindestens zwei der folgenden Modifikationen zerlegt:

- eine erste Modifikation, welche im Wälzbild zumindest lokal in einer ersten Richtung des Werkstückes durch eine lineare und/oder quadratische Funktion zumindest näherungsweise beschreibbar ist, wobei die Koeffizienten dieser linearen und/oder quadratischen Funktion in einer zweiten Richtung des Werkstückes, welche senkrecht zur ersten Richtung verläuft, durch Koeffizienten-Funktionen $F_{FtC,2}$, $F_{FTL,2}$ und/oder $F_{FTQ,2}$ gebildet werden, und/oder eine Modifikation, deren Steigung und/oder Balligkeit in Abhängigkeit von der Werkstückbreitenposition variiert,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $FK_{Ft}$ gegeben ist,

und bevorzugt mit einer Berechnungsfunktion, welche aus den so bestimmten Modifikationen des Werkstücks und/oder Werkzeugs die zu deren Erzeugung benötigten Modifikation des Abrichtvorgangs des Werkzeugs und/oder des zum Abrichten des Werkzeuges verwendeten Abrichters und/oder des Bearbeitungsvorgangs des Werkstückes bestimmt,

15. Computersystem und/oder Softwareprogramm zur Bestimmung der zur Herstellung eines Werkstückes mit einer gewünschten Modifikation notwendigen Kombination an Modifikationen,
mit einer Funktion zur Vorgabe einer gewünschten Modifikation und mit einer Bestimmungsfunktion,
wobei die Bestimmungsfunktion die Form einer gezielten Modifikation der Oberflächengeometrie des Werkzeuges, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert, und mindestens einen und bevorzugt mehrere Parameter der Makrogeometrie des Werkzeuges und/oder mindestens einen und bevorzugt mehrere Parameter eines Diagonalwälzverfahrens ermittelt, durch welche die gewünschte Modifikation möglichst optimal annähert und/oder exakt erzeugt werden kann.

16. Computersystem und/oder Softwareprogramm nach Aspekt 14 oder 15, welches die Berechnungsschritte eines Verfahren gemäß einem der Aspekte 1 bis 12 implementiert, und/oder mit einer Schnittstelle zur oder installierbar auf einer Verzahnmaschine nach Aspekt 13, so dass durch das Computersystem und/oder Softwareprogramm die Veränderungen der Maschinenkinematik während des Bearbeitungsprozesses und/oder Abrichtprozesses vorgebbar und/oder bestimmbar sind.

## B.III. Herstellbare Geometrien

0. Verfahren zur Herstellung eines verzahnten Werkstückes mit modifizierter Oberflächengeometrie durch ein Diagonalwälzverfahren mittels eines modifizierten Werkzeuges,
wobei zur Erzeugung der Modifikation des Werkstücks mindestens zwei unterschiedliche Modifikationen, welche durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind, überlagert werden,
und/oder wobei zur Erzeugung der Modifikation des Werkstücks ein Werkzeug eingesetzt wird, dessen Oberflächengeometrie eine Modifikation umfasst, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert,
wobei die gewünschte Modifikation des Werkstückes im Wälzbild als ein Polynom zweiten Grades im Wälzwinkel $w_F$ und in der Werkstückbreitenposition $z_F$ vorgebbar ist.

1. Verfahren zur Herstellung eines verzahnten Werkstückes mit modifizierter Oberflächengeometrie durch ein Diagonalwälzverfahren mittels eines modifizierten Werkzeuges,
wobei zur Erzeugung der Modifikation des Werkstücks ein Werkzeug eingesetzt wird, dessen Oberflächengeometrie eine Modifikation umfasst, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$ für den konstanten Anteil sowie $F_{FtL,1}$ für den linearen Anteil und/oder $F_{FtQ,1}$ für den quadratischen Anteil gebildet werden, wobei $F_{FtC,1}$ nicht-linear von der Position in der zweiten Richtung abhängt und $F_{FtL,1}$ nicht-konstant ist, und/oder eine Modifikation, deren Steigung und/oder Balligkeit in Abhängigkeit von dem Werkzeugdrehwinkel und/oder der Werkzeugbreitenposition variiert, und deren Zahndicke in Abhängigkeit von dem Werkzeugdrehwinkel und/oder der Werkzeugbreitenposition nicht-linear variiert.

2. Verfahren nach Aspekt 0 oder 1, wobei die durch das modifizierte Werkzeug erzeugte Modifikation mit einer Modifikation überlagert wird, welche durch eine Veränderung der Maschinenkinematik des Bearbeitungsvorgangs des Werkstückes erzeugt wird.

3. Verfahren nach einem der vorangegangenen Aspekte, wobei eine gewünschte Modifikation der Oberflächengeometrie des Werkstückes im Wälzbild als ein Polynom zweiten Grades im Wälzwinkel $w_F$ und in der Werkstückbreitenposition $z_F$ vorgebbar ist, wobei bevorzugt mindestens einer und bevorzugt mehrere und weiter bevorzugt alle Koeffizienten des Polynoms innerhalb bestimmter Randbedingungen frei wählbar sind.

4. Verfahren zur Herstellung eines verzahnten Werkstückes mit modifizierter Oberflächengeometrie durch ein Diagonalwälzverfahren mittels eines modifizierten Werkzeuges,
wobei eine gezielte Modifikation der Oberflächengeometrie des Werkzeuges erzeugt wird, indem die Position des Abrichters zum Werkzeug beim Abrichten in Linienkontakt in Abhängigkeit von dem Werkzeugdrehwinkel und/oder der Werkzeugbreitenposition variiert wird,
und/oder wobei ein Werkzeug eingesetzt wird, dessen Oberflächengeometrie eine Modifikation umfasst, welche im Wälzbild zumindest lokal in einer ersten Richtung des Werkzeuges durch eine konstante, lineare und/oder quadratische Funktion zumindest näherungsweise beschreibbar ist, wobei die Koeffizienten dieser konstanten, linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder wobei ein Werkzeug eingesetzt wird, dessen Oberflächengeometrie eine Modifikation umfasst, deren Steigung und/oder Balligkeit in Abhängigkeit von dem Werkzeugdrehwinkel und/oder der Werkzeugbreitenposition variiert, wobei die gewünschte Modifikation des Werkstückes als Überlagerung mehrerer Balligkeiten mit innerhalb bestimmter Randbedingungen frei wählbaren Richtungen vorgebbar ist und/oder wobei eine gewünschte Profilballigkeit vorgebbar ist.

5. Verfahren nach einem der vorangegangenen Aspekte, wobei die Oberflächengeometrie des Werkzeuges eine Modifikation umfasst, welche im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch die Koeffizienten-Funktionen $F_{FtC,1}$ für den konstanten Anteil $F_{FtL,1}$ für den linearen Anteil gebildet werden, und/oder wobei die Koeffizienten-Funktion $F_{FtC,1}$ bevorzugt quadratisch von der Position in der zweiten Richtung abhängt und/oder wobei die Koeffizienten-Funktion $F_{FtL,1}$ bevorzugt linear von der Position in der zweiten Richtung abhängt, und/oder wobei die Modifikation des Werkzeuges eine Steigung aufweist, welche in Abhängigkeit von dem Werkzeugdrehwinkel und/oder der Werkzeugbreitenposition linear variiert und die Zahndicke in Abhängigkeit von dem Werkzeugdrehwinkel und/oder der Werkzeugbreitenposition quadratisch variiert, und/oder wobei die gewünschte Modifikation zumindest in eine erste und eine zweite Modifikation zerlegt wird, wobei die erste Modifikation im Wälzbild zumindest lokal in einer ersten Richtung des Werkstückes durch eine lineare Funktion zumindest näherungsweise beschreibbar ist, wobei die Koeffizienten dieser linearen Funktion in einer zweiten Richtung des Werkstückes, welche senkrecht zur ersten Richtung verläuft, durch Koeffizienten-Funktionen $F_{FtC,2}$ für den konstanten Anteil und $F_{FtL,2}$ für den linearen Anteil gebildet werden, und/oder eine Modifikation, deren Steigung in Abhängigkeit von der Werkstückbreitenposition variiert, wobei die Koeffizienten-Funktion $F_{FtC,2}$ bevorzugt quadratisch von der Position in der zweiten Richtung abhängt und/oder wobei die Koeffizienten-Funktion $F_{FtL,2}$ bevorzugt linear von der Position in der zweiten Richtung abhängt, und/oder wobei die Modifikation des Werkstückes eine Steigung aufweist, welche in Abhängigkeit von dem Werkstückdrehwinkel und/oder der Werkstückbreitenposition linear variiert und die Zahndicke in Abhängigkeit von dem Werkstückdrehwinkel und/oder der Werkstückbreitenposition quadratisch variiert, und wobei die zweite Modifikation durch ein Veränderung der Maschinenkinematik während des Bearbeitungsprozesses erzeugbar ist und/oder im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist, wobei die Funktion $F_{KFt}$ bevorzugt nicht-linear und weiter bevorzugt quadratisch von der Position in der vierten Richtung abhängt.

6. Verfahren nach einem der vorangegangenen Aspekte, wobei das Diagonalverhältnis beim Diagonalwälzbearbeiten des Werkstückes zumindest innerhalb bestimmter Randbedingungen unabhängig von der gewünschten Modifikation des Werkstückes und insbesondere unabhängig von der Richtung der gewünschten Balligkeit/en wählbar ist, und insbesondere auf Grundlage der Ausrichtung einer weiteren gewünschten Modifikation bestimmt wird, welche mit der als Polynom zweiten Grades und/oder als Überlagerung von Balligkeiten vorgebbaren gewünschten Modifikation des Werkstückes überlagert wird.

7. Verfahren nach einem der vorangegangenen Aspekte, wobei zusätzlich zu der als Polynom zweiten Grades und/oder als Überlagerung von Balligkeiten vorgebbaren gewünschten Modifikation des Werkstückes eine zusätzliche Modifikation vorgebbar ist, welche mit dieser überlagert wird, wobei die zusätzliche Modifikation bevorzugt eine ausgezeichnete Richtung aufweist und/oder es sich um eine Endrücknahme des Werkstückes handelt, wobei bevorzugt die Ausrichtung der zusätzlichen Modifikation und insbesondere der Endrücknahme innerhalb gewisser Randbedingungen frei vorgebbar ist, und insbesondere eine dreieckförmige Endrücknahme vorgebbar ist, wobei weiterhin bevorzugt das Diagonalverhältnis beim Diagonalwälzbearbeiten des Werkstückes in Abhängigkeit von einer gewünschten Ausrichtung der zusätzlichen Modifikation und insbesondere der Endrücknahme bestimmt wird.

8. Verfahren zur Herstellung eines verzahnten Werkstückes mit modifizierter Oberflächengeometrie durch ein Diagonalwälzverfahren mittels eines modifizierten Werkzeuges und einer Modifikation der Maschinenkinematik während des Bearbeitungsprozesses des Werkstückes, wobei aus einer gewünschten Modifikation der Oberflächengeometrie des Werkstücks eine zu deren Herstellung geeignete Modifikation der Oberflächengeometrie des Werkzeugs und sowie eine geeignete Modifikation der Maschinenkinematik während des Bearbeitungsprozesses bestimmt wird,

wobei die Modifikation der Oberflächengeometrie des Werkzeuges dadurch erzeugbar ist, dass die Position des Abrichters zum Werkzeug beim Abrichten in Linienkontakt in Abhängigkeit von dem Werkzeugdrehwinkel und/oder der Werkzeugbreitenposition variiert wird, und/oder wobei die Oberflächengeometrie des Werkzeuges eine Modifikation umfasst, welche im Wälzbild zumindest lokal in einer ersten Richtung des Werkzeuges durch eine konstante, lineare und/oder quadratische Funktion zumindest näherungsweise beschreibbar ist, wobei die Koeffizienten dieser konstanten, linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden,
wobei die gewünschte Modifikation des Werkstückes als Überlagerung mindestens einer Balligkeit mit einer Endrücknahme des Werkstückes vorgebbar ist.

9. Verfahren nach Aspekt 8, wobei die Ausrichtung der Balligkeit und/oder Endrücknahme innerhalb gewisser Randbedingungen frei vorgebbar ist, und insbesondere eine dreieckförmige Endrücknahme vorgebbar ist, und/oder wobei mehrere Balligkeiten mit innerhalb bestimmter Randbedingungen frei wählbaren Richtungen vorgebbar sind und/oder wobei eine gewünschte Profilballigkeit und/oder eine gewünschte Flankenlinienballigkeit vorgebbar sind.

10. Verfahren nach einem der vorangegangenen Aspekte, wobei die Ausrichtung der Endrücknahme, d. h. die Richtung, in welcher die Endrücknahme am stärksten abfällt, einem Winkel größer 30°, vorteilhafterweise größer 60°, weiter vorteilhafterweise größer 80° zur Eingriffslinie der Verzahnung aufweist und bevorzugt senkrecht auf dieser steht, und/oder wobei eine erste Richtung der Endrücknahme, in welcher diese durch eine konstante, lineare und/oder quadratische Funktion zumindest näherungsweise beschreibbar ist, einem Winkel kleiner 60°, vorteilhafterweise kleiner 30°, weiter vorteilhafterweise kleiner 10° zur Eingriffslinie der Verzahnung aufweist und bevorzugt parallel zu dieser verläuft und/oder wobei an Ober- und Unterkante unterschiedliche Endrücknahmen vorgesehen sind, und insbesondere Endrücknahmen mit unterschiedlicher Ausrichtung, wobei bevorzugt zur Bearbeitung der beiden Endrücknahmen mit unterschiedlichen Diagonalverhältnissen gearbeitet wird.

11. Verfahren zur Herstellung eines verzahnten Werkstückes mit modifizierter Oberflächengeometrie durch ein Diagonalwälzverfahren mittels eines modifizierten Werkzeuges,
wobei eine gezielte Modifikation der Oberflächengeometrie des Werkzeuges erzeugt wird, indem die Position des Abrichters zum Werkzeug beim Abrichten in Linienkontakt in Abhängigkeit von dem Werkzeugdrehwinkel und/oder der Werkzeugbreitenposition variiert wird,
und/oder wobei ein Werkzeug eingesetzt wird, dessen Oberflächengeometrie eine Modifikation umfasst, welche im Wälzbild zumindest lokal in einer ersten Richtung des Werkzeuges durch eine konstante, lineare und/oder quadratische Funktion zumindest näherungsweise beschreibbar ist, wobei die Koeffizienten dieser konstanten, linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder wobei ein Werkzeug eingesetzt wird, dessen Oberflächengeometrie eine Modifikation umfasst, deren Steigung und/oder Balligkeit in Abhängigkeit von dem Werkzeugdrehwinkel und/oder der Werkzeugbreitenposition variiert,
und
wobei die Modifikation des Werkzeuges durch das Diagonalwälzverfahren eine entsprechende Modifikation auf der Oberfläche des Werkstückes erzeugt,
wobei die gewünschte Modifikation des Werkstückes als eine Welligkeit mit einer Amplitude vorgebbar ist, welche quer zur Ausbreitungsrichtung der Welligkeit einen nicht-konstanten Wert aufweist.

12. Verfahren nach Aspekt 11, wobei eine Amplitudenfunktion vorgebbar ist, welche quer zur Ausbreitungsrichtung der Welligkeit und insbesondere entlang der Wellenkämme zumindest eine lineare und/oder quadratische Form aufweist, wobei bevorzugt einer oder mehrerer der Koeffizienten der Amplitudenfunktion zumindest innerhalb bestimmter Randbedingungen frei wählbar sind,
und/oder wobei die Amplitude so vorgebbar ist, dass diese in jeder Richtung der Flanke variiert, und/oder wobei die Amplitudenfunktion im Wälzbild als ein Polynom zweiten Grades im Wälzwinkel $w_F$ und in der Werkstückbreitenposition $z_F$ vorgebbar ist, und/oder wobei die Ausrichtung der Welligkeit zumindest innerhalb bestimmter Randbedingungen frei wählbar ist.

13. Verfahren zur Herstellung eines verzahnten Werkstückes mit modifizierter Oberflächengeometrie durch ein Diagonalwälzverfahren mittels eines modifizierten Werkzeuges,
wobei eine gezielte Modifikation der Oberflächengeometrie des Werkzeuges erzeugt wird, indem die Position des Abrichters zum Werkzeug beim Abrichten mit Linienkontakt in Abhängigkeit von dem Werkzeugdrehwinkel und/oder der Werkzeugbreitenposition variiert wird, wobei die Modifikation des Werkzeuges durch das Diagonalwälzverfahren eine entsprechende Modifikation auf der Oberfläche des Werkstückes erzeugt,

wobei die durch das modifizierte Werkzeug erzeugte Modifikation auf dem Werkstück im Wälzbild zumindest lokal in einer ersten Richtung des Werkstückes durch eine lineare und/oder quadratische Funktion zumindest näherungsweise beschreibbar ist, wobei die Koeffizienten dieser linearen und/oder quadratischen Funktion in einer zweiten Richtung des Werkstückes, welche senkrecht zur ersten Richtung verläuft, durch Koeffizienten-Funktionen $F_{FtC,2}$, $F_{FtL,2}$ und/oder $F_{FtQ,2}$ gebildet werden, und/oder die durch das modifizierte Werkzeug erzeugte Modifikation auf dem Werkstück in einer ersten Richtung eine Steigung und/oder Balligkeit aufweist, die in Abhängigkeit von dem Werkstückdrehwinkel und/oder der Werkstückbreitenposition variiert,

wobei die erste Richtung auf dem Werkstück mit einem Winkel kleiner 60°, vorteilhafterweise kleiner 30°, weiter vorteilhafterweise kleiner 10°, weiter bevorzugt parallel zur Eingriffslinie der Verzahnung verläuft.

14. Verfahren nach einem der vorangegangenen Aspekte, wobei die Modifikation der Oberflächengeometrie des Werkzeuges durch die Modifikation einer Relativposition zwischen Werkzeug und Abrichter beim Abrichten erzeugt wird, wobei der Abrichter beim Abrichten bevorzugt in Linienkontakt mit dem Werkzeug steht und/oder wobei das Abrichten einflankig oder zweiflankig erfolgt und/oder die erste Richtung der Modifikation der Oberflächengeometrie des Werkzeuges der Eingriffslinie des Abrichters beim Abrichten des Werkzeuges entspricht und/oder durch diese vorgegeben ist,

wobei bevorzugt das Werkzeug mittels einer Profil- oder Formrolle modifiziert abgerichtet wird,

wobei weiterhin bevorzugt die Profil- oder Formrolle beim Abrichten vom Fußbereich bis zum Kopfbereich mit dem Zahn des Werkzeuges in Kontakt steht, so dass die Modifikation über die gesamte Zahnhöhe in einem Hub erfolgt

oder alternativ

die Profil- oder Formrolle beim Abrichten nur in Teilbereichen zwischen Fuß und Kopf mit dem Zahn des Werkzeuges in Kontakt steht, so dass die gezielte Modifikation über die gesamte Zahnhöhe in mehreren Hüben und jeweils unterschiedlicher relativen Positionierung des Abrichters erfolgt,

und/oder wobei die gezielte Modifikation der Oberflächengeometrie des Werkzeuges durch eine Veränderung der Maschinenkinematik während des Abrichtprozesses in Abhängigkeit von dem Werkzeugdrehwinkel und/oder der Werkzeugbreitenposition erzeugt wird, insbesondere dadurch, dass dass bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation einstellbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander eingestellt werden, um die gezielte Modifikation entlang der Berührlinie zu erzeugen.

15. Verzahnmaschine zur Durchführung des Verfahrens nach einem der Aspekte 0 bis 14, wobei die Verzahnmaschine eine Eingabefunktion aufweist, über welche die gewünschte Modifikation vorgebbar ist, und eine Ansteuerungsfunktion, welche durch entsprechende Ansteuerung der Maschinenkinematik im Rahmen des Abrichtens des Werkzeuges und/oder der Bearbeitung eines Werkstückes die gewünschte Modifikation erzeugt, wobei bevorzugt eine Berechnungsfunktion vorgesehen ist, welche die zu Herstellung der gewünschten Modifikation des Werkstückes geeignete Modifikation des Werkzeuges und/oder die zur Erzeugung der Modifikationen benötigten Veränderungen der Maschinenkinematik während des Bearbeitungsprozesses und/oder ggf. während des Abrichtprozesses bestimmt.

16. Computersystem und/oder Softwareprogramm zur Bestimmung der zur Herstellung eines Werkstückes mit einer gewünschten Modifikation geeigneten Bearbeitungsparameter zur Durchführung eines Verfahrens nach einem der vorangegangenen Aspekte,

mit einer Funktion zur Eingabe einer gewünschten Modifikation und einer Berechnungsfunktion, welche aus der gewünschten Modifikation des Werkstücks die zu deren Erzeugung benötigten Parameter des Bearbeitungsvorgangs des Werkstückes und/oder die benötigte Modifikation des Werkzeugs und/oder die zur Bereitstellung der Modifikation des Werkzeugs benötigte Modifikation des Abrichtvorgangs und/oder des Abrichters bestimmt.

17. Computersystem und/oder Softwareprogramm nach Aspekt 16 mit einer Schnittstelle zur oder installierbar auf einer Verzahnmaschine, so dass durch das Computersystem und/oder Softwareprogramm die Veränderungen der Maschinenkinematik während des Abrichtprozesses und/oder die Parameter des Bearbeitungsvorgangs vorgebbar und/oder bestimmbar sind.

**B.IV. Variation des Diagonalverhältnisses**

1. Verfahren zur Herstellung eines verzahnten Werkstückes, insbesondere eines Werkstückes mit modifizierter Oberflächengeometrie durch ein Diagonalwälzverfahren insbesondere mittels eines modifizierten Werkzeuges, insbesondere nach einem der vorangegangenen Aspekte, wobei während der Bearbeitung ein Axialvorschub des Werkzeuges mit einem durch das Verhältnis zwischen Axialvorschub des Werkzeuges und Axialvorschub des Werkstückes gegebenen Diagonalverhältnis erfolgt und wobei im Rahmen der Bearbeitung eines Werkstückes das Diagonalverhältnis verändert wird.

2. Verfahren nach Aspekt 1, wobei bei der Verwendung unterschiedlicher Bereiche des Werkzeuges zur Bearbeitung des gleichen Bereiches des Werkstückes mit unterschiedlichen Diagonalverhältnissen gearbeitet wird, wobei bevorzugt innerhalb der jeweiligen Bereiche mit einem konstantem Diagonalverhältnis gearbeitet wird.

3. Verfahren nach Aspekt 1 oder 2, wobei zur Bearbeitung unterschiedlicher Bereiche des Werkstückes mit unterschiedlichen Diagonalverhältnissen gearbeitet wird, und/oder wobei das Diagonalverhältnis verändert wird, während im Rahmen der Verzahnbearbeitung die Breite der Verzahnung abgefahren wird, wobei bevorzugt innerhalb der jeweiligen Bereiche mit einem konstantem Diagonalverhältnis gearbeitet wird.

4. Verfahren nach einem der vorangegangenen Aspekte, wobei das Diagonalverhältnis während der Bearbeitung des Werkstückes in Abhängigkeit von dem Axialvorschub des Werkstückes und/oder Werkzeuges variiert wird, wobei bevorzugt das Diagonalverhältnis zumindest in einem Bereich des Axialvorschubs als eine stetige nicht-konstante Funktion des Axialvorschubs gegeben ist, und/oder wobei bevorzugt die Variation des Diagonalverhältnisses beim Überstreichen eines modifizierten Bereichs des Werkstücks erfolgt, und/oder wobei bevorzugt der Verlauf mindestens einer Linie der Modifikation auf dem Werkstück vorgeben wird, entlang welcher die Modifikation durch eine lineare und/oder quadratische Funktion gegeben ist, und hieraus die Variation des Diagonalverhältnisses in Abhängigkeit vom Axialvorschubs und insbesondere die stetige nicht-konstante Funktion, durch welche dieser gegeben ist, bestimmt wird.

5. Verfahren nach einem der vorangegangenen Aspekte, wobei bei welchem eine Veränderung des Diagonalverhältnisses erfolgt, während das Werkzeug am Werkstück in Breitenrichtung entlanggeführt wird, wobei das Werkzeug eine konische Grundform aufweist, wobei bevorzugt die durch die Veränderung des Diagonalverhältnisses erzielbaren Modifikationen durch eine geeignete Wahl mindestens eines und bevorzugt mehrerer Parameters des Bearbeitungsvorgangs und/oder der Makrogeometrie des Werkzeuges, insbesondere des Achskreuzwinkels und/oder des Achsabstands und/oder des Konuswinkels und/oder des Profilwinkels des Werkzeuges, gezielt beeinflusst werden.

6. Verfahren nach einem der vorangegangenen Aspekte, wobei das Werkzeug mindestens einen modifizierten und einen unmodifizierten Bereich und/oder mindestens zwei Bereiche mit unterschiedlichen Modifikationen, insbesondere mit Modifikationen mit unterschiedlicher Ausrichtung, und/oder zwei modifizierte Bereiche, zwischen welchen ein unmodifizierter Bereich liegt, aufweist, wobei bevorzugt in mindestens zwei Bereichen mit unterschiedlichen Diagonalverhältnissen gearbeitet wird.

7. Verfahren nach einem der vorangegangenen Aspekte, wobei das Werkzeug mindestens zwei Bereiche aufweist, welche nacheinander zur Bearbeitung des gleichen Bereichs des Werkstückes eingesetzt werden, insbesondere mindestens einen Schrupp- und mindestens einen Schlichtbereich, wobei die Bearbeitungsschritte mit den beiden Bereichen, insbesondere der Schruppschnitt und der Schlichtschritt, mit unterschiedlichen Diagonalverhältnissen erfolgen, wobei bevorzugt die zur Bearbeitung eingesetzten Bereiche die gesamte Werkzeugbreite nutzen, und/oder wobei bevorzugt zumindest ein Bereich, insbesondere der Schlichtbereich, modifiziert ist, wobei für den Fall, dass beide Bereiche, insbesondere sowohl der Schrupp- als auch Schlichtbereich, modifiziert sind, die Modifikation jeweils eine unterschiedliche Ausrichtung aufweist, und/oder die Modifikation auf dem Schruppbereich nur näherungsweise zu der gewünschten Modifikation auf der Verzahnung führt.

8. Verfahren nach einem der vorangegangenen Aspekte, wobei das Werkzeug mindestens zwei Bereiche aufweist, welche nacheinander zur Bearbeitung unterschiedlicher Bereiche des Werkstückes eingesetzt werden, wobei die Bearbeitung in dem einen Bereich mit einem anderen Diagonalverhältnis erfolgt als in dem anderen Bereich, wobei das Werkzeug bevorzugt einen modifizierten und einen unmodifizierten Bereich aufweist, wobei bevorzugt das Diagonalverhältnis in dem unmodifizierten Bereich kleiner ist als im modifizierten Bereich, um die Breite des Werkzeuges zu verringern, oder wobei das Diagonalverhältnis in dem unmodifizierten Bereich größer ist als im modifizierten Bereich, um in diesem Bereich die Belastung des Werkzeuges zu verringern.

9. Verfahren nach einem der vorangegangenen Aspekte, wobei das Werkzeug zwei modifizierte Bereiche, zwischen welchen ein unmodifizierter Bereich liegt, aufweist, welche nacheinander zur Bearbeitung unterschiedlicher Bereiche des Werkstückes eingesetzt werden, wobei zumindest in den modifizierten Bereichen mit unterschiedlichen Diagonalverhältnissen gearbeitet wird, um in den jeweiligen Bereichen des Werkstückes unterschiedliche Modifikationen, insbesondere Modifikationen mit unterschiedlicher Ausrichtung, zu erzeugen, wobei die Bereiche bevorzugt so angeordnet sind, dass der Verlauf des Kontaktpunktes zwischen Werkzeug und Werkstück in mindestens einer Schleifposition komplett im unmodifizierten Bereich liegt.

10. Werkzeug zur Durchführung eines Verfahrens nach einem der vorangegangenen Aspekte, mit mindestens einen modifizierten und einen unmodifizierten Bereich, wobei die Oberflächengeometrie des modifizierten Bereiches eine Modifikation umfasst, welche im Wälzbild zumindest lokal in einer ersten Richtung des Werkzeuges durch eine lineare und / oder quadratische Funktion zumindest näherungsweise beschreibbar ist, wobei die Koeffizienten dieser linearen und / oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und / oder $F_{FtQ,1}$ gebildet werden, und/oder deren Steigung und / oder Balligkeit in Abhängigkeit von dem Werkzeugdrehwinkel und / oder der Werkzeugbreitenposition variiert.

11. Verzahnmaschine zur Durchführung des Verfahrens nach einem der Aspekte 1 bis 9, wobei die Verzahnmaschine vorteilhafterweise eine Eingabe- und/oder Berechnungsfunktion aufweist, über welche unterschiedliche Diagonalverhältnisse und/oder ein variables Diagonalverhältnis vorgebbar und/oder bestimmbar sind, und/oder eine Ansteuerungsfunktion, welche im Rahmen der Bearbeitung eines Werkstückes das Diagonalverhältnis verändert.

12. Verzahnmaschine nach Aspekt 11, wobei die Steuerungsfunktion mindestens zwei nacheinander erfolgende Bearbeitungsschritte durchführt, bei welchen ein jeweils anderer Bereich des Werkzeuges zur Bearbeitung des gleichen Bereichs des Werkstückes eingesetzt werden, insbesondere mindestens einen Schrupp- und mindestens einen Schlichtschritt durchführt, wobei die Bearbeitungsschritte, insbesondere der Schruppschritt und der Schlichtschritt, mit unterschiedlichen Diagonalverhältnissen erfolgen.

13. Verzahnmaschine nach Aspekt 11 oder 12, wobei die Steuerungsfunktion im Verlauf eines Bearbeitungsschrittes mindestens einmal das Diagonalverhältnis ändert und/oder das Diagonalverhältnis verändert wird, während im Rahmen der Verzahnbearbeitung die Breite der Verzahnung abgefahren wird, wobei die Steuerungsfunktion bevorzugt zur Bearbeitung unterschiedlicher Bereiche des Werkstückes mit unterschiedlichen Diagonalverhältnissen arbeitet, und weiter bevorzugt innerhalb der jeweiligen Bereiche mit einem konstantem Diagonalverhältnis arbeitet, und/oder wobei die Steuerungsfunktion das Diagonalverhältnis während der Bearbeitung des Werkstückes in Abhängigkeit von dem Axialvorschub des Werkstückes und/oder Werkzeuges variiert, wobei das Diagonalverhältnis zumindest in einem Bereich des Axialvorschubs als eine nicht-konstante und ggf. stetige Funktion des Axialvorschubs gegeben ist.

**B.V. Konische Werkzeuge**

1. Verfahren zur Herstellung eines verzahnten Werkstückes, insbesondere eines Werkstückes mit modifizierter Oberflächengeometrie durch ein Diagonalwälzverfahren insbesondere mittels eines modifizierten Werkzeuges, insbesondere nach einem der vorangegangenen Aspekte, wobei das Werkzeug eine konische Grundform aufweist, wobei der Konuswinkel des Werkzeuges bevorzugt größer 1', weiter bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist.

2. Verfahren nach Aspekt 1, wobei auf linker und rechter Zahnflanke des Werkstückes unterschiedliche Modifikationen erzeugt werden, insbesondere Modifikationen mit unterschiedlicher Ausrichtung und/oder wobei die Verzahnung des Werkstückes auf linker und rechter Zahnflanke asymmetrisch ist und/oder wobei die Bearbeitung des Werkstückes zweiflankig erfolgt.

3. Verfahren nach einem der vorangegangenen Aspekte, wobei das Werkstück eine zylindrische oder eine konische Grundform aufweist.

4. Verfahren nach einem der vorangegangenen Aspekte, wobei durch die geeignete Wahl des Konuswinkels des Werkzeuges eine gewünschte Ausrichtung der Modifikationen auf der linken und rechten Zahnflanke des Werkstückes erreicht wird.

5. Verfahren nach einem der vorangegangenen Aspekte, wobei der Axialvorschub des Werkzeuges mit einer Zustellbewegung des Werkzeuges an das Werkstück überlagert wird, wobei bevorzugt die überlagerte Bewegung in Konusrichtung erfolgt.

6. Werkzeug zur Verzahnbearbeitung eines Werkstückes durch ein Diagonalwälzverfahren, insbesondere Schleifschnecke,
wobei das Werkzeug eine konische Grundform aufweist und wobei das Werkzeug eine Modifikation seiner Oberflächengeometrie aufweist, welche im Wälzbild zumindest lokal in einer ersten Richtung des Werkzeuges durch eine lineare und/oder quadratische Funktion zumindest näherungsweise beschreibbar ist, wobei die Koeffizienten dieser linearen und/oder quadratischen Funktion in einer zweiten Richtung des Werkzeuges, welche senkrecht zur ersten Richtung verläuft, durch Koeffizienten-Funktionen $F_{FtC,1}$, $F_{FtL,1}$ und/oder $F_{FtQ,1}$ gebildet werden, und/oder eine Modifikation, deren Steigung und/oder Balligkeit in Abhängigkeit von dem Werkzeugdrehwinkel und/oder der Werkzeugbreitenposition variiert, wobei bevorzugt der Konuswinkel des Werkzeuges größer 1', bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist,

7. Verzahnmaschine zur Durchführung des Verfahrens nach einem der Aspekte 1 bis 6, wobei die Verzahnmaschine vorteilhafterweise eine Eingabefunktion aufweist, über welche der Konuswinkel und/oder der Profilwinkel des Werkzeuges und/oder des Werkstückes ein- und/oder vorgebbar sind, und/oder vorteilhafterweise eine Ansteuerungsfunktion aufweist, welche die NC-Achsen der Verzahnmaschine so ansteuert, dass bei der Bearbeitung ein Werkzeug mit einer konischen Grundform im Diagonalwälzverfahren auf dem Werkstück abwälzt, wobei bevorzugt der Axialvorschub des Werkzeuges mit einer Zustellbewegung des Werkzeuges an das Werkstück überlagert wird, wobei bevorzugt die überlagerte Bewegung in Konusrichtung erfolgt, und/oder wobei die Verzahnmaschine eine Ansteuerungsfunktion aufweist, welche die NC-Achsen der Verzahnmaschine so ansteuert, dass bei dem Abrichten eines Werkzeuges mit einer konischen Grundform der Abrichter der konischen Grundform folgt, und/oder wobei die Verzahnmaschine eine Eingabefunktion umfasst, die die Eingabe einer gewünschten Modifikation des Werkstückes erlaubt, und eine Berechnungsfunktion, die die zur Erzeugung der Modifikationen benötigten Veränderungen der Maschinenkinematik während des Abrichtprozesses und/oder den Konuswinkel und/oder den Profilwinkel des Werkzeugs bestimmt, und/oder wobei die Verzahnmaschine eine Eingabefunktion umfasst, durch welche eine gewünschte Modifikationen des Werkzeuges und/oder der Konuswinkel und/oder der Profilwinkel und/oder die zur Erzeugung dieser Modifikationen benötigten Veränderungen der Maschinenkinematik während des Abrichtprozesses eingebbar sind, wobei bevorzugt eine Ansteuerungsfunktion vorgesehen ist, welche die Maschinenkinematik während des Bearbeitungsprozesses und/oder Abrichtprozesses entsprechend verändert.

## C. Weitere Aspekte Abrichten

- Abrichten einer Schnecke zum Wälzschleifen einer Verzahnung mit korrigierter Abrichtkinematik, wobei die Profilform bzw. Profilmodifikation an 4 Wälzwegen vorgegeben wird.
- Abrichten einer Schnecke zum Wälzschleifen einer Verzahnung, wobei die Profilform bzw. Profilmodifikation an 3 Wälzwegen vorgegeben wird und ein Radius auf dem Abrichter einem Radius auf der Schnecke zugordnet wird.
- Abrichten einer Schnecke zum Wälzschleifen einer Verzahnung mit korrigierter Abrichtkinematik, wobei die Profilform bzw. Profilmodifikation an 4 Wälzwegen über die Schneckenbreite variabel vorgegeben wird, mit der Option, auch diese 4 Wälzwege über die Schneckenbreite variabel zu wählen.
- Abrichten einer Schnecke zum Wälzschleifen einer Verzahnung, wobei die Profilform bzw. Profilmodifikation an 3 Wälzwegen über die Schneckenbreite variabel vorgegeben wird und ein Radius auf dem Abrichter einem Radius auf der Schnecke zugordnet wird, mit den Optionen, auch diese 3 Wälzwege über die Schneckenbreite variabel zu wählen und/oder die Zuordnung des Radius auf dem Abrichter zum Radius auf der Schnecke über die Schneckenbreite variabel zu wählen.
- Abrichten nach einem der vorherigen Verfahren, wobei der Bereich auf der Schnecke, der abgerichtet werden soll, gezielt vorgegeben wird.

- Aufteilen der Schnecke in mehrere modifizierte oder nicht modifizierte Bereiche, welche als Schrupp- und/oder Schlichtbereiche genutzt werden können, insbesondere können Schruppbereiche zwischen Schlichtbereichen platziert werden.
- Spezialfall der Profilballigkeit bei evolventischer Schnecke, insbesondere mit der sehr guten Näherung nach Gleichung (23), insbesondere in Kombination mit variabel platzierter Profilmodifikation aus Abrichter, optional mit Berücksichtigung der relativen Profilstreckung.
- Korrektur der Profilmodifikation, insbesondere einer Profilballigkeit, insbesondere durch vorheriges Messen des Profils in der Verzahnmaschine.
- Annäherung der Sollmodifikation (topologisch oder reine Profilmodifikation), beispielsweise mit Ausgleichsrechnung, insbesondere mit vorgebbarer Gewichtung
- Anwendung des Verfahrens auch auf konische Schnecken
- Abrichten konischer Schnecken allgemein, auch ohne Modifikation. (Ist das noch neu?)
- Korrektur der ungewünschten Profilfehler bei kleinen Schneckendurchmesser und/oder hohen Gangzahlen
- Korrektur der ungewünschten Profilballigkeit bei kleinen Schneckendurchmessern und/oder großen Gangzahlen mit und ohne Anpassung der Profilwinkel evolventischer zylindrischer und konischer Schnecken
- Abrichten in mehreren Hüben, sodass pro Hub nur ein Teil der Profilhöhe abgerichtet wird und in jedem dieser Bereiche die Erfindung angewendet werden kann mit den Optionen

  ◦ Die in einem Hub abgerichteten Bereiche über die Schneckenbreite zu verschieben, um so topologische Modifikationen zu erzeugen.
  ◦ Die Modifikation in jedem pro Hub abgerichteten Bereich über die Schneckenbreite zu variieren
  ◦ Für verschiedene Bereich auf der Schnecke verschiedenen Bereiche auf dem Abrichter zu nutzen, wobei die einzelnen Bereiche auf dem Abrichter verschiedene Modifikationen aufweisen können
  ◦ Mehr als ein Abrichter zum Einsatz kommt, wobei die verschiedenen Abrichter unterschiedliche Modifikationen und/oder Geometrien aufweisen können

- Berechnungseinheit/Software zur

  ◦ Berechnung aller erzeugbarer Profilmodifikationen für einen gegebenen Satz an geometrischen Abrichter- und Schneckengrößen, insbesondere der $f_{iFS}$ für die 3-Punkt und 4-Punkt-Methode, insbesondere der maximal/minimal erzeugbaren Profilballigkeit.
  ◦ Berechnung geeigneter geometrischer Größen aus gegebener Profilmodifikation, insbesondere gegebenen $f_{iFS}$ ,für die 3-Punkt und 4-Punkt-Methode, insbesondere einer Profilmodifikation
  ◦ Übertragung der letzten beiden Punkte auf topologische Modifikationen
  ◦ Auswahl geeigneter Schnecken und/oder Abrichter aus einer Datenbank

- Verwendung von Schnecken mit ausgesparten Gängen
- Berücksichtigung von, durch Abweichungen in den Achsen verursachten Fehlern im Profil bei der Berechnung der geometrischen Größen.
- Auswahl günstiger Lösungen für die Koordinaten $B_1, ...,B_{N_s}$ bei Bewegungsapparaten, welche zu nicht eindeutigen Lösungen für die Koordinaten $B_1,...,B_{N_s}$ führen, insbesondere dahingehend optimiert, dass

  ◦ die durch Abweichungen in den Achsen verursachten Profilfehler minimiert werden und/oder
  ◦ es zu keinen Kollisionen mit Schnecke und/oder Abrichter und/oder Maschinenteilen mit anderen Maschinenteilen kommt

- Berechnung der Abweichungen der Achsen aus Fehlern im Profil / in topologischen Modifikationen
- Gezielte Nutzung der Profilstreckung für Profilmodifikationen und topologischen Modifikationen

  ◦ Auswahl geeigneter Schnecken- und Abrichtergeometrie
  ◦ Anpassung der Schneckengeometrie bei kleiner werdender Schnecke, insbesondere Anpassung des Profilwinkels

## D. Weitere Aspekte Diagonalwälzverfahren

- Bearbeitung einer Verzahnung mit einem Werkzeug mit einer Modifikation gemäß Gleichung (25) im Diagonalwälzverfahren zur Erzeugung einer Modifikation gemäß Gleichung (25) auf der Verzahnung. Die Bearbeitung kann mit Verfahren, welche ein verzahntes Werkzeug und die Kinematik eines Schraubwälzgetriebes nutzen, beispielsweise mit einem der folgenden:

  ◦ Wälzschleifen
  ◦ Wälzfräsen
  ◦ Schälwälzfräsen
  ◦ Schaben
  ◦ Innen und außen Honen

- Das Verfahren kann ein- und zweiflankig angewandt werden
- Werkzeug und Werkstück können sowohl konisch als auch zylindrisch sein.
- Richtung $\rho_F$ und Funktionen $F_{FtC}(X_F)$, $F_{FtL}(X_F)$, $F_{FtQ}(X_F)$ können auf beiden Flanken frei vorgeben werden.
- Spezielle besonders schützenswerte Anwendungsfälle:

  ◦ Balligkeit entlang einer beliebigen Richtung mit frei wählbarem Diagonalverhältnis mit ein- oder zweiflankigem Abrichten
  ◦ Überlagerung mehrerer Balligkeiten, optional mit Überlagerung einer gerichteten beliebigen Modifikation, welche mit dem hier beschriebenen Verfahren gefertigt werden kann, beispielsweise einer Endrücknahme oder einer dreiecksförmigen Endrücknahme mit ein- oder zweiflankigem Abrichten

- Beim Wälzschleifen können abrichtbare und nicht abrichtbare Werkezeug eingesetzt werden. Das Abrichten kann einflankig, in bestimmten Fällen auch zweiflankig, jeweils mit einer Profilrolle mit Linienkontakt über das ganze Profil oder in mehreren Hüben oder im Zeilenabrichten erfolgen.
- Beim Zeilenabrichten oder bei nicht abrichtbaren Werkzeugen kann die durch $\rho_F$ gegebene Richtung konstanter Modifikation, abhängig vom Fertigungsverfahren des Werkzeugs frei gewählt werden.
- Aufteilung des Werkzeugs in Schrupp- und Schlichtbereiche, wobei die Schruppbereiche sowohl modifiziert als auch nicht modifiziert sein können.
- Erzeugung der Modifikation auf der Verzahnung beim Schruppen nur näherungsweise, um beispielsweise die Belastung oder die Aufteilung des Werkzeugs zu optimieren.
- Erzeugung der Modifikation auf der Verzahnung nur näherungsweise, um die Aufteilung des Werkzeugs zu optimieren. Einstellung des Diagonalverhältnisses unabhängig von den Modifikationen einstellen. Bisher ist hier eine direkte Abhängigkeit gegeben zwischen der Verzahnungsbreite und dem "Diagonalbereich" der Schnecke. Nun könnte man sich auch einen unterschiedlichen Diagonalvorschub über der Werkstückbreite vorstellen.
- Überlagerung der Modifikation auf der Verzahnung gemäß Gleichung (25) mit reiner Profilmodifikation und/oder Modifikation aus korrigierter Bearbeitungskinematik (Gleichung (100))
- Exakte oder näherungsweise Zerlegung und Bestimmung von $F_{FtC}$, $F_{FtL}$, $F_{FtQ}$ und $\rho_F$, beispielsweise durch Ausgleichsrechnung
- Exakte oder näherungsweise Zerlegung und Bestimmung von $F_{FtC}$, $F_{FtL}$, $F_{FtQ}$ und $\rho_F$ und/oder $f_{PFt}$ und/oder $F_{KFt}$, beispielsweise durch Ausgleichsrechnung
- Exakte oder näherungsweise Zerlegung und Bestimmung von $F_{FtC}$, $F_{FtL}$, $F_{FtQ}$ und $\rho_F$ und/oder $f_{PFt}$ und/oder $F_{KFt}$, beispielsweise durch Ausgleichsrechnung unter Berücksichtigung technologischer Gesichtspunkte
- Aufteilung der Zahnflanke in modifizierte und nicht modifizierte Bereiche, wobei die Modifikationen auf den modifizierten Bereichen durch unterschiedliche $\rho_F$ beschrieben werden können. Einstellen unterschiedlicher Diagonalverhältnisse während der Bearbeitung.
- Wahl der Makrogeometrie des Werkzeugs, insbesondere Gangzahl und/oder Grundschrägungswinkel und/oder Grundkreisradien und/oder Außendurchmesser (im Falle eines konischen Werkzeugs an einer definierten z-Position) und/oder des Konuswinkels, so dass

  ◦ das nach dem hier beschriebenen Verfahren berechnete Diagonalverhältnis einen gegebenen Wert annimmt bzw. in einem gegebenen Bereich liegt und/oder
  ◦ der nach dem hier beschriebenen Verfahren berechnete Arbeitsbereich einen gegebenen Wert annimmt bzw. in einem gegebenen Bereich liegt

- Wahl der Makrogeometrie des Werkzeugs, insbesondere Gangzahl und/oder Grundschrägungswinkel und/oder Grundkreisradien und/oder Außendurchmesser (im Falle eines konischen Werkzeugs an einer definierten z-Position) und/oder des Konuswinkels und des Abrichters, so dass

∘ die erforderlichen Balligkeiten entlang der Berührlinie beim Abrichten erreicht werden können

∘ beim zweiflankigen Abrichten die benötigten linearen Anteile auf linker und rechter Flanke über die ganze Schneckenbreite erreicht werden können

Punkte speziell zum variablen Diagonalverhältnis

- Wälzschleifen mit nicht konstantem Diagonalverhältnis, um Geraden auf der Schnecke auf einen gezielt vorgegebenen Verlauf auf dem Werkstück abzubilden, sodass die Modifikation entlang dieses Verlaufs auf dem Werkstück zumindest näherungsweise durch ein Polynom zweiten Grades gegeben ist.
- Auswahl einer geeigneten Schneckengeometrie, insbesondere des Konuswinkels, des Profilwinkels und einer geeigneten Schleifkinematik, insbesondere Achskreuzwinkel, um die Verschiebung der Verläufe auf einer oder beiden Seiten zu beeinflussen.
- Ausgleichsrechnung um $F_{zV1}$, $F_{Ft1C}$, $F_{Ft1L}$, $F_{Ft1Q}$, $f_{PFt}$, $F_{KFt}$ und/oder Makrogeometrie der Schnecke, insbesondere Konuswinkel und Profilwinkel, sowie Achskreuzwinkel bei der Bearbeitung zu bestimmen um Modifikation möglichst gut anzunähern.
- Software zur Berechnung möglicher Verläufe und deren Verschiebung/Entwicklung für verschiedene $X_{F1}$, insbesondere für konische Verzahnungen, da diese dann nicht trivial ist. Für zylindrische Verzahnungen Ist diese Entwicklung eine reine Verschiebung. Wird mit einer konischen Schnecke geschliffen, ist die Richtung in der verschoben wird, zu berechnen.
- Software zur Berechnung möglicher Verläufe beim zweiflankigen Schleifen. In dem Fall beeinflusst der Verlauf auf der einen Flanke den auf der anderen.

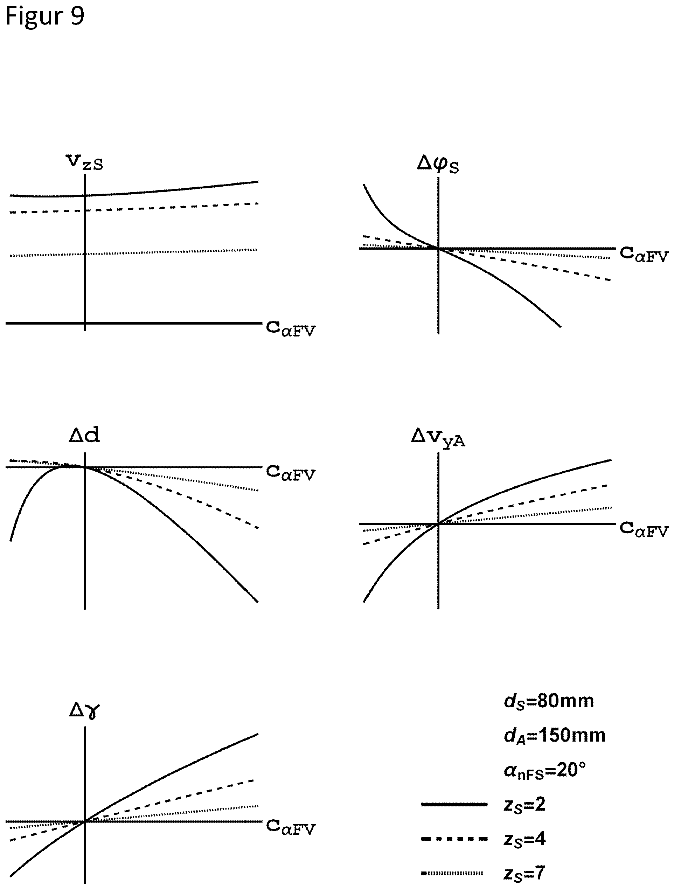

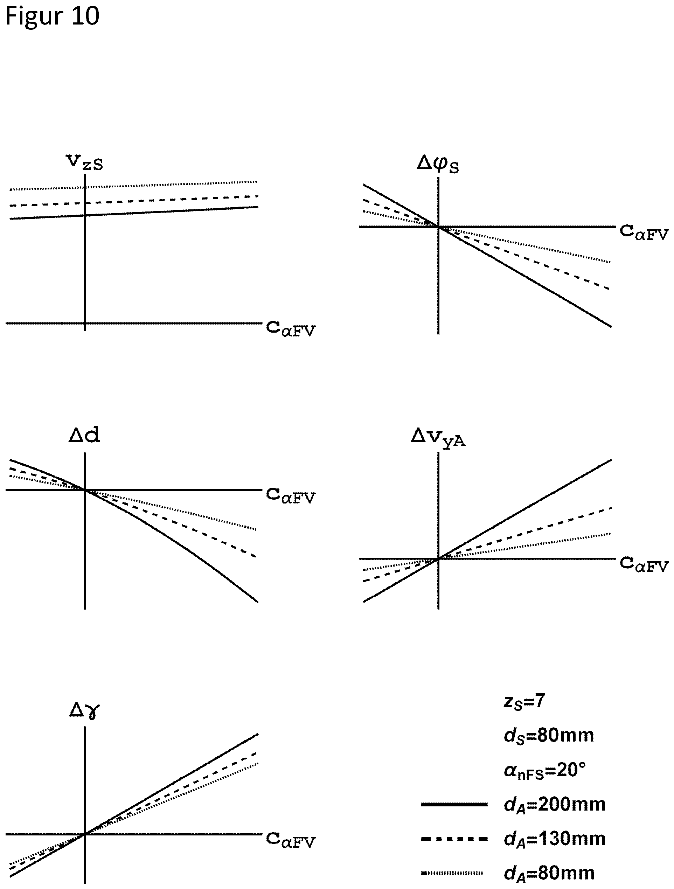

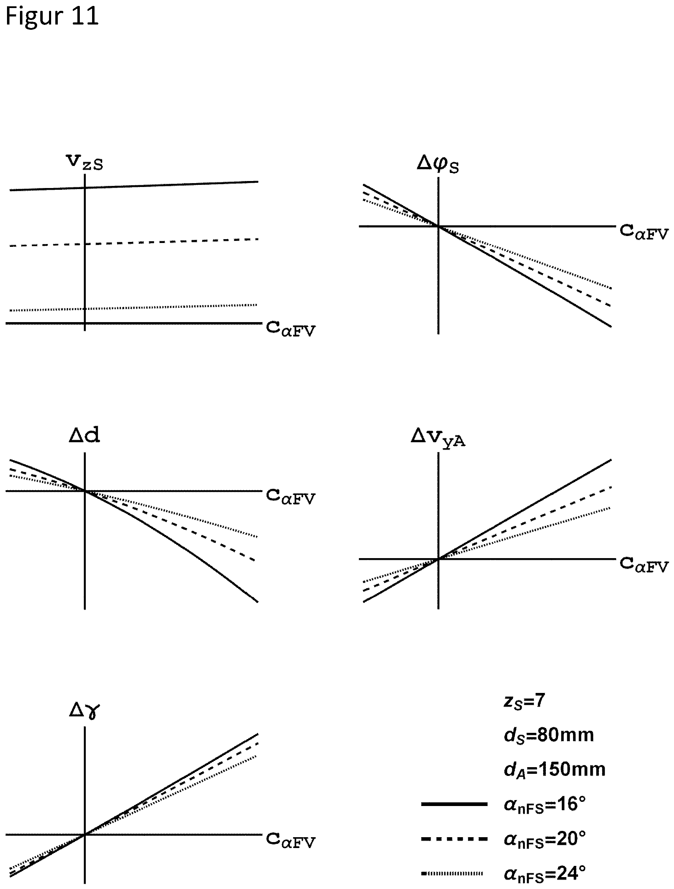

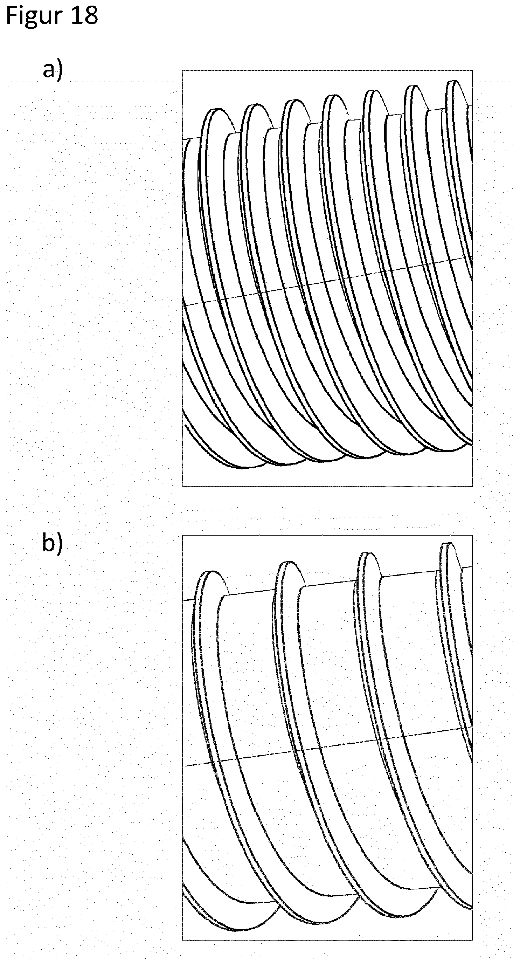

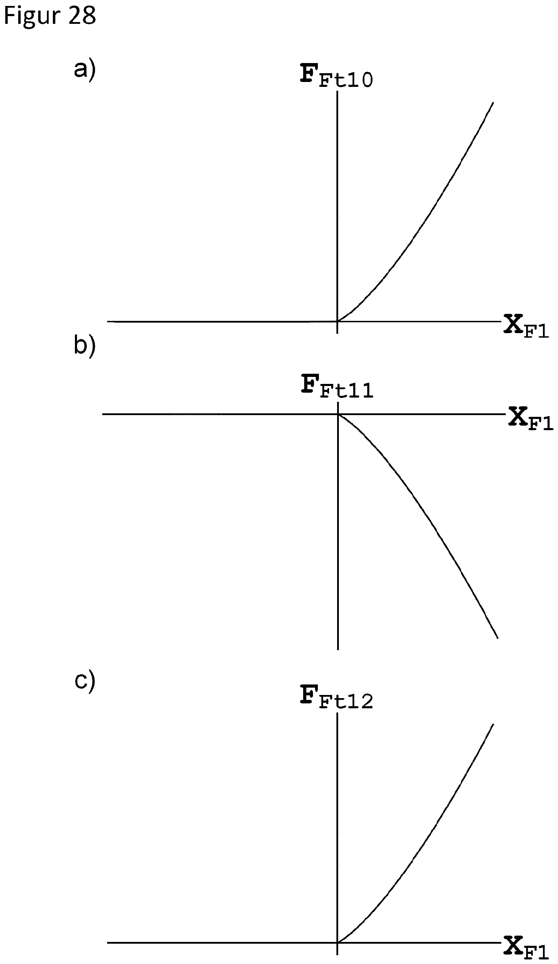

Figur 1Figur 2Figur 3Figur 4Figur 5Figur 6Figur 7Figur 8Figur 9Figur 10Figur 11Figur 12Figur 13Figur 14aFigur 14bFiguren 15Figur 16aFigur 16bFigur 17Figur 18Figur 19Figur 20Figur 21Figur 22Figur 23Figur 24Figur 25Figur 26Figur 27Figur 28Figur 29Figur 30Figur 31Figur 32Figur 33Figur 34Figur 35Figur 36Figur 37Figur 38

**Patentansprüche**

1. Verfahren zur Herstellung eines Werkstückes mit einer gewünschten Verzahnungsgeometrie mittels eines durch einen modifizierten Abrichter geeignet abgerichteten Werkzeuges, mit den Schritten:

   - Vorgabe einer gewünschten Verzahnungsgeometrie des Werkstückes, und
   - Bestimmung eines geeigneten Profilwinkels des Werkzeuges und einer geeigneten relativen Position zwischen Abrichter und Werkzeug beim Abrichten des Werkzeuges zur Bereitstellung der gewünschten Verzahnungsgeometrie des Werkstückes zumindest innerhalb einer zulässigen Toleranz beim Bearbeiten durch das Werkzeug.

2. Verfahren nach Anspruch 1, wobei der Profilwinkel und die relative Position zwischen Abrichter und Werkzeug beim Abrichten so bestimmt werden, dass sich beim Abrichten eine gewünschte Stauchung und/oder Streckung der Modifikation des Abrichters auf dem Werkzeug ergibt, wobei der Profilwinkel insbesondere so bestimmt wird, dass eine sich durch die relative Position zwischen Abrichter und Werkzeug beim Abrichten ergebende Stauchung und/oder Streckung der Modifikation des Abrichters auf dem Werkzeug durch den Profilwinkel ausgeglichen wird.

3. Verfahren zum modifizierten Abrichten eines Werkzeuges, welches zur Verzahnbearbeitung eines Werkstückes einsetzbar ist, auf einer Abrichtmaschine, wobei zum Abrichten des Werkzeuges ein modifizierter Abrichter eingesetzt wird, **dadurch gekennzeichnet, dass** die Bewegungsachsen der Abrichtmaschine beim Abrichten des Werkzeuges so eingestellt und/oder die Makrogeometrie des Werkzeuges und/oder des Abrichters, insbesondere die Gangzahl und/oder der Durchmesser und/oder der Profilwinkel und/oder der Konuswinkel des Werkzeugs und/oder der Durchmesser des Abrichters, so gewählt wird, dass die Modifikation des Abrichters um einen vorgegebenen Betrag gestaucht oder gestreckt auf dem Werkzeug und/oder gestaucht oder gestreckt auf dem Werkstück aufgebracht wird.

4. Verfahren nach einem der vorangegangenen Ansprüche zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschritte das Werkzeug jeweils durch einen Abrichter abgerichtet wird, bevor weitere Bearbeitungsschritte an dem selben oder weiteren Werkstücken durchgeführt werden, wobei bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert wird.

5. Verfahren nach Anspruch 4, wobei die zusätzliche Verstellung der Bewegungsachsen der Abrichtmaschine Modifikationen der Verzahnungsgeometrie, welche sich durch den kleineren Werkzeugdurchmesser ergeben, zumindest teilweise ausgleicht, und/oder wobei die zusätzliche Verstellung der Bewegungsachsen der Abrichtmaschine gegenüber einem Abrichten ohne eine solche zusätzliche Verstellung eine Veränderung der sich beim Abrichten ergebenden Profilballigkeit bewirken, und/oder wobei die zusätzliche Verstellung so gewählt wird, dass eine Abweichung der sich auf dem Werkstück ergebenden Verzahnungsgeometrie von einer gewünschten Verzahnungsgeometrie reduziert und/oder minimiert wird, und/oder wobei die zusätzliche Verstellung eine Abweichung der durch den Abrichter auf dem Werkzeug erzeugten Verzahnungsgeometrie von einer Sollgeometrie reduziert oder minimiert.

6. Verfahren nach einem der vorangegangenen Ansprüche zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschrittes das Werkzeug jeweils abgerichtet wird, bevor weitere Bearbeitungsschritte an dem selben oder weiteren Werkstücken durchgeführt werden, wobei bei einem späteren Abrichtvorgang der Profilwinkel des Werkzeuges gegenüber einem früheren Abrichtvorgang geändert wird, so dass das oder die Werkstücke nach dem späteren Abrichtvorgang mit einem anderen Profilwinkel der Verzahnung des Werkzeuges verzahnbearbeitet wird oder werden als nach einem früheren Abrichtvorgang, wobei der Profilwinkel jeweils so gewählt wird, dass eine Abweichung der sich auf dem Werkstück ergebenden Verzahnungsgeometrie zu einer gewünschten Verzahngeometie reduziert oder minimiert wird, und/oder wobei durch die Änderung des Profilwinkels eine Streckung und/oder Stauchung einer durch einen modifizierten Abrichter auf dem Werkzeug erzeugten Modifikation reduziert oder minimiert wird.

7. Verfahren nach Anspruch 6, wobei eine asymmetrische Verzahnung hergestellt wird und wobei der Profilwinkel des Werkzeugs auf rechter und linker Flanke so gewählt wird, dass eine Abweichung der sich auf dem Werkstück auf linker und rechter Flanke ergebenden Verzahnungsgeometrie zu einer gewünschten Verzahnungsgeometrie insgesamt reduziert und/oder minimiert wird und/oder eine Streckung und/oder Stauchung einer durch einen modifizierten Abrichter auf dem Werkzeug erzeugten Modifikation auf linker und rechter Flanke insgesamt reduziert oder minimiert wird.

8. Verfahren nach einem der vorangegangenen Ansprüche, wobei ein Werkzeug mit einer konischen Grundform eingesetzt wird, wobei der Konuswinkel bevorzugt so gewählt wird, dass die sich auf dem Werkstück ergebende Verzahnungsgeometrie möglichst geringe Abweichungen zu einer gewünschten Verzahngeometie aufweist, und/oder wobei durch die Änderung des Profilwinkels des Werkzeugs eine Streckung und/oder Stauchung einer durch einen modifizierten Abrichter auf dem Werkzeug erzeugten Modifikation reduziert oder minimiert wird, insbesondere beim Herstellen einer asymmetrischen Verzahnung, und/oder wobei der Konuswinkel bei einem späteren Abrichtvorgang gegenüber einem früheren Abrichtvorgang geändert wird.

9. Verfahren nach einem der vorangegangenen Ansprüche zur Herstellung einer Mehrzahl von Werkstücken, wobei nach der Herstellung eines oder mehrerer Werkstücke das Werkzeug jeweils abgerichtet wird, bevor weitere Werkstücke bearbeitet werden.

10. Verfahren nach einem der vorangegangenen Ansprüche, wobei eine gewünschte Modifikation des Werkzeuges an mindestens zwei und bevorzugt drei Wälzwinkeln vorgegeben und durch das Einstellen der Bewegungsachsen der Abrichtmaschine erzeugt wird, und/oder wobei die relative Position zwischen Abrichter und Werkzeug beim Abrichten so bestimmt wird, dass eine gewünschte Profilballigkeit auf dem Werkzeug erzeugt wird, und/oder wobei eine Zuordnung eines bestimmten Radius des Abrichters zu einem bestimmten Radius des Werkzeuges vorgegeben wird und durch eine entsprechende Einstellung der Bewegungsachsen der Abrichtmaschine erzielt wird.

11. Softwareprogramm zur Bestimmung der zur Herstellung eines Werkstückes mit einer gewünschten Verzahnungsgeometrie mittels eines durch einen modifizierten Abrichter abgerichteten Werkzeuges einzusetzenden Einstellungen der Bewegungsachsen der Abrichtmaschine oder Geometrie des Werkzeuges, mit einer Eingabefunktion zur Eingabe einer gewünschten Verzahnungsgeometrie des Werkstückes und/oder zur Eingabe einer gewünschten Streckung und/oder Stauchung der Modifikation des Abrichters auf dem Werkzeug oder Werkstück, und einer Bestimmungsfunktion zur Bestimmung eines geeigneten Profilwinkels des Werkzeuges und einer geeigneten relativen Position zwischen Abrichter und Werkzeug beim Abrichten zur Bereitstellung der gewünschten Verzahnungsgeometrie des Werkstückes beim Bearbeiten durch das Werkzeug und/oder zur Bereitstellung der gewünschten Streckung und/oder Stauchung der Modifikation des Abrichters auf dem Werkzeug oder Werkstück.

12. Softwareprogramm zur Bestimmung der Einstellung der Bewegungsachsen der Abrichtmaschine beim Abrichten des Werkzeuges und/oder der Makrogeometrie des Werkzeuges und/oder des Abrichters, insbesondere die Gangzahl und/oder der Durchmesser und/oder der Profilwinkel und/oder der Konuswinkel des Werkzeugs und/oder der Durchmesser des Abrichters, und/oder zur Bestimmung der Einstellung der Bewegungsachsen der Abrichtmaschine beim Abrichten des Werkzeuges und/oder der Makrogeometrie des Werkzeuges bei einem Verfahren gemäß einem der vorangegangenen Ansprüche.

13. Softwareprogramm nach Anspruch 11 oder 12 zur Bestimmung der zum mehrmaligen Abrichten eines Werkzeuges mit dem gleichen Abrichter verwendeten Einstellungen der Bewegungsachsen einer Abrichtmaschine bei einem Verfahren gemäß einem der vorangegangenen Ansprüche,
wobei vorteilhafterweise eine Eingabefunktion zur Eingabe eines ersten Werkzeugdurchmessers vorgesehen ist, und eine Bestimmungsfunktion zur Bestimmung der zum Abrichten des Werkzeuges beim ersten Werkzeugdurchmesser einzusetzenden Einstellungen der Bewegungsachsen der Abrichtmaschine, wobei weiterhin vorteilhafterweise eine Eingabefunktion zur Eingabe eines zweiten Werkzeugdurchmessers, auf welchen der Abrichter ausgelegt ist, vorgesehen ist, oder eine Eingabefunktion zur Eingabe einer gewünschten Verzahnungsgeometrie des Werkstückes oder des Werkzeuges.

14. Abrichtmaschine mit einer Werkzeugaufnahme zur Aufnahme des abzurichtenden Werkzeuges und einer Abrichteraufnahme zur Aufnahme des hierzu eingesetzten Abrichters, wobei die Abrichteraufnahme eine Drehachse aufweist, und wobei die Abrichtmaschine weitere Bewegungsachsen aufweist, durch welche weitere Freiheitsgrade beim Abrichten des Werkzeuges in Linienkontakt mit dem Abrichter unabhängig voneinander einstellbar sind, und mit einer Steuerung, welche ein Softwareprogramm nach einem der Ansprüche 11 bis 13 umfasst, und/oder eine Funktion zur Durchführung der Abrichtschritte in einem Verfahren nach einem der vorangegangenen Ansprüche aufweist, insbesondere eine Funktion zur mehrmaligen Durchführung eines Abrichtvorgangs eines Werkzeuges mit geänderten Einstellungen der Bewegungsachsen der Abrichtmaschine, wobei die Steuerung bevorzugt so programmiert ist, dass sie bei einem späteren Abrichtvorgang die relative Position zwischen dem Abrichter und dem Werkzeug gegenüber einem früheren Abrichtvorgang zusätzlich zu dem sich durch den kleineren Werkzeugdurchmesser ergebenden geringeren Achsabstand durch eine entsprechende zusätzliche Verstellung der Bewegungsachsen der Abrichtmaschine verändert.

15. Verzahnmaschine mit einer Abrichtmaschine nach Anspruch 14 und/oder einem Softwareprogramm nach einem der Ansprüche 11 bis 13, wobei die Verzahnmaschine bevorzugt eine Werkstückaufnahme und eine ggf. zusätzlich zu der Werkzeugaufnahme der Abrichtmaschine vorgesehene Werkzeugaufnahme aufweist, und eine Verzahnbearbeitungssteuerung zur Ansteuerung von Werkstückaufnahme und Werkzeugaufnahme zur Durchführung einer Verzahnbearbeitung, insbesondere zur Durchführung eines Verfahrens nach einem der vorangegangenen Ansprüche.

Figur 1

Figur 2

Figur 3

Figur 4

$f_{nFS}$

$b_{FS}$

$w_{FS}$

Figur 5

$f_{nFS}$

$w_{FS}$

$b_{FS}$

# Figur 6

$z_S=7$

$d_S=240mm$

$d_A=150mm$

$\alpha_{nFS}=20°$

# Figur 7

$z_S = 7$

$d_S = 240\text{mm}$

$d_A = 150\text{mm}$

$\alpha_{nFS} = 20°$

# Figur 8

# Figur 9

$d_S=80mm$

$d_A=150mm$

$\alpha_{nFS}=20°$

——— $z_S=2$

- - - - - $z_S=4$

·········· $z_S=7$

# Figur 10

# Figur 11

Figur 12

a) $f_{nFS}$

b) $f_{nFS}$

## Figur 13

a)

$P_{FV}$

$c_{\alpha FV}$

——— $z_S = 2$

----- $z_S = 4$

·········· $z_S = 6$

b)

$P_{FV}$

$c_{\alpha FV}$

——— $d_S = 80mm$

----- $d_S = 120mm$

·········· $d_S = 240mm$

c)

$P_{FV}$

$c_{\alpha FV}$

——— $d_A = 80mm$

----- $d_A = 150mm$

·········· $d_A = 200mm$

d)

$P_{FV}$

$c_{\alpha FV}$

——— $\alpha_{nFS} = 16°$

----- $\alpha_{nFS} = 20°$

·········· $\alpha_{nFS} = 24°$

Figur 14a

Figur 14b

# Figuren 15

## Figur 16a

## Figur 16b

Figur 17

Figur 18

a)

b)

Figur 19

a)

b)

c)

$$z_S = 2$$

$$z_S = 4$$

$$z_S = 6$$

Figur 20

Figur 21

Figur 22

Figur 23

Figur 24

Figur 25

a)

b)

Figur 26

Figur 27

a)

b)

c)

Figur 28

a)

b)

c)

Figur 29

Figur 30

Figur 31

Figur 32

Figur 33

# Figur 34

Eingriffsebene 2

Berührlinie B 2

$\beta_{b2}$

$\Gamma_{b1}$

Rad 1

$\Gamma_{b2}$

Rad 2

Planverzahnung
Berührlinie B 1
Eingriffsebene 1

$\beta_{b1}$

Figur 35

Figur 36

a)

b)

# Figur 37

Figur 38

**Europäisches Patentamt**
**European Patent Office**
**Office européen des brevets**

# EUROPÄISCHER RECHERCHENBERICHT

Nummer der Anmeldung

EP 20 17 3556

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 8 882 564 B2 (KOBIALKA CLAUS [DE]; GLEASON PFAUTER MASCHINENFABRIK GMBH [DE]) 11. November 2014 (2014-11-11) * Spalte 3, Zeile 1 - Spalte 44, Zeile 62 * ----- | 1-15 | INV. G05B19/404 G05B19/18 B23F19/10 B24B53/07 |
| A | DE 10 2013 011941 A1 (GLEASON WORKS [US]) 22. Januar 2015 (2015-01-22) * Absatz [0006] - Absatz [0010] * * Absatz [0018] - Absatz [0026] * ----- | 1-15 | |
| A | US 4 374 513 A (WIENER DIETER [DE]) 22. Februar 1983 (1983-02-22) * Spalte 1, Zeile 15 - Zeile 23 * * Spalte 2, Zeile 50 - Spalte 5, Zeile 67 * * Abbildungen 1-6 * ----- | 1-15 | |
| A | US 4 393 625 A (BLOCH PETER [CH] ET AL) 19. Juli 1983 (1983-07-19) * Spalte 1, Zeile 13 - Zeile 21 * * Spalte 2, Zeile 8 - Spalte 3, Zeile 62 * * Abbildungen 1-5B * ----- | 1-15 | |

RECHERCHIERTE SACHGEBIETE (IPC)

G05B
B23F
B24B

Der vorliegende Recherchenbericht wurde für alle Patentansprüche erstellt

| Recherchenort | Abschlußdatum der Recherche | Prüfer |
|---|---|---|
| Den Haag | 6. August 2020 | Cîrîc, George |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 3556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-08-2020

| Im Recherchenbericht angeführtes Patentdokument | Datum der Veröffentlichung | Mitglied(er) der Patentfamilie | Datum der Veröffentlichung |
|---|---|---|---|
| US 8882564 B2 | 11-11-2014 | AT 553871 T | 15-05-2012 |
| | | CN 102143820 A | 03-08-2011 |
| | | CN 103144042 A | 12-06-2013 |
| | | EP 2161092 A1 | 10-03-2010 |
| | | EP 2326449 A2 | 01-06-2011 |
| | | ES 2404828 T3 | 29-05-2013 |
| | | JP 5576868 B2 | 20-08-2014 |
| | | JP 2012501859 A | 26-01-2012 |
| | | PL 2326449 T3 | 30-08-2013 |
| | | US 2011159787 A1 | 30-06-2011 |
| | | WO 2010025942 A2 | 11-03-2010 |
| DE 102013011941 A1 | 22-01-2015 | CN 105377491 A | 02-03-2016 |
| | | DE 102013011941 A1 | 22-01-2015 |
| | | EP 3022001 A2 | 25-05-2016 |
| | | JP 6280987 B2 | 14-02-2018 |
| | | JP 2016525022 A | 22-08-2016 |
| | | KR 20160029798 A | 15-03-2016 |
| | | US 2016151847 A1 | 02-06-2016 |
| | | WO 2015008128 A2 | 22-01-2015 |
| US 4374513 A | 22-02-1983 | DE 2834149 A1 | 07-02-1980 |
| | | US 4374513 A | 22-02-1983 |
| US 4393625 A | 19-07-1983 | CH 639305 A5 | 15-11-1983 |
| | | DE 2934413 A1 | 15-01-1981 |
| | | EP 0021329 A1 | 07-01-1981 |
| | | FR 2459103 A1 | 09-01-1981 |
| | | GB 2053050 A | 04-02-1981 |
| | | JP S569124 A | 30-01-1981 |
| | | JP S6113932 B2 | 16-04-1986 |
| | | SU 925242 A3 | 30-04-1982 |
| | | US 4393625 A | 19-07-1983 |
| | | US 4400916 A | 30-08-1983 |

EPO FORM P0461

Für nähere Einzelheiten zu diesem Anhang : siehe Amtsblatt des Europäischen Patentamts, Nr.12/82

EP 3 712 725 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012015846 A1
- EP 1995010 A1
- WO 2010060596 A1
- DE 19624842 A1
- DE 19706867 A1
- DE 102005030846 A1
- DE 102006061759 A1
- DE 19624842 C2
- DE 10208531
- DE 102012015846

**In der Beschreibung aufgeführte Nicht-Patentliteratur**

- **NIEMANN, G ; WINTER, H.** Maschinenelemente. Springer Verlag, 1983, vol. 3
- **ZIERAU, S.** Die geometrische Auslegung konischer Zahnräder und Paarungen mit parallelen Achsen. Institut für Konstruktionslehre